# EUROPÄISCHE PATENTANMELDUNG

(11) **EP 4 651 450 A2**
(43) Veröffentlichungstag der Anmeldung: **19.11.2025**
(21) Anmeldenummer: 25205772.4
(22) Anmeldetag: 27.02.2019
(51) Int. Cl.: H04L 12/403

(54) **VERFAHREN UND VORRICHTUNG ZUR ANSTEUERUNG ELEKTRISCHER UND/ODER ELEKTRONISCHER KOMPONENTEN EINES KFZ-MODULS**

(30) Priorität: 02.03.2018 DE 102018104871; 02.03.2018 DE 102018104868; 02.03.2018 DE 102018104866; 02.03.2018 DE 102018104865; 02.03.2018 DE 102018104864; 02.03.2018 DE 102018104862; 02.03.2018 DE 102018104858; 02.03.2018 DE 102018104855; 02.03.2018 DE 102018104852; 02.03.2018 DE 102018104850; 02.03.2018 DE 102018104847
(62) Teilanmeldung aus: 21174454.5
(71) Anmelder: Elmos Semiconductor SE, 51379 Leverkusen (DE)
(72) Erfinder: Schmitz, Christian, 44575 Castrop-Rauxel (DE)
(74) Vertreter: Dompatent

(57) **Zusammenfassung**

Die Erfindung betrifft eine Vorrichtung zur Ansteuerung von Busknoten (BK1 bis BKn) mit einem differentiellen Kommunikationsbus (DB) mit einem Busmaster (ECU), wobei der serielle, bidirektionale, differentielle Kommunikationsbus (DB) einen ersten Eindrahtbus (DBa) und einen zweiten Eindrahtbus (DBb) aufweist. Jeder Busknoten (BKj) weist eine differentielle Schnittstelle (IFj), eine Adresserkennungseinheit (ADRj) und ein Busknotenadressregister (BKADRj) auf. Der Kommunikationsbus (DB) kann sich zumindest in einem ersten differentiellen logischen Zustand (z1) und in einem zweiten differentiellen logischen Zustand (z2) befinden. Die Schnittstelle (IFj) ist jeweils mit dem Kommunikationsbus (DB) verbunden, um Daten über diesen zu senden und/oder von diesem zu empfangen. Der Busmaster (ECU) versendet von ihm zu versendende Daten als Folgen von Bits in Bit-Strom-Paketen (englisch Frames, BP). Die von dem Busmaster (ECU) versendeten Bit-Strom-Pakete (BP) weisen Dateninformationen (DATA) auf. Die Dateninformationen (DATA) umfassen Adressinformationen (ADRD) und Nutzinformationen (INFO), wobei die Adresserkennungseinheiten (ADR1 bis ADRn) die Adressinformationen (ADRD) der Bit-Strom-Pakete (BP) auswerten und nur dann eine Verwendung der enthaltenen Nutzinformationen (INFO) durch den Busknoten (BKj) zulassen, wenn der Inhalt der Adressinformationen (ADRD) mit dem Inhalt des Busknotenadressregisters (BKADRj) korrespondiert. Der Busknoten (BKj) weist Mittel auf, um ein Autoadressierungsverfahren durchzuführen, um das Busknotenadressregister (BAKDRj) mit einer logischen Busknotenadresse zu füllen, die mit der physikalischen Position dieses Busknotens (BKj) der n Busknoten (BK1 bis BKn) innerhalb des differentiellen Zweidraht-Kommunikationsbusses (DB) korrespondiert. Eine Taktsynchronisationsinformation wird mitübertragen. Der Adressierungsmodus wird durch ein Signal des Busmasters (ECU) gestartet.

## Beschreibung

Die vorliegende Patentanmeldung nimmt die Prioritäten der deutschen Patentanmeldungen 10 2018 104 847.5 vom 2. März 2018, 10 2018 104 850.5 vom 2. März 2018, 10 2018 104 852.1 vom 2. März 2018, 10 2018 104 855.6 vom 2. März 2018, 10 2018 104 858.0 vom 2. März 2018, 10 2018 104 862.9 vom 2. März 2018, 10 2018 104 864.5 vom 2. März 2018, 10 2018 104 865.3 vom 2. März 2018, 10 2018 104 866.1 vom 2. März 2018, 10 2018 104 868.8 vom 2. März 2018 und 10 2018 104 871.8 vom 2. März 2018 in Anspruch, deren Inhalte hiermit durch Bezugnahme zum Gegenstand der vorliegenden Patentanmeldung gehören.

Die Erfindung betrifft Verfahren und Vorrichtungen zur Ansteuerung elektrischer und/oder elektronischer Komponenten eines Kfz-Moduls, insbesondere einer Innenleuchte und/oder Außenleuchte wie z.B. eines Rücklichtmoduls eines Kfz. Ferner betrifft die Erfindung ein Kfz-Modul mit mehreren elektrischen und/oder elektronischen Komponenten, insbesondere einer Innenleuchte und/oder Außenleuchte wie z.B. eines Rücklichtmoduls eines Kfz.

Insbesondere betrifft die Erfindung
- Verfahren zur Ansteuerung elektrischer und/oder elektronischer Komponenten eines Kfz-Moduls und ein derartiges Kfz-Modul mit automatischer Moduladressierung mittels Daisy-Chain,
- Vorrichtungen zur Ansteuerung elektrischer und/oder elektronischer Komponenten eines Kfz-Moduls und ein derartiger Kfz-Modul mit automatischer Moduladressierung mit Verifikation,
- Verfahren zur Ansteuerung elektrischer und/oder elektronischer Komponenten eines Kfz-Moduls und ein derartiges Kfz-Modul mit automatischer Moduladressierung mittels Bus-Shunt-Widerständen in einem differenziellen Bus,
- Verfahren zur Ansteuerung elektrischer und/oder elektronischer Komponenten eines Kfz-Moduls und ein derartiges Kfz-Modul mit automatischer Moduladressierung mittels differenziellen Bus-Shunt-Widerständen,
- Vorrichtungen zur Ansteuerung elektrischer und/oder elektronischer Komponenten eines Kfz-Moduls und ein derartiges Kfz-Modul mit automatischer Moduladressierung über eine Interruptleitung,
- Vorrichtungen zur Ansteuerung elektrischer und/oder elektronischer Komponenten eines Kfz-Moduls und ein derartiges Kfz-Modul mit automatischer Mdouladressierung und Bus-Shunt-Überbrückungsschaltern,
- Vorrichtungen zur Ansteuerung elektrischer und/oder elektronischer Komponenten eines Kfz-Moduls und ein derartiges Kfz-Modul mit automatischer Moduladressierung mit Taktsynchronisation und Adressierungsmodussignalisierung,
- Vorrichtungen zur Ansteuerung elektrischer und/oder elektronischer Komponenten eines Kfz-Moduls und ein derartiges Kfz-Modul mit automatischer Moduladressierung mit Taktsynchronisation,
- Vorrichtungen zur Ansteuerung elektrischer und/oder elektronischer Komponenten eines Kfz-Moduls und ein derartiges Kfz-Modul mit automatischer Moduladressierung,
- Vorrichtungen zur Ansteuerung elektrischer und/oder elektronischer Komponenten eines Kfz-Mdouls und ein derartiges Kfz-Modul mit automatischer Moduladressierung mittels eines Bus-Shunt-Widerstands,
- Vorrichtungen zur Ansteuerung elektrischer und/oder elektronischer Komponenten eines Kfz-Moduls und ein derartiges Kfz-Modul mit automatischer Moduladressierung mittels Gleichtakt- oder Gegentaktstromquellen.

Die elektrischen bzw. elektronischen Komponenten von Kfz-Modulen wie beispielsweise der diversen Lichtmodule werden in zunehmendem Maße komplexer. Insbesondere im Bereich "Licht" geht man in jüngster Vergangenheit verstärkt dazu über, dynamische Funktionen wie z.B. den "wischenden Blinker" oder die sogenannte "coming home"-Applikation einzusetzen. Dabei nutzt man mit Vorteil den Umstand aus, dass die einzelnen Außen- und Innenlichtfunktionen eines Fahrzeugs durch jeweils mehrere LEDs bzw. OLEDs realisiert werden. Dynamische Effekte lassen sich nun auf vergleichsweise hardwaremäßig einfache Art und Weise dadurch realisieren, dass die Vielzahl von Lichtquellen, die ein derartiges Kfz-Lichtmodul aufweist, in unterschiedlicher Weise angesteuert werden.

Die Vielzahl von Komponenten eines Kfz-Moduls, also beispielsweise die Vielzahl von den einzelnen Lichtfunktionen zugeordneten LEDs bzw. OLEDs eines beispielsweise Rücklichtmoduls sind vorteilhafterweise über einen Kommunikationsbus an eine Ansteuereinheit des Moduls angeschlossen bzw. stehen über den Kommunikationsbus mit der Ansteuereinheit in Kommunikationsverbindung. Im Regelfall umfasst die Ansteuereinheit auch einen Spannungswandler zur Versorgung von insbesondere LED-Treibern eines Lichtmoduls.

Hinsichtlich der Übertragungsgeschwindigkeit und Robustheit haben sich differentielle Zweidraht-Kommunikationsbussysteme bewährt. Die Informationssignale werden dabei zwischen der Ansteuereinheit und den Teilnehmern als Spannungsdifferenz zwischen den beiden Busleitungen übertragen, wodurch eine größere Signalsicherheit und eine höhere Übertragungsgeschwindigkeit und eine geringere Störanfälligkeit erreicht werden. Derartige Zweidraht-Busleitungen sind grundsätzlich bekannt.

Problematisch ist, dass der Hardware-Aufwand für derartige Zweidraht- Bussysteme und deren Teilnehmer nicht unerheblich ist. Insbesondere hinsichtlich der Kosten von Nachteil ist der Umstand, dass die Teilnehmer über relativ präzise arbeitende Taktgeber verfügen müssen, die synchron zueinander arbeiten. Des Weiteren müssen die Lichtmodule beim Verbau und Anschluss im Fahrzeugwerk ihre physikalische Position feststellen und in eine logische Adresse wandeln können, sodass ohne Vorprogrammierung einer Busknotenadresse für diese Leuchtmodule gleichartige Leuchtmodule eingesetzt werden können, was Fehlermöglichkeiten und Logistik in der Produktion massiv reduziert.

Aus NN: "High-Brightness LED Matrix Manager for Automotive Headlight Systems", 1. Februar 2016 (2016-02-01), Seiten 1-53, XP055348745, Dallas, Texas (gefunden im Internet: URL:http://www.ti.com/lit/ds/symlink/tps92661-q1.pdf am 2017-02-23) ist eine Kfz-Frontlicht-Ansteuerung bekannt, deren Bus zwei Leitungen aufweist, an die keine differentielle Signale angelegt werden.

In MONAL GIRADKAR ET AL: "Design and Implementation of Adaptive Front Light System of Vehicle Using FPGA Based LIN Controller", EMERGING TRENDS IN ENGINEERING AND TECHNOLOGY (ICETET), 2011 4TH INTERNATIONAL CONFERENCE ON, IEEE, 18. November 2011 (2011-11-18), Seiten 258-261, XP032087461, DOI: 10.1109/ICETET.2011.67; ISBN: 978-1-4577-1847-2 ist eine Bit-Timing-Logik für einen CAN-Bus beschrieben.

Eine Vorrichtung zur Ansteuerung eines adaptiven Kfz-Fontlichts mit FPGA-basiertem LIN-Controller ist in GUO JINYAN ET AL: "The design and realization of CAN bit timing logic", MICROELECTRONICS AND ELECTRONIS (PRIMEASIA), 2010 ASIA PACIFIC CONFERENCE ON POSTGRADUATE RESEARCH IN, IEEE, PISCATAWAY, NJ, USA, 22. September 2010 (2010-09-22), Seiten 333-337, XP031777603, ISBN: 978-1-4244-6735-8 beschrieben.

Schließlich gibt ZENG WEIYING ET AL: "In-Vehicle Networks Outlook: Achievements and Challenges", IEEE COMMUNICATIONS SURVEYS & TUTORIALS, Bd. 18, Nr. 3, 27. Februar 2016 (2016-02-27), Seiten 1552-1571, XP011620858, DOI: 10.1109/COMST.2016.2521642; [gefunden am 2016-08-19] einen Überblick über Kfz-Kommunikationssysteme.

Aus der DE-A-10 2016 125 290 und der DE-A-10 2017 100 718 sind Vorrichtungen und Verfahren zur Adressierung und zum Betreiben einer LED-Kette mit Hilfe eines JTAG-Protokolls bekannt. Ein Problem ist dabei, dass das Taktsignal mit den Daten gemeinsam mittels eines Mehrpegelsignals übertragen werden muss. Es besteht aber das Bedürfnis im Markt, auf bestehende Protokolle zurückgreifen zu können. Hierbei müssen die Busknoten ausreichend präzise synchronisiert werden, um eine Übertragung des Taktsignals wie in der technischen Lehre der DE-A-10 2016 125 290 und der DE-A-10 2017 100 718 vermeiden zu können. Im CAN Protokoll ist dies beispielsweise über aufwendige Timing-Synchronisationen gelöst, die in der Regel aber zu zu aufwendigen Busknoten führen.

Aufgabe der Erfindung ist es, eine Vorrichtung zur Ansteuerung elektrischer und/oder elektronischer Komponenten eines Kfz-Moduls und ein derartiges Kfz-Modul zu schaffen, das hinsichtlich des Hardware-Aufwands reduziert ist.

Für den beanspruchten Umfang sind in erster Linie die Ansprüche ausschlaggebend. Die Beschreibung präzisiert die Ansprüche und stellt sie in einem Gesamtzusammenhang.

Die Indices j und n entsprechen jeweils einer positiven ganzen Zahl.

Zur Lösung dieser Aufgabe wird mit der Erfindung eine Vorrichtung zur Ansteuerung elektrischer und/oder elektronischer Busknoten, insbesondere elektrische und/oder elektronischer Busknoten von elektrischen oder elektronischen Komponenten eines Kfz-Moduls, vorgeschlagen, wobei die Vorrichtung versehen ist
- einem seriellen, bidirektionalen, differentiellen Zweidraht-Kommunikationsbus (DB),
- n Busknoten (BK₁ bis BKₙ) mit n als ganzer positiver Zahl größer 1,
- einem Busmaster (ECU),
- wobei der Zweidraht-Kommunikationsbus (DB) einen ersten Eindrahtbus (DBₐ) und einen zweiten Eindrahtbus (DB_{b}) aufweist,
- wobei jeder der n Busknoten (BK₁ bis BKₙ) aufweist
   - eine differentielle, serielle Schnittstelle (IF;),
   - einen Mikrocontroller (µCⱼ),
   - einen Taktgeber (CLKGⱼ),
   - eine Abtastvorrichtung (ATⱼ) und
   - eine Adresserkennungseinheit (ADRⱼ) sowie ein Busknotenadressregister (BKADRⱼ),
- wobei mindestens einer der n Busknoten (BK₁ bis BKₙ) ein Leuchtmittel-Busknoten mit mindestens einem Leuchtmittel (LED;) und mindestens einer Energieversorgungsmittel (EVⱼ) ist,
- wobei das mindestens eine Energieversorgungsmittel (EVⱼ) des mindestens einen Busknotens (BK₁ bis BKₙ) für die Energieversorgung des mindestens einen Leuchtmittels (LED) des mindestens einen Busknotens (BK₁ bis BKₙ) vorgesehen ist,
- wobei sich der Zweidraht-Kommunikationsbus (DB) zumindest in einem ersten differenziellen logischen Zustand (z1) und in einem zweiten differenziellen logischen Zustand (z2) befinden kann,
- wobei die serielle Schnittstelle (IFⱼ) des mindestens einen Leuchtmittel-Busknotens (BK₁ bis BKₙ) jeweils mit dem Zweidraht-Kommunikationsbus (DB) verbunden ist, um Daten über den Zweidraht-Kommunikationsbus (DB) zu senden und/oder über diesen zu empfangen,
- wobei der Busmaster (ECU) von extern Steuerbefehle für die n Busknoten (BK₁ bis BKₙ) erhält,
- wobei der Busmaster (ECU) diese Steuerbefehle in über den Zweidraht-Kommunikationsbus (DB) an die Busknoten (BK₁ bis BKₙ) zu versendende Bitströme umsetzt,
- wobei der Busmaster (ECU) in Abhängigkeit von einem vom Busmaster (ECU) vorgesehenen Takt (CLK) die Bits der durch den Busmaster (ECU) zu versendenden Bitströme über den Zweidraht-Kommunikationsbus (DB) sendet,
- wobei der Busmaster (ECU) von den n Busknoten (BK₁ bis BKₙ) erzeugte Bitströme über den Zweidraht-Kommunikationsbus (DB) empfängt,
- wobei der Taktgeber (CLKGⱼ) eines jeden Busknotens (BK₁ bis BKₙ) ein Abtastsignal (CLKAⱼ) in dem jeweiligen Busknoten (BK₁ bis BKₙ) erzeugt,
- wobei die Abtastvorrichtung (ATⱼ) eines jeden Busknotens (BK₁ bis BKₙ) in Abhängigkeit von dem Abtastsignal (CLKAⱼ) dieses Busknotens (BKⱼ) über den Zweidraht-Kommunikationsbus (DB) versendete Bitströme abtastet, um einen lokalen Bitstrom innerhalb dieses Busknotens (BKⱼ) zu gewinnen,
- wobei der Busmaster (ECU) die zu versendenden Bitströme als Folgen von Bits in Bit-Strom-Paketen (BP) versendet,
- wobei der Zweidraht-Kommunikationsbus (DB), wenn weder der Busmaster (ECU) noch einer der n Busknoten (BK₁ bis BKₙ) Daten über den Zweidraht-Kommunikationsbus (DB) übertragen, den ersten differentiellen logischen Zustand (z1) oder einen dritten differentiellen logischen Zustand (z3) annimmt und
- wobei die Bit-Strom-Pakete (BP) eine zeitliche Abfolge von m Einzelbits des Bit-Strom-Pakets (BP) mit gleicher zeitlicher Länge t_{B} aufweisen, mit m als ganzer positiver Zahl, wobei die zeitliche Länge t_{B} um nicht mehr als einen Faktor von +/(0,4/m)*t_{B} innerhalb eines Bit-Strom-Pakets (BP) variiert,
- wobei zumindest ein Teil der von dem Busmaster (ECU) versendeten Bit-Strom-Pakete (BP) folgende Inhalte aufweist
   - ein Startsignal (START) in Form von i Bits mit i als ganzer positiver Zahl mit i-1≤m/3 der m bits des jeweiligen Bit-Strom-Paketes (BP) mit einem zweiten differentiellen logischen Zustand (z2) auf dem seriellen, bidirektionalen, differentiellen Zweidraht-Kommunikationsbus (DB),
   - eine Synchronisationsinformation (SYNC) aus k-Bits mit k als ganzer positiver Zahl,
      - zur Phasensynchronisation des Abtastsignals (CLKAⱼ) der Taktgeber (CLKGⱼ) der Busknoten (BKⱼ) auf die Phase des Takts (CLK) des Busmasters (ECU) oder
      - zur Phasensynchronisation des Abtastsignals (CLKAⱼ) der Taktgeber (CLKGⱼ) der Busknoten (BKⱼ) auf die Phase des Takts (CLK) des Busmasters (ECU) und zur Frequenzsynchronisation des Abtastsignals (CLKAⱼ) der Taktgeber (CLKGⱼ) der Busknoten (BKⱼ) auf die Frequenz des Takts (CLK) des Busmasters (ECU),
   - Dateninformationen (DATA) aus den restlichen Bits der m-i-k Bits der m Bits des jeweiligen Bit-Strom-Paketes (BP),
   - wobei die Dateninformationen (DATA) Adressinformationen (ADRD), Nutzinformationen (INFO) und Prüfinformationen (CHKD) umfassen,
   - wobei zumindest ein Teil der Nutzinformationen (INFO) Beleuchtungsinformationen (ILD) zur Steuerung der Energieversorgung der Leuchtmittel (LEDⱼ) des Busknotens (BKⱼ) durch das Energieversorgungsmittel (EVⱼ) des Busknotens (BKⱼ) in Abhängigkeit von diesen Beleuchtungsinformationen umfasst, wenn der logische Inhalt der Adressinformationen (ADRD) mit dem Inhalt des Busknotenadressregisters (BKADRⱼ) des Busknotens (BKⱼ) übereinstimmt,

- wobei die Adresserkennungseinheiten (ADRⱼ) der Busknoten (BK₁ bis BKₙ) die Adressinformationen (ADRD) der Bit-Strom-Pakete (BP) auswerten und nur dann eine Verwendung der enthaltenen Nutzinformationen (INFO) zulassen, wenn der Inhalt der Adressinformationen (ADRD) mit dem Inhalt des Busknotenadressregisters (BKADRⱼ) des Busknotens (BKⱼ) übereinstimmt und
- wobei zumindest ein solcher Busknoten (BKⱼ) Mittel aufweist, um ein Autoadressierungsverfahren durchzuführen, um das Busknotenadressregister (BAKDRⱼ) mit einer Busknotenadresse zu versehen, die mit der physikalischen Position dieses Busknotens (BKⱼ) der n Busknoten (BK₁ bis BKₙ) innerhalb des Zweidraht-Kommunikationsbusses (DB) übereinstimmt.

Gemäß einer ersten Variante der Erfindung wird ebenfalls eine Vorrichtung vorgeschlagen, die versehen ist mit
- einem differentiellen Zweidraht-Kommunikationsbus,
- mehreren an den Zweidraht-Kommunikationsbus angeschlossenen Komponenten und
- einer Ansteuereinheit, die von extern Steuerbefehle für die Komponenten erhält und diese Steuerbefehle in über den Zweidraht-Kommunikationsbus an die Komponenten zu versendende Bitströme umsetzt sowie von den Komponenten erzeugte Bitströme empfängt,
- wobei jede Komponente eine asynchrone, digitale, serielle Schnittstelle, einen Mikrocontroller und einen Taktgeber zum Erzeugen eines Abtastsignals zum Abtasten von über den Zweidraht-Kommunikationsbus versendete Bitströme aufweist und
- wobei zumindest die von der Ansteuereinheit versendeten Bitströme Synchronisationsinformationen zur Synchronisation der Taktgeber der Komponenten auf den Takt aufweisen, mit denen die Ansteuereinheit die Bits der Bitströme über den Zweidraht-Kommunikationsbus sendet und
- wobei jede Koponente dazu eingerichtet ist, mittels eines oder mehrerer Autoadressierungsverfahren eine mit ihrer physikalischen Position korrelierte logische Busknotenadresse zu ermitteln und dann zu nutzen.

Ferner dient zur Lösung der Aufgabe erfindungsgemäß ein Kfz-Modul mit mehreren elektrischen und/oder elektronischen Komponenten, insbesondere einer Innenleuchte und/oder Außenleuchte wie z.B. einem Rücklichtmodul eines Kfz, wobei das Kfz-Modul versehen ist mit
- einem differentiellen Zweidraht-Kommunikationsbus,
- wobei die Komponenten an den Zweidraht-Kommunikationsbus angeschlossenen sind und
- einer Ansteuereinheit, die von extern Steuerbefehle für die Komponenten erhält und diese Steuerbefehle in über den Zweidraht- Kommunikationsbus an die Komponenten zu versendende Bitströme umsetzt sowie von den Komponenten erzeugte Bitströme empfängt,
- wobei jede Komponente eine asynchrone, digitale, serielle Schnittstelle, einen Mikrocontroller und einen Taktgeber zum Erzeugen eines Abtastsignals zum Abtasten von über den Zweidraht-Kommunikationsbus versendete Bitströme aufweist und
- wobei zumindest die von der Ansteuereinheit versendeten Bitströme Synchronisationsinformationen zur Synchronisation der Taktgeber der Komponenten auf den Takt aufweisen, mit denen die Ansteuereinheit die Bits der Bitströme über den Zweidraht-Kommunikationsbus sendet und
- wobei die Komponenten vor Aufnahme des Normalbetriebes aus einem Normalzustand in einen Adressierungszustand wechseln und ein Verfahren zur Ermittlung von Busknotenadressen, die von der physikalischen Position der Busknoten in der Kette der busknoten abhängen, durchführen und anschließend wieder den Adressierungszustand verlassen.

Der vorgeschlagene Ansatz verbindet die Vorteile eines differentiellen Zweidraht-Kommunikationsbusses mit Autoadressierungsfähigkeit mit den Vorteilen der Verwendung von asynchronen, digitalen, seriellen Schnittstellen, über die die einzelnen Teilnehmer bzw. die einzelnen Komponenten an den Zweidraht- Kommunikationsbus angeschlossen sind. Die Verwendung sogenannter Universal Asynchronous Receiver Transmitter (UART) erfordert, dass der über eine derartige digitale serielle Schnittstelle empfangene Bitstrom Synchronisationsinformationen für den Taktgeber des Busteilnehmers (des jeweiligen Busknotens) enthält. Derartige Synchronisationsinformationen (z.B. Synchronisationsbits) lassen sich aber nun auch problemlos über einen differentiellen Zweidraht-Kommunikationsbus, beispielsweise im Header eines den Bitstrom repräsentierenden Datenrahmens, integrieren. Damit umfasst das Protokoll des erfindungsgemäß verwendeten differentiellen Zweidraht- Kommunikationsbusses Elemente, wie sie beispielsweise von Eindrahtbussen bekannt sind, deren Teilnehmer über standardisierte und kostengünstige UARTs verfügen.

Die Erfindung ist insbesondere im Rahmen digitaler Schnittstellen zur robusten und Hochgeschwindigkeits-Übertragung von Daten über eine Zweidraht-Kabelverbindung zwischen mit LEDs bestückten Platinen für beispielsweise Rücklicht und Innenlicht innerhalb einer Leuchte mit einer Datenrate von bis zu 500 kBit/s einsetzbar. Dabei wird die symmetrische Übertragung mittels eines differentiellen Hochgeschwindigkeits-Zweidraht-Bussystems zum Zwecke der Übertragung eines einfachen seriellen Protokolls und damit zur Reduktion des Hardware-Digitalaufwands genutzt.

Bei der oben beschriebenen erfindungsgemäßen Vorrichtung zur Ansteuerung elektrischer und/oder elektronischer Busknoten eines seriellen, bidirektionalen, differentiellen Datenbussystems wird ein serieller, bidirektionaler differentieller Zweidraht-Kommunikationsbus, vereinfacht ausgedrückt, gemäß einem seriellen, bidirektionalen Eindraht-Kommunikationsbus betrieben. Eines der Wesensmerkmale der Erfindung ist es dabei, die Phasen- und Frequenzsynchronisation des in jedem Busknoten erzeugten Abtastsignals durch Übertragung entsprechender Bits zu bewerkstelligen. Damit können in den Busknoten weniger genau arbeitende Taktgeber verwendet werden, wobei diese Taktgeber durch die Synchronisationsinformation vor bzw. zu Beginn eines Datenworts aus mehreren Bits auf die Phase und den Takt der Bitübertragung synchronisiert werden. Im Idealfall erfolgt auf diese Weise sowohl eine Phasen- als auch eine Frequenzsynchronisation. Die derart betriebenen Busknoten weisen zweckmäßigerweise typische UARTS (Universal Asynchronous Receiver Transmitter) auf.

Die Frequenzsynchronisaton im eigentlichen Sinne kann aber auch auf andere Art und Weise realisiert werden, wenn davon ausgegangen wird, dass jeder Busknoten die über den Zweidraht-Kommunikationsbus übertragenen Bits mittels Oversampling abtastet. Dann ist es nämlich möglich, mit einer Anpassung des während eines oder des typischerweise in dem Busknoten eingesetzten Oversampling der über den Zweidraht-Kommunikationsbus versendeten Bits für eine Frequenzsynchronisation zu sorgen, indem der oder die Abtastpunkte pro Bit, die für die Entscheidung über den logischen Zustand des Bits herangezogen werden, über die Bits ein oder mehrerer Bitwörter betrachtet, zeitlich unterschiedlich gewählt werden, so dass ohne eine Frequenzsynchronisation des Takts des Busknotens auf den Takt des Busmasters diese Abtastpunkte für die Dauer des Auslesens eines Bitworts oder mehrerer Bitworte stets im Wesentlichen in der Mitte eines Bits liegt bzw. liegen.

Was das konkret eingesetzte Adressierverfahren zur Vergabe der Adressen adressierbarer Busknoten des Datenbussystems betrifft, existieren mehrere Möglichkeiten. In diesem Zusammenhang sei auf folgende Patentanmeldungen verwiesen, in denen verschiedene Methoden beschrieben sind, die durch Bezugnahme zum Gegenstand der vorliegenden Patentanmeldung gehören:
EP 17 210 851.6 vom 28. Dezember 2017
EP 17 210 861.5 vom 28. Dezember 2017
EP 17 210 869.8 vom 28. Dezember 2017
EP 18 196 807.4 vom 26. September 2018
EP 18 196 888.4 vom 26. September 2018
EP 18 196 942.9 vom 26. September 2018
US 16/137,561 vom 21. September 2018
US 16/137,562 vom 21. September 2018
US 16/137,563 vom 21. September 2018
CN 201811126141.2 vom 26. September 2018
CN 201811126184.0 vom 26. September 2018
CN 201811126287.7 vom 26. September 2018
DE 10 2018 118 380.1 vom 30. Juli 2018

Vorstehend und im Folgenden wird im Zusammenhang mit der Identifizierung der Position eines zu adressierenden Busknotens innerhalb des Datenbussystems der in Höhe des jeweiligen Busknotens durch den Zweidraht-Kommunikationsbus fließende Strom betrachtet. In diesem Zusammenhang wird mitunter von einem Bus-Shunt-Widerstand als Beispiel für ein Strommessmittel gesprochen. Es sei an dieser Stelle hervorgehoben, dass der Bus-Shunt-Widerstand nicht die einzige Möglichkeit der Realisierung eines Strommessmittels ist. So können beispielsweise auch die anderen dem Fachmann bekannten Strommessverfahren zum Einsatz kommen.

Mit der Erfindung werden weitere Vorrichtungen und Verfahren vorgeschlagen, die Gegenstand der jeweiligen selbstständigen Patentansprüche 1, 2, 4, 14, 15, 24, 26, 28, 29, 33, 47, 60 und 75 sind. Einzelne Ausgestaltungen der jeweiligen Verfahren und Vorrichtungen der zuvor genannten Ansprüche sind Gegenstand der jeweiligen sich auf diese Patentansprüche jeweils beziehenden Unteransprüche.

Abkürzungen werden im folgenden Text im Gegensatz zu den Bezugszeichen mit eckigen Klammern "[]" markiert und in der beigefügten Abkürzungsliste aufgeführt. Die Bezugszeichen, die zumindest in einer der Figuren enthalten sind, werden im folgenden Text im Gegensatz zu den Abkürzungen mit runden Klammern "()" markiert und in der beigefügten Bezugszeichenliste aufgeführt. Es werden immer die Bezeichnungen mit den jeweiligen Bezugszeichen aufgeführt, auch wenn diese an anderen Stellen der Beschreibung als der Figurenbeschreibung verwendet werden.

Die Erfindung wird nachfolgend in ihren unterschiedlichsten Ausprägungen anhand der Zeichnung näher erläutert. Im Einzelnen zeigen:
- Figur 1: ein Beispiel für ein Rücklichtmodul (BLM) eines Kfz.
- Figur 2: einen Zweidraht-Kommunikationsbus (DB), wie er beispielsweise aus dem Stand der Technik bekannt ist.
- Figur 3: die bevorzugte Struktur der vom Busmaster (ECU) versendeten Bit-Strom-Pakete (BP).
- Figur 4: ein Datenbussystem, bei dem in den ersten Eindrahtbus (DBa) ein erster Bus-Shunt-Widerstand (R2) je Busknoten ((BK₁) bis [BKₙ]) eingefügt ist.
- Figur 5: basierend auf Figur 4 einen seriellen, bidirektionalen, differentiellen Zweidraht-Kommunikationsbus (DB) mit einem ersten Bus-Shunt-Widerstand (R2), der in den ersten Eindrahtbus (DB₁) eingefügt ist, und einem zweiten Bus-Shunt-Widerstand (R2'), der in den zweiten Eindrahtbus (DB₂) eingefügt ist.
- Figur 6: eine ähnliche Darstellung wie in Figur 5 mit dem Unterschied, dass die jeweiligen ersten Adressierungsstromquellen ((Iq₁) bis [Iqₙ]) vom Bus-Master (ECU) aus gesehen den ersten Adressierungsstrom hinter den ersten Bus-Shunt-Widerständen (R2) in der Adressierungsphase, in der der jeweilige Busknoten (BKⱼ) in einem Adressierungszustand ist, einspeisen.
- Figur 7: beispielhaft den Verlauf des Ausgangsstroms (i₁) des ersten Busknotens (BK₁), des Ausgangsstroms (i₂) des zweiten Busknotens (BK₂) und des Ausgangsstroms (i₃) des dritten Busknotens (BK₃) in einem beispeilhaften Datenbussystem mit n=3 Busknoten (BK₁ bis BK₃).
- Figur 8: den Verlauf des Ausgangsstroms (i₁) des ersten Busknotens (BK₁), des Ausgangsstroms (i₂) des zweiten Busknotens (BK₂) und des Ausgangsstroms (i₃) des dritten Busknotens (BK₃).
- Figur 9: den Verlauf des Ausgangsstroms (i₁) des ersten Busknotens (BK₁), des Ausgangsstroms (i₂) des zweiten Busknotens (BK₂) und des Ausgangsstroms (i₃) des dritten Busknotens (BK₃).
- Figur 10: den Regelkreis eines Busknotens (BKⱼ) mit einer ersten Detektionsvorrichtung (DET) zu versehen, die interne Signale (ds1, ds3) des Busknotens (BKⱼ) auf Plausibilität prüft.
- Figur 11: einen vereinfacht dargestellten j-te Autoadressierungsbusknoten (BKⱼ), der für die Umpositionierung des Einspeisepunktes des zweiten Adressierungsstroms der zweiten Adressierungsstromquelle (Iq'ⱼ) des betrachteten Busknotens (BKⱼ) eine zweite Detektionsvorrichtung (DET') aufweist.
- Figur 12: Autoadressierungsbusknoten (BK₁, BK₂, BK₃) mit einem zweiten Bus-Shunt-Überbrückungsschalter (S4') je Busknoten (BKj) den zugehörigen zweiten Bus-Shunt-Widerstand (R2') des Busknotens (BKj) im Normalbetrieb, also im Normalzustand des Busknotens (BKj), zu überbrücken und diesen zweiten Bus-Shunt-Überbrückungsschalter (S4') nur im Adressierungszustand zu öffnen.
- Figur 13: basierend auf Figur 2 ein Datenbussystem mit Autoadressierung mittels Interrupt-Leitung.
- Figur 14: den grundsätzlichen Ablauf des hier beschrieben bevorzugten Adressvergabeverfahrens mittels Interrupt-Leitung

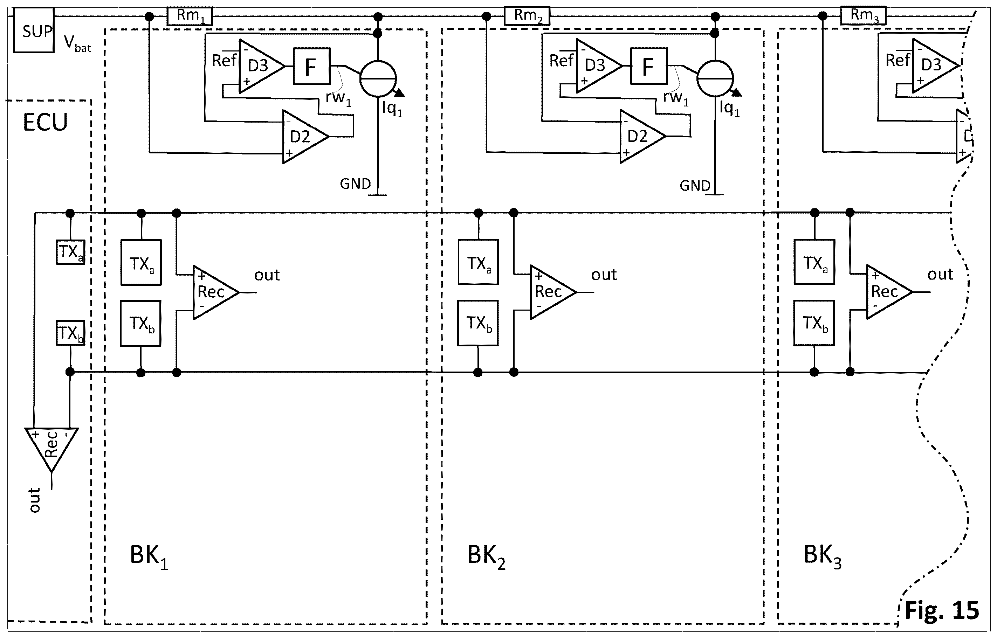

- Figur 15: einen seriellen, bidirektionalen, differentiellen Zweidraht-Kommunikationsbus (DB), mit n Busknoten ((BK₁), (BK₂), (BK₃), ..... [BKₙ₋₁], [BKₙ]), mit n als ganzer positiver Zahl größer Null, und einem Busmaster (ECU), bei dem die Busknoten über eine Versorgungsspannungsleitung (V_{bat}) mit elektrischer Energie versorgt werden, der Kommunikationsbus (DB) mit dem Busmaster (ECU) verbunden ist, jeder Busknoten ((BK₁), (BK₂), ..... [BKₙ₋₁], [BKₙ]) mit dem Kommunikationsbus (DB) verbunden ist und bei dem innerhalb der Busknoten ((BK₁) bis [BKₙ]) jeweils ein dem jeweiligen Busknoten (BKⱼ) der n Busknoten ((BK₁) bis [BKₙ]) zugeordneter Messwiderstand (Rmⱼ) in die Versorgungsspannungsleitung (V_{bat}) eingefügt ist
- Figur 16: Figur 15 mit Leuchtmitteln (LED₁ bis LEDₙ).
- Figur 17: eine Darstellung basierend auf Figur 15, wobei nun auch zweite Adressierungsstromquellen (Iq'ⱼ) der betreffenden Busknoten (BKⱼ) für die Autoadressierung über die Spannungsversorgungsleitung (V_{bat}) verwendet werden.
- Figur 18: eine Vorrichtung, die die Durchführung mehrerer Autoadressierungsverfahren zulässt. Die Figur 18 ist eine Kombination der Figuren 17, 13, 6 und 5.
- Figur 19: entsprechend der Vorrichtung nach Figur 18 eine Vorrichtung mit einem Überbrückungsschalter (S4).
- Figur 20: in den beispielhaften Busknoten ((BK₁) bis [BKₙ]) jeweils einen vierten Multiplexer (X4) je Busknoten (BKⱼ), mit einer Steuerung innerhalb dieses Busknotens (BKⱼ) sowie jeweils einen weiteren vierten Multiplexer (X4') je Busknoten (BKⱼ), mit einer Steuerung innerhalb dieses Busknotens (BKⱼ) mit dem die Steuerung innerhalb dieses Busknotens (BKⱼ) die beiden Eingänge des weiteren zweiten Differenzverstärkers (D2') dieses Busknotens (BKⱼ) vertauschen kann.
- Figur 21: Figur 20 mit einem verdrehten Busknoten (BK₂).

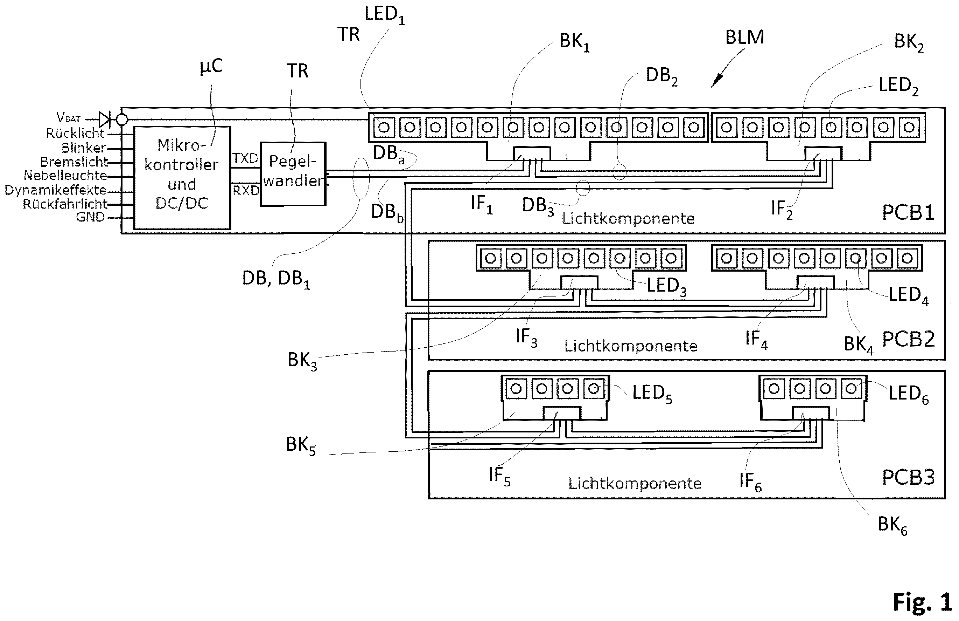

Die Figur 1 zeigt ein Beispiel für ein Rücklichtmodul (BLM) eines Kfz. Das Rücklichtmodul (BLM) weist einen Busmaster (ECU) und einen seriellen, bidirektionalen, differentiellen Zweidraht-Kommunikationsbus (DB) auf. Der serielle, bidirektionale und differentielle Zweidraht-Kommunikationsbus (DB) besteht aus einem ersten Eindrahtbus (DBₐ) und einem zweiten Eindrahtbus (DB_{b}). Die TXD- und RXD-Leitungen des Busmasters (ECU) führen zu einem Pegelwandler (TR), um den Signalpegel für den Betrieb des Zweidraht-Kommunikationsbusses DB umzusetzen. Der Busmaster (ECU) erhält von extern verschiedene Steuerbefehle, beispielsweise für die Funktionen Rücklicht, Blinker, Nebelschlussleuchte, Dynamikeffekte etc., und/oder Informationen über einen digitalen Bus. Der Busmaster (ECU) setzt diese Befehle in Bitströme um, die unter anderem Bits eines Synchronisationsfeldes der entsprechenden Datenrahmen (Bit-Strom-Paket (BP)) aufweisen. Pegelwandler und Busmaster (ECU) werden im Folgenden auch als Einheit betrachtet und mit Busmaster (ECU) gemeinsam bezeichnet.

Am Kommunikationsbus (DB) sind diverse Komponenten bzw. Teilnehmer als Busknoten BK₁ bis BK₆ angeschlossen. So sind der erste und zweite Busknoten ((BK₁) und (BK₂)) beispielhaft für die Realisierung des Blinklichts, der dritte Busknoten (BK₃) für die Realisierung des Rücklichts, der vierte und sechste Busknoten (BK₄) und (BK₆) für die Ausführung der Bremslichtfunktion und der fünfte Busknoten (BK₅) für die Realisierung des Rückfahrtlichts verantwortlich. Jeder dieser Teilnehmer bzw. jede dieser Komponenten weist eine Vielzahl von LEDs (LED₁ bis LED₆) auf, die von jeweiligen LED-Treibern angesteuert werden.

Jeder Busknoten ist darüber hinaus mit einer digitalen Schnittstelle (IF₁ bis IF₆) in Form einer UART versehen. Ferner weist jeder Busknoten bedarfsweise einen Mikrocontroller ([µC₁] bis [µC₆]) und ferner einen Taktgeber ([CLKG₁] bis [CLKG₆]) auf, um auf dem differentiellen Zweidraht-Kommunikationsbus (DB) liegende Nachrichten synchron zur Versendung der Bits der Bitströme lesen zu können bzw. um derartige Bitströme synchron zum Lesen durch andere Teilnehmer bzw. den Busmaster (ECU) auf den Zweidraht-Kommunikationsbus (DB) legen zu können.

Zur Vereinfachung der Hardware der erfindungsgemäßen Ansteuerung der Komponenten eines Kfz-Moduls trägt darüber hinaus bei, dass auf der Ebene der Komponenten bzw. Zweidraht-Kommunikationsbus-Teilnehmer mit festen Abtastpunkten statt mit einer dynamischen Anpassung der Abtastpunkte gearbeitet wird. Letzteres ist wesentlich aufwendiger. Die Taktgewinnung pro Teilnehmer erfolgt durch Auslesen der Synchronisationsinformationen der Bitströme, die vorteilhafterweise zu Beginn eines Bitstroms gesendet werden.

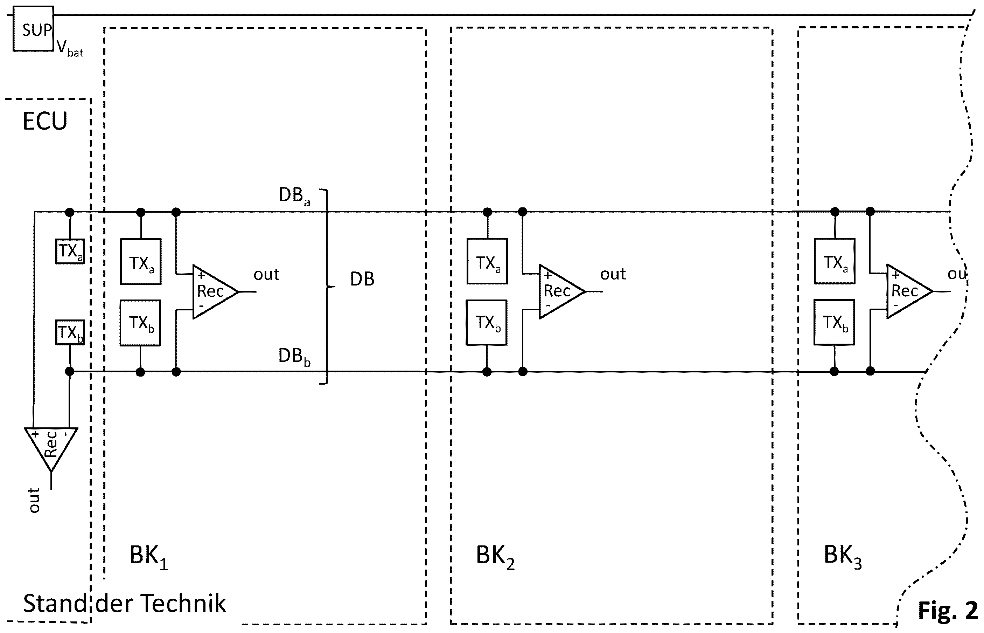

Figur 2 zeigt einen Zweidraht-Kommunikationsbus (DB), wie er beispielsweise aus dem Stand der Technik bekannt ist. Der serielle, bidirektionale, differentielle Zweidraht-Kommunikationsbus (DB) besteht aus einem ersten Eindrahtbus (DBₐ) und einem zweiten Eindrahtbus (DB_{b}).

Der serielle, bidirektionale, differentielle Zweidraht-Kommunikationsbus (DB) verbindet den Busmaster (ECU) mit mehreren Busknoten ((BK₁) bis [BKₙ]).

### Figur 3

Der Busmaster (ECU) verfügt über einen ersten Treiber [TRa] mit dem er den ersten Eindrahtbus (DBₐ) in einen ersten Zustand (Z1) oder einen zweiten Zustand (Z2) oder einen dritten Zustand (Z3) bringen kann.

Ein erster Treiber kann als CAN-Treiber bevorzugt zwei von drei erlaubten Zuständen einnehmen: In einem ersten Zustand legt er einen ersten logischen Pegel (Z1) auf den ersten Eindrahtbus (DBₐ). In einem zweiten Zustand legt er einen dritten logischen Pegel (Z3) auf den ersten Eindrahtbus (DBₐ). Der erste Treiber des Busmasters (ECU) arbeitet außerdem im Adressierungszustand des Datenbussystems und der Busknoten ((BK₁) bis [BK_{n'}]) als erste Stromsenke für die ersten Adressierungsströme der ersten Adressierungsstromquellen ((Iq₁) bis [Iqₙ]) der Busknoten ((BK₁) bis [BKₙ]) und deren erste Ruheströme. Bevorzugt nimmt der erste Treiber eines Busknotens ((BK₁) bis [BKₙ]) bzw. des Busmasters (ECU) den ersten Zustand (Z1) an, wenn der zweite Treiber [TR_{b}] des betreffenden Busknotens ((BK₁) bis [BKₙ]) den zweiten Zustand (Z2) annimmt. Hierdurch wird das Signal mit einem ersten differentiellen Pegel (z1) differentiell eingeprägt. Bevorzugt nimmt der erste Treiber eines Busknotens ((BK₁) bis [BKₙ]) bzw. des Busmasters (ECU) den dritten Zustand (Z3) an, wenn der zweite Treiber (TR_{b}) des betreffenden Busknotens ((BK₁) bis [BKₙ]) den dritten Zustand (Z3) annimmt. Hierdurch wird das Signal mit einem dritten differentiellen Pegel (z3) differentiell eingeprägt.

Der erste Treiber kann auch als RS485-Treiber bevorzugt zwei von zwei erlaubten Zuständen einnehmen: In einem ersten Zustand legt er einen ersten logischen Pegel (Z1) auf den ersten Eindrahtbus (DBₐ). In einem zweiten Zustand legt er einen zweiten logischen Pegel (Z2) auf den ersten Eindrahtbus (DBₐ). Der erste Treiber des Busmasters (ECU) arbeitet außerdem im Adressierungszustand des Datenbussystems und der Busknoten ((BK₁) bis [BKₙ]) als erste Stromsenke für die ersten Adressierungsströme der ersten Adressierungsstromquellen ((Iq₁) bis [Iqₙ]) der Busknoten ((BK₁) bis [BKₙ]) und deren erste Ruheströme. Bevorzugt nimmt der erste Treiber eines Busknotens ((BK₁) bis [BKₙ]) bzw. des Busmasters (ECU) den ersten Zustand (Z1) an, wenn der zweite Treiber [TR_{b}] des betreffenden Busknotens ((BK₁) bis [BKₙ]) den zweiten Zustand (Z2) annimmt. Hierdurch wird das Signal mit einem ersten differentiellen Pegel (z1) differentiell eingeprägt. Bevorzugt nimmt der erste Treiber eines Busknotens ((BK₁) bis [BKₙ]) bzw. des Busmasters (ECU) den zweiten Zustand (Z2) an, wenn der zweite Treiber [TR_{b}] des betreffenden Busknotens ((BK₁) bis [BKₙ]) den ersten Zustand (Z1) annimmt. Hierdurch wird das Signal mit einem zweiten differentiellen Pegel (z2) differentiell eingeprägt.

Außerdem verfügt der erste Treiber typischerweise über eine Teilvorrichtung zur Detektion und Vermeidung einer Buskollision im Falle eines gleichzeitigen Zugriffs auf den ersten Eindrahtbus (DBₐ) durch einen ersten Treiber eines anderen Busknotens ((BK₁) bis [BKₙ]) bzw. des Busmasters (ECU).

Ein zweiter Treiber kann als CAN-Treiber bevorzugt zwei von drei erlaubten Zuständen einnehmen: In einem ersten Zustand legt er einen zweiten logischen Pegel (Z2) auf den zweiten Eindrahtbus (DB_{b}). In einem zweiten Zustand legt er einen dritten logischen Pegel (Z3) auf den zweiten Eindrahtbus (DB_{b}). Der zweite Treiber des Busmasters (ECU) arbeitet außerdem im Adressierungszustand des Datenbussystems und der Busknoten ((BK₁) bis [BKₙ]) als zweite Stromsenke für die zweiten Adressierungsströme der zweiten Adressierungsstromquellen ((Iq'₁) bis [Iq'ₙ]) der Busknoten ((BK₁) bis [BKₙ]) und deren zweite Ruheströme. Bevorzugt nimmt der zweite Treiber eines Busknotens ((BK₁) bis [BKₙ]) bzw. des Busmasters (ECU) den zweiten Zustand (Z2) an, wenn der erste Treiber [TRₐ] des betreffenden Busknotens ((BK₁) bis [BKₙ]) den ersten Zustand (Z1) annimmt. Hierdurch wird das Signal mit einem ersten differentiellen Pegel (z1) differentiell eingeprägt. Bevorzugt nimmt der zweite Treiber eines Busknotens ((BK₁) bis [BKₙ]) bzw. des Busmasters (ECU) den dritten Zustand (Z3) an, wenn der erste Treiber [TRₐ] des betreffenden Busknotens ((BK₁) bis (BKₙ]) den dritten Zustand (Z3) annimmt. Hierdurch wird das Signal mit einem dritten differentiellen Pegel (z3) differentiell eingeprägt.

Der zweite Treiber kann auch als RS485-Treiber bevorzugt zwei von zwei erlaubten Zuständen einnehmen: In einem ersten Zustand legt er einen zweiten logischen Pegel (Z2) auf den ersten Eindrahtbus (DBₐ). In einem zweiten Zustand legt er einen ersten logischen Pegel (Z1) auf den zweiten Eindrahtbus (DB_{b}). Der zweite Treiber des Busmasters (ECU) arbeitet außerdem im Adressierungszustand des Datenbussystems und der Busknoten ((BK₁) bis [BKₙ]) als zweite Stromsenke für die zweiten Adressierungsströme der zweiten Adressierungsstromquellen ((Iq'₁) bis [Iq'ₙ]) der Busknoten ((BK₁) bis [BKₙ]) und deren zweite Ruheströme. Bevorzugt nimmt der zweite Treiber eines Busknotens ((BK₁) bis [BKₙ]) bzw. des Busmasters (ECU) den zweiten Zustand (Z2) an, wenn der erste Treiber [TRₐ] des betreffenden Busknotens ((BK₁) bis [BKₙ]) den ersten Zustand (Z1) annimmt. Hierdurch wird das Signal mit einem ersten differentiellen Pegel (z1) differentiell eingeprägt. Bevorzugt nimmt der zweite Treiber eines Busknotens ((BK₁) bis [BKₙ]) bzw. des Busmasters (ECU) den ersten Zustand (Z1) an, wenn der erste Treiber [TRₐ] des betreffenden Busknotens ((BK₁) bis [BKₙ]) den zweiten Zustand (Z2) annimmt. Hierdurch wird das Signal mit einem zweiten differentiellen Pegel (z2) differentiell eingeprägt.

Außerdem verfügt der zweite Treiber typischerweise über eine Teilvorrichtung zur Detektion und Vermeidung einer Buskollision im Falle eines gleichzeitigen Zugriffs auf den ersten Eindrahtbus (DBₐ) durch einen zweiten Treiber eines anderen Busknotens ((BK₁) bis [BKₙ]) bzw. des Busmasters (ECU).

### Figur 2

Jeder der Busknoten ((BK₁) bis [BKₙ]) und der Busmaster (ECU) verfügen bevorzugt über einen Empfänger (Rec). Der jeweilige Empfänger (Rec) extrahiert die in den Bit-Strom-Paketen (BP) auf dem seriellen, bidirektionalen, differentiellen Zweidraht-Kommunikationsbus (DB) enthaltenen Daten (DATA) und gibt diese bevorzugt zusammen mit Fehlerinformationen über einen Ausgang (out) des Empfängers (Rec) aus. Der Empfänger (Rec) überprüft typischerweise, ob Prüfinformationen (CHKD) innerhalb von Dateninformationen (DATA) eines Bit-Strom-Pakets (BP) auf einen fehlerfreien Empfang durch den Empfänger (Rec) schließen lassen. Wurde ein Bit-Strom-Paket (BP) durch den Empfänger (Rec) nicht fehlerfrei empfangen, so signalisiert der Empfänger (Rec) dieses bevorzugt. Die eigentlichen Nutzschaltungen am Empfängerausgang (out) sind hier in der Figur 2 zur besseren Übersicht nicht eingezeichnet. Diese verarbeiten die durch den Empfänger (Rec) empfangenen Informationen (out) und steuern die Treiber [TRₐ, TR_{b}] für den jeweiligen Sendevorgang eines Busknotens ((BK₁) bis [BKₙ]) bzw. des Busmasters (ECU).

Das Datenbussystem verfügt über eine gemeinsame Versorgungsspannungsleitung (V_{bat}) und typischerweise ein gemeinsames Bezugspotenzial [GND], das in Figur 2 nicht eingezeichnet ist.

Man beachte, dass die Figur 2 trotz serieller Anordnung der Busknoten ((BK₁) bis [BKₙ]) eine Stern-Struktur des Datenbusses aufweist. Die Darstellung der Figur 2 bricht zur besseren Übersicht bei dem dritten Busknoten (BK₃) ab.

Es wird also in einer Ausprägung eine Vorrichtung zur Ansteuerung elektrischer und/oder elektronischer Busknoten ((BK₁) bis [BKₙ]), insbesondere innerhalb eines Kfz-Moduls, einer Innenleuchte und/oder Außenleuchte wie z.B. eines Rücklichtmoduls eines Kfz vorgeschlagen, die einen seriellen, bidirektionalen, differentiellen Zweidraht-Kommunikationsbus (DB) mit n Busknoten (BK₁ bis [BKₙ]) aufweist. Dabei ist n eine ganze positive Zahl größer 1. Des Weiteren weist die vorgeschlagene Vorrichtung einen Busmaster (ECU) auf. Der serielle, bidirektionale, differentielle Kommunikationsbus (DB) besteht aus einem ersten Eindrahtbus (DBₐ) und einem zweiten Eindrahtbus (DB_{b}). Jeder Busknoten (BKⱼ) der n Busknoten ((BK₁) bis [BKₙ]) verfügt über eine differentielle, serielle Schnittstelle [IFⱼ] passend zu dem seriellen, bidirektionalen, differentiellen Kommunikationsbus (DB). Jeder Busknoten (BKⱼ) der n Busknoten ((BK₁) bis [BKₙ]) weist bevorzugt einen Taktgeber [CLKGⱼ], eine Abtastvorrichtung [AT;], eine Adresserkennungseinheit [ADRⱼ] und ein Busknotenadressregister [BKADRⱼ] auf. Der serielle, bidirektionale, differentielle Kommunikationsbus (DB) ist so gestaltet, dass er sich bevorzugt zumindest in einem ersten logischen Zustand (High, Z1) und in einem zweiten logischen Zustand (Low, Z2) und ggf. in einem dritten logischen Zustand (Idle, Z3) befinden kann.

Zum Ersten können Pegel des Hochgeschwindigkeits CAN-Protokolls [HS-CAN] verwendet werden. Dies wird als Erstes erläutert.

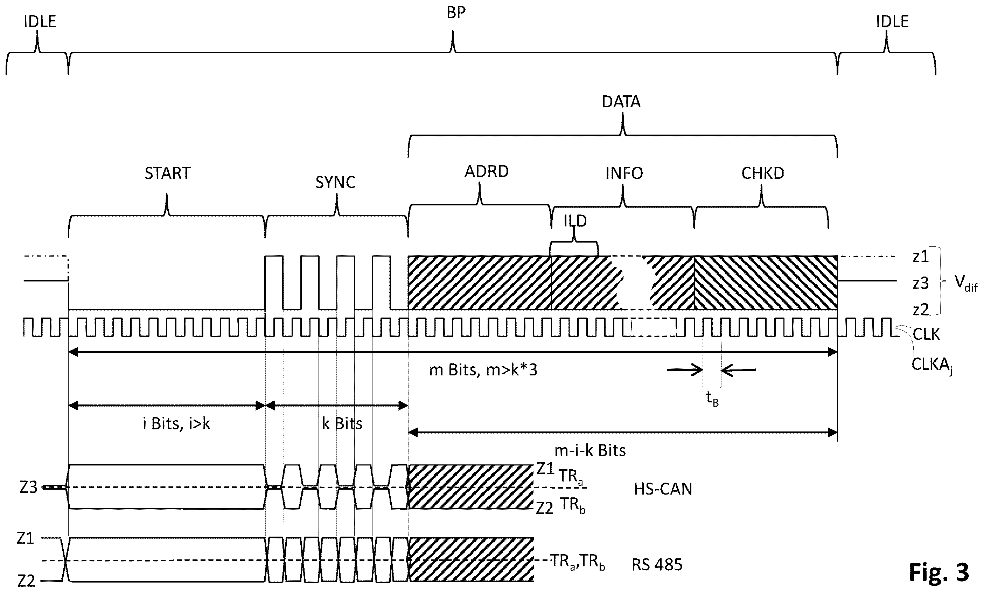

Hierzu wird der serielle, bidirektionale, differentielle Kommunikationsbus (DB) in den Transmittern (TXₐ, TX_{b}) der jeweilige Busknoten (BKⱼ) jeweils bevorzugt über jeweils einen hochhohmigen Spannungsteiler je Transmitter (TXₐ, TX_{b}) bevorzugt auf eine bevorzugt verschwindende differentielle Spannungsdifferenz zwischen dem ersten Eindrahtbus (DBₐ) und dem zweiten Eindrahtbus (DB_{b}) entsprechend dem dritten logischen Zustand (Idle, Z3) geklemmt. Jeder der Transmitter (TXₐ, TX_{b}) umfasst bevorzugt je einen Schalter, mit dem bei Ansteuerung der erste Eindrahtbus (DBₐ) des seriellen, bidirektionalen, differentiellen Kommunikationsbusses (DB) durch den ersten Treiber [TRₐ] auf den ersten logischen Zustand (High, Z1) gebracht wird und der zweite Eindrahtbus (DB_{b}) des seriellen, bidirektionalen, differentiellen Kommunikationsbusses (DB) durch den zweiten Treiber (TR_{b}) in einen zweiten logischen Zustand (Low, Z2) gebracht werden kann. Das ist in Figur 3 unten dargestellt. Werden die Schalter der Treiber [TRₐ, TR_{b}] ausgeschaltet (IDLE), so nimmt der serielle, bidirektionale, differentielle Kommunikationsbus (DB) wieder den dritten logischen Zustand (Idle, Z3) an.

Zum Zweiten können Pegel des RS484 Protokolls verwendet werden. Dies wird als Zweites erläutert.

Hierzu wird der serielle, bidirektionale, differentielle Kommunikationsbus (DB) in den Transmittern (TXₐ, TX_{b}) der jeweilige Busknoten (BKⱼ) jeweils bevorzugt über jeweils einen hochhohmigen Spannungsteiler je Transmitter (TXₐ, TX_{b}) bevorzugt auf eine differentielle Spannungsdifferenz entsprechend dem dritten logischen Zustand (Idle, Z3) geklemmt. Jeder der Transmitter (TXₐ, TX_{b}) umfasst bevorzugt je eine Halbbrücke, mit der durch zueinander inverser Ansteuerung der serielle, bidirektionale, differentielle Kommunikationsbus (DB) auf den ersten logischen Zustand (High, Z1) und in einen zweiten logischen Zustand (Low, Z2) gebracht werden kann. Werden die Halbbrücken ausgeschaltet (IDLE), so nimmt der serielle, bidirektionale, differentielle Kommunikationsbus (DB) wieder den dritten logischen Zustand (Idle, Z3) an.

### Figur 3

Die serielle Schnittstelle (IFⱼ) des mindestens einen Busknoten (BKⱼ) der n Busknoten ((BK₁) bis [BKₙ]) ist jeweils mit dem seriellen, bidirektionalen, differentiellen Kommunikationsbus (DB) verbunden, um Daten über diesen seriellen, bidirektionalen, differentiellen Kommunikationsbus (DB) zu senden und/oder von diesem zu empfangen. Sie umfasst typischerweise je Busknoten (BKⱼ) die schon erwähnten Transmitter (TXₐ, TX_{b}) und einen Empfänger (Rec). Die Takt- und Datenextraktion innerhalb der Busknoten ((BK₁) bis [BKₙ]) aus den Bit-Paketen (BP) ist in den Zeichnungen zur Vereinfachung nicht eingezeichnet, da sie dem Stand der Technik entnommen werden kann. Der Busmaster (ECU) erhält von extern Steuerbefehle für die n Busknoten ((BK₁) bis [BKₙ]) und setzt diese Steuerbefehle in über den seriellen, bidirektionalen, differentiellen Kommunikationsbus (DB) an die Busknoten ((BK₁) bis [BKₙ]) zu versendende Bitströme um. Der Busmaster (ECU) sendet in Abhängigkeit von einem Takt (CLK) innerhalb des Busmasters (ECU) die Bits der durch den Busmaster (ECU) zu versendenden Bitströme über den seriellen, bidirektionalen, differentiellen Kommunikationsbus (DB). Der Busmaster (ECU) empfängt in der Gegenrichtung von den Busknoten ((BK₁) bis [BKₙ]) erzeugte Bitströme über den seriellen, bidirektionalen, differentiellen Kommunikationsbus (DB). Taktgeber [CLKGⱼ] innerhalb eines jeden Busknotens (BKⱼ) der n Busknoten ((BK₁) bis [BKₙ]) erzeugen innerhalb jedes Busknotens (BKⱼ) dieser Busknoten ((BK₁) bis [BKₙ]) ein jeweiliges Abtastsignal [CLKAⱼ]. Die Abtastvorrichtung [ATⱼ] dieses jeweiligen Busknotens (BKⱼ) der n Busknoten ((BK₁) bis [BKₙ]) tastet dann in Abhängigkeit von dem Abtastsignal [CLKAⱼ] dieses Busknotens (BKⱼ) die über den seriellen, bidirektionalen, differentiellen Kommunikationsbus (DB) versendeten Bitströme ab. Hierbei kann es sich sowohl um Bitströme des Busmasters (ECU) an die Busknoten ((BK₁) bis [BKₙ]) als auch um Bitströme der anderen Busknoten ((BK₁) bis [BKₙ]) an den Busmaster (ECU) oder an andere Busknoten ((BK₁) bis [BKₙ]) handeln. Der betreffende Busknoten (BKⱼ) extrahiert auf diese Weise aus den Signalen auf dem seriellen, bidirektionalen, differentiellen Kommunikationsbus (DB) einen lokalen Bitstrom innerhalb dieses Busknotens (BKⱼ), aus dem Ausgang des Receivers (Rec) durch Abtastung des Ausgangssignals des Receivers (Rec) oder eines daraus abgeleiteten Signals. Der Busmaster (ECU) sendet die zu versendenden Bitströme als Folgen von Bits in Bit-Strom-Paketen (englisch Frames, BP). Auch die Busknoten versenden bevorzugt ihre zu versendenden Bitströme als Folgen von Bits in Bit-Strom-Paketen (englisch Frames, BP), die bevorzugt in ihrem Aufbau denen des Busmasters (ECU) entsprechen. Zur Vereinfachung werden hier nur die Bit-Strom-Pakete (englisch Frames, BP) des Busmasters (ECU) diskutiert. Für die Bit-Strom-Pakete (BP) der Busknoten ((BK₁) bis [BKₙ]) gilt dann Entsprechendes.

Wie zuvor erläutert, bedeutet dieser Aufbau, dass der serielle, bidirektionale, differentielle Zweidraht-Kommunikationsbus (DB), wenn weder der Busmaster (ECU) noch einer der n Busknoten ((BK₁) bis [BKₙ]) Daten über den seriellen, bidirektionalen, differentiellen Zweidraht-Kommunikationsbus (DB) überträgt, den ersten logischen Zustand (Z1) (gestrichelt in Figur 3) oder den dritten logischen Zustand (Z3) - was bevorzugt ist - annimmt.

Die vorgeschlagene bevorzugte Struktur der vom Busmaster (ECU) versendeten Bit-Strom-Pakete (BP) wird mit Hilfe von Figur3 erläutert. Das mit V_{diff} bezeichnet Signal soll den differentiellen Pegel auf dem seriellen, bidirektionalen, differentiellen Kommunikationsbus (DB) darstellen, also die Spannungsdifferenz zwischen dem ersten Eindrahtbus (DBₐ) und dem zweiten Eindrahtbus (DB_{b}).

Das mit HS-CAN bezeichnete Diagramm beschreibt die entsprechenden Einzelpegel sowie differenziellen Pegel, wenn CAN-Treiber [TRₐ, TR_{b}] verwendet werden.

Das mit RS485 bezeichnete Diagramm stellt die entsprechenden Einzelpegel sowie differenzeillen Pegel dar, wenn RS485 Treiber [TRₐ, TR_{b}] verwendet werden.

Die Treiber [TRₐ, TR_{b}] liefern im HS-CAN-Schema drei Spannungspegel, aber nur zwei differentielle Spannungspegel.

Die Treiber (TRₐ, TR_{b}) liefern im RS485-Schema zwei Spannungspegel und nur zwei differentielle Spannungspegel.

Es wird hier vorgeschlagen, dass zumindest ein Teil der von dem Busmaster (ECU) versendeten Bit-Strom-Pakete (BP) folgende Inhalte aufweist:
1. ein Startsignal (START) in Form von i Bits mit i als ganzer positiver Zahl mit i-1≤m/3 der m bits des jeweiligen Bit-Strom-Paketes (BP) mit einem zweiten logischen differentiellen Zustand (z2) auf dem seriellen, bidirektionalen, differentiellen Zweidraht-Kommunikationsbus (DB),
2. eine Synchronisationsinformation (SYNC), zur Synchronisation des Abtastsignals [CLKA;] der Taktgeber [CLKGⱼ] der Busknoten (BKⱼ) mit dem Takt (CLK) des Busmasters (ECU),
3. Dateninformationen (DATA) in Form von k bits mit k<i und k<m/3 der m bits des jeweiligen Bit-Strom-Paketes (BP) aus den restlichen Bits der m-i-k Bits der m Bits des jeweiligen Bit-Strom-Paketes (BP), wobei die Dateninformationen (DATA) Adressinformationen (ADRD) und Nutzinformationen (INFO) umfassen.

Die Adresserkennungseinheiten ([Adr₁] bis [Adrₙ]) der Busknoten ((BK₁) bis [BKₙ]) und ggf. auch des Busmasters (ECU) werten die die Adressinformationen (ADRD) der Bit-Strom-Pakete (BP) aus. Die Adresserkennungseinheiten ([Adr₁] bis [Adrₙ]) der Busknoten ((BK₁) bis [BKₙ]) lassen nur dann eine Verwendung der enthaltenen Nutzinformationen (INFO) zu, wenn der Inhalt der Adressinformationen (ADRD) mit dem Inhalt des Busknotenadressregisters [BKADRⱼ] des Busknotens (BKⱼ) korrespondiert. Bevorzugt weisen die Busknoten (BKⱼ) der n Busknoten ((BK₁) bis [BKₙ]) Mittel auf, um ein Autoadressierungsverfahren für einen Zweidrahtdatenbus durchzuführen, um das Busknotenadressregister [BAKDRⱼ] mit einer logischen Busknotenadresse zu füllen, die mit der physikalischen Position dieses Busknotens (BKⱼ) der n Busknoten ((BK₁) bis [BKₙ]) innerhalb des seriellen, bidirektionalen, differentiellen Zweidraht-Kommunikationsbusses (DB) korrespondiert. Dies ist ein wesentlicher Schritt, der im Stand der Technik nicht gelöst ist.

In einer Verfeinerung des Verfahrens weist jeder Busknoten (BKⱼ) der n Busknoten ((BK₁) bis [BKₙ]) einen Mikrocontroller [µCⱼ] auf, der einige der zuvor benannten Aufgaben, wie beispielsweise die der Adresserkennungseinheit [ADRⱼ] des jeweiligen Busknotens (BKⱼ) und/oder der Abtastvorrichtung [ATⱼ] des jeweiligen Busknotens (BKⱼ) per Softwareprogramm übernehmen kann. Es wird nun vorgeschlagen, dass bevorzugt zusätzlich mindestens ein Busknoten (BKⱼ) der n Busknoten ((BK₁) bis [BKₙ]) mindestens ein Leuchtmittel [LED;] aufweist und mindestens ein Energieversorgungsmittel [EVⱼ] aufweist. Das mindestens eine Energieversorgungsmittel [EVⱼ] des mindestens einen Busknotens (BKⱼ) der n Busknoten ((BK₁) bis [BKₙ]) ist dabei dann für die Energieversorgung des mindestens einen Leuchtmittels [LEDⱼ] des mindestens einen Busknotens (BKⱼ) der n Busknoten ((BK₁) bis [BKₙ]) vorgesehen.

Wie zuvor, erzeugt der Taktgeber [CLKGⱼ] eines jeden Busknotens (BKⱼ) der n Busknoten ((BK₁) bis [BKₙ]) ein Abtastsignal [CLKAⱼ] innerhalb des jeweiligen Busknotens (BKⱼ) der n Busknoten ((BK₁) bis [BKₙ]). Die Abtastvorrichtung [ATⱼ] eines bevorzugt jeden Busknotens (BKⱼ) der n Busknoten ((BK₁) bis [BKₙ]) tastet wieder in Abhängigkeit von dem Abtastsignal [CLKAⱼ] dieses Busknotens [BKⱼ] über den seriellen, bidirektionalen, differentiellen Zweidraht-Kommunikationsbus (DB) versendete Bitströme, um einen lokalen Bitstrom innerhalb dieses Busknotens (BKⱼ) zu gewinnen. Die Bit-Strom-Pakete (BP) bestehen bevorzugt aus einer zeitlichen Abfolge von m Einzelbits gleicher zeitlicher Länge t_{B} mit m als ganzer positiver Zahl, deren zeitliche Länge t_{B} um nicht mehr als einen Faktor von +/- (0,4/m)*t_{B} und/oder besser +/- (0,2/m)*t_{B} und/oder besser +/(0,1/m)*t_{B} und/oder besser +/- (0,05/m)*t_{B} innerhalb eines Bit-Strom-Pakets (BP) variiert. Zumindest ein Teil der von dem Busmaster (ECU) versendeten Bit-Strom-Pakete (BP) weist bevorzugt folgende Inhalte auf (siehe Figur 3):
1. Ein Startsignal (START) in Form von i Bits mit i als ganzer positiver Zahl mit i-1≤m/3 mit einem zweiten differentiellen logischen Zustand (z2) auf dem seriellen, bidirektionalen, differentiellen Zweidraht-Kommunikationsbus (DB);
2. Eine Synchronisationsinformation (SYNC) aus k-Bits mit k als ganzer positiver Zahl, insbesondere mit k<i und k<m/3, zur Phasensynchronisation des Abtastsignals (CLKAⱼ) der Taktgeber [CLKGⱼ] der Busknoten (BKⱼ) auf die Phase des Takts (CLK) des Busmasters (ECU) und zur Frequenzsynchronisation des Abtastsignals [CLKA;] der Taktgeber [CLKGⱼ]der Busknoten (BKⱼ) auf die Frequenz des Takts (CLK) des Busmasters (ECU);
3. Dateninformationen (DATA) aus den restlichen Bits der m-i-k Bits der m Bits des jeweiligen Bit-Strom-Paketes (BP), wobei die Dateninformationen (DATA) Adressinformationen (ADRD) und Nutzinformationen (INFO) und Prüfinformationen (CHKD) umfassen.

Zumindest ein Teil der Nutzinformationen (INFO) umfasst dabei Beleuchtungsinformationen (ILD) zur Steuerung der Energieversorgung der Leuchtmittel [LEDⱼ] des Busknotens (BKⱼ) durch das Energieversorgungsmittel [EVⱼ] des Busknotens (BKⱼ) in Abhängigkeit von diesen Beleuchtungsinformationen. Hierzu wird typischerweise ein Beleuchtungsregister innerhalb des Energieversorgungsmittels [EVⱼ] mit einem Wert in Abhängigkeit von der empfangenen Beleuchtungsinformation (ILD) beschrieben, was die Abstrahleigenschaften wie Farbe, Farbtemperatur und Helligkeit der angeschlossenen Leuchtmittel [LED;] bestimmt. Damit diese Daten durch den betreffenden Busknoten (BKⱼ) akzeptiert werden, muss der logische Inhalt der Adressinformationen (ADRD) mit dem Inhalt des Busknotenadressregisters [BKADRⱼ] des Busknotens (BKⱼ) übereinstimmen. Ist dies nicht der Fall, werden die Dateninformationen (DATA) ignoriert. Gleiches ist der Fall, wenn die Überprüfung der Integrität der empfangenen Dateninformationen (DATA) mittes der ebenfalls empfangenen Prüfdaten (CHKD) ergibt, dass der Empfang fehlerhaft war. Die jeweilge Adresserkennungseinheit [ADRⱼ] des jeweiligen Busknotens (BKⱼ) wertet die Adressinformation (ADRD) eines empfangenen Bit-Strom-Pakets (BP) jeweils aus und lässt nur dann eine Verwendung der enthaltenen Nutzinformationen (INFO) durch den Rest der Busknotenvorrichtungen des Busknotens (BKⱼ) zu, wenn der Inhalt der empfangenen Adressinformationen (ADRD) mit dem Inhalt des Busknotenadressregisters [BKADRⱼ] des Busknotens (BKⱼ) korrespondiert und fehlerfrei ist. Im Gegensatz zum Stand der Technik weisen Busknoten ((BK₁) bis [BKₙ]) Mittel auf, um ein Autoadressierungsverfahren für einen seriellen, bidirektionalen und differentiellen Kommunikationsbus (DB) durchzuführen. Als Ergebnis eines solchen Autoadressierungsverfahrens wird das Busknotenadressregister [BAKDRⱼ] dieser Busknoten ((BK₁) bis [BKₙ]) mit einer logischen Busknotenadresse gefüllt, die mit der physikalischen Position dieses Busknotens (BKⱼ) der n Busknoten ((BK₁) bis [BKₙ]) innerhalb des seriellen, bidirektionalen, differentiellen Zweidraht-Kommunikationsbusses (DB) korrespondiert.

Die zuvor beschriebenen Prüfungen können weiter genutzt werden. In einer ersten Variante der Vorrichtung werden der Busmaster (ECU) und/oder Busknoten ((BK₁) bis [BKₙ]) mit Mitteln ausgestattet, um aufgrund der Auswertung der Prüfinformationen (CHKD) auf einen nicht korrekt laufenden Taktgeber [CLKGⱼ] eines oder mehrerer Busknoten (BKⱼ) zu schließen.

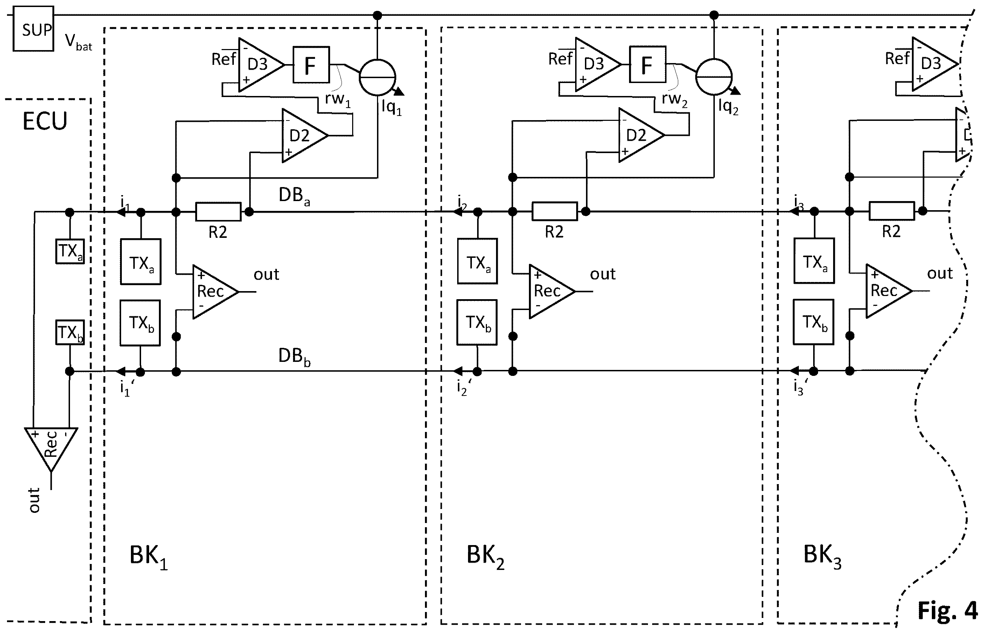

Im Folgenden werden verschiedene beispielhafte Autoadressierungsverfahren und andere Varianten beschrieben, die beispielhaft verwendet werden können: ASYMMETRISCHE AUTOADRESSIERUNG DER BUSKNOTEN MIT BUS-SHUNT-WIDERSTÄNDEN, DIE VON DEM EIGENEN ADRESSIERUNGSSTROM DES BETREFFENDEN BUSKNOTENS NICHT DURCHSTRÖMT WERDEN (FIG. 4)

### Figur 4

Es ist nun typischerweise gewünscht, dass die Busknoten ((BK₁) bis [BKₙ]) ihre physikalische Position innerhalb des Datenbussystems in dem seriellen, bidirektionalen, differentiellen Zweidraht-Kommunikationsbus (DB) selbstständig feststellen und eine darauf basierende Busknotenadresse erhalten, sodass die logische Adresse mit der physikalischen Adresse korrespondiert. Dies hat den Vorteil, dass bei gleichartig aufgebauten Busknoten ((BK₁) bis [BKₙ]) nur eine Art von Busknoten in der Fertigung vorgehalten werden muss, was Fehlermöglichkeiten verhindert und Logistik verbessert. Um eine solche Autoadressierung durchzuführen, könnte man nun auf die Idee kommen, eine Autoadressierung einzubauen. Dies ist in Figur 4 dargestellt. Beispielhaft ist hier in den ersten Eindrahtbus (DBₐ) ein erster Bus-Shunt-Widerstand (R2) je Busknoten ((BK₁) bis [BKₙ]) eingefügt. Ein zweiter Differenzverstärker (D2) dient zur Messung des ersten Stromes durch den ersten Eindrahtbus (DBₐ) mittels des ersten Shunt-Widerstands (R2). Der Ausgang des zweiten Differenzverstärkers (D2), der zur Messung des ersten Stromes durch den ersten Eindrahtbus (DBₐ) dient, ist mit einem dritten Komparator (D3) verbunden, der den Ausgangswert des zweiten Differenzverstärkers (D2) mit einem ersten Referenzwert (Ref) vergleicht. Dies entspricht in seiner Wirkung einem Vergleich des ersten Stroms im ersten Eindrahtbus (DBₐ) durch den ersten Bus-Shunt-Widerstand (R2) mit einem ersten Referenzstrom [I_{ref}]. Das Datenbussystem mit seinen Buknoten ((BK₁) bis [BKₙ]) kann nun durch den Busmaster (ECU) mittels eines speziellen Bus-Signals in einen Adressierungszustand und in einen Normalzustand versetzt werden. Während des Adressierungszustands wird ein Autoadressierungsverfahren durchgeführt. Ist das Datenbussystem im Adressierungszustand, so befinden sich die Busknoten ((BK₁) bis [BKₙ]), die das Autoadressierungsverfahren durchführen können, in einem entsprechenden Adressierungszustand der Busknoten. Die erste Adressierungsstromquelle (Iqⱼ) (mit 1≤j≤n) des jeweiligen Busknotens (BKⱼ) wird im Normalzustand abgeschaltet oder erfüllt eine andere Funktion wie beispielsweise die Energieversorgung eines Leuchtmittels [LEDⱼ]. Die erste Adressierungsstromquelle (Iqⱼ) (mit 1≤j≤n) des jeweiligen Busknotens (BKⱼ) wird im Adressierungszustand abgeschaltet, wenn der jeweilige Busknoten (BKⱼ) mittels dieser ersten Mittel (R2, D2, D3) einen ersten Strom durch seinen ersten Bus-Shunt-Widerstand (R2) detektiert, der oberhalb eines Schwellwertes entsprechend dem ersten Referenzstrom[I_{Ref}] liegt. In dem Beispiel der Figur 4 speist die jeweilige erste Adressierungsstromquelle (Iqⱼ) eines Busknotens (BKⱼ) ihren ersten Adressierungsstrom vom Busmaster (ECU) aus gesehen vor dem jeweiligen ersten Bus-Shunt-Widerstand (R2) des jeweiligen Busknotens (BKⱼ) in den ersten Eindrahtbus (DBₐ) ein, wenn der Busknoten (BKⱼ) mittels der zuvor beschriebenen ersten Mittel (R2, D2, D3) feststellt, dass nur ein erster Strom unterhalb dieses Schwellwerts durch seinen ersten Bus-Shunt-Widerstand (R2) in Richtung Busmaster (ECU) fließt. Dies hat den Nachteil, dass ein Selbsttest des Busknotens (BKⱼ) bei diesem Einspeisepunkt des ersten Adressierungsstromes nicht möglich ist. Außerdem kann es im Einschaltvorgang zu einer Überlastung des ersten Treibers [TRₐ] des Busmasters (ECU) kommen. Daher muss der erste Adressierungsstrom der ersten Adressierungsstromquellen ((Iq₁) bis [Iqₙ]) auf einen n-ten Teil des maximalen Stromwerts begrenzt werden, den der erste Treiber [TRₐ] noch aufnehmen kann. Dies begrenzt den Widerstandswert des ersten Bus-Shunt-Widerstands (R2) nach unten, da ansonsten der Pegel des Spannungsabfalls über den ersten Bus-Shunt-Widerstand (R2) eines Busknotens (BKⱼ) zu klein für eine Detektion durch die ersten Mittel (R2, D2, D3) dieses Busknotens (BKⱼ) würde. Dies führt zu einer erhöhten Sensibilität gegenüber elektromagnetischen Einstrahlungen, was eigentlich vermieden werden soll. Außerdem führt die Asymmetrie zwischen dem ersten Eindrahtbus (DBₐ) der Figur 4 und dem zweiten Eindrahtbus (DB_{b}) der Figur 4 zu Einkopplungen von Gleichtaktstörungen in das differenzielle Signal auf dem seriellen, bidirektionalen, differentiellen Zweidraht-Kommunikationsbus (DB), was auch vermieden werden soll. Stellt ein Busknoten (BKⱼ) im Adressierungszustand nach einer gewissen, vorgegebenen Wartezeit nach Einnahme des Adressierungszustands fest, dass seine erste Adressierungsstromquelle (Iqⱼ) noch nicht abgeschaltet ist, so ist er der letzte noch nicht mit einer gültigen Busknotenadresse versehene Busknoten (BKⱼ). Er übernimmt dann eine typischerweise vom Busmaster (ECU) angebotene zu vergebende Busknotenadresse als seine neue gültige Busknotenadresse. Da er dann über eine gültige Busknotenadresse verfügt, schaltet er dann seine Adressierungsstromquelle (Iqⱼ) ab und wartet dann das Ende des Adressierungszustands des Datenbussystems ab ohne seine Adressierungsstromquelle (Iqⱼ) vor diesem Ende des Adressierungszustands des Datenbussystems erneut einzuschalten. Der Busknoten [BKⱼ₋₁], der als nächster Busknoten im nächsten Initialisierungslauf dann feststellt, dass seine Adressierungsstromquelle (Iqⱼ) nicht abgeschaltet ist, übernimmt dann die nächste vom Busmaster (ECU) angebotene zu vergebende Busknotenadresse als seine gültige Busknotenadresse und so fort. Dies wird fortgeführt, bis alle Busknoten ((BK₁) bis [BKₙ]) des Datenbussystems auf diese Weise eine gültige Busknotenadresse bekommen haben. Der Busmaster versetzt dann typischerweise anschließend das Datenbussystem und dessen Busknoten ((BK₁) bis [BKₙ]) wieder in den Normalzustand, wobei die gültigen Busknotenadressen beibehalten werden. Dieses empfohlene Beibehalten der gültigen Busknotenadressen beim Übergang vom Adressierungszustand in den Normalzustand gilt bevorzugt für das ganze Dokument.

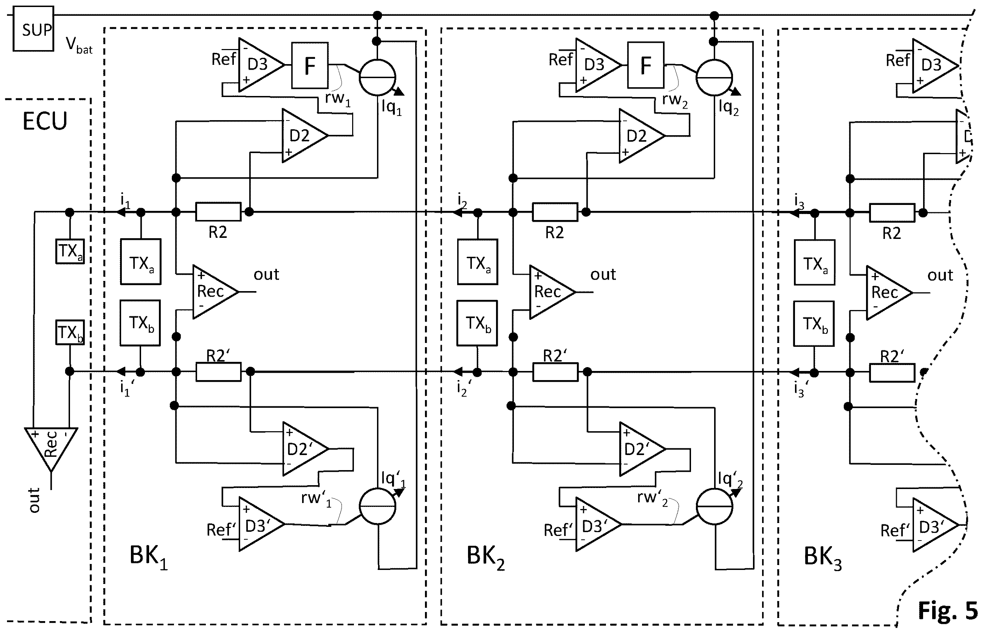

### SYMMETRISCHE AUTOADRESSIERUNG DER BUSKNOTEN MIT BUS-SHUNT-WIDERSTÄNDEN, DIE VON DEM EIGENEN ADRESSIERUNGSSTROM DES BETREFFENDEN BUSKNOTENS NICHT DURCHSTRÖMT WERDEN (FIG. 5)

### Figur 5

Ein sich bei der Autoadressierung ergebendes Problem ist, wie erwähnt, das der Symmetrie. Da es sich bei dem seriellen, bidirektionalen, differentiellen Zweidraht-Kommunikationsbus (DB) um einen differentiellen Bus handelt, sollten die beiden Eindrahtbusse (DBₐ und DB_{b}) möglichst symmetrisch konstruiert werden, um keinen Angriffspunkt für Gleichtaktstörungen zu bieten. Das Datenbussystem sollte daher Busknoten (BKⱼ) mit für den Zweidraht-Kommunikationsbus (DB), der aus einem ersten Eindrahtbus (DB₁) und einem zweiten Eindrahtbus (DB₂) besteht, einem ersten Bus-Shunt-Widerstand (R2), der in den ersten Eindrahtbus (DB₁) eingefügt ist, und mit einem zweiten Bus-Shunt-Widerstand (R2') aufweisen, der in den zweiten Eindrahtbus (DB₂) eingefügt ist. Ein entsprechender Vorschlag basierend auf Figur 4 ist in Figur 5 gezeigt. Die beiden Bus-Shunt-Widerstände (R2, R2') je Busknoten (BKⱼ) der Busknoten ((BK₁) bis [BKₙ]) sind bevorzugt monolithisch integriert sowie mit einer relativen Widerstandswertabweichung innerhalb des jeweiligen Busknotens (BKⱼ) von weniger als 10% und/oder besser weniger als 5% und/oder besser weniger als 2% und/oder besser weniger als 1% und/oder besser weniger als 0,5% matchend gefertigt.

Jeder Busknoten (BKⱼ) ist nun zusätzlich zu den ersten Mitteln (R2, D2, D3) zur Erfassung des ersten Stromes durch den ersten Bus-Shunt-Widerstand (R2) im ersten Eindrahtbus (DBₐ) mit zweiten Mitteln (R2', D2', D3') zur Erfassung des zweiten Stromes durch den zweiten Bus-Shunt-Widerstand (R2') im zweiten Eindrahtbus (DB_{b}) ausgestattet.

Beispielhaft ist hier nun auch in den zweiten Eindrahtbus (DB_{b}) ein zweiter Bus-Shunt-Widerstand (R2') je Busknoten ((BK₁) bis [BKₙ]) eingefügt. Ein weiterer zweiter Differenzverstärker (D2') dient zur Messung des zweiten Stromes durch den zweiten Eindrahtbus (DB_{b}) anhand des zweiten Shunt-Widerstands (R2') des betreffenden Busknotens (BKⱼ). Der Ausgang des weiteren zweiten Differenzverstärkers (D2'), der zur Messung des zweiten Stromes durch den zweiten Eindrahtbus (DB_{b}) dient, ist mit einem weiteren dritten Komparator (D3') verbunden, der den Ausgangswert des weiteren zweiten Differenzverstärkers (D2') mit einem weiteren Referenzwert (Ref), der typischerweise gleich dem bereits zuvor genannten Referenzwert (Ref) ist, vergleicht. Dies entspricht in seiner Wirkung einem Vergleich des zweiten Stroms im zweiten Eindrahtbus (DB_{b}) durch den zweiten Bus-Shunt-Widerstand (R2') mit einem zweiten Referenzstrom [I'_{ref}], der typischerweise gleich dem zuvor genannten ersten Referenzstrom [I_{ref}] gewählt wird. Die zweite Adressierungsstromquelle (Iq'ⱼ) (mit 1≤j≤n) des jeweiligen Busknotens (BKⱼ) wird abgeschaltet, wenn der jeweilige Busknoten (BKⱼ) mittels dieser zweiten Mittel (R2', D2', D3') einen ersten Strom durch seinen zweiten Bus-Shunt-Widerstand (R2') detektiert, der oberhalb eines Schwellwertes entsprechend dem ersten Referenzstrom [I_{Ref}] liegt. In dem Beispiel der Figur 5 speist die jeweilige zweite Adressierungsstromquelle (Iq'ⱼ) eines Busknotens (BKⱼ) den zweiten Adressierungsstrom vom Busmaster (ECU) aus gesehen ebenfalls vor dem jeweiligen zweiten Bus-Shunt-Widerstand (R2') des jeweiligen Busknotens (BKⱼ) in den zweiten Eindrahtbus (DB_{b}) ein, wenn der Busknoten (BKⱼ) mittels der zuvor beschriebenen zweiten Mittel (R2', D2', D3') feststellt, dass nur ein zweiter Strom unterhalb dieses Schwellwerts durch seinen zweiten Bus-Shunt-Widerstand (R2') in Richtung Busmaster (ECU) fließt. Dies hat wie zuvor den Nachteil, dass ein Selbsttest des Busknotens (BKⱼ) nicht möglich ist. Außerdem kann es auch hier im Einschaltvorgang zu einer Überlastung des zweiten Treibers [TR_{b}] des Busmasters (ECU) kommen. Daher muss der zweite Adressierungsstrom der zweiten Adressierungsstromquellen ((Iq'₁) bis [Iq'ₙ]) auf einen n-ten Teil des maximalen Stromwerts begrenzt werden, den der zweite Treiber [TR_{b}] noch aufnehmen kann. Dies begrenzt den Widerstandswert des zweiten Bus-Shunt-Widerstands (R2') nach unten, da ansonsten der Pegel des Spannungsabfalls über den zweiten Bus-Shunt-Widerstand (R2') eines Busknotens (BKⱼ) zu klein für eine Detektion durch die zweiten Mittel (R2', D2', D3') würde. Dies führt zu einer erhöhten Sensibilität gegenüber elektromagnetischen Einstrahlungen, was vermieden werden soll. Die Symmetrie zwischen dem ersten Eindrahtbus (DBₐ) der Figur 5 und dem zweiten Eindrahtbus (DB_{b}) der Figur 5 führt nun jedoch schon zu einer verringerten Einkopplung von Gleichtaktstörungen in das differenzielle Signal auf dem seriellen, bidirektionalen, differentiellen Zweidraht-Kommunikationsbus (DB), was ein Vorteil ist.

Bevorzugt werden immer beide Adressierungsstromquellen (Iqⱼ, Iq'ⱼ) eines Busknotens (BKⱼ) abgeschaltet, wenn der Busknoten (BKⱼ) mittels der zuvor beschriebenen ersten Mittel (R2, D2, D3) feststellt, dass ein erster Strom oberhalb des Schwellwerts durch seinen ersten Bus-Shunt-Widerstand (R2) in Richtung Busmaster (ECU) fließt oder mittels der zuvor beschriebenen zweiten Mittel (R2', D2', D3') feststellt, dass nur ein zweiter Strom oberhalb dieses Schwellwerts durch seinen zweiten Bus-Shunt-Widerstand (R2') in Richtung Busmaster (ECU) fließt.

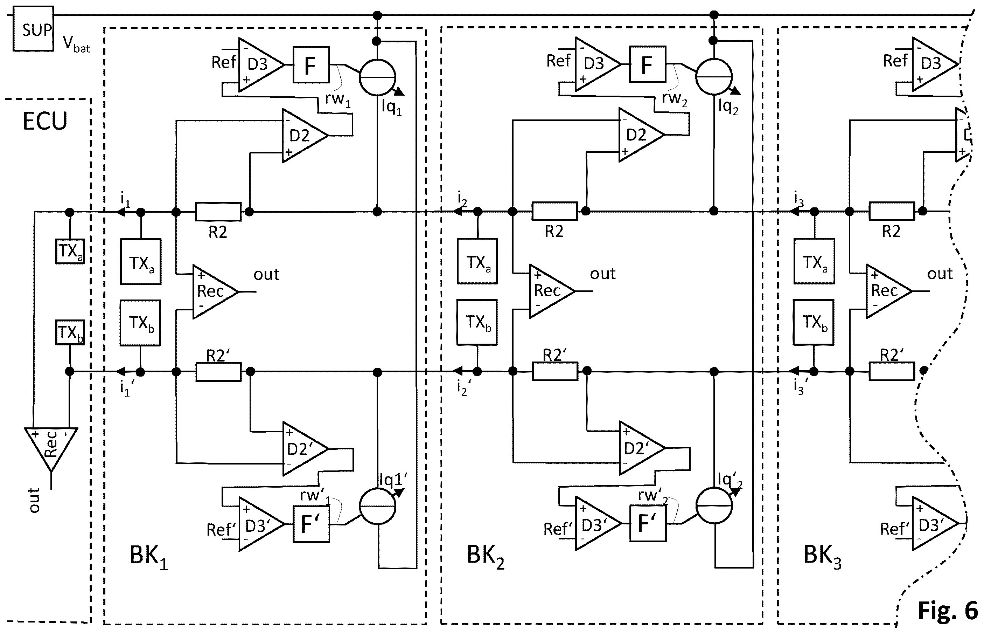

### SYMMETRISCHE AUTOADRESSIERUNG DER BUSKNOTEN MIT BUS-SHUNT-WIDERSTÄNDEN, DIE VON DEM EIGENEN ADRESSIERUNGSSTROM DES BETREFFENDEN BUSKNOTENS DURCHSTRÖMT WERDEN (FIG. 6)

### Figur 6

Figur 6 zeigt nun einen anderen Vorschlag basierend auf der Figur 5. Wesentlicher Unterschied zur Figur 5 ist nun, dass die jeweiligen ersten Adressierungsstromquellen ((Iq₁) bis [Iqₙ]) vom Bus-Master (ECU) aus gesehen den ersten Adressierungsstrom hinter den ersten Bus-Shunt-Widerständen (R2) in der Adressierungsphase, in der der jeweilige Busknoten (BKⱼ) in einem Adressierungszustand ist, einspeisen, wenn der jeweilige Busknoten (BKⱼ) mittels der ersten Mittel (R2, D2, D3) einen Stromwert des ersten Stroms durch den ersten Bus-Shunt-Widerstand (R2) feststellt, der kleiner als ein vorgegebener erster Referenzstromwert [I_{ref}] ist. Der dritte Komparator (D3) ist bevorzugt nun ein dritter Differenzverstärker (D3). Im Gegensatz zum Vorschlag der Figur 5 wird der erste Adressierungsstrom der jeweiligen ersten Adressierungsstromquelle (Iqⱼ) des jeweiligen Busknotens (BKⱼ) nun jedoch nachgeregelt, bis der erste Strom durch den ersten Bus-Shunt-Widerstand (R2) dem vorgegebenen ersten Referenzstrom [I_{ref}] entspricht. Analog dazu speisen in Abweichung von Figur 5 die jeweiligen zweiten Adressierungsstromquellen ((Iq'₁) bis [Iq'ₙ]) vom Bus-Master (ECU) aus gesehen den jeweiligen zweiten Adressierungsstrom ebenfalls hinter den entsprechenden zweiten Bus-Shunt-Widerständen (R2') in der Adressierungsphase, in der der jeweilige Busknoten (BKⱼ) in einem Adressierungszustand ist, ein, wenn der jeweilige Busknoten (BKⱼ) mittels der zweiten Mittel (R2', D2', D3') einen Stromwert des zweiten Stroms durch den zweiten Bus-Shunt-Widerstand (R2) feststellt, der kleiner als ein vorgegebener zweiter Referenzstromwert [I'_{ref}] ist, der bevorzugt gleich dem ersten Referenzstromwert [I_{ref}] ist. Der weitere dritte Komparator (D3') ist bevorzugt nun ein weiterer dritter Differenzverstärker (D3'). Im Gegensatz zum Vorschlag der Figur 5 wird der zweite Adressierungsstrom der jeweiligen zweiten Adressierungsstromquelle (Iq'ⱼ) des jeweiligen Busknotens (BKⱼ) nun jedoch ebenfalls nachgeregelt, bis der zweite Strom durch den zweiten Bus-Shunt-Widerstand (R2') dem vorgegebenen zweiten Referenzstrom [I'_{ref}] entspricht.

Natürlich ist es möglich in der Konfiguration der Figur 6 die Adressierungsstromquellen ((Iq₁) bis [Iqₙ], (Iq'₁) bis [Iq'ₙ]) zu schalten statt zu regeln.

Der Busknoten (BKⱼ) ist somit mit einer ersten Adressierungsstromquelle (Iqⱼ) zur Ermittlung der Busposition des Busknotens (BKⱼ) im seriellen, bidirektionalen, differentiellen Zweidraht-Kommunikationsbus (DB) versehen, die einen ersten Adressierungsstrom in der Art in den ersten Eindrahtbus (DBₐ) des seriellen, bidirektionalen, differentiellen Zweidraht-Kommunikationsbusses (DB) geregelt zusätzlich derart einspeisen kann, dass der erste Gesamtstrom (iⱼ) durch den ersten Bus-Shunt-Widerstand (R2) des Busknotens (BKⱼ) einem vorgegebenen oder berechneten oder sonst wie bestimmten ersten Summenstrom [I_{ref}] entspricht. Bevorzugt durchströmt der erste Adressierungsstrom den ersten Bus-Shunt-Widerstand (R2). Bevorzugt ist der jeweilige Busknoten (BKⱼ) nun mit einer zweiten Adressierungsstromquelle (Iq'ⱼ) zur Ermittlung der Busposition des Busknotens (BKⱼ) im seriellen, bidirektionalen, differentiellen Zweidraht-Kommunikationsbus (DB), die einen zweiten Adressierungsstrom in der Art in den zweiten Eindrahtbus (DB_{b}) des seriellen, bidirektionalen, differentiellen Zweidraht-Kommunikationsbusses (DB) geregelt zusätzlich einspeisen kann, dass der zweite Gesamtstrom (iⱼ) durch den zweiten Bus-Shunt-Widerstand (R2') des Busknotens (BKⱼ) einem vorgegebenen oder berechneten oder sonst wie bestimmten zweiten Summenstrom [I'_{ref}] entspricht. Der zweite Adressierungsstrom durchströmt nun den zweiten Bus-Shunt-Widerstand (R2'). Für die Symmetrie ist es hilfreich, wenn die beiden Adressierungsstromquellen (Iqⱼ, Iq'ⱼ) matchend ausgeführt sind. Auch sollten alle messenden und regelnden Komponenten des Regelkreises für diese beiden Adressierungsstromquellen (Iqⱼ, Iq'ⱼ) matchend ausgeführt werden, um volle Symmetrie zu erzielen.

### Figuren 7 bis 9

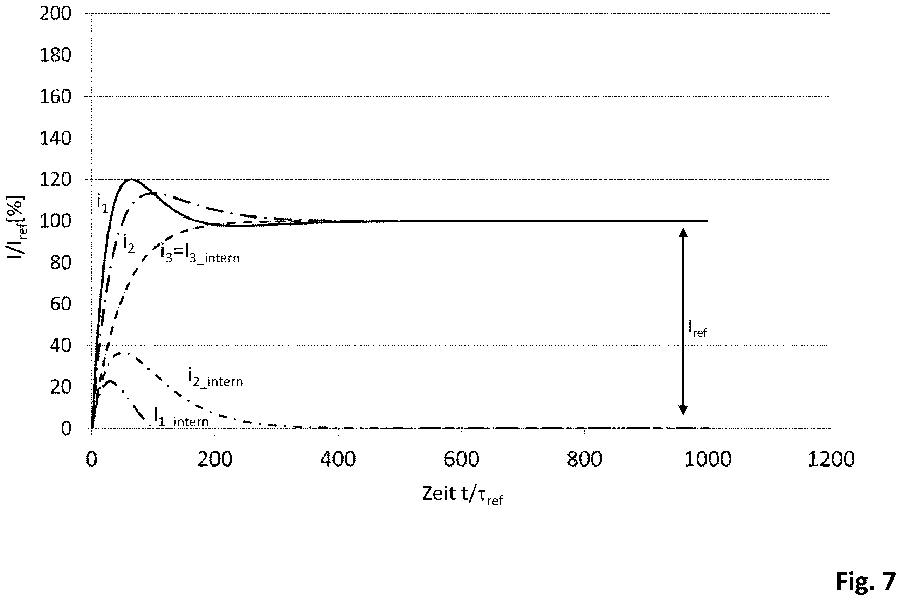

Die Figuren 7 bis 9 stellen vorteilhafte Eigenschaften der Regelung dar. Die Regelung wird am Beispiel der ersten Adressierungsstromquellen ((Iq₁) bis [Iqₙ]) erläutert, trifft aber auch auf die zweiten Adressierungsstromquellen ([Iq'₁] bis [Iq'ₙ]) in analoger Weise zu. Die Einheiten für Abszisse und Ordinate sind mit [an] als Platzhalter für eine beliebige Einheit (arbitrary unit) bezeichnet.

Die Regelcharakteristik für die erste Adressierungsstromquelle (Iqⱼ) eines Busknotens (Bkⱼ) wird jeweils bevorzugt durch ein erstes Filter (F) bzw. einen ersten Regler erzeugt, das bzw. der aus dem Ausgangssignal des dritten Differenzverstärkers (D3) ein erstes Regelsignal [rwⱼ] erzeugt, mit dem die erste Adressierungsstromquelle (Iqⱼ) des betreffenden Busknotens (BKⱼ) gesteuert wird. Die Regelcharakteristik für die zweite Adressierungsstromquelle (Iq';) eines Busknotens (Bkⱼ) wird jeweils bevorzugt durch ein zweites Filter (F) oder einen zweiten Regler erzeugt, das bzw. der aus dem Ausgangssignal des weiteren dritten Differenzverstärkers (D3') ein zweites Regelsignal (rw'ⱼ) erzeugt, mit dem die zweite Adressierungsstromquelle (Iq'ⱼ) des betreffenden Busknotens (BKⱼ) gesteuert wird.

### Figur 7

Figur 7 zeigt beispielhaft den Verlauf des Ausgangsstroms (i₁) des ersten Busknotens (BK₁), des Ausgangsstroms (i₂) des zweiten Busknotens (BK₂) und des Ausgangsstroms (i₃) des dritten Busknotens (BK₃) in einem beispeilhaften Datenbussystem mit n=3 Busknoten (BK₁ bis BK₃). Außerdem zeigt sie den ersten Adressierungsstrom (I_{1_intern}) der ersten Adressierungsstromquelle (Iq₁) des ersten Busknotens (BK₁), den ersten Adressierungsstrom (I_{2_intern}) der ersten Adressierungsstromquelle (Iq₂) des zweiten Busknotens (BK₂) und den ersten Adressierungsstrom (I_{3_intern}) der ersten Adressierungsstromquelle (Iq₃) des dritten Busknotens (BK₃). Hier sind die Zeitkonstanten für die Heraufregelung des ersten Adressierungsstroms der ersten Adressierungsstromquellen und die Herunterregelung des ersten Adressierungsstroms der ersten Adressierungsstromquellen in etwa gleich. Es kommt zu einem Überschwinger. Gut zu erkennen ist, dass der erste Adressierungsstrom (I_{1_intern}) der ersten Adressierungsstromquelle (Iq₁) des ersten Busknotens (BK₁) und der erste Adressierungsstrom (I_{2_intern}) der ersten Adressierungsstromquelle (Iq₂) des zweiten Busknotens (BK₂) von den Reglern dieser ersten Autoadressierungsbusknoten herunter geregelt werden, während der erste Adressierungsstrom (I_{3_intern}) der ersten Adressierungsstromquelle (Iq₃) des dritten Busknotens (BK₃) auf den Referenzwert [I_{ref}] geregelt wird. Die Zeit zum Einschwingen wird durch eine erste Zeitkonstante [τ₁] zum Heraufregeln des ersten Adressierungsstroms der ersten Adressierungsstromquellen (Iq₁ bis Iq₃) bestimmt.

### Figur 8

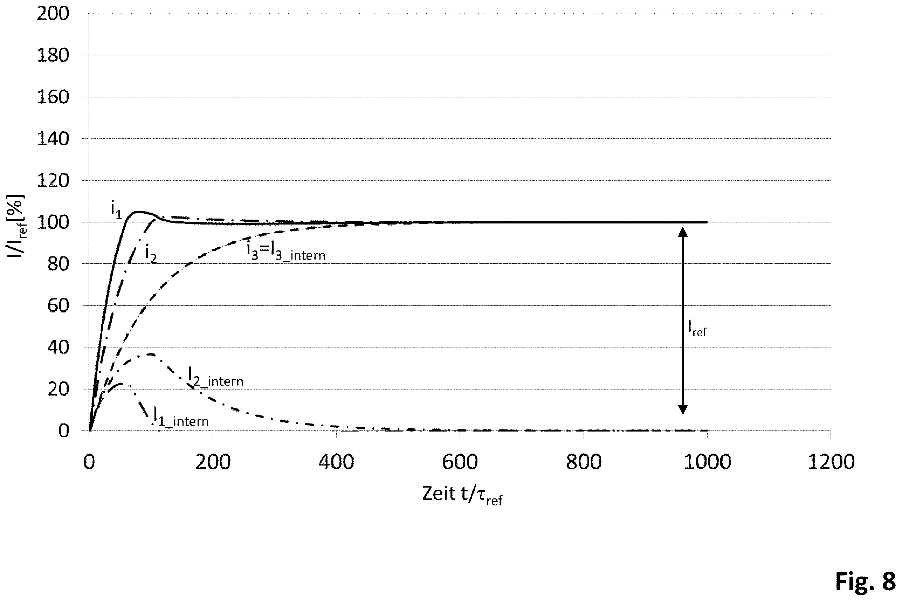

Figur 8 zeigt den Verlauf des Ausgangsstroms (i₁) des ersten Busknotens (BK₁), des Ausgangsstroms (i₂) des zweiten Busknotens (BK₂) und des Ausgangsstroms (i₃) des dritten Busknotens (BK₃). Außerdem zeigt sie den Strom (I_{1_intern}) der ersten Adressierungsstromquelle (Iq₁) des ersten Busknotens (BK₁), den Strom (I_{2_intern}) der ersten Adressierungsstromquelle (Iq₂) des zweiten Busknotens (BK₂) und den Strom (I_{3_intern}) der ersten Adressierungsstromquelle (Iq₃) des dritten Busknotens (BL₃). Hier sind die ersten Zeitkonstanten [τ₁] für die Heraufregelung des ersten Adressierungsstroms der ersten Adressierungsstromquellen in etwa zehnmal so lang wie die zweiten Zeitkonstanten [τ₂] für die Herunterregelung des ersten Adressierungsstroms der ersten Adressierungsstromquellen. Es kommt nur noch zu einem minimalen Überschwinger.

### Figur 9

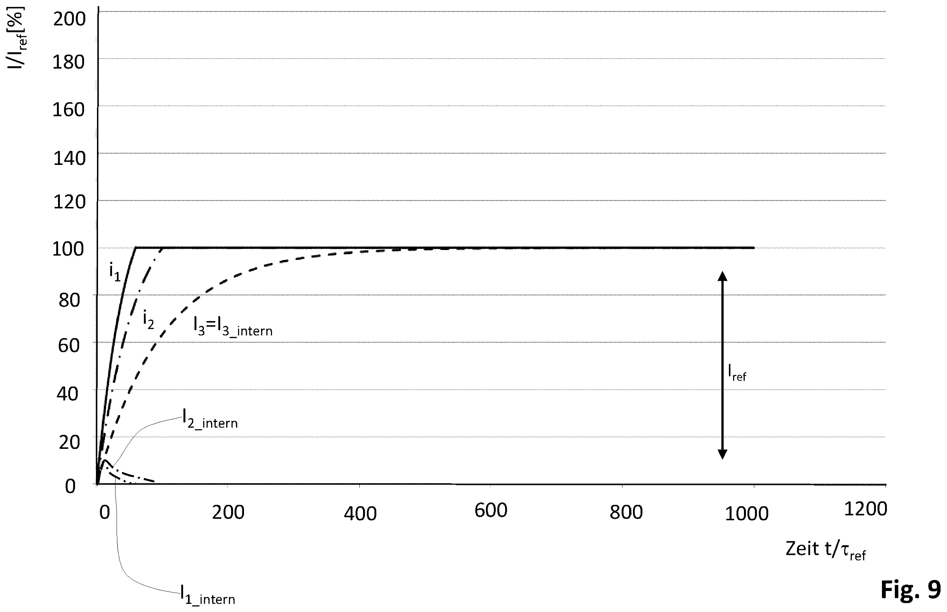

Figur 9 zeigt den Verlauf des Ausgangsstroms (i₁) des ersten Busknotens (BK₁), des Ausgangsstroms (i₂) des zweiten Busknotens (BK₂) und des Ausgangsstroms (i₃) des dritten Busknotens (BK₃). Außerdem zeigt sie den ersten Adressierungsstrom (I_{1_intern}) der ersten Adressierungsstromquelle (Iq₁) des ersten Busknotens (BK₁), den ersten Adressierungsstrom (I_{2_intern}) der ersten Adressierungsstromquelle (Iq₂) des zweiten Busknotens (BK₂) und den ersten Adressierungsstrom (I_{3_intern}) der ersten Adressierungsstromquelle (Iq₃) des dritten Busknotens (BK₃). Hier sind die ersten Zeitkonstanten [τ₁] für die Heraufregelung des ersten Adressierungsstroms der ersten Adressierungsstromquellen in etwa hundertmal so lang wie die zweiten Zeitkonstanten [τ₂] für die Herunterregelung des ersten Adressierungsstroms der ersten Adressierungsstromquellen. Es kommt zu keinem Überschwinger.

Bevorzugt umfasst der Busknoten (BKⱼ) erste Mittel (R2, D2), um den Strom durch den ersten Bus-Shunt-Widerstand (R2) zu detektieren und/oder zweite Mittel (R2', D2'), um den Strom durch den zweiten Bus-Shunt-Widerstand (R2') zu detektieren.

Wird das Datenbussystem so aufgebaut, dass der erste und zweite Adressierungsstrom der beiden Adressierungsstromquellen (Iqⱼ, Iq'ⱼ) vom Busmaster (ECU) aus gesehen immer hinter den Bus-Shunt Widerständen (R2, R2') jeweils eingespeist werden, so kann der jeweils detektierte Strom durch den ersten Bus-Shunt-Widerstand (R2) und/oder durch den zweiten Bus-Shunt-Widerstand (R2') jeweils für einen Selbsttest genutzt werden. Bei voller Symmetrie sollten beispielsweise beide Spannungsabfälle über beide Bus-Shunt-Widerstände (R2, R2') bevorzugt gleich sein. Eine kalte Lötstelle beispielsweise kann also auf diese Weise leicht detektiert werden.

### Figur 10

Für die Fehlererkennung ist es vorteilhaft, den Busknoten (BKⱼ) mit einer ersten Detektionsvorrichtung (DET) zu versehen, die internen Signale (ds1, ds3) des Busknotens (BKⱼ) auf Plausibilität prüft. Die internen Signale sind bevorzugt Regelsignale innerhalb des Busknotens (BKⱼ). Im Falle einer Bussymmetrie kann beispielsweise die Symmetrie dieser Signale geprüft werden. Es sind aber auch Prüfungen je Kanal möglich. Hierzu sei auf die noch nicht veröffentlichte deutsche Patentanmeldung DE 10 2017 122 365.7 verwiesen, die vollumfänglich Teil dieser Offenlegung ist.

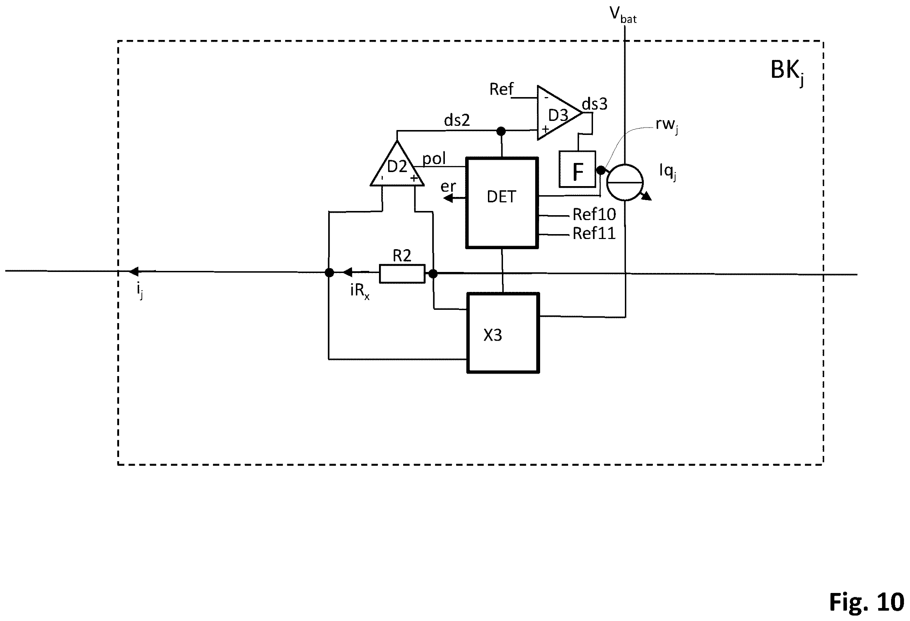

Figur 10 zeigt das Prinzip einer solchen Detektion. Figur 10 zeigt den Regelkreis eines Busknotens (BKⱼ). Hierbei steht j hier für eine Position in der Bus-Kette der Busknoten ((BK₁) bis [BKₙ]) in Form einer positiven, ganzen, natürlichen Zahl. Es handelt sich um einen j-ten Busknoten (BKⱼ), der in der Lage ist,
- zum Ersten eine Vertauschung seiner Buseingänge mit seinem Busausgängen zu erkennen und
- zum Zweiten in diesem Fall als beispielhafte Gegenmaßnahme
- den Einspeisepunkt für den ersten Adressierungsstrom seiner geregelten ersten Adressierungsstromquelle (Iqⱼ) so vor oder hinter seinem ersten Bus-Shunt Widerstand (R2) zu positionieren, dass die Autoadressierung je nach Beschaltung möglich ist und
- den Einspeisepunkt für den zweiten Adressierungsstrom seiner geregelten zweiten Adressierungsstromquelle (Iq'ⱼ) so vor oder hinter seinem zweiten Bus-Shunt Widerstand (R2') zu positionieren, dass die Autoadressierung je nach Beschaltung möglich ist.

In der Figur 10 wird beispielhaft nur die Umpositionierung des Einspeisepunktes des ersten Adressierungsstroms der ersten Adressierungsstromquelle (Iqⱼ) des betrachteten Busknotens (BKⱼ) demonstriert. Für die Umpositionierung des Einspeisepunktes des zweiten Adressierungsstroms der zweiten Adressierungsstromquelle (Iq'ⱼ) des betrachteten Busknotens (BKⱼ) gilt Entsprechendes.

Der in Figur 10 beispielhaft dargestellte j-te Autoadressierungsbusknoten (BKⱼ) weist für die Umpositionierung des Einspeisepunktes des ersten Adressierungsstroms der ersten Adressierungsstromquelle (Iqⱼ) des betrachteten Busknotens (BKⱼ) eine erste Detektionsvorrichtung (DET) auf, die in der Lage ist, eine Vertauschung des Bus-Eingangs des j-ten Busknotens (BKⱼ) für den ersten Eindrahtbus (DBₐ) mit dem Bus-Ausgang des j-ten Busknotens (BKⱼ) für den ersten Eindrahtbus (DBₐ) festzustellen. Hierzu überprüft die beispielhafte erste Detektionsvorrichtung (DET) interne Signale des j-ten Busknoten (BKⱼ) auf Plausibilität. Lassen die internen Signale des j-ten Busknotens (BKⱼ) auf eine Vertauschung des Bus-Eingangs des j-ten Busknotens (BKⱼ) für den ersten Eindrahtbus (DBₐ) mit dem Bus-Ausgang des j-ten Busknotens (BKⱼ) für den ersten Eindrahtbus (DBₐ) sicher schließen, so kann die erste Detektionsvorrichtung (DET) verschiedene beispielhafte Maßnahmen potenziell ergreifen:
a. Signalisierung des Fehlers an einen Nutzer;
b. Signalisierung des Fehlers an den Busmaster (ECU) mittels Antwort auf eine Diagnoseanfrage (Broadcast-Message) oder mittels einer Interruptleitung;
c. Verwendung einer vorbestimmten Fehleradresse als gültige Busknotenadresse;
d. Umkonfiguration der internen Topologie zur Neutralisation des Fehlers;
e. Umparametrierung interner Teilvorrichtungen wie z.B. Stromquellen zur Neutralisation des Fehlers;

Weitere Maßnahmen sind denkbar.

In dem Beispiel der Figur 10 ist eine Umkonfiguration der internen Topologie zur Neutralisation des Fehlers vorgesehen. In der Figur 10 ändert beispielhaft die erste Detektionsvorrichtung (DET) den Einspeisepunkt für den ersten Adressierungsstrom der geregelten ersten Adressierungsstromquelle (Iqⱼ) des j-ten Busknotens (BKⱼ) beispielsweise mit Hilfe eines ersten analogen Demultiplexers (X3) und vertauscht die Polarität der Eingänge oder des Ausgangs des zweiten Differenzverstärkers (D2) mittels des Polaritätssignals (pol).

### Figur 11

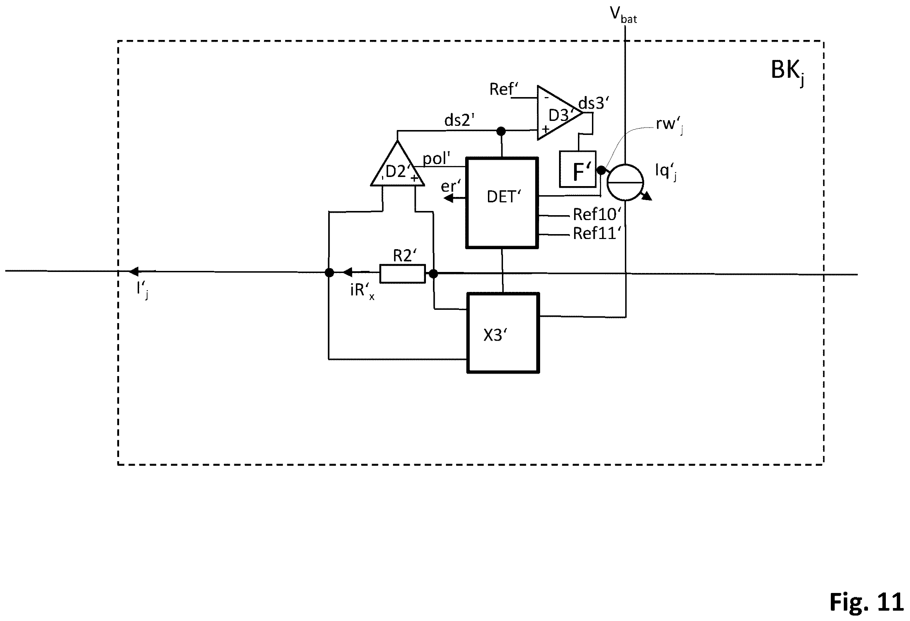

Zur besseren Übersicht ist die analoge Vorrichtung für den zweiten Eindrahtbus (DB_{b}) nicht eingezeichnet, da sie analog aufgebaut ist. Der in Figur 11 beispielhaft vereinfacht dargestellte j-te Autoadressierungsbusknoten (BKⱼ) weist für die Umpositionierung des Einspeisepunktes des zweiten Adressierungsstroms der zweiten Adressierungsstromquelle (Iq';) des betrachteten Busknotens (BKⱼ) eine zweite Detektionsvorrichtung (DET') auf, die in der Lage ist, eine Vertauschung des Bus-Eingangs des j-ten Busknotens (BKⱼ) für den zweiten Eindrahtbus (DB_{b}) mit dem Bus-Ausgang des j-ten Busknotens (BKⱼ) für den zweiten Eindrahtbus (DB_{b}) festzustellen. Hierzu überprüft die beispielhafte zweite Detektionsvorrichtung (DET') weitere interne Signale des j-ten Busknoten (BKⱼ) auf Plausibilität. Lassen die internen Signale des j-ten Busknotens (BKⱼ) auf eine Vertauschung des Bus-Eingangs des j-ten Busknotens (BKⱼ) für den zweiten Eindrahtbus (DB_{b}) mit dem Bus-Ausgang des j-ten Busknotens (BKⱼ) für den zweiten Eindrahtbus (DB_{b}) sicher schließen, so kann die zweite Detektionsvorrichtung (DET') verschiedene beispielhafte Maßnahmen potenziell ergreifen:
a. Signalisierung des Fehlers an einen Nutzer;
b. Signalisierung des Fehlers an den Busmaster (ECU) mittels Antwort auf eine Diagnoseanfrage (Broadcast-Message) oder mittels einer Interruptleitung;
c. Verwendung einer Fehleradresse als Busknotenadresse;
d. Umkonfiguration der internen Topologie zur Neutralisation des Fehlers;
e. Umparametrierung interner Teilvorrichtungen wie z.B. Stromquellen zur Neutralisation des Fehlers;

Weitere Maßnahmen sind denkbar.

Auch hier kann eine Umkonfiguration der internen Topologie zur Neutralisation des Fehlers vorgesehen werden. Die zweite Detektionsvorrichtung (DET') kann beispielsweise auch hier den Einspeisepunkt für den zweiten Adressierungsstrom der geregelten zweiten Adressierungsstromquelle (Iq';) des j-ten Busknotens (BKⱼ) beispielsweise mit Hilfe eines zweiten analogen Demultiplexers (X3') ändern und die Polarität der Eingänge oder des Ausgangs des weiteren zweiten Differenzverstärkers (D2') mittels eines zweiten Polaritätssignals (pol') vertauschen.

Alternativ zu dem vorhergehenden Beispiel der Figuren 10 und 11 ist eine Umparametrierung interner Teilvorrichtungen wie z.B. Stromquellen zur Neutralisation des Fehlers möglich, wenn statt einer ersten Adressierungsstromquelle (Iqⱼ) des j-ten Busknotens (BKⱼ) und einem ersten Multiplexer (X3) eine erste Adressierungsstromquelle [Iqⱼ₁] des j-ten Busknotens (BKⱼ) und beispielsweise eine weitere erste Adressierungsstromquelle [Iqⱼ₂] des j-ten Busknotens (BKⱼ) verwendet werden, von denen die erste Adressierungsstromquelle [Iqⱼ₁] des j-ten Busknotens (BKⱼ) ihren ersten Adressierungsstrom vor dem ersten Bus-Shunt-Widerstand (R2) einspeist und die weitere erste Adressierungsstromquelle [Iqⱼ₂] des j-ten Busknotens (BKⱼ) ihren weiteren ersten Adressierungsstrom hinter dem ersten Bus-Shunt-Widerstand (R2) einspeist. In dem Fall würde die erste Detektionsvorrichtung (DET) den ersten Adressierungsstrom einer der beiden ersten Adressierungsstromquellen ([Iqⱼ₁], [Iqⱼ₂]) zu null setzen, so dass der äquivalente Effekt wie bei der Kombination einer ersten Adressierungsstromquelle (Iqⱼ) des j-ten Busknotens (BKⱼ) mit der Umschaltung durch einen ersten Demultiplexer (X3) erzielt wird.

Für den zweiten Eindrahtbus (DB_{b}) würde dann statt einer zweiten Adressierungsstromquelle (Iq';) des j-ten Busknotens (BKⱼ) und einem weiteren zweiten Multiplexer (X3') eine zweite Adressierungsstromquelle [Iq'ⱼ₁] des j-ten Busknotens (BKⱼ) und beispielsweise eine weitere zweite Adressierungsstromquelle [Iq'ⱼ₂] des j-ten Busknotens (BKⱼ) verwendet werden, von denen die zweite Adressierungsstromquelle [Iq'ⱼ₁] des j-ten Busknotens (BKⱼ) ihren zweiten Adressierungsstrom vor dem zweiten Bus-Shunt-Widerstand (R2') einspeist und die weitere zweite Adressierungsstromquelle [Iq'ⱼ₂] des j-ten Busknotens (BKⱼ) ihren weiteren zweiten Adressierungsstrom hinter dem zweiten Bus-Shunt-Widerstand (R2') einspeist. In dem Fall würde die zweite Detektionsvorrichtung (DET') den zweiten Adressierungsstrom einer der beiden zweiten Adressierungsstromquellen ([Iq'ⱼ₁], [Iq'ⱼ₂]) zu null setzen, so dass der äquivalente Effekt wie bei der Kombination einer zweiten Adressierungsstromquelle (Iq'ⱼ) des j-ten Busknotens (BKⱼ) mit der Umschaltung durch einen weiteren zweiten Demultiplexer (X3') erzielt wird.

Beispielsweise kann die erste Detektionsvorrichtung (DET) erkennen, dass der erste Regelwert des ersten Regelsignals (rwⱼ) des j-ten Busknotens (BKⱼ) den ersten Adressierungsstrom der ersten Adressierungsstromquelle (Iqⱼ) maximiert. Dies kann beispielsweise bei geeigneter Konstruktion durch Vergleich des ersten Regelwerts des ersten Regelsignals (rwⱼ) mit einem zehnten Schwellwert (Ref10) geschehen. Ist die Ableitung des ersten Adressierungsstromes der ersten Autoadressierungsstromquelle (Iqⱼ) nach dem ersten Regelwert des ersten Regelsignals (rwⱼ) positiv, so bedeutet dies, dass der erste Regelwert des ersten Regelsignals (rwⱼ) oberhalb des zehnten Schwellwerts (Ref10) liegt. Des Weiteren kann die erste Detektionsvorrichtung (DET) gleichzeitig den Ausgang (ds2) des zweiten Differenzverstärkers (D2) mit einem elften Schwellwert (Ref11) vergleichen. Liegt der Wert des Ausgangs (ds2) des zweiten Differenzverstärkers (D2) unterhalb des elften Schwellwerts (Ref11), so kann die erste Detektionsvorrichtung (DET) auf einen negativen Spannungsabfall über den ersten Bus-Shunt-Widerstand (R2) schließen oder auf einen Spannungsabfall über den ersten Bus-Shunt-Widerstand (R2) nahe Null schließen. Dieser Zustand ist illegal, da die erste Autoadressierungsstromquelle (Iqⱼ) ja einen positiven ersten Adressierungsstrom liefert, der bei korrekter Montage durch den ersten Bus-Shunt-Widerstand (R2) fließen müsste, was aber offensichtlich nicht geschieht.

Beispielsweise kann darüber hinaus die zweite Detektionsvorrichtung (DET') erkennen, dass der zweite Regelwert des zweiten Regelsignals (rw'ⱼ) des j-ten Busknotens (BKⱼ) den zweiten Adressierungsstrom der zweiten Adressierungsstromquelle (Iq'ⱼ) maximiert.

Dies kann beispielsweise bei geeigneter Konstruktion durch Vergleich des zweiten Regelwerts des zweiten Regelsignals (rw'ⱼ) mit einem weiteren zehnten Schwellwert (Ref10') geschehen, der vorzugsweise gleich dem zehnten Schwellwert (Ref10) ist. Ist die Ableitung des zweiten Adressierungsstromes der zweiten Autoadressierungsstromquelle (Iq'ⱼ) nach dem zweiten Regelwert des zweiten Regelsignals (rw'ⱼ) positiv, so bedeutet dies, dass der zweite Regelwert des zweiten Regelsignals (rw'ⱼ) oberhalb des weiteren zehnten Schwellwerts (Ref10') liegt, der vorzugsweise gleich dem zehnten Schwellwert (Ref10) ist. Des Weiteren kann die zweite Detektionsvorrichtung (DET) gleichzeitig den weiteren Ausgang (ds2') des weiteren zweiten Differenzverstärkers (D2') mit einem weiteren elften Schwellwert (Ref11') vergleichen. Der weitere elfte Schwellwert (Ref11') ist bevorzugt gleich dem elften Schwellwert (Ref11). Liegt der Wert des weiteren Ausgangs (ds2') des weiteren zweiten Differenzverstärkers (D2') unterhalb des weiteren elften Schwellwerts (Ref11), so kann die zweite Detektionsvorrichtung (DET') auf einen negativen Spannungsabfall über den zweiten Bus-Shunt-Widerstand (R2') schließen oder auf einen Spannungsabfall über den zweiten Bus-Shunt-Widerstand (R2') nahe Null schließen. Dieser Zustand ist illegal, da die zweite Autoadressierungsstromquelle (Iq';) ja einen positiven zweiten Adressierungsstrom liefert, der bei korrekter Montage durch den zweiten Bus-Shunt-Widerstand (R2') fließen müsste, was aber offensichtlich nicht geschieht.

Bevorzugt bilden die erste Detektionsvorrichtung (DET) und die zweite Detektionsvorrichtung (DET) eine Einheit.

Ein Umschalten der Busrichtung, wie oben beschrieben, erfolgt bevorzugt nur dann, wenn beide Detektionsvorrichtungen (DET, DET') eine Vertauschung der Busanschlüsse erkennen.

Einen erkannten Fehler können die Detektionsvorrichtungen (DET, DET') beispielsweise über ein jeweiliges Fehlersignal (er, er') an einen Busknoten internen Rechner oder eine geeignete Steuerung signalisieren.

Die Prüfungsergebnisse können durch den Busknoten (BKⱼ) oder eine Teilvorrichtung (DET, DET') des Busknotens (BKⱼ) genutzt werden, um vorbestimmte Maßnahmen zu initiieren und zu ergreifen, wenn eine oder mehrere der Detektionsvorrichtungen (DET, DET') nicht plausible interne Signale innerhalb des Busknotens (BKⱼ) feststellen. Beispielsweise kann der Busknoten (BKⱼ) von einer Vertauschung von Eingang und Ausgang ausgehen. Um diese kompensieren zu können ist es vorteilhaft wenn der Busknoten (BKⱼ) eine erste Teilvorrichtung (X3) aufweist, die den Einspeisepunkt des ersten Adressierungsstromes der ersten Adressierungsstromquelle (Iqⱼ) ändern kann und/oder, wenn der Busknoten (BKⱼ) eine zweite Teilvorrichtung (X3') aufweist, die den Einspeisepunkt des zweiten Adressierungsstromes der zweiten Adressierungsstromquelle (Iq'ⱼ) ändern kann. Bevorzugt werden die Änderungen für die Ansteuerung des ersten Eindrahtbusses (DBₐ) und des ersten Bus-Shunt-Widerstands (R2) synchron zu den analogen Änderungen für die Ansteuerung des zweiten Eindrahtbusses (DB_{b}) und des zweiten Bus-Shunt-Widerstands (R2') durchgeführt. Statt eines Umschaltens des Einspeisepunkts der Adressierungsstromquellen (iqⱼ und iq'ⱼ) mittels der besagten Demultiplexer (X3, X3') ist auch die Verwendung zweier verschiedener erster Adressierungsstromquellen statt einer einzelnen ersten Adressierungsstromquelle (Iqⱼ) denkbar, was das Umschalten mittels des Demultiplexers (X3) in ein Umsteuern zwischen diesen beiden ersten Adressierungsstromquellen verwandelt. Ein solcher Busknoten (BKⱼ) weist also an Stelle einer ersten Adressierungsstromquelle (Iqⱼ) eine erste Adressierungsstromquelle und eine weitere erste Adressierungsstromquelle auf, wobei die erste Adressierungsstromquelle ihren ersten Adressierungsstrom in einen mit dem ersten Anschluss des ersten Bus-Shunt-Widerstands (R2) verbundenen Knoten einspeist, wenn sie Strom einspeist, und wobei die weitere erste Adressierungsstromquelle ihren ersten Adressierungsstrom in einen mit dem zweiten Anschluss des ersten Bus-Shunt-Widerstands (R2) verbundenen Knoten einspeist, wenn sie Strom einspeist. Die beiden ersten Adressierungsstromquellen speisen bevorzugt ihre Adressierungsströme so ein, dass der sich ergebende gesamte Adressierungsstrom den ersten Bus-Shunt-Widerstand (R2) durchströmt, was die Selbsttestfähigkeit sichert. Der Busknoten (BKⱼ) weist gegenüber dem Stand der Technik darüber hinaus an Stelle einer zweiten Adressierungsstromquelle eine zweite Adressierungsstromquelle und eine weitere zweite Adressierungsstromquelle auf, wobei die zweite Adressierungsstromquelle ihren Adressierungsstrom in einen mit dem ersten Anschluss des zweiten Bus-Shunt-Widerstands (R2') verbundenen Knoten einspeist, wenn sie Strom einspeist, und wobei die weitere zweite Adressierungsstromquelle ihren Adressierungsstrom in einen mit dem zweiten Anschluss des zweiten Bus-Shunt-Widerstands (R2') verbundenen Knoten einspeist, wenn sie Strom einspeist. Auch diese beiden zweiten Adressierungsstromquellen speisen bevorzugt ihre Adressierungsströme so ein, dass der Adressierungsstrom den zweiten Bus-Shunt-Widerstand (R2') durchströmt, um die Selbsttestfähigkeit sicherzustellen.

Werden nun mehrere Busknoten an einem Datenbus zusammengeschaltet, so muss sichergestellt werden, dass es nicht zu gefährlichen Überstromsituationen durch Überschwinger des Bussummenstromes kommt. Daher hat es sich als vorteilhaft erwiesen, wenn die erste Adressierungsstromquelle (Iqⱼ) den ersten Adressierungsstrom mit einer ersten Zeitkonstante [τ₁] erhöht und mit einer zweiten Zeitkonstante [τ₂] erniedrigt, die kleiner als die erste Zeitkonstante [τ₁] ist und/oder wenn die zweite Adressierungsstromquelle (Iq';) den zweiten Adressierungsstrom mit einer dritten Zeitkonstante [τ₃] erhöht und mit einer vierten Zeitkonstante [τ₄] erniedrigt, die kleiner als die dritte Zeitkonstante [τ₃] ist. Bevorzugt sind die dritte Zeitkonstante [τ₃] und die erste Zeitkonstante [τ₁] betragsgleich gewählt, um die Bussymmetrie auch dynamisch sicherzustellen. Aus dem gleichen Grund sind bevorzugt die vierte Zeitkonstante [τ₄] und die zweite Zeitkonstante [τ₂] betragsgleich gewählt, um auch hier die Bussymmetrie dynamisch sicherzustellen. Es sei hier nochmals auf die Figuren 7 bis 9 verwiesen.

### REDUKTION DES BUSWIDERSTANDS IM NORMALBETRIEB

### Figur 12

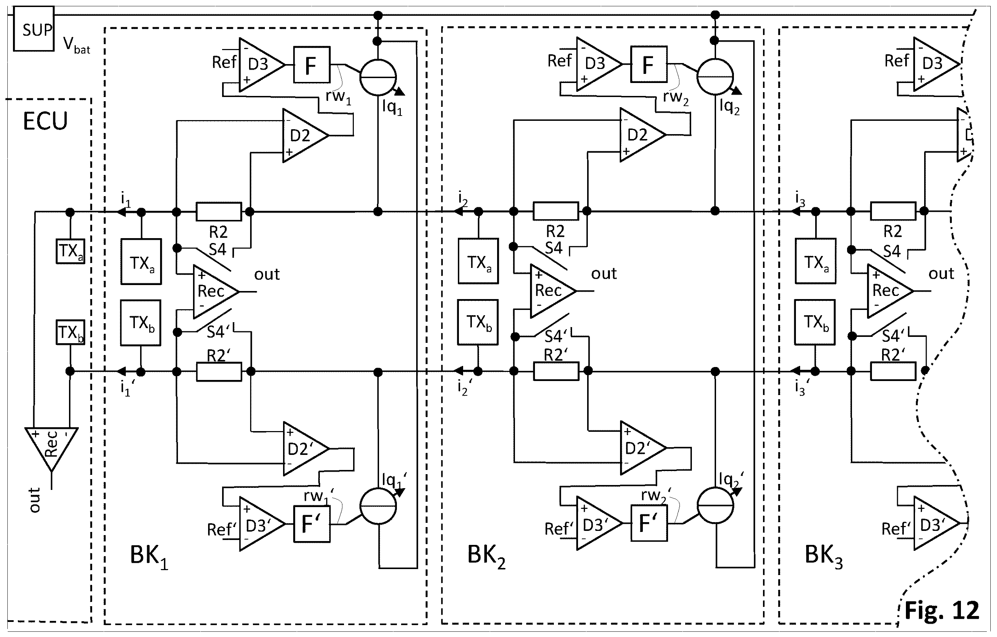

Es wird hier auf Figur 12 verwiesen. Es hat sich nun erwiesen, dass die Bus-Shunt-Widerstände (R2, R2') die Eigenschaften der Eindrahtbusse (DBₐ, DB_{b}) und damit des seriellen, bidirektionalen, differentiellen Zweidraht-Kommunikationsbusses (DB) verschlechtern. Daher wurde erkannt, dass es sinnvoll ist mit einem ersten Bus-Shunt-Überbrückungsschalter (S4) je Busknoten (BKⱼ) den zugehörigen ersten Bus-Shunt-Widerstand (R2) des Busknotens (BKⱼ) im Normalbetrieb, also im Normalzustand des Busknotens (BKⱼ), zu überbrücken und diesen ersten Bus-Shunt-Überbrückungsschalter (S4) nur im Adressierungszustand zu öffnen und damit nur im Adressierungszustand den ersten Bus-Shunt-Widerstand (R2) wirksam werden zu lassen. Um die Bus-Symmetrie nicht zu stören, ist es daher ebenfalls sinnvoll, mit einem zweiten Bus-Shunt-Überbrückungsschalter (S4') je Busknoten (BKⱼ) den zugehörigen zweiten Bus-Shunt-Widerstand (R2') des Busknotens (BKⱼ) im Normalbetrieb, also im Normalzustand des Busknotens (BKⱼ), zu überbrücken und diesen zweiten Bus-Shunt-Überbrückungsschalter (S4') nur im Adressierungszustand zu öffnen und damit nur im Adressierungszustand den zweiten Bus-Shunt-Widerstand (R2') wirksam werden zu lassen.

Bei dem zuvor beschriebenen Busknoten (BKⱼ) handelt es sich somit um einen Busknoten (BKⱼ), der zur Durchführung eines Verfahrens zur Vergabe von Busadressen an Busknoten eines seriellen, bidirektionalen, differentiellen Zweidraht-Kommunikationsbusses (DB) in der Lage ist. Dabei wird das Verfahren zur Vergabe von Busadressen an Busknoten ((BK₁), (BK₂), (BK₃), ...... [BKₙ₋₁], [BKₙ]) eines seriellen, bidirektionalen, differentiellen Zweidraht-Kommunikationsbusses (DB) mit Hilfe von ersten Bus-Shunt-Widerständen (R2) und mit Hilfe von zweiten Bus-Shunt-Widerständen (R2') in den einzelnen Busknoten ((BK₁), (BK₂), (BK₃), ...... [BKₙ₋₁], [BKₙ]) in einem Vergabezeitraum, in dem die Busknoten ((BK₁) bis [BKₙ]) in einem Adressierungszustand sind, durchgeführt, was dieses Verfahren wesentlich vom Stand der Technik unterscheidet. Nach der Durchführung des Verfahrens zur Vergabe von Busadressen an die Busknoten ((BK₁), (BK₂), (BK₃), ...... [BKₙ₋₁], [BKₙ]) des seriellen, bidirektionalen, differentiellen Zweidraht-Kommunikationsbusses (DB) in dem Vergabezeitraum schließt sich ein Betriebszeitraum an, in dem die Busknoten normal betrieben werden, sich also in einem Normalzustand befinden. Der Busknoten (BKⱼ) zeichnet sich somit gegenüber dem Stand der Technik bevorzugt durch einen solchen ersten Bus-Shunt-Widerstand (R2) und einen solchen zweiten Bus-Shunt-Widerstand (R2') aus. Bevorzugt wird der Busknoten (BKⱼ) jeweils mit einem ersten Bus-Shunt-Überbrückungsschalter (S4) versehen, der vor Vergabe einer Busadresse an den Busknoten (BKⱼ) im Vergabezeitraum geöffnet ist und der nach Vergabe einer Busadresse an den Busknoten im Vergabezeitraum geschlossen ist und der in dem Betriebszeitraum geschlossen ist. Analog wird aus Symmetriegründen in dem Busknoten (BKⱼ) bevorzugt ein zweiter Bus-Shunt-Überbrückungsschalter (S4') vorgesehen, der vor Vergabe einer Busadresse an den Busknoten (BKⱼ) im Vergabezeitraum geöffnet ist und der nach Vergabe einer Busadresse an den Busknoten (BKⱼ) im Vergabezeitraum geschlossen ist und der in dem Betriebszeitraum geschlossen ist. Diese Bus-Shunt-Überbrückungsschalter (S4, S4') verringern den Buswiderstand massiv und verringern die Empfindlichkeit gegenüber elektromagnetischen Einstrahlungen. Sie verbessern also das EMV Verhalten.

### Differentielle symmetrische Gleichtakt und Gegentakt basierende Autoadressierung

Statt eines ersten Adressierungsstromes einer ersten Adressierungsstromquelle (Iqⱼ) eines Busknotens (BKⱼ) und eines zweiten Adressierungsstromes einer zweiten Adressierungsstromquelle (Iq';) eines Busknotens (BKⱼ) kann auch eine Gleichtaktstromquelle [GLIqⱼ] eines Busknotens (BKⱼ) mit zwei Ausgängen verwendet werden, die beide den betragsmäßig gleichen Gleichtaktstrom in den ersten Eindrahtbuus (DBₐ) und den zweiten Eindrahtbus (DB_{b}) des seriellen bidirektionalen differentiellen Kommunikationsbusses (DB) mit gleichem Vorzeichen einspeisen. Ein erster Ausgang dieser beiden Ausgänge entspricht also der ersten Adressierungsstromquelle (Iqⱼ). Der zweite Ausgang entspricht dann der zweiten Atressierungsstromquelle (Iq'ⱼ). Der erste Adressierungsstrom der ersten Adresssierungsstromquelle (Iqⱼ) ist dann betragsgleich dem zweiten Adressierungsstrom der zweiten Adresssierungsstromquelle (Iq'ⱼ). Die Verwendung einer einzigen Gleichtaktadressierungsstrommquelle [GLIqⱼ] hat den Vorteil, dass nur noch eine Regelstrecke benötigt wird.

Statt eines ersten Adressierungsstromes einer ersten Adressierungsstromquelle (Iqⱼ) eines Busknotens (BKⱼ) und eines zweiten Adressierungsstromes einer zweiten Adressierungsstromquelle (Iq';) eines Busknotens (BKⱼ) kann aber auch eine Gegentaktstromquelle [GGIqⱼ] eines Busknotens (BKⱼ) mit zwei Ausgängen verwendet werden, die beide den betragsmäßig gleichen Gegentaktstrom in den ersten Eindrahtbuus (DBₐ) und den zweiten Eindrahtbus (DB_{b}) des seriellen bidirektionalen differentiellen Kommunikationsbusses (DB) mit nun aber unterschiedlichem Vorzeichen einspeisen. Ein erster Ausgang dieser beiden Ausgänge entspricht also der ersten Adressierungsstromquelle (Iqⱼ). Der zweite Ausgang entspricht dann wieder der zweiten Atressierungsstromquelle (Iq'ⱼ). Der erste Adressierungsstrom der ersten Adresssierungsstromquelle (Iqⱼ) ist dann betragsgleich aber eben nicht vorzeichengleich dem zweiten Adressierungsstrom der zweiten Adresssierungsstromquelle (Iq'ⱼ). Die Verwendung einer einzigen Gegentaktadressierungsstrommquelle[GLIqⱼ] hat ebenso den Vorteil, dass nur noch eine Regelstrecke benötigt wird.

Mischlösungen unter Verwendung von Gleichtakt- und Gegentaktadressierungsstromquellen sind denkbar.

Dementsprechend wird hier auch ein Busknoten (BKⱼ) für einen seriellen, bidirektionalen, differentiellen Zweidraht-Kommunikationsbus (DB) mit einem Busmaster (ECU) vorgeschlagen, bei dem der serielle, bidirektionale, differentielle Zweidraht-Kommunikationsbus (DB) einen ersten Eindrahtbus (DB₁) und einen zweiten Eindrahtbus (DB₂) umfasst. Ein erster Bus-Shunt-Widerstand (R2), der in den ersten Eindrahtbus (DB₁) eingefügt ist, und ein zweiter Bus-Shunt-Widerstand (R2'), der in den zweiten Eindrahtbus (DB₂) eingefügt ist, sind Teil des Busknotens (BKⱼ). Der Busknoten umfasst darüber hinaus eine differentielle erste Gleichtaktadressierungsstromquelle [GLIqⱼ] zur Ermittlung der Busposition des Busknotens (BKⱼ) im seriellen, bidirektionalen, differentiellen Zweidraht-Kommunikationsbus (DB). Die differentielle erste Gleichtaktadressierungsstromquelle [GLIqⱼ] kann einen ersten Gleichtaktadressierungsstromanteil in der Art in den ersten Eindrahtbus (DBₐ) des seriellen, bidirektionalen, differentiellen Zweidraht-Kommunikationsbusses (DB) geregelt zusätzlich einspeisen, dass der erste Gesamtstrom (iⱼ) durch den ersten Bus-Shunt-Widerstand (R2) des Busknotens (BKⱼ) einem vorgegebenen oder berechneten oder sonst wie bestimmten ersten Summenstrom [I_{ref}] entspricht. Gleichzeitig kann die differentielle erste Gleichtaktadressierungsstromquelle [GLIqⱼ] einen betragsmäßig und vorzeichenmäßig gleichen zweiten Gleichtaktadressierungsstromanteil in der Art nochmals zusätzlich in den zweiten Eindrahtbus (DB_{b}) des seriellen, bidirektionalen, differentiellen Zweidraht-Kommunikationsbusses (DB) geregelt mit gleichem Vorzeichen wie das Vorzeichen des ersten Gegentaktadressierungsstromanteils einspeisen, so dass der zweite Gesamtstrom (i'ⱼ) durch den zweiten Bus-Shunt-Widerstand (R2') des Busknotens (BKⱼ) dem vorgegebenen oder berechneten oder sonst wie bestimmten ersten Summenstrom [I_{ref}] ebenfalls entspricht. Der erste Gleichtaktadressierungsstromanteil der Gleichtaktadressierungsstromquelle [GLIqⱼ] des Busknotens (BKⱼ) durchströmt den ersten Bus-Shunt-Widerstand (R2) des Busknotens (BKⱼ) in Richtung auf den Busmaster (ECU). Der zweite Gleichtaktadressierungsstromanteil der Gleichtaktadressierungsstromquelle [GLIqⱼ] des Busknotens (BKⱼ) durchströmt den zweiten Bus-Shunt-Widerstand (R2') des Busknotens (BKⱼ) in Richtung auf den Busmaster (ECU).

Komplementär zur Gleichtaktansteuerung ist auch eine Gegentaktansteuerung möglich. Es wird daher ein Busknoten (BKⱼ) für einen seriellen, bidirektionalen, differentiellen Zweidraht-Kommunikationsbus (DB) mit einem Busmaster (ECU) vorgeschlagen, bei dem der serielle, bidirektionale, differentielle Zweidraht-Kommunikationsbus (DB) einen ersten Eindrahtbus (DB₁) und einen zweiten Eindrahtbus (DB₂) umfasst und bei dem ein erster Bus-Shunt-Widerstand (R2) in den ersten Eindrahtbus (DB₁) eingefügt ist und ein zweiter Bus-Shunt-Widerstand (R2') in den zweiten Eindrahtbus (DB₂) eingefügt ist. Der Busknoten (BKⱼ) verfügt dann über eine differentielle erste Gegentaktadressierungsstromquelle [GGIqⱼ] zur Ermittlung der Busposition des Busknotens (BKⱼ) im seriellen, bidirektionalen, differentiellen Zweidraht-Kommunikationsbus (DB), die einen ersten Gegentaktadressierungsstromanteil in der Art in den ersten Eindrahtbus (DBₐ) des seriellen, bidirektionalen, differentiellen Zweidraht-Kommunikationsbusses (DB) geregelt zusätzlich einspeisen kann, dass der erste Gesamtstrom (iⱼ) durch den ersten Bus-Shunt-Widerstand (R2) des Busknotens (BKⱼ) einem vorgegebenen oder berechneten oder sonst wie bestimmten ersten Summenstrom [I_{ref}] entspricht. Die Gegentaktadressierungsstromquelle [GGIqⱼ] des Busknots (BKⱼ) speist den betragsmäßig gleichen zweiten Gegentadressierungsstromanteil in der Art nochmals zusätzlich in den zweiten Eindrahtbus (DB_{b}) des seriellen, bidirektionalen, differentiellen Zweidraht-Kommunikationsbusses (DB) geregelt mit umgekehrtem Vorzeichen wie das Vorzeichen des ersten Gegentaktadressierungsstromanteils ein, so dass der zweite Gesamtstrom (i'ⱼ) durch den zweiten Bus-Shunt-Widerstand (R2') des Busknotens (BKⱼ) dem vorgegebenen oder berechneten oder sonst wie bestimmten ersten Summenstrom [I_{ref}] ebenfalls entspricht. Der erste Gegentaktadressierungsstromanteil der Gegentaktadressierungsstromquelle [GGIqⱼ] des Busknotens (BKⱼ) durchströmt den ersten Bus-Shunt-Widerstand (R2) des Busknotens (BKⱼ) in Richtung auf den Busmaster (ECU). Der zweite Gegentaktadressierungsstromanteil der Gegentaktadressierungsstromquelle [GGIqⱼ] des Busknotens (BKⱼ) durchströmt den zweiten Bus-Shunt-Widerstand (R2') des Busknotens (BKⱼ) in Richtung auf den Busmaster (ECU).

Für die Regelung verfügt der Busknoten (BKⱼ) bevorzugt über erste Mittel (R2, D2), um den Strom durch den ersten Bus-Shunt-Widerstand (R2) zu detektieren, und/oder über zweite Mittel (R2', D2'), um den Strom durch den zweiten Bus-Shunt-Widerstand (R2') zu detektieren.

Wie zuvor erläutert, kann auch hier die Fähigkeit, den Spannungsabfall über den jeweiligen Bus-Shunt-Widerstand (R2, R2') zu erfassen für einen Selbsttest genutzt werden. Es wird daher ein Busknoten (BKⱼ) vorgeschlagen, bei dem der detektierte Strom durch den ersten Bus-Shunt-Widerstand (R2) für einen Selbsttest genutzt wird und/oder bei dem der detektierte Strom durch den zweiten Bus-Shunt-Widerstand (R2') für einen Selbsttest genutzt wird. Hierbei wird der detektierte Spannungsabfall über den Bus-Shunt-Widerstand mit einem Erwartungswert verglichen. Weicht die erfasste Spannung um mehr als einen vorgegebenen Betrag von dem Erwartungswert ab, so liegt ein Fehler vor, der signalisiert werden kann.

Bevorzugt umfasst der vorgeschlagene Busknoten (BKⱼ) zu diesem Zweck zumindest eine Detektionsvorrichtung (DET), die interne Signale (ds1, ds3) des Busknotens (BKⱼ) auf Plausibilität prüft. Bevorzugt ergreift der Busknoten (BKⱼ) oder eine Teilvorrichtung (DET) des Busknotens (BKⱼ) Maßnahmen, wenn die Detektionsvorrichtung (DET) nicht plausible interne Signale innerhalb des Busknotens (BKⱼ) feststellt. Eine mögliche Maßnahme kann durch eine erste Teilvorrichtung (X3) des Busknotens (BKⱼ) und eine zweite Teilvorrichtung (X3') des Busknotens (BKⱼ) in der Art initiiert werden, dass die Einspeisepunkte der ersten Gleichtaktadressierungsströme der Gleichtaktadressierungsstromquelle [GLIqⱼ] durch die erste Teilvorrichtung (X3) des Busknotens (BKⱼ) und die zweite Teilvorrichtung (X3') des Busknotens (BKⱼ) bei Feststellung eines vorbestimmten Fehlers geändert werden.

Eine andere mögliche Maßnahme kann durch eine erste Teilvorrichtung (X3) des Busknotens (BKⱼ) und eine zweite Teilvorrichtung (X3') des Busknotens (BKⱼ) in der Art initiiert werden, dass die Einspeisepunkte der ersten Gegentaktadressierungsströme der Gegentaktadressierungsstromquelle [GGIq;] durch die erste Teilvorrichtung (X3) des Busknotens (BKⱼ) und die zweite zweite Teilvorrichtung (X3') des Busknotens (BKⱼ) bei Feststellung eines vorbestimmten Fehlers geändert werden.

Auch hier ist eine Regelung der Adressierungsströme mit bestimmten Zeitkonstanten wünschenswert und empfohlen. Es wird daher ein Busknoten (BKⱼ) vorgeschlagen, bei dem die Gleichtaktadressierungsstromquelle [GLIqⱼ] den Gleichtaktadressierungsstrom mit einer ersten Zeitkonstante [τ₁] erhöht und mit einer zweiten Zeitkonstante [τ₂] erniedrigt, die kleiner als die erste Zeitkonstante [τ₁].

Analog wird daher ein Busknoten (BKⱼ) vorgeschlagen, bei dem die Gegentaktadressierungsstromquelle [GGIqⱼ] den Gegentaktadressierungsstrom mit einer ersten Zeitkonstante [τ₁] erhöht und mit einer zweiten Zeitkonstante [τ₂] erniedrigt, die kleiner als die erste Zeitkonstante [τ₁] ist.

### AUTOADRESSIERUNG MITTELS INTERRUPT-LEITUNG

### Figur 13

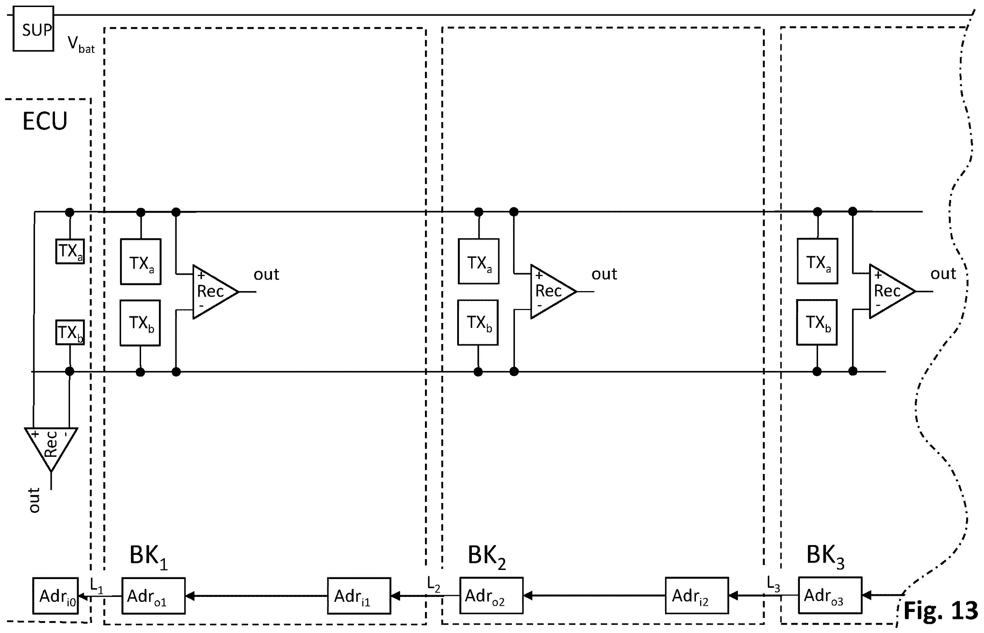

Figur 13 basiert auf Figur 2. Neben dem oben beschriebenen Adressierungsverfahren kann der oben beschriebene Busknoten (BKⱼ), der für ein Datenbussystem mit einem seriellen, bidirektionalen, differentiellen Zweidraht-Kommunikationsbus (DB) vorgesehen ist, für ein anderes Autoadressierungsverfahren (siehe Figur 13) vorbereitet werden. Der betreffende Busknoten (BKⱼ) ist dann wieder dazu vorgesehen, an einem Verfahren zur Vergabe von logischen Busknotenadressen an die Busknoten ((BK₁) bis [BKₙ]) des Datenbussystems teilzunehmen. Das entsprechende Datenbussystem weist dann einen Busmaster (ECU) mit einem Adresseingang (Adrᵢ₀) auf. Das Datenbussystem soll wieder n Busknoten ((BK₁) bis [BKₙ]) einschließlich dieses Busknotens (BKⱼ) selbst mit n als ganzer positiver Zahl aufweisen. Der Busknoten (BKⱼ) wird über einen Datenleitungsabschnitt ((DB₁) bis [DBₙ]) oder den seriellen, bidirektionalen, differentiellen Zweidraht-Kommunikationsbus (DB) aus Datenleitungsabschnitten ((DB₁) bis [DBₙ]) und weiteren Busknoten ((BK₂) bis [BKₙ]) mit dem Busmaster (ECU) zur Datenübertragung verbunden. Innerhalb des Datenbussystems ist eine Leitung [L₁ bis Lₙ] von einem Adresseingang (Adrᵢ₀) des Busmasters (ECU) des Datenbussystems ausgehend durch alle Busknoten ((BK₁) bis [BKₙ]) des Datenbussystems inklusive dieses Busknotens (BKⱼ) selbst so durchgeschleift, dass sie durch die einzelnen Busknoten ((BK₁) bis [BKₙ]) inklusive dieses Busknotens (BKⱼ) selbst in n Leitungsabschnitte [L₁ bis Lₙ] unterteilt wird. Jeder der Busknoten (BKⱼ) umfasst einen zugehörigen Adresseingang [Adrᵢⱼ] und einen diesem Busknoten (BKⱼ) zugehörigen Adressausgang [Adrₒⱼ]. Jeder der Busknoten (BKⱼ) mit 1≤j≤ n-1, wenn er nicht der n-te Busknoten [BKₙ] ist, ist jeweils dazu vorgesehen, mit seinem Adresseingang [Adrᵢⱼ] mit dem Adressausgang [Adrₒ₍ⱼ₊₁₎] eines nachfolgenden Busknotens [BKⱼ₊₁] mit 1≤j≤ n-1 durch einen dem nachfolgenden Busknoten [BKⱼ₊₁] zugehörigen (j+1)-ten Leitungsabschnitt [Lⱼ₊₁] vom (j+1)-ten Busknoten [BKⱼ₊₁] zum j-ten Busknoten (BKⱼ) verbunden zu werden. Jeder der Busknoten (BKⱼ), wenn er nicht der erste Busknoten (BK₁) ist, ist mit seinem Adressausgang [Adrₒⱼ] mit dem Adresseingang [Adrᵢ₍ⱼ₋₁₎] eines vorausgehenden Busknotens [BKⱼ₋₁] mit 2≤j≤ n durch einen dem Busknoten (BKⱼ) zugehörigen j-ten Leitungsabschnitt[Lⱼ] vom j-ten Busknoten (BKⱼ) zum (j-1)-ten Busknoten [BKⱼ₋₁] verbunden. Der erste Busknoten (BK₁) ist (j=1) mit seinem Adressausgang (Adrₒ₁) mit dem Adresseingang (Adrᵢ₀) des Busmasters (ECU) durch einen dem Busknoten (BKⱼ) zugehörigen Leitungsabschnitt [L₁] verbunden. Die Busknotenadresse des Busknotens (BKⱼ) in dessen Busknotenadressregister [BKADRⱼ] kann wie in diesem ganzen Dokument gültig oder nicht gültig sein. Der vorgeschlagene Busknoten sieht nun Mittel und Methoden vor, seine Busknotenadresse zu setzen und seine Busknotenadresse gültig oder ungültig zu machen. Das können z.B. spezielle Dateninhalte (DATA) von Bit-Paketen (BP) des Busmasters (ECU) sein, mit denen der Busmaster (ECU) einzelne oder mehrere oder alle Busknoten ((BK₁) bis [BKₙ]) zum ungültig machen der Adressen in ihren Busknotenadressregistern zwingen kann. Der vorgeschlagene Busknoten (BKⱼ) kann einen Adressierungszustand und einen vom Adressierungszustand verschiedenen zweiten Betriebszustand (oder auch Normalzustand) einnehmen. Der Busknoten (BKⱼ) weist dabei bevorzugt Mittel auf, um zwischen dem Adressierungszustand und dem zweiten Betriebszustand in Abhängigkeit von Befehlen des Busmasters (ECU) zu wechseln. Der Busknoten (BKⱼ) weist dann Mittel auf, um dann, wenn er sich im Adressierungszustand befindet und wenn seine Busknotenadresse ungültig ist, in diesem Fall den logischen Zustand am Adresseingang [Adrᵢ₍ⱼ₋₁₎] eines vorausgehenden Busknotens [BKⱼ₋₁] auf einen ersten logischen Wert durch Überschreiben zu setzten oder um dann, wenn er sich im Adressierungszustand befindet und wenn seine Busknotenadresse ungültig ist, in diesem Fall den logischen Zustand am Adresseingang (Adrᵢ₀) eines vorausgehenden Busmasters (ECU) auf einen ersten logischen Wert durch Überschreiben zu setzten. Der Busknoten (BKⱼ) weist des Weiteren bevorzugt Mittel auf, um im Adressierungszustand den logischen Zustand an seinem Adresseingang [Adrᵢⱼ] auf einen zweiten logischen Wert zu setzten, wenn dieser zweite logische Wert nicht durch einen nachfolgenden Busknoten [BKⱼ₊₁] mit einem ersten logischen Wert überschrieben wird, und Mittel auf, um eine durch den Busmaster (ECU) signalisierte Busknotenadresse als seine gültige zukünftige Busknotenadresse zu übernehmen, wenn seine Busknotenadresse ungültig ist und wenn er sich im Adressierungszustand befindet und wenn sein Adresseingang [Adrᵢⱼ] einen zweiten logischen Wert aufweist, und diese zukünftige Busknotenadresse in diesem Fall als "gültig" zu markieren.

In einer Verfeinerung dieses Vorschlags kann der Adresseingang [Adrᵢⱼ] des Busknotens (BKⱼ) in dem zweiten Betriebszustand als Eingang eines Interrupt-Signals eines nachfolgenden Busknotens [BKⱼ₋₁] verwendet werden. Auf diese Weise kann eine Interrupt-Leitung für die Autoadressierung von Busknoten eines seriellen, bidirektionalen, differenziellen Zweidraht-Kommunikationsbusses (DB) verwendet werden. Bevorzugt kann der Adressausgang [Adrₒⱼ] des Busknotens (BKⱼ) in dem zweiten Betriebszustand als Ausgang eines Interrupt-Signals eines nachfolgenden Busknotens [BKⱼ₋₁] und/oder des Busknotens (BKⱼ) selbst verwendet werden.

### Figur 14

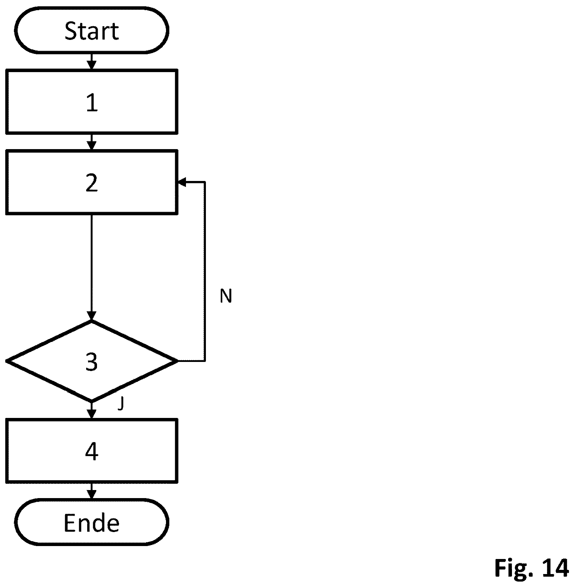

Figur 14 beschreibt den grundsätzlichen Ablauf des hier beschrieben bevorzugten Adressvergabeverfahrens. Nach dem Start des Adressvergabeverfahrens (START) signalisiert der Bus-Master (BM) in einem ersten Verfahrensschritt (1) mittels eines bevorzugten ersten Broadcast-Befehls bevorzugt einem Busknoten oder bevorzugt allen oder zumindest einem Teil der Menge der Busknoten ((BK₁) bis [BKₙ]), dass ein solches Verfahren zur Vergabe von Busknotenadressen für diese Busknoten begonnen wird. Dies hat zum einen bevorzugt zur Folge, dass alle diese Busknoten ((BK₁) bis [BKₙ]) ggf. in diesen Busknoten vorhandene gültige Busknotenadressen ungültig machen oder löschen. Soll die Adressierung mit Hilfe einer durch alle Busknoten durchgeschleiften Interruptleitung [L₁ bis Lₙ] wie in Figur 13 erfolgen, so verliert in dieser bevorzugten Version des Vorschlags diese Interruptleitung [L₁ bis Lₙ] für die Dauer des Adressierungsvorgangs diese Funktion und wird in die besagten Punkt-zu-Punkt-Verbindungen zwischen den Busknoten ((BK₁) bis [BKₙ]) und die Punkt-zu-Punkt-Verbindung zwischen dem ersten LED-Busknoten (BK₁) und dem Bus-Master (BM) aufgespalten. In einem zweiten Verfahrensschritt (2) teilt der Busmaster (ECU) den Busknoten ((BK₁) bis [BKₙ]) mit, dass eine Busknotenadresse zu vergeben ist und welche logische Busknotenadresse dies ist. Derjenige Busknoten, hier beispielhaft zur besseren Klarheit und willkürlich der j-te Busknoten (BKⱼ), dessen Adresseingang [Adrᵢⱼ] einen zweiten logischen Wert aufweist, übernimmt dann die vom Bus-Master (BM) angebotene Buskotenadresse in diesem Verfahrensschritt und setzt seinen Adressausgang [Adrₒⱼ] in der Art, dass er den Adresseingang [Adrᵢ₍ⱼ₋₁₎] eines vorausgehenden Busknotens [BKⱼ₋₁] nicht mehr auf den ersten logischen Wert überschreibt, sondern einen zweiten logischen Wert an dem Adresseingang [Adrᵢ₍ⱼ₋₁₎] eines vorausgehenden Busknotens [BKⱼ₋₁] zulässt. Dieser zweite Logische Wert wird dann bevorzugt durch den vorausgehenden Busknoten [BKⱼ₋₁] selbst an seinem Adresseingang [Adrᵢ₍ⱼ₋₁₎] eingeprägt. In einem weiteren dritten Schritt (3) überprüft der Busmaster (ECU), ob der logische Wert an seinem Adresseingang (Adrᵢ₀) einem zweiten logischen Wert entspricht oder nicht. Entspricht er dem nicht (N), so wiederholt der Busmaster (ECU) den zweiten Verfahrensschritt (2). Entspricht er diesem logischen Wert (J), so beendet der Busmaster (ECU) das Verfahren durch Durchführen eines vierten Verfahrensschrittes (4). Ggf. führt er zuvor eine Prüfung der korrekten Vergabe durch. Bevorzugt sendet der Busmaster (ECU) bei erfolgreicher Vergabe aller Busadressen eine Botschaft an alle Busknoten ((BK₁) bis [BKₙ]), dass die Busknotenadressen vergeben wurden. Hierdurch gehen die Busknoten ((BK₁) bis [BKₙ]) wieder von dem Adressierungszustand, der mit dem ersten Verfahrensschritt (1) eingenommen wurde in einen anderen Betriebszustand, bevorzugt den normalen Betriebszustand oder Normalzustand über. Insbesondere benutzen die Busknoten ((BK₁) bis [BKₙ]) nach Durchführung dieses vierten Verfahrensschrittes eine für die Punkt-zu-Punkt-Verbindungen ggf. benutzte durchgeschleifte Interrupt-Leitung wieder als Interrupt-Leitung. Damit ist das vorgeschlagene Verfahren als solches beendet (ENDE).

### SYMMETRISCHES AUTOADRESSIEUNGSVERFAHREN ÜBER BUS-SHUNT-WIDERSTÄNDE

Hier wird nun ein Verfahren zum Adressieren der Busknoten ((BK₁) bis [BKₙ]) eines Datenbussystems mittels eines symmetrischen Verfahrens besprochen.

Es handelt sich um ein Autoadressierungsverfahren zum Adressieren der Busknoten ((BK₁) bis [BKₙ]) eines Datenbussystems auf Basis eines seriellen, bidirektionalen, differentiellen Zweidraht-Kommunikationsbusses (DB). Das Datenbussystem umfasst einen Busmaster (ECU), einen von dem Busmaster (ECU) ausgehenden seriellen, bidirektionalen, differentiellen Zweidraht-Kommunikationsbus (DB) und mehrere adressierbare Busknoten ((BK₁) bis [BKₙ]), die an den seriellen, bidirektionalen, differentiellen Zweidraht-Kommunikationsbus (DB) angeschlossen sind. Der serielle, bidirektionale, differentielle, Zweidraht-Kommunikationsbus (DB) besteht aus dem besagten ersten Eindrahtbus (DBₐ) und dem besagten zweiten Eindrahtbus (DB_{b}). Jeder noch nicht adressierte Busknoten (BKⱼ) der Busknoten ((BK₁) bis [BKₙ]) besitzt keine gültige Busknotenadresse und speist daher zum Identifizieren einen ersten Adressierstrom in den ersten Eindrahtbus (DBₐ) ein und einen zweiten Adressierstrom in den zweiten Eindrahtbus (DB_{b}) ein. Sämtliche dieser Adressierungsströme fließen durch den seriellen, bidirektionalen, differentiellen Zweidraht-Kommunikationsbus (DB) in Richtung auf den Busmaster (ECU). Jeder noch nicht adressierte Busknoten (BKⱼ) detektiert den durch den ersten Eindrahtbus (DBₐ) des seriellen, bidirektionalen, differentiellen Zweidraht-Kommunikationsbusses (DB) fließenden ersten Strom und den durch den zweiten Eindrahtbus (DB_{b}) des seriellen, bidirektionalen, differentiellen Zweidraht-Kommunikationsbusses (DB) fließenden zweiten Strom. Lediglich derjenige, noch nicht adressierte Busknoten (BKⱼ), der keinen ersten Strom oder lediglich einen ersten Strom detektiert, der kleiner als ein vorgebbarer erster Schwellwert ist und der gleichzeitig keinen zweiten Strom oder lediglich einen zweiten Strom detektiert, der kleiner als ein vorgebbarer weiterer erster Schwellwert ist, wird als ein noch nicht adressierter Busknoten identifiziert. Dem so identifizierten Busknoten wird zwecks Adressierung eine Adresse zugeordnet, wodurch dieser eine gültige Busknotenadresse erhält. Die zuvor genannten Schritte werden ohne den jeweils zuletzt adressierten Busknoten durchgeführt, bis sämtliche noch nicht adressierten Busknoten adressiert sind. Bevorzugt ist der erste Schwellwert gleich dem weiteren ersten Schwellwert und der Wert des ersten Adressierungsstromes innerhalb eines Busknotens gleich dem Wert des zweiten Adressierungsstromes innerhalb dieses Busknotens.

An den seriellen, bidirektionalen, differentiellen Zweidraht-Kommunikationsbus (DB) können neben den adressierten, d.h. mit einer gültigen Busknotenadresse versehenen Busknoten auch nicht adressierte Busknoten ohne gültige Busknotenadresse angeschlossen sein. Der nicht adressierte Busknoten speist in den ersten Eindrahtbus (DBₐ) einen ersten Ruhestrom und in den zweiten Eindrahtbus (DB_{b}) einen zweiten Ruhestrom ein. Jeder noch nicht adressierte Busknoten detektiert vor dem Einspeisen der Adressierungsströme den durch den ersten Eindrahtbus (DBₐ) fließenden ersten Ruhestrom und den durch den zweiten Eindrahtbus (DB_{b}) fließenden zweiten Ruhestrom. Lediglich die noch nicht adressierten Busknoten mit ungültiger Busknotenadresse speisen die ersten Adressierungsströme in den ersten Eindrahtbus (DBₐ) und die zweiten Adressierungsströme in den zweiten Eindrahtbus (DB_{b}) ein. Lediglich derjenige noch nicht adressierte Busknoten, der bei Einspeisung der Adressierungsströme durch sämtliche noch nicht adressierten Busknoten gegenüber der vorherigen Stromdetektion keine Stromdifferenz des ersten oder zweiten Stromes oder lediglich eine Stromdifferenz des ersten oder zweiten Stromes detektiert, die kleiner als ein vorgebbarer zweiter Schwellwert ist, wird als ein noch nicht adressierter Busknoten identifiziert. Dem so identifizierten Busknoten wird zwecks Adressierung eine Adresse zugeordnet, wodurch dieser eine gültige Busknotenadresse erhält. Die zuvor genannten Schritte werden ohne den jeweils zuletzt adressierten Busknoten durchgeführt, bis sämtliche noch nicht adressierten Busknoten adressiert sind. Der zweite Schwellwert ist bevorzugt gleich dem ersten Schwellwert oder dem weiteren ersten Schwellwert.

In einer weiteren Variante des Verfahrens speist jeder adressierbare Busknoten in den ersten Eindrahtbus (DBₐ) einen ersten Ruhestrom ein, der null sein kann, und in den zweiten Eindrahtbus (DB_{b}) einen zweiten Ruhestrom ein, der null sein kann. Jeder noch nicht adressierte Busknoten ohne gültige Busknotenadresse speist einen ersten Ruhestrom in den ersten Eindrahtbus (DBₐ) ein und einen zweiten Ruhestrom in den zweiten Eindrahtbus (DB_{b}) ein. Jeder noch nicht adressierte Busknoten detektiert den durch den ersten Eindrahtbus (DBₐ) auf Grund der Ruhestromeinspeisung fließenden ersten Strom und den durch den zweiten Eindrahtbus (DB_{b}) auf Grund der Ruhestromeinspeisung fließenden zweiten Strom. Dabei wird ermittelt, welcher der noch nicht adressierten Busknoten einen ersten Strom detektiert, der oberhalb eines vorgebbaren dritten Schwellwerts liegt, und welcher der noch nicht adressierten Busknoten einen zweiten Strom detektiert, der oberhalb eines vorgebbaren weiteren dritten Schwellwerts liegt. Lediglich diejenigen noch nicht adressierten Busknoten, die bei Einspeisung der Ruheströme einen ersten Strom detektieren, der kleiner als der dritte Schwellwert oder gleich dem dritten Schwellwert ist, speisen erste Adressierungsströme in den ersten Eindrahtbus (DBₐ) ein und lediglich diejenigen noch nicht adressierten Busknoten, die bei Einspeisung der Ruheströme einen zweiten Strom detektieren, der kleiner als der weitere dritte Schwellwert oder gleich dem weiteren dritten Schwellwert ist, speisen bevorzugt zweite Adressierungsströme in den zweiten Eindrahtbus (DB_{b}) ein. Bevorzugt ist an dieser Stelle, wenn lediglich diejenigen noch nicht adressierten Busknoten, die bei Einspeisung der Ruheströme einen ersten Strom detektieren, der kleiner als der dritte Schwellwert oder gleich dem dritten Schwellwert ist, und die gleichzeitig bei Einspeisung der Ruheströme einen zweiten Strom detektieren, der kleiner als der weitere dritte Schwellwert oder gleich dem weiteren dritten Schwellwert ist, erste Adressierungsströme in den ersten Eindrahtbus (DBₐ) und zweite Adressierungsströme in den zweiten Eindrahtbus (DB_{b}) einspeisen.

Aus der Gruppe dieser Adressierungsströme einspeisenden, noch nicht adressierten Busknoten wird lediglich derjenige Busknoten, der keinen ersten Strom oder lediglich einen ersten Strom detektiert, der kleiner als ein vorgebbarer vierter Schwellwert ist, und der keinen zweiten Strom oder lediglich einen zweiten Strom detektiert, der kleiner als ein vorgebbarer weiterer vierter Schwellwert ist, als ein noch nicht adressierter Busknoten identifiziert. Dem so identifizierten Busknoten wird zwecks Adressierung eine Adresse zugeordnet. Die zuvor genannten Schritte werden ohne den jeweils zuletzt adressierten Busknoten durchgeführt, bis sämtliche noch nicht adressierten Busknoten adressiert sind. Bevorzugt sind der dritte und/oder vierte Schwellwert und/oder der weitere dritte und/oder weiterer vierte Schwellwert und der erste Schwellwert gleich.

In einer Variante des Verfahrens sind an den seriellen, bidirektionalen, differentiellen Zweidraht-Kommunikationsbus (DB) neben den adressierbaren Busknoten auch nicht adressierbarere Busknoten angeschlossen. Ein solcher, nicht adressierbarer Busknoten speist in den ersten Eindrahtbus (DBₐ) einen ersten Ruhestrom ein und in den zweiten Eindrahtbus (DB_{b}) einen zweiten Ruhestrom ein. Jeder noch nicht adressierte Busknoten ermittelt vor dem Einspeisen der ersten Adressierungsströme in den ersten Eindrahtbus (DBₐ) den in dem ersten Eindrahtbus (DBₐ) auf Grund der Ruhestromeinspeisung sämtlicher nicht adressierbarer Busknoten fließenden ersten Strom durch eine erste Stromdetektion. Jeder noch nicht adressierte Busknoten ermittelt vor dem Einspeisen der zweiten Adressierungsströme in den zweiten Eindrahtbus (DB_{b}) den in dem zweiten Eindrahtbus (DB_{b}) auf Grund der Ruhestromeinspeisung sämtlicher nicht adressierbarer Busknoten fließenden zweiten Strom durch eine zweite Stromdetektion. Anschließend speist jeder adressierbare Busknoten in den ersten Eindrahtbus (DBₐ) einen ersten Ruhestrom und in den zweiten Eindrahtbus (DB_{b}) einen zweiten Ruhestrom ein. Dabei wird ermittelt, welcher der noch nicht adressierten Busknoten einen ersten Strom im ersten Eindrahtbus (DBₐ) detektiert, der oberhalb eines vorgebbaren fünften Schwellwerts liegt, und/oder einen zweiten Strom im zweiten Eindrahtbus (DB_{b}) detektiert, der oberhalb eines vorgebbaren weiteren fünften Schwellwerts liegt. Lediglich diejenigen noch nicht adressierten Busknoten, die bei Einspeisung der ersten Ruheströme in den ersten Eindrahtbus (DBₐ) einen ersten Strom detektieren, der kleiner als der fünfte Schwellwert oder gleich dem fünften Schwellwert ist, speisen erste Adressierungsströme in den ersten Eindrahtbus (DBₐ) ein. Lediglich diejenigen noch nicht adressierten Busknoten, die bei Einspeisung der zweiten Ruheströme in den zweiten Eindrahtbus (DB_{b}) einen zweiten Strom detektieren, der kleiner als der weitere fünfte Schwellwert oder gleich dem weiteren fünften Schwellwert ist, speisen zweite Adressierungsströme in den zweiten Eindrahtbus (DB_{b}) ein. Besonders bevorzugt ist aber, wenn lediglich diejenigen noch nicht adressierten Busknoten, die bei Einspeisung der ersten Ruheströme in den ersten Eindrahtbus (DBₐ) einen ersten Strom detektieren, der kleiner als der fünfte Schwellwert oder gleich dem fünften Schwellwert ist, und die gleichzeitig bei Einspeisung der zweiten Ruheströme in den zweiten Eindrahtbus (DB_{b}) einen zweiten Strom detektieren, der kleiner als der weitere fünfte Schwellwert oder gleich dem weiteren fünften Schwellwert ist, erste Adressierungsströme in den ersten Eindrahtbus (DBₐ) und zweite Adressierungsströme in den zweiten Eindrahtbus (DB_{b}) einspeisen.

Aus der Gruppe dieser Adressierungsströme einspeisenden, noch nicht adressierten Busknoten wird lediglich derjenige Busknoten, der gegenüber der ersten Stromdetektion keine Stromdifferenz des ersten Stromes oder lediglich eine Stromdifferenz des ersten Stromes detektiert, die kleiner als ein vorgebbarer sechster Schwellwert ist, und der gegenüber der ersten Stromdetektion keine Stromdifferenz des zweiten Stromes oder lediglich eine Stromdifferenz des zweiten Stromes detektiert, die kleiner als ein vorgebbarer weiterer sechster Schwellwert ist, als ein noch nicht adressierter Busknoten identifiziert. Dem so identifizierten Busknoten wird zwecks Adressierung eine Adresse zugeordnet. Die zuvor genannten Schritte werden ohne den jeweils zuletzt adressierten Busknoten durchgeführt, bis sämtliche noch nicht adressierten Busknoten adressiert sind. Der fünfte Schwellwert und/oder der sechste Schwellwert und/oder der weitere fünfte Schwellwert und/oder der weitere sechste Schwellwert und/oder der erste Schwellwert sind bevorzugt gleich.

Die erste Stromdetektion erfolgt bevorzugt in den Busknoten über den adressierbaren Busknoten zugeordneten ersten Bus-Shunt-Widerstände (R2) des ersten Eindrahtbusses (DBₐ) und die zweite Stromdetektion erfolgt bevorzugt in den Busknoten über den adressierbaren Busknoten zugeordneten zweiten Bus-Shunt-Widerstände (R2') des zweiten Eindrahtbusses (DB_{b}). Die einem adressierbaren Busknoten zugeordneten ersten Bus-Shunt-Widerstände (R2) entsprechen bevorzugt den dem jeweiligen adressierbaren Busknoten zugeordneten zweiten Bus-Shunt-Widerständen (R2') zumindest wertmäßig. Sämtliche ersten Bus-Shunt-Widerstände (R2) sind bevorzugt im ersten Eindrahtbus (DBₐ) längs des ersten Eindrahtbusses (DBₐ) in Reihe geschaltet und sämtliche zweiten Bus-Shunt-Widerstände (R2') sind bevorzugt im zweiten Eindrahtbus (DB_{b}) längs des zweiten Eindrahtbusses (DB_{b}) in Reihe geschaltet.

Anstelle einer Stromdetektion kann auch eine Spannungsdetektion in den Busknoten erfolgen.

Die Zuordnung einer Adresse erfolgt dann typischerweise durch Übermittlung einer Adresse an den identifizierten Busknoten dadurch, dass sämtlichen noch nicht adressierten Busknoten vor der Identifikation eines Busknotens jeweils die gleiche Adresse übermittelt wird und lediglich der anschließend identifizierte Busknoten diese Adresse als seine Busknotenadresse annimmt.

Bevorzugt erfolgt die Zuordnung einer Adresse nach der ersten Identifizierung eines Busknotens und/oder eine Verifizierung der Busknotenadresse nach der Identifizierung eines Busknotens.

Die Verifizierung der Identifikation eines Busknotens kann beispielsweise durch nochmaliges Identifizieren des Busknotens und/oder durch Identifizieren des Busknotens mittels des anderen Eindrahtbusses und Vergleich der zweiten Identifikation mit der ersten Identifikation erfolgen.

Die Verifizierung der Identifikation eines Teilnehmers kann auch durch nochmaliges Identifizieren des Teilnehmers mittels eines anderen Autoadressierungsverfahrens und Vergleich der zweiten Identifikation mit der ersten Identifikation erfolgen. Dabei auftretende Fehler werden signalisiert.

### ASYMMETRISCHES AUTOADRESSIEUNGSVERFAHREN ÜBER BUS-SHUNT-WIDERSTÄNDE

Das Datenbussystem weist einen Busmaster (ECU), einen von dem Busmaster (ECU) ausgehenden seriellen, bidirektionalen, differentiellen Zweidraht-Kommunikationsbus (DB) und mehrere adressierbaren Busknoten ((BK₁) bis [BKₙ]) auf, die an dem seriellen, bidirektionalen, differentiellen Zweidraht-Kommunikationsbus (DB) angeschlossen sind. Der serielle, bidirektionale, differentielle, Zweidraht-Kommunikationsbus (DB) besteht wieder aus einem ersten Eindrahtbus (DBₐ) und einem zweiten Eindrahtbus (DB_{b}). Bei dem hier besprochenen ersten Autoadressierungsverfahren speist jeder noch nicht adressierte Busknoten (BKⱼ) der Busknoten ((BK₁) bis [BKₙ]) zum Identifizieren einen Adressierstrom in zumindest EINEN Eindrahtbus der Eindrahtbusse (DBₐ, DB_{b}) ein. Jeder noch nicht adressierte Busknoten speist den Adressierstrom zumindest in einen Eindrahtbus, im Folgenden mit Adressierungs-Eindrahtbus bezeichnet, ein. Bevorzugt ist es jedoch, wenn dieser Adressierstrom in beide Eindrahtbusse (DBₐ, DB_{b}) eingespeist wird. Alle anderen noch nicht adressierten Busknoten speisen ihren jeweiligen Adressierungsstrom ebenfalls in den Adressierungs-Eindrahtbus ein. Dabei fließen sämtliche Adressierungsströme durch den seriellen, bidirektionalen, differentiellen Zweidraht-Kommunikationsbus (DB) in Richtung auf den Busmaster (ECU). Jeder noch nicht adressierte Busknoten (BKⱼ) detektiert den durch den Adressierungs-Eindrahtbus des seriellen, bidirektionalen, differentiellen Zweidraht-Kommunikationsbusses (DB) fließenden Strom. Diese Detektion geschieht bevorzugt über die bereits oben erwähnten Bus-Shunt-Widerstände (R2, R2'). Lediglich derjenige noch nicht adressierte Busknoten (BKⱼ), der keinen Strom oder lediglich einen Strom detektiert, der kleiner als ein vorgebbarer erster Schwellwert ist, wird als ein noch nicht adressierter Busknoten identifiziert. Dem so identifizierten Busknoten wird zwecks Adressierung eine Adresse zugeordnet, wodurch dieser eine gültige Busknotenadresse erhält. Diese wird bevorzugt durch den Busmaster (ECU) bestimmt. Die zuvor genannten Schritte werden ohne den jeweils zuletzt adressierten Busknoten erneut durchgeführt, also ein weiterer Initialisierungsdurchlauf vorgenommen, bis sämtliche noch nicht adressierten Busknoten adressiert sind.

Es kann vorkommen, dass an den seriellen, bidirektionalen, differentiellen Zweidraht-Kommunikationsbus (DB) neben den adressierten Busknoten auch ein oder mehrere nicht adressierte Busknoten angeschlossen sind, die in den Adressierungs-Eindrahtbus einen Ruhestrom einspeisen. Für diesen Fall muss das zuvor beschriebene Verfahren modifiziert werden. Diese Modifikation erfordert dann, dass jeder noch nicht adressierte Busknoten vor dem Einspeisen der Adressierungsströme den durch den Adressierungs-Eindrahtbus fließenden Ruhestrom detektiert. Lediglich die noch nicht adressierten Busknoten speisen die Adressierungsströme in den Adressierungs-Eindrahtbus ein. Lediglich derjenige noch nicht adressierte Busknoten, der bei Einspeisung der Adressierungsströme durch sämtliche noch nicht adressierten Busknoten gegenüber der vorherigen Stromdetektion keine Stromdifferenz oder lediglich eine Stromdifferenz detektiert, die kleiner als ein vorgebbarer zweiter Schwellwert ist, wird als ein noch nicht adressierter Busknoten identifiziert. Dem so identifizierten Busknoten wird zwecks Adressierung eine Adresse zugeordnet, wodurch dieser eine gültige Busknotenadresse erhält. Die zuvor genannten Schritte werden ohne den jeweils zuletzt adressierten Busknoten durchgeführt, bis sämtliche noch nicht adressierten Busknoten adressiert sind. Bevorzugt ist übrigens der zweite Schwellwert gleich dem ersten Schwellwert.

Es kann übrigens auch vorkommen, dass jeder adressierbare Busknoten in den Adressierungs-Eindrahtbus einen Ruhestrom einspeist, und dass jeder noch nicht adressierte Busknoten einen Ruhestrom in den Adressierungs-Eindrahtbus einspeist. Das Verfahren wird dann ähnlich dem vorherbeschriebenen modifiziert: Jeder noch nicht adressierte Busknoten detektiert wieder den durch den Adressierungs-Eindrahtbus auf Grund der Ruhestromeinspeisung fließenden Strom. Eine Schaltung innerhalb der Busknoten (BKⱼ) ermittelt dann, welcher der noch nicht adressierten Busknoten einen Strom detektiert, der oberhalb eines vorgebbaren dritten Schwellwerts liegt. Lediglich diejenigen noch nicht adressierten Busknoten, die bei Einspeisung der Ruheströme einen Strom detektieren, der kleiner als der dritte Schwellwert oder gleich dem dritten Schwellwert ist, speisen Adressierungsströme in den Adressierungs-Eindrahtbus ein. Aus der Gruppe dieser Adressierungsströme einspeisenden, noch nicht adressierten Busknoten wird lediglich derjenige Busknoten, der keinen Strom oder lediglich einen Strom detektiert, der kleiner als ein vorgebbarer vierter Schwellwert ist, als ein noch nicht adressierter Busknoten identifiziert. Dem so identifizierten Busknoten wird zwecks Adressierung eine Adresse zugeordnet, wodurch dieser eine gültige Busknotenadresse erhält. Die zuvor genannten Schritte werden wieder ohne den jeweils zuletzt adressierten Busknoten durchgeführt, bis sämtliche noch nicht adressierten Busknoten adressiert sind. Bevorzugt ist auch hier der dritte und/oder vierte Schwellwert gleich dem ersten Schwellwert.

Wieder kann es vorkommen, dass an den seriellen, bidirektionalen, differentiellen Zweidraht-Kommunikationsbus (DB) neben den adressierbaren Busknoten auch mindestens ein nicht adressierbarer Busknoten angeschlossen ist, der in den Adressierungs-Eindrahtbus einen Ruhestrom einspeist. Wieder wird das Verfahren geeignet modifiziert: Jeder noch nicht adressierte Busknoten ermittelt vor dem Einspeisen der Adressierungsströme den in dem Adressierungs-Eindrahtbus auf Grund der Ruhestromeinspeisung sämtlicher nicht adressierbarer Busknoten fließenden Strom durch eine erste Stromdetektion. Anschließend speist jeder adressierbare Busknoten in den Adressierungs-Eindrahtbus einen Ruhestrom ein. Es wird dann ermittelt, welcher der noch nicht adressierten Busknoten einen Strom detektiert, der oberhalb eines vorgebbaren fünften Schwellwerts liegt. Lediglich diejenigen noch nicht adressierten Busknoten, die bei Einspeisung der Ruheströme einen Strom detektieren, der kleiner als der fünfte Schwellwert oder gleich dem fünften Schwellwert ist, speist Adressierungsströme in den Adressierungs-Eindrahtbus ein. Aus der Gruppe dieser Adressierungsströme einspeisenden, noch nicht adressierten Busknoten wird lediglich derjenige Busknoten, der gegenüber der ersten Stromdetektion keine Stromdifferenz oder lediglich eine Stromdifferenz detektiert, die kleiner als ein vorgebbarer sechster Schwellwert ist, als ein noch nicht adressierter Busknoten identifiziert. Dem so identifizierten Busknoten wird zwecks Adressierung eine Adresse zugeordnet, wodurch dieser eine gültige Busknotenadresse erhält. Die zuvor genannten Schritte werden wieder ohne den jeweils zuletzt adressierten Busknoten durchgeführt, bis sämtliche noch nicht adressierte Busknoten adressiert sind. Wieder ist bevorzugt der fünfte Schwellwert und/oder sechste Schwellwert gleich dem ersten Schwellwert.

Die Stromdetektion in den Busknoten erfolgt bevorzugt über den adressierbaren Busknoten zugeordneten Shunt-Widerständen des Adressierungs-Eindrahtbusses, wobei in den anderen Eindrahtbus, der nicht der Adressierungs-Eindrahtbus ist, in den Teilnehmern den adressierbaren Teilnehmer zugeordnete weitere Bus-Shunt-Widerstände bevorzugt, aber nicht notwendigerweise angeordnet sind, die jeweils bevorzugt wertemäßig den Shunt-Widerstände im Adressierungs-Eindrahtbus entsprechen. Ganz besonders bevorzugt matchen die Bus-Shunt-Widerstände (R2, R2') in den beiden Eindrahtbussen (DBₐ, DB_{b}) miteinander. Sämtliche Shunt-Widerstände im Adressierungs-Eindrahtbusses längs des Adressierungs-Eindrahtbusses sind bevorzugt in Reihe geschaltet. Auch sämtliche Shunt-Widerstände im anderen Eindrahtbus längs dieses anderen Eindrahtbusses sind bevorzugt ebenfalls in Reihe geschaltet.

Es ist möglich statt einer Stromdetektion eine Spannungsdetektion in den Busknoten vorzunehmen.

Eine Variante des Verfahrens sieht vor, dass die Zuordnung einer Adresse durch Übermittlung einer Adresse an den identifizierten Busknoten oder dadurch erfolgt, dass sämtliche noch nicht adressierten Busknoten vor der Identifikation eines Busknotens jeweils die gleiche Adresse übermittelt wird und dass lediglich der anschließend identifizierte Busknoten diese Adresse als seine Busknotenadresse annimmt.

Eine weitere Variante des vorgeschlagenen Verfahrens sieht vor, dass die Zuordnung einer Adresse nach der ersten Identifizierung eines Busknotens erfolgt oder dass eine Verifizierung der Busknotenadresse nach der Identifizierung eines Busknotens erfolgt.

Eine weitere Variante des vorgeschlagenen Verfahrens sieht vor, dass die Verifizierung der Identifikation eines Busknotens durch nochmaliges Identifizieren des Busknotens und/oder durch Identifizieren des Busknotens mittels des anderen Eindrahtbusses und Vergleich der zweiten Identifikation mit der ersten Identifikation erfolgt.

Eine weitere Variante des vorgeschlagenen Verfahrens sieht vor, dass die Verifizierung der Identifikation eines Teilnehmers durch nochmaliges Identifizieren des Teilnehmers mittels eines anderen Autoadressierungsverfahrens und Vergleich der zweiten Identifikation mit der ersten Identifikation erfolgt. Bevorzugt signalisieren der Busknoten und/oder der Busmaster dann einen Fehler.

### SYMMETRISCHES AUTOADRESSIEUNGSVERFAHREN ÜBER BUS-SHUNT-WIDERSTÄNDE MIT SELBSTTESTFÄHIGKEIT UND ADRESSIERUNGSSTROMREGELUNG

Es wird des Weiteren ein selbsttestfähiges Autoadressierungsverfahren zur Vergabe von Busknotenadressen innerhalb eines Datenbussystem vorgeschlagen. Dabei umfasst das Datenbussystem einen seriellen, bidirektionalen, differentiellen Zweidraht-Kommunikationsbus (DB) mit einer Kette von n Busknoten ((BK₁), (BK₂), (BK₃), ..... [BKₙ₋₁], [BKₙ]), mit n als ganzer positiver Zahl größer Null, und einem Busmaster (ECU). Der serielle, bidirektionale, differentielle Zweidraht-Kommunikationsbus (DB) ist mit dem Busmaster (ECU) verbunden. Jeder Busknoten ((BK₂), (BK₃), ..... [BKₙ₋₁], [BKₙ]) weist einen vorausgehenden Busknoten ((BK₁), (BK₂), (BK₃), ..... [BKₙ₋₁]) auf, wenn er nicht der erste Busknoten (BK₁) ist und jeder Busknoten ((BK₂), (BK₃), ..... [BKₙ₋₁], [BKₙ]) ist mit seinem vorausgehenden Busknoten ((BK₁), (BK₂), (BK₃), ..... [BKₙ₋₁]) durch den seriellen, bidirektionalen, differentiellen Zweidraht-Kommunikationsbus (DB) mittels eines Verbindungsabschnitts des seriellen, bidirektionalen, differentiellen Zweidraht-Kommunikationsbusses (DB) verbunden, wenn er nicht der erste Busknoten (BK₁) ist. Der serielle, bidirektionale, differentielle Zweidraht-Kommunikationsbus (DB) besteht aus einem ersten Eindrahtbus (DBₐ) und einem zweiten Eindrahtbus (DB_{b}). Der erste Busknoten (BK₁) ist mit dem Busmaster (ECU) durch den seriellen, bidirektionalen, differentiellen Zweidraht-Kommunikationsbus (DB) mittels eines Verbindungsabschnitts des seriellen, bidirektionaler, differentiellen Zweidraht-Kommunikationsbusses (DB) verbunden. Jeder Busknoten ((BK₂), (BK₃), ..... [BKₙ₋₁], [BKₙ]) sendet einen ersten Busknotenausgangsstrom ((i₂), (i₃), ...[i₍ₙ₋₁₎], [iₙ]) über den Abschnitt (DB₁) des ersten Eindrahtbusses (DBₐ), der Teil des Verbindungsabschnitts zwischen diesem Busknoten ((BK₂), (BK₃), ..... [BKₙ₋₁], [BKn]) und seinem vorausgehenden Busknoten ((BK₁), (BK₃), ..... [BKₙ₋₁], [BKₙ₋₁]) ist, an seinen vorausgehenden Busknoten ((BK₁), (BK₂), (BK₃), ..... [BKₙ₋₁]), wenn er nicht der erste Busknoten (BK₁) ist. Jeder Busknoten ((BK₂), (BK₃), ..... [BKₙ₋₁], [BKₙ]) sendet einen zweiten Busknotenausgangsstrom ((i'₂), (i'₃),...[i'₍ₙ₋₁₎], [i'ₙ]) über den Abschnitt (DB₂) des zweiten Eindrahtbusses (DB_{b}), der Teil des Verbindungsabschnitts zwischen diesem Busknoten ((BK₂), (BK₃), ..... [BKₙ₋₁], [BKₙ]) und seinem vorausgehenden Busknoten ((BK₁), (BK₃), ..... [BKₙ₋₁], [BKₙ₋₁]) ist, an seinen vorausgehenden Busknoten ((BK₁), (BK₂), (BK₃), ..... [BKₙ₋₁]), wenn er nicht der erste Busknoten (BK₁) ist. Der erste Busknoten (BK₁) sendet einen ersten Busknotenausgangsstrom (i₁) über den Abschnitt (DB₁) des ersten Eindrahtbusses (DBₐ), der Teil des Verbindungsabschnitts zwischen dem ersten Busknoten (BK₁) und dem Busmaster (ECU) ist, an den Busmaster (ECU). Der erste Busknoten (BK₁) sendet einen zweiten Busknotenausgangsstrom (i₂) über den Abschnitt (DB₂) des zweiten Eindrahtbusses (DB_{b}), der Teil des Verbindungsabschnitts zwischen dem ersten Busknoten (BK₁) und dem Busmaster (ECU) ist, an den Busmaster (ECU). Der Busmaster (ECU) empfängt einen ersten Busknoteneingangsstrom (i₁) über den Abschnitt (DB₁) des ersten Eindrahtbusses (DBₐ), der Teil des Verbindungsabschnitts zwischen dem ersten Busknoten (BK₁) und dem Busmaster (ECU) ist, von seinen nachfolgenden ersten Busknoten (BK₁). Der Busmaster (ECU) empfängt einen zweiten Busknoteneingangsstrom (i'₁) über den Abschnitt (DB₂) des zweiten Eindrahtbusses (DB_{b}), der Teil des Verbindungsabschnitts zwischen dem ersten Busknoten (BK₁) und dem Busmaster (ECU) ist, von seinen nachfolgenden ersten Busknoten (BK₁). Jeder Busknoten ((BK₁), (BK₂), ..... [BKₙ₋₁]) empfängt einen ersten Busknoteneingangsstrom ((i₂), (i₃), ...[i₍ₙ₋₁₎], [iₙ]) über den Abschnitt (DB₁) des ersten Eindrahtbusses (DBₐ), der Teil des Verbindungsabschnitts zwischen diesem Busknoten ((BK₂), (BK₃), ..... [BKₙ₋₁], [BKₙ]) und seinem vorausgehenden Busknoten ((BK₁), (BK₃), ..... [BKₙ₋₁], [BKₙ₋₁]) ist, von seinen nachfolgenden Busknoten ((BK₂), (BK₃), ..... [BKₙ₋₁], [BKₙ]), wenn er nicht der letzte Busknoten [BKₙ] ist. Jeder Busknoten [(BK₁), (BK₂), ..... [BKₙ₋₁]) empfängt einen zweiten Busknoteneingangsstrom ((i₂), (i₃), ...[i₍ₙ₋₁₎], [iₙ]) über den Abschnitt des zweiten Eindrahtbusses (DB_{b}), der Teil des Verbindungsabschnitts zwischen diesem Busknoten ((BK₂), (BK₃), ..... [BKₙ₋₁], [BKₙ]) und seinem vorausgehenden Busknoten ((BK₁), (BK₃), ..... [BKₙ₋₁], [BKₙ₋₁]) ist, von seinen nachfolgenden Busknoten ((BK₂), (BK₃), ..... [BKₙ₋₁], [BKₙ]), wenn er nicht der letzte Busknoten [BKₙ] ist. Dieses Verfahren nutzt also im Gegensatz zum zuvor beschriebenen beide Eindrahtbusse (DBₐ und DB_{b}) für die Übermittlung der Adressierungsströme. Als Erstes wird ein maximaler Adressierungsstrom [Iₐₘₐₓ] bestimmt. Es folgt das Durchführen einer Intitialisierungssequenz, die folgende Schritte aufweist, für jeden Autoadressierungsbusknoten der n Busknoten ((BK₁), (BK₂), ..... [BKₙ₋₁], [BKₙ]), der noch keine gültige Busknotenadresse besitzt, bis alle Autoadressierungsbusknoten der n Busknoten ((BK₁), (BK₂), ..... [BKₙ₋₁], [BKₙ]) über eine gültige Busknotenadresse verfügen:
- Signalisierung einer zu vergebenden Busadresse an alle Autoadressierungsbusknoten der n Busknoten ((BK₁), (BK₂), ..... ]BKₙ₋₁], [BKₙ]);
- Durchführung der folgenden Schritte für jeden Autoadressierungsbusknoten (BKⱼ) der Autoadressierungsbusknoten der n Busknoten ((BK₁), (BK₂), ..... ]BKₙ₋₁], [BKₙ]), im Folgenden als betreffender Autoadressierungsbusknoten (BKⱼ) bezeichnet:
- Empfang des besagten Autoadressierungskommandos vom Busmaster (ECU) durch den betreffenden Autoadressierungsbusknoten (BKⱼ);
- Empfang der zu vergebenden Busadresse vom Busmaster (ECU) durch den betreffenden Autoadressierungsbusknoten (BKⱼ);
- Empfang eines Startsignals für die Vergabe der zu vergebenden Busadresse vom Busmaster (ECU) durch den betreffenden Autoadressierungsbusknoten (BKⱼ) und Start eines Zeitgebers durch den betreffenden Autoadressierungsbusknoten (BKⱼ);
- Einspeisen des von den nachfolgenden Busknoten ([BKⱼ₊₁], [BKⱼ₊₂] ... [BKₙ₋₁], [BKₙ]) empfangenen ersten Buseingangsstroms [i₍ⱼ₊₁₎] über den Abschnitt (DB₁) des ersten Eindrahtbusses (DBₐ), der Teil des Verbindungsabschnitts des seriellen, bidirektionalen, differentiellen Zweidraht-Kommunikationsbusses (DB) zwischen dem betreffenden Autoadressierungsbusknotens (BKⱼ) und dem vorausgehenden (j-1)-ten Busknoten [BKⱼ₋₁] ist, als Teil des ersten Busausgangsstroms [iⱼ] des betreffenden Autoadressierungsbusknotens (BKⱼ);
- Einspeisen des von den nachfolgenden Busknoten ([BKⱼ₊₁], [BKⱼ₊₂] ...) empfangenen zweiten Buseingangsstroms [i'₍ⱼ₊₁₎] über den Abschnitt (DB₂) des zweiten Eindrahtbusses (DB_{b}), der Teil des Verbindungsabschnitts des seriellen, bidirektionalen, differentiellen Zweidraht-Kommunikationsbusses (DB) zwischen dem betreffenden Autoadressierungsbusknotens (BKⱼ) und dem vorausgehenden (j-1)-ten Busknoten [BKⱼ₋₁] ist, als Teil des zweiten Busausgangsstroms (i'ⱼ) des betreffenden Autoadressierungsbusknotens (BKⱼ);
- Erfassen des ersten Werts des ersten Busknotenausgangsstroms (iⱼ) des betreffenden Autoadressierungsbusknotens (BKⱼ) mittels erster Messmittel (R2, D2, D3);
- Erfassen des zweiten Werts des zweiten Busknotenausgangsstroms (i'ⱼ) des betreffenden Autoadressierungsbusknotens (BKⱼ) mittels zweiter Messmittel (R2', D2', D3');
- Erzeugung eines ersten Regelsignals (rwⱼ) aus dem erfassten ersten Wert des ersten Busknotenausgangsstroms (iⱼ) des betreffenden Autoadressierungsbusknotens (BKⱼ) mittels ersten Mitteln zum Regeln (F);
- Erzeugung eines zweiten Regelsignals (rw'ⱼ) aus dem erfassten zweiten Wert des zweiten Busknotenausgangsstroms (i'ⱼ) des betreffenden Autoadressierungsbusknotens (BKⱼ) mittels zweiten Mitteln zum Regeln (F');
- Ausregeln des ersten Busknotenausgangsstroms (iⱼ) durch den betreffenden Autoadressierungsbusknoten (BKⱼ), mittels einer ersten geregelten Autoadressierungsstromquelle (Iqⱼ), deren erster Adressierungsstrom einen Anteil des ersten Busausgangsstromes (iⱼ) darstellt, auf einen ersten vorgegebenen Summenstromwert [I_{ref}] in Abhängigkeit von dem erzeugten ersten Regelsignal (rwⱼ), wobei eine Erhöhung des ersten Adressierungsstroms der ersten geregelten Autoadressierungsstromquelle (Iqⱼ) des betreffenden Autoadressierungsbusknotens (BKⱼ) mit einer ersten Zeitkonstante [τ₁] erfolgt und wobei eine Erniedrigung des ersten Adressierungsstroms der ersten geregelten Autoadressierungsstromquelle (Iqⱼ) des betreffenden Autoadressierungsbusknotens (BKⱼ) mit einer zweiten Zeitkonstante [τ₂] erfolgt und wobei die zweite Zeitkonstante [τ₂] kleiner ist als die erste Zeitkonstante [τ₁];
- Ausregeln des zweiten Busknotenausgangsstroms (i'ⱼ) durch den betreffenden Autoadressierungsbusknoten (BKⱼ), mittels einer zweiten geregelten Autoadressierungsstromquelle (Iq'ⱼ), deren zweiter Adressierungsstrom einen Anteil des zweiten Busausgangsstromes (i'ⱼ) darstellt, auf einen zweiten vorgegebenen Summenstromwert [I'_{ref}] in Abhängigkeit von dem erzeugten zweiten Regelsignal (rw'ⱼ), wobei eine Erhöhung des zweiten Adressierungsstroms der zweiten geregelten Autoadressierungsstromquelle (Iq'ⱼ) des betreffenden Autoadressierungsbusknotens (BKⱼ) mit einer dritten Zeitkonstante [τ₃] erfolgt und wobei eine Erniedrigung des zweiten Adressierungsstroms der zweiten geregelten Autoadressierungsstromquelle (Iq'ⱼ) des betreffenden Autoadressierungsbusknotens (BKⱼ) mit einer vierten Zeitkonstante [τ₄] erfolgt und wobei die vierte Zeitkonstante [τ₄] kleiner ist als die dritte Zeitkonstante [τ₃];
- Vergleichen des ersten Regelwerts [rⱼ] des ersten Regelsignals (rwⱼ) des betreffenden Autoadressierungsbusknotens (BKⱼ) mit einem ersten Schwellwert [SWⱼ] des betreffenden Autoadressierungsbusknotens (BKⱼ);
- Vergleichen des zweiten Regelwerts [r'ⱼ] des zweiten Regelsignals (rw'ⱼ) des betreffenden Autoadressierungsbusknotens (BKⱼ) mit einem zweiten Schwellwert[SW'ⱼ] des betreffenden Autoadressierungsbusknotens (BKⱼ);
- Einfrieren der Regelung der ersten Adressierungsstromquelle (Iqⱼ)des betreffenden Autoadressierungsbusknotens (BKⱼ) zu einem ersten Zeitpunkt t₁ nach dem Start des Zeitgebers;
- Einfrieren der Regelung der zweiten Adressierungsstromquelle (Iq'ⱼ) des betreffenden Autoadressierungsbusknotens (BKⱼ) zu einem zweiten Zeitpunkt t₂ nach dem Start des Zeitgebers;
- Übernahme der zu vergebenden Busknotenadresse vom Busmaster (ECU) als gültige Busknotenadresse des betreffenden Autoadressierungsbusknotens (BKⱼ), wenn eine Mindestzeit seit dem Start des Zeitgebers vergangen ist und wenn der Vergleich des ersten Regelwerts [rⱼ] mit dem ersten Schwellwert [SWⱼ] ergibt, dass der erste Adressierungsstrom der ersten Adressierungsstromquelle (Iqⱼ)des betreffenden Autoadressierungsbusknotens (BKⱼ) betragsmäßig oberhalb eines Stromschwellwertes liegt und/oder wenn der Vergleich des zweiten Regelwerts [r'ⱼ] mit dem zweiten Schwellwert [SW'ⱼ] ergibt, dass der zweite Adressierungsstrom der zweiten Adressierungsstromquelle (Iqⱼ)des betreffenden Autoadressierungsbusknotens (BKⱼ) betragsmäßig oberhalb eines Stromschwellwertes liegt und Konfiguration des betreffenden Autoadressierungsbusknotens (BKⱼ) als Busknoten ohne Autoadressierungsfähigkeit mit der zu vergebenen Busknotenadresse als gültige Busknotenadresse des betreffenden Autoadressierungsbusknotens (BKⱼ) zu einem dritten Zeitpunkt t₃ nach dem ersten Zeitpunkt t₁ und nach dem zweiten Zeitpunkt t₂, wodurch dieser Autoadressierungsbusknoten (BKⱼ) bis auf Weiteres nicht mehr an folgenden Initialisierungssequenzen teilnimmt.
- Überprüfung der erfolgreichen Adressvergabe durch den Busmaster (ECU);
- Ggf. Löschung der Gültigkeit der letzten vergebenen Busknotenadresse, wodurch die betreffenden Autoadressierungsbusknoten (BKⱼ) sich wieder wie Autoadressierungsbusknoten (BKⱼ) ohne gültige Busknotenadresse verhalten;
- Überprüfung ob alle Autoadressierungsbusknoten eine gültige Busknotenadresse erhalten haben;
- Durchführung einer weiteren Initialisierungssequenz, wenn nicht alle Autoadressierungsbusknoten eine gültige Busknotenadresse erhalten haben.

Dieses Basisverfahren kann mit einem zusätzlichen Schritt nach oder zusammen mit der Übernahme der zu vergebenden Busknotenadresse ergänzt werden. Es umfasst dann das Überbrücken des ersten Bus-Shunt-Widerstands (R2) mittels eines ersten Bus-Shunt-Überbrückungsschalters (S4) und/oder das Überbrücken des zweiten Bus-Shunt-Widerstands (R2') mittels eines zweiten Bus-Shunt-Überbrückungsschalters (S4') beim Wechsel vom Adressierungszustand mit ungültiger Busknotenadresse des jeweiligen Busknotens (BKⱼ) in den Adressierungszustand mit gültiger Busknotenadressse des jeweligen Busknotens (BKⱼ) oder beim Wechsel in den Normalzustand. Dieses Vorgehen hat den Vorteil, dass der Buswiderstand im laufenden Betrieb (Normalzustand nach Adressvergabe) vermindert wird.

Beim Übergang in den Autoadressierungsbetrieb (Adressierungszustand), wird die Überbrückung der Bus-Shunt-Widerstände (R2, R2') wieder rückgängig gemacht. Das Verfahren umfasst dann das Öffnen des ersten Bus-Shunt-Überbrückungsschalters (S4), wenn die Busknotenadresse des betreffenden Autoadressierungsbusknoten (BKⱼ) nicht gültig ist, und/oder das Öffnen des zweiten Bus-Shunt-Überbrückungsschalters (S4'), wenn die Busknotenadresse des betreffenden Autoadressierungsbusknotens (BKⱼ) nicht gültig ist.

Die dritte Zeitkonstante [τ₃] wird übrigens bevorzugt um einen Faktor größer als 10 kleiner als die erste Zeitkonstante [τ₁] und als die zweite Zeitkonstante [τ₂] gewählt. Die dritte Zeitkonstante τ₃ hängt bevorzugt in einer Verfahrensvariante innerhalb des betreffenden Autoadressierungsbusknotens (BKⱼ) von dem mittels ersten Messmitteln (R2, D2, D3) erfassten ersten Wert des ersten Busknotenausgangsstroms (iⱼ) des betreffenden Autoadressierungsbusknotens (BKⱼ) und/oder von dem mittels zweiten Messmitteln (R2', D2', D3') erfassten zweiten Wert des zweiten Busknotenausgangsstroms (i'ⱼ) des betreffenden Autoadressierungsbusknotens (BKⱼ) ab.

Bevorzugt hängen die erste Zeitkonstante [τ₁] innerhalb des betreffenden Autoadressierungsbusknotens (BKⱼ) von dem mittels ersten Messmitteln (R2, D1, D3) erfassten ersten Wert des ersten Busknotenausgangsstroms (iⱼ) des betreffenden Autoadressierungsbusknotens (BKⱼ) ab und /oder die zweite Zeitkonstante [τ₂] innerhalb des betreffenden Autoadressierungsbusknotens (BKⱼ) von dem mittels zweiten Messmitteln (R2', D1', D3') erfassten zweiten Wert des zweiten Busknotenausgangsstroms (i'ⱼ) des betreffenden Autoadressierungsbusknotens (BKⱼ) ab.

Die erste Zeitkonstante [τ₁] innerhalb des betreffenden Autoadressierungsbusknotens (BKj) kann von dem mittels ersten Messmitteln (R2, D2, D3) erfassten Wert des ersten Busknotenausgangsstroms (iⱼ) des betreffenden Autoadressierungsbusknotens (BKⱼ) in der Art abhängen, dass der Wert der ersten Zeitkonstante [τ₁] unterhalb eines Schwellwerts einen ersten Wert und oberhalb dieses Schwellwerts einen zweiten Wert besitzt, und/oder von dem mittels zweiten Messmitteln (R2', D2', D3') erfassten Wert des zweiten Busknotenausgangsstroms (i'ⱼ) des betreffenden Autoadressierungsbusknotens (BKⱼ) in der Art abhängen, dass der Wert der zweiten Zeitkonstante τ₂ unterhalb eines Schwellwerts einen dritten Wert und oberhalb dieses Schwellwerts einen vierten Wert besitzt.

Wichtig ist nun, dass die hier offengelegte Technik einen Selbsttest ermöglicht. Es ist daher vorteilhaft, wenn zusätzlich eine Überprüfung des erfassten ersten Werts des ersten Busknotenausgangsstroms (iⱼ) und/oder des erfassten zweiten Werts des zweiten Busknotenausgangsstrms (i'ⱼ) des betreffenden Autoadressierungsbusknotens (BKⱼ) auf Plausibilität erfolgt und ggf. Maßnahmen eingeleitet werden, falls der erfasste erste Wert des ersten Busknotenausgangsstroms (iⱼ) des betreffenden Autoadressierungsbusknotens (BKⱼ) und/oder der erfasste zweite Wert des zweiten Busknotenausgangsstroms (i'ⱼ) des betreffenden Autoadressierungsbusknotens (BKⱼ) oder deren Kombination nicht plausibel ist.

Es erfolgt bevorzugt eine Neubestimmung des Einspeisepunkts des ersten Adressierungsstroms (iⱼ) falls der erfasste erste Wert des ersten Busknotenausgangsstroms (iⱼ) des betreffenden Autoadressierungsbusknotens (BKⱼ) nicht plausibel ist. Ebenso erfolgt bevorzugt analog dazu eine Neubestimmung des Einspeisepunkts des ersten Adressierungsstroms (iⱼ) und des Einspeisepunkts des zweiten Adressierungsstroms (i'ⱼ), falls der erfasste erste Wert des ersten Busknotenausgangsstroms (iⱼ) und/oder der erfasste zweite Wert des zweiten Busknotenausgangsstroms (i'ⱼ) des betreffenden Autoadressierungsbusknotens (BKⱼ) und/oder deren Kombination nicht plausibel ist.

In einer Variante erfolgt bevorzugt eine Signalisierung eines Fehlers über den seriellen bidirektionalen differentiellen Kommunikationsbus (DB) nach Aufforderung durch einen Busmaster (ECU), falls der erfasste erste Wert des ersten Busknotenausgangsstroms (iⱼ) des betreffenden Autoadressierungsbusknotens (BKⱼ) und/oder der erfasste zweite Wert des zweiten Busknotenausgangsstroms (i'ⱼ) des betreffenden Autoadressierungsbusknotens (BKⱼ) oder deren Kombination nicht plausibel ist.

In einer Variante des Verfahrens erfolgt eine Durchführung des Schritts des Erfassens des ersten Werts des ersten Busknotenausgangsstroms (iⱼ) des betreffenden Autoadressierungsbusknotens (BKⱼ) mittels ersten Messmitteln (R2, D1, D3) als Erfassen des ersten Werts des ersten Busknotenausgangsstroms (iⱼ) des betreffenden Autoadressierungsbusknotens (BKⱼ) mittels ersten Messmitteln (R2, D1, D3) mit einem ersten Vorzeichen, falls der erfasste erste Wert des ersten Busknotenausgangsstroms (iⱼ) des betreffenden Autoadressierungsbusknotens (BKⱼ) plausibel ist, und das Erfassen des ersten Werts des ersten Busknotenausgangsstroms (iⱼ) des betreffenden Autoadressierungsbusknotens (BKⱼ) mittels ersten Messmitteln (R2, D1, D3) mit einem zweiten Vorzeichen, das zum ersten Vorzeichen invertiert ist, falls der erfasste erste Wert des ersten Busknotenausgangsstroms (iⱼ) des betreffenden Autoadressierungsbusknotens (BKⱼ) nicht plausibel ist.

In einer weiteren Variante des Verfahrens, die sich auf den anderen Eindrahtbus bezieht, erfolgt die Durchführung des Schritts des Erfassens des zweiten Werts des zweiten Busknotenausgangsstroms (i'ⱼ) des betreffenden Autoadressierungsbusknotens (BKⱼ) mittels zweiten Messmitteln (R2', D1', D3') wie folgt: Der Schritt umfasst das Erfassen des zweiten Werts des zweiten Busknotenausgangsstroms (i'ⱼ) des betreffenden Autoadressierungsbusknotens (BKⱼ) mittels zweiten Messmitteln (R2', D1', D3') mit einem ersten Vorzeichen, falls der erfasste zweite Wert des zweiten Busknotenausgangsstroms (i'ⱼ) des betreffenden Autoadressierungsbusknotens (BKⱼ) plausibel ist, und das Erfassen des zweiten Werts des zweiten Busknotenausgangsstroms (i'ⱼ) des betreffenden Autoadressierungsbusknotens (BKⱼ) mittels zweiten Messmitteln (R2', D1', D3') mit einem zweiten Vorzeichen, das zum ersten Vorzeichen invertiert ist, falls der erfasste zweite Wert des zweiten Busknotenausgangsstroms (i'ⱼ) des betreffenden Autoadressierungsbusknotens (BKⱼ) nicht plausibel ist.

Eine weitere Verfahrensvariante umfasst zusätzlich das Erfassen des zweiten Werts des zweiten Busknotenausgangsstroms (i'ⱼ) des betreffenden Autoadressierungsbusknotens (BKⱼ) mittels zweiten Messmitteln (R2', D1', D3') in der folgenden Art und Weise: Dieser Schritt umfasst als Erstes das Erfassen des zweiten Werts des zweiten Busknotenausgangsstroms (i'ⱼ) des betreffenden Autoadressierungsbusknotens (BKⱼ) mittels zweiten Messmitteln (R2', D1', D3') mit einem ersten Vorzeichen, falls der zuvor erfasste erste Wert des ersten Busknotenausgangsstroms (iⱼ) des betreffenden Autoadressierungsbusknotens (BKⱼ) plausibel ist und falls der zuvor erfasste zweite Wert des zweiten Busknotenausgangsstroms (i'ⱼ) des betreffenden Autoadressierungsbusknotens (BKⱼ) plausibel ist, und das Erfassen des zweiten Werts des zweiten Busknotenausgangsstroms (i'ⱼ) des betreffenden Autoadressierungsbusknotens (BKⱼ) mittels zweiten Messmitteln (R2', D1', D3') mit einem zweiten Vorzeichen, das zum ersten Vorzeichen invertiert ist, falls der zuvor erfasste erste Wert des ersten Busknotenausgangsstroms (iⱼ) des betreffenden Autoadressierungsbusknotens (BKⱼ) nicht plausibel ist oder falls der zuvor erfasste zweite Wert des zweiten Busknotenausgangsstroms (i'ⱼ) des betreffenden Autoadressierungsbusknotens (BKⱼ) nicht plausibel ist.

Plausibel im Sinne dieser Offenlegung sind zwei Werte, wenn sie Ergebnis zweier verschiedener Prüfungen sind, die aufgrund ihrer Konstruktion zwar nicht unberdingt ein identisches, aber doch ein gleiches Ergebnis liefern sollten, und die untereinander gleich sind. Gleichheit bedeutet hier eine Abweichung des Betrags der Norm der Ergebnisse um weniger als einen vorbestimmten Schwellwert. Nicht plausibel im Sinne dieser Offenlegung sind zwei Werte, wenn sie Ergebnis zweier verschiedener Prüfungen sind, die aufgrund ihrer Konstruktion zwar nicht unberdingt ein identisches, aber doch ein gleiches Ergebnis liefern sollten, und die untereinander nicht gleich sind.

Des Weiteren umfasst diese Variante das Durchführen des Schritts des Erfassens des ersten Werts des ersten Busknotenausgangsstroms (iⱼ) des betreffenden Autoadressierungsbusknotens (BKⱼ) mittels ersten Messmitteln (R2, D1, D3) in der folgenden Art und Weise: Der Schritt umfasst das Erfassen des ersten Werts des ersten Busknotenausgangsstroms (iⱼ) des betreffenden Autoadressierungsbusknotens (BKⱼ) mittels ersten Messmitteln (R2, D1, D3) mit einem ersten Vorzeichen, falls der zuvor erfasste erste Wert des ersten Busknotenausgangsstroms (iⱼ) des betreffenden Autoadressierungsbusknotens (BKⱼ) plausibel ist und falls der zuvor erfasste zweite Wert des zweiten Busknotenausgangsstroms (i'ⱼ) des betreffenden Autoadressierungsbusknotens (BKⱼ) plausibel ist, und das Erfassen des ersten Werts des ersten Busknotenausgangsstroms (iⱼ) des betreffenden Autoadressierungsbusknotens (BKⱼ) mittels ersten Messmitteln (R2, D1, D3) mit einem zweiten Vorzeichen, das zum ersten Vorzeichen invertiert ist, falls der zuvor erfasste erste Wert des ersten Busknotenausgangsstroms (iⱼ) des betreffenden Autoadressierungsbusknotens (BKⱼ) nicht plausibel ist oder falls der zuvor erfasste zweite Wert des zweiten Busknotenausgangsstroms (i'ⱼ) des betreffenden Autoadressierungsbusknotens (BKⱼ) nicht plausibel ist.

Eine Variante des Verfahrens mit Plausibilisierungen umfasst die Verwendung einer Fehleradresse als gültige Busknotenadresse des betreffenden Autoadressierungsbusknotens (BKⱼ), falls der erfasste erste Wert des ersten Busknotenausgangsstroms (iⱼ) des betreffenden Autoadressierungsbusknotens (BKⱼ) nicht plausibel oder falls der erfasste zweite Wert des zweiten Busknotenausgangsstroms (i'ⱼ) des betreffenden Autoadressierungsbusknotens (BKⱼ) nicht plausibel ist.

### AUTOADRESSIEUNGSVERFAHREN ÜBER INTERRUPT-LEITUNG

Neben diesen durch Bus-Shunt-Widerstände (R2, R2') gestützten Methoden zur Adressvergabe wird vorgeschlagen, das folgende Verfahren zur Autoadressierung über eine Interruptleitung durchzuführen:
Hierbei handelt es sich um ein Verfahren zur Vergabe von logischen Busknotenadressen an die Busknoten ((BK₁) bis [BKₙ]) eines Datenbussystems mit einem seriellen, bidirektionalen, differentiellen Zweidraht-Kommunikationsbus (DB), bei dem das Datenbussystem einen Busmaster (ECU) mit einem Adresseingang (Adrᵢ₀) und n Busknoten ((BK₁) bis [BKₙ]) (mit n als ganzer positiver Zahl) aufweist. Jeder der n Busknoten ((BK₂) bis [BKₙ]) ist über einen Datenleitungsabschnitt (DB₁ bis DBₙ) oder einen seriellen, bidirektionalen, differentiellen Zweidraht-Kommunikationsbus (DB) mit dem Busmaster (ECU) zur Datenübertragung verbunden. Eine Leitung, die hier zur Signalisierung der Autoadressierungsinformation benutzt wird und die typischerweise eine Interruptleitung ist, ist nun von einem Adresseingang (Adrᵢ₀) des Busmasters (ECU) ausgehend durch alle Busknoten ((BK₁) bis [BKₙ]) so durchgeschleift, dass sie durch die einzelnen Busknoten ((BK₁) bis [BKₙ]) in n Leitungsabschnitte [L₁ bis Lₙ] unterteilt wird. Jeder der Busknoten, im Folgenden zur besseren Klarheit als j-ter Busknoten (BKⱼ) mit 1≤j≤ n bezeichnet, weist nun einen diesem j-ten Busknoten (BKⱼ) zugehörigen Adresseingang [Adrᵢⱼ] und einen diesem j-ten Busknoten (BKⱼ) zugehörigen Adressausgang [Adrₒⱼ] auf. Diese werden als Ein- und Ausgänge zur Stimulierung der Autoadressierungsinformation und zu deren Weitergabe verwendet. Jeder der Busknoten (BKⱼ), wenn er nicht der n-te Busknoten [BKₙ] ist, ist mit seinem Adresseingang [Adrᵢⱼ] (mit 1≤j≤ n-1) mit dem Adressausgang [Adrₒ₍ⱼ₊₁₎] eines nachfolgenden Busknotens [BKⱼ₊₁] mit 1≤j≤ n-1 durch einen dem nachfolgenden Busknoten [BKⱼ₊₁] zugehörigen (j+1)-ten Leitungsabschnitt [Lⱼ₊₁] verbunden. Jeder der Busknoten (BKⱼ) mit 2≤j≤ n ist mit seinem Adressausgang [Adrₒⱼ] mit dem Adresseingang (Adrᵢ₍ⱼ₋₁₎) eines vorausgehenden Busknotens [BKⱼ₋₁] mit 2≤j≤ n durch einen dem Busknoten (BKⱼ) zugehörigen j-ten Leitungsabschnitt [Lⱼ] verbunden.

Der erste Busknoten (BK₁) ist mit seinem Adressausgang (Adrₒ₁) mit dem Adresseingang (Adrᵢ₀) des Busmasters (ECU) durch einen dem ersten Busknoten (BK₁) zugehörigen Leitungsabschnitt (L₁) verbunden. Die jeweilige Busknotenadresse jedes Busknotens ((BK₁) bis [BKₙ]) kann gültig oder nicht gültig sein. Als erster Schritt dieses Verfahrens wird ein Ungültig machen aller oder zumindest eines Teils der jeweiligen Busknotenadressen der Busknoten ((BK₁) bis [BKₙ]) und ein Versetzen zumindest dieses Teils der Busknoten ((BK₁) bis [BKₙ]) z.B. von einem Normalzustand aus in einen Adressierungszustand vorgeschlagen. Das Erste hat den Zweck, einen definierten Anfangszustand herzustellen. Das Zweite hat den Zweck, die Adressvergabe in allen Busknoten ((BK₁) bis [BKₙ]) zu starten. Solange der Busknoten sich im Adressierungszustand befindet, wird die besagte Leitung nicht für ihre normale Funktion, also beispielsweise als Interrupt-Request-Leitung, benutzt, sondern für den Transport der Autoadressierungsfunktion.

Während dieses Bestehens des Adressierungszustands erfolgt als erstes nun ein Setzten des Pegels des Adresseingangs (Adrᵢ₀) des Busmasters (ECU) auf einen zweiten logischen Wert, wenn der Pegel dieses Adresseingangs (Adrᵢ₀) dieses Busmasters (ECU) nicht durch den Adressausgang (Adrₒ₁) des ersten Busknotens (BK₁) der Busknoten ((BK₁) bis [BKₙ]) überschrieben wird. Es ist ein Charakteristikum, dass sowohl Busmaster (ECU) mit seinem Adresseingang (Adrᵢ₀), als auch die Busknoten ((BK₁) bis [BKₙ₋₁]) mit ihren Adresseingängen ((Adrᵢ₁) bis [Adrᵢₙ]) durch die Adressausgänge ((Adrₒ₁) bis [Adrₒₙ]) der nachfolgenden Busknoten ((BK₁) bis [BKₙ]) überschrieben werden können, da diese niederohmiger ausgelegt werden als die entsprechenden Treiberstufen in den Adresseingängen ((Adrᵢ₁) bis [Adrᵢₙ]) der Busknoten ((BK₁) bis [BKₙ]). Nur der letzte Busknoten [BKₙ] ist mit seinem Adresseingang [Adrᵢₙ] mit keinem anderen nachfolgenden Busknoten verbunden. Daher bestimmt in diesem letzten Busknoten [BKₙ] die Treiberstufe innerhalb des Adresseingangs [Adrᵢₙ] des letzten Busknotens [BKₙ] den logischen Zustand am Adresseingang [Adrᵢₙ]. Dadurch kann der letzte Busknoten erkennen, dass er der letzte in der Reihe der Busknoten ist, der noch keine gültige Busknotenadresse hat, und kann daher die vom Busmaster angebotene Adresse als neue gültige Busknotenadresse akzeptieren, wenn er keine gültige Busknotenadresse hat, sofern er auf welchem Wege auch immer keine gültige Busknotenadresse besitzt. Da er auf diese Weise eine gültige Busknotenadresse erhalten hat und nun über diese verfügt, schaltet dieser Busknoten (BKⱼ) dann seinen Adressausgang [Adrₒⱼ] ab, wodurch die Treiberstufe des vorhergehenden Adresseingangs [Adn₍ⱼ₋₁₎] des vorhergehenden Busknotens [BKⱼ₋₁] nicht mehr durch den Adressausgang [Adrₒⱼ] des Busknotens (BKⱼ) überschrieben wird und der vorausgehende Busknoten [BKⱼ₋₁] sich dann als letzter Busknoten ohne gültige Busknotenadresse in der Reihe der noch nicht adressierten Busknoten erkennen kann und somit beim nächsten Initialisierungsvorgang der vorausgehende Busknoten [BKⱼ₋₁] dann die dann neu vom Busmaster (ECU) angebotene neu zu vergebende Busknotenadresse auf die gleiche Art als seine gültige Busknotenadresse übernehmen kann.

Da der vorausgehende Busknoten [BKⱼ₋₁]auf diese Weise in dem nachfolgenden Inintialisierungslauf eine gültige Busknotenadresse erhält und dann über diese verfügt, schaltet dieser voausgehende Busknoten [BKⱼ₋₁] dann seinen Adressausgang [Adrₒ₍ⱼ₋₁₎] ab, wodurch die Treiberstufe des übernächsten vorhergehenden Adresseingangs [Adrᵢ₍ⱼ₋₂₎] des übernächsten vorhergehenden Busknotens [BKⱼ₋₂] nicht mehr durch den Adressausgang [Adrₒ₍ⱼ₋₁₎] des vorhergehenden Busknotens [BKⱼ₋₁] überschrieben wird und der übernächste vorausgehende Busknoten [BKⱼ₋₂] sich dann als letzter Busknoten ohne gültige Busknotenadresse in der Reihe der noch nicht adressierten Busknoten erkennen kann und somit beim übernächsten Initialisierungsvorgang der übernächste vorausgehende Busknoten [BKⱼ₋₂] dann die dann neu vom Busmaster (ECU) angebotene neu zu vergebende Busknotenadresse auf die gleiche Art als seine gültige Busknotenadresse übernehmen kann.

Dies wird so Busknoten für Busknoten fortgesetzt. Während des Bestehens des Adressierungszustands erfolgt daher in jedem Busknoten (BKⱼ) der Busknoten ((BK₂) bis [BKₙ]) unter Ausschluss des ersten Busknotens (BK₁) ein Überschreiben des Pegels an dem Adresseingang [Adrᵢ₍ⱼ₋₁₎] des dem jeweiligen Busknoten (BKⱼ) vorausgehenden Busknotens [BKⱼ₋₁] durch diesen jeweiligen Busknoten (BKⱼ) mit einem ersten logischen Pegel, wenn die Busknotenadresse dieses jeweiligen Busknotens (BKⱼ) ungültig ist und der Pegel an dem Adresseingang [Adrᵢⱼ] dieses jeweiligen Busknotens (BKⱼ) einen ersten logischen Wert hat und ein Setzten des Pegels des Adresseingangs [Adrᵢⱼ] dieses Busknotens (BKⱼ) auf einen zweiten logischen Wert, wenn der Pegel dieses Adresseingangs [Adrᵢⱼ] dieses Busknotens [BKⱼ] nicht durch den Adressausgang [Adrₒ₍ⱼ₊₁₎] des dem jeweiligen Busknoten (BKⱼ) ggf. nachfolgenden Busknotens [BKⱼ₊₁] der Busknoten ((BK₃) bis [BKₙ]) überschrieben wird. Ebenso erfolgt während des Bestehens des Adressierungszustands in dem ersten Busknoten (BK₁) ein Überschreiben des Pegels an dem Adresseingang (Adrᵢ₀) des Busmasters (ECU) durch den ersten Busknoten (BK₁) mit einem ersten logischen Pegel, wenn die Busknotenadresse des ersten Busknotens (BK₁) ungültig ist und der Pegel an dem Adresseingang (Adrₒ₁) dieses ersten Busknotens (BK₁) einen ersten logischen Wert hat und ein Setzten des Pegels des Adresseingangs (Adrᵢ₁) dieses ersten Busknotens (BK₁) auf einen zweiten logischen Wert, wenn der Pegel dieses Adresseingangs (Adrᵢ₁) dieses ersten Busknotens (BK₁) nicht durch den Adressausgang (Adrₒ₂) des dem ersten Busknoten (BK₁) nachfolgenden Busknotens (BK₂) der Busknoten ((BK₂) bis [BKₙ]) überschrieben wird. Des Weiteren erfolgt während des Bestehens des Adressierungszustands die Signalisierung einer Busknotenadresse an alle Busknoten ((BK₁) bis [BKₙ]) durch den Busmaster (ECU) und die Übernahme der signalisierten Busknotenadresse als gültige Busknotenadresse durch denjenigen Busknoten (BKⱼ) der Busknoten ((BK₁) bis [BKₙ]), dessen Busknotenadresse ungültig ist und dessen Adresseingang [Adrᵢⱼ] einen zweiten logischen Wert aufweist und das Wiederholen dieser Signalisierung durch den Busmaster (ECU) bis der Adresseingang (Adrᵢ₀) des Busmasters (ECU) einen zweiten logischen Wert aufweist, also nicht überschrieben ist. Diese Adressierung wird somit so lange wiederholt, bis der Busmaster (ECU) der letzte in der Kette der nicht adressierten Busknoten ist. Es erfolgt daher ein Versetzen der Busknoten ((BK₁) bis [BKₙ]) in einen vom Adressierungszustand verschiedenen zweiten Betriebszustand - der typischerweise der Normalzustand ist, wenn der Adresseingang (Adrᵢ₀) des Busmasters (ECU) einen zweiten logischen Wert aufweist.

Wie bereits erwähnt, ist es in einigen Fällen günstig, wenn die Leitung [L₁ bis Lₙ] im zweiten Betriebszustand als Interrupt-Leitung benutzt wird.

### AUTOADRESSIEUNGSVERFAHREN ÜBER BUS-SHUNT-WIDERSTÄNDE IN DER VERSORGUNGSSPANNUNGSLEITUNG

### Figur 15

Als letztes wird ein Autoadressierungsverfahren zur Vergabe von Busknotenadressen innerhalb eines Datenbussystems mit einem Kommunikationsbus, insbesondere einem seriellen, bidirektionalen, differentiellen Zweidraht-Kommunikationsbus (DB), mit n Busknoten ((BK₁), (BK₂), (BK₃), ..... [BKₙ₋₁], [BKₙ]), mit n als ganzer positiver Zahl größer Null, und einem Busmaster (ECU) vorgeschlagen, bei dem die Busknoten über eine Versorgungsspannungsleitung (V_{bat}) mit elektrischer Energie versorgt werden, der Kommunikationsbus (DB) mit dem Busmaster (ECU) verbunden ist, jeder Busknoten ((BK₁), (BK₂), ..... [BKₙ₋₁], [BKₙ]) mit dem Kommunikationsbus (DB) verbunden ist und bei dem innerhalb der Busknoten ((BK₁) bis [BKₙ]) jeweils ein dem jeweiligen Busknoten (BKⱼ) der n Busknoten ((BK₁) bis [BKₙ]) zugeordneter Messwiderstand [Rmⱼ] in die Versorgungsspannungsleitung (V_{bat}) eingefügt ist. Dieser Fall entspricht der Figur 15. Damit verfügt das hier nun vorgeschlagene Datenbussystem über n Messwiderstände ((Rm₁) bis [Rmₙ]). Die Messwiderstände ((Rm₁) bis [Rmₙ]) der Busknoten ((BK₁) bis [BKₙ]) unterteilen somit die Versorgungsspannungsleitung (V_{bat}) in n Versorgungsspannungsleitungsabschnitte.

### Figur 16

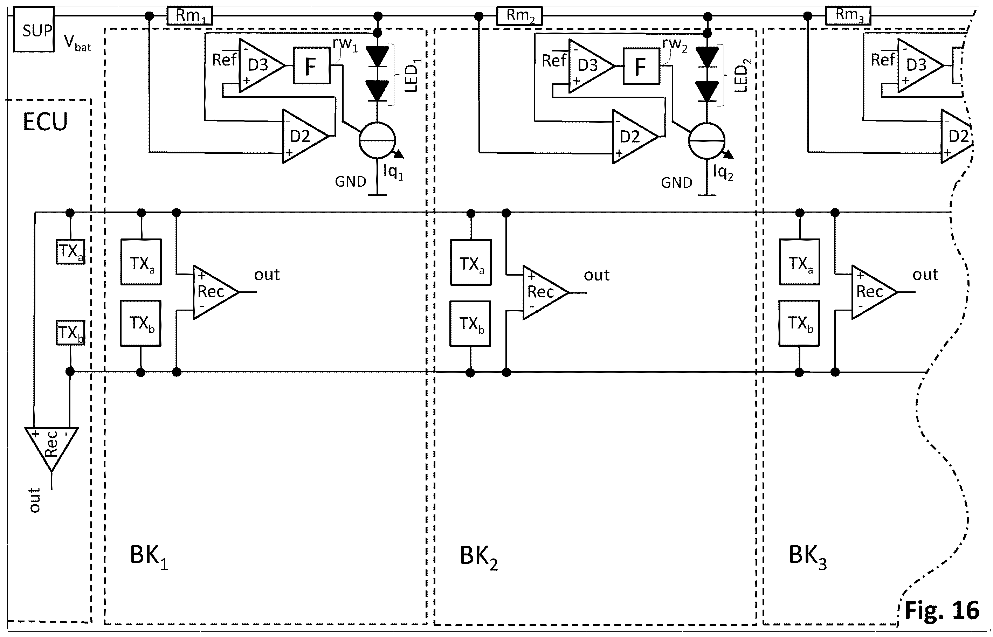

Da insbesondere im Falle von Datenbussystemen zur Steuerung mehrerer Leuchtmittelgruppen ((LED₁) bis [LEDₙ]) (siehe auch Figur 16) erhebliche Ströme über die Versorgungsspannungsleitung (V_{bat}) fließen können, sollten die Messwiderstände ((Rm₁) bis [Rmₙ]) bevorzugt möglichst niederohmig gewählt werden, um die Verluste zu minimieren. Es ist daher denkbar, statt dedizierter Messwiderstände ((Rm₁) bis [Rmₙ]) nur Leiterbahneinschnürungen oder auch nur Leitungsstücke vordefinierter und für alle Busknoten gleicher Länge, Breite und Dicke mit gleichem Material und mit einem spezifischen Bahnwiderstand abweichend von 0 Ω/m als Messwiderstände ((Rm₁) bis [Rmₙ]) zu verwenden. Dies sind nur Beispiele für die Realisierung der Messwiderstände ((Rm₁) bis [Rmₙ]). Andere Realisierungen, wie beispielsweise in Dickschichttechnik etc. sind denkbar. Jeder Busknoten (BKⱼ) der Busknoten ((BK₁) bis [BKₙ]) verfügt über eine Adressierungsstromquelle (Iqⱼ). Als solche Adressierungsstromquellen (Iqⱼ) können auch Stromquellen benutzt werden, die im Normalzustand des Busknotens beispielsweise als Stromquelle für eine Leuchtdiode oder ein anders Leuchtmittel [LEDⱼ] benutzt werden. Jeder Busknoten (BKⱼ) der Busknoten ((BK₁) bis [BKₙ]) verfügt bevorzugt über Mittel ((D2), (D3), [Rmⱼ]), um den Strom durch den Messwiderstand [Rmⱼ] dieses Busknotens (BKⱼ) der Busknoten ((BK₁) bis [BKₙ]) zu erfassen. Der zweite Differenzverstärker (D2) eines Busknotens (BKⱼ) erfasst den Spannungsabfall über den jeweiligen Messwiderstand [Rmⱼ9 des betreffenden Busknotens (BKⱼ). Ein dritter Differenzverstärker (D3) vergleicht durch Differenzbildung den Wert des Ausgangssignals des zweiten Differenzverstärkers (D2) mit einem Referenzwert (Ref). Der dritte Differenzverstärker (D3) des Busknotens (BKⱼ) erzeugt in Abhängigkeit vom Ergebnis dieses Vergleichs zusammen mit einem Regler oder Filter (F) des Busknotens (BKⱼ) ein Regelsignal (rwⱼ), das spezifisch für diesen Busknoten (BKⱼ) ist. Von dem Wert dieses Regelsignals (rwⱼ) hängt ab, welchen Wert der Adressierungsstrom der Adressierungsstromquelle (Iqⱼ)des betreffenden Busknotens (BKⱼ) annimmt, wenn der Busknoten (BKⱼ) durch den Busmaster (ECU) zuvor vom Normalzustand in den Adressierungszustand gebracht worden ist. Ist der Busknoten im Normalzustand, so ist typischerweise die Adressierungsstromquelle (Iqⱼ) abgeschaltet, wenn sie in diesem Normalzustand keine andere Aufgabe hat. Es ist beispielsweise nämlich auch möglich, eine Stromquelle, die im Normalbetrieb beispielsweise zur Energieversorgung von Verbrauchern, also beispielsweise Leuchtmitteln und/oder LEDs [LEDⱼ], verwendet wird, im Adressierungsszustand des Busknotens (BKⱼ) als Adressierungsstromquelle (Iqⱼ) des Busknotens (BKⱼ) zu verwenden. Dies ist in Figur 16 dargestellt, die sich bis auf die Leuchtmittel ((LED₁) bis [LEDₙ]) nicht von der Figur 15 unterscheidet. Durch einen Befehl des Busmasters (ECU) geht der betreffende Busknoten (BKⱼ) in den Adressierungszustand, wodurch seine Adressierungsstromquelle (Iqⱼ) eingeschaltet wird. Dieses Einschalten seiner Adressierungsstromquelle (Iqⱼ)führt bevorzugt ein Busknoten (BKⱼ) nur dann durch, wenn er über keine gültige Busknotenadresse verfügt, die typischerweise in einem Busknotenadressregister [BKADR] abgelegt ist, und als "gültig" oder "ungültig" mit einem entsprechenden Flag markiert ist. Dieses Flag dient dann typischerweise auch zur Markierung als "ungültig". Ist seine Busknotenadresse ungültig, so nimmt ein Busknoten (BKⱼ) also bevorzugt an einer Autoadressierungssequenz teil, wenn diese vom Busmaster (ECU) gestartet wird. Dies gilt übrigens auch für die anderen Autoadressierungsverfahren. Die Adressierungsstromquelle (Iqⱼ) jedes Busknotens (BKⱼ) der Busknoten ((BK₁) bis [BKₙ]) speist dann in diesem Fall einen Adressierungsstrom in Richtung auf die Spannungsversorgung (SUP) in die Versorgungsspannungsleitung (V_{bat}) in den Anschluss des Messwiderstands [Rmⱼ] dieses Busknotens (BKⱼ) ein, der längs der Versorgungsspannungsleitung (V_{bat}) am entferntesten von der Spannungsversorgung (SUP) liegt. Die Busknoten ((BK₁) bis [BKⱼ₋₁]), die weniger weit von der Spannungsversorgung (SUP) entfernt liegen, erfassen mit ihren jeweiligen Messmitteln ((Rm₁) bis [Rmⱼ₋₁], (D2), (D3)) jeweils den zusätzlichen Spannungsabfall über ihre jeweiligen Messwiderstände (Rm₁ bis Rmⱼ₋₁) und regeln ihre Adressierungsstromquellen ((Iq₁) bis [Iqⱼ₋₁]) herunter oder schalten diese, je nach Implementation des Verfahrens, in diesem Adressierungszustand der Busknoten ((BK₁) bis [BKₙ]) ab. Dieses Herunterfahren kann durch einen Schwellwertvergleich z.B. des jeweiligen Regelsignals (rwⱼ) eines Busknotens (BKⱼ) erkannt werden. Damit kann der jeweilige Busknoten (BKⱼ) dann wieder feststellen, dass er nicht der letzte Busknoten in der Busknoten-Reihe ohne gültige Busknotenadresse ist oder dass er der letzte Busknoten in der Busknotenreihe ohne gültige Busknotenadresse ist. In diesem letzten Fall übernimmt der Busknoten die vom Busmaster angebotene zu vergebende Busknotenadresse, als seine gültige Busknotenadresse. Somit besitzt dieser Busknoten - angenommen der j-te Busknoten (BKⱼ) - nun eine gültige Busknotenadresse und schaltet seine Adressierungsstromquelle (Iqⱼ) für die Dauer des Adressierungsverfahrens ab. Das Adressierungsverfahren wird, wie immer in dieser Offenlegung typischerweise durch einen Befehl des Busmasters (ECU) beendet, der bevorzugt alle Busknoten ((BK₁) bis [BKₙ]) typischerweise dazu veranlasst, den Adressierungszustand zu beenden und beispielsweise den Normalzustand einzunehmen.

Das vorgeschlagene Verfahren zur Adressierung über Spannungsabfälle längs der Versorgungsspannungsleitung (V_{bat}) sieht daher nun folgende Schritte konkret vor:
- Signalisierung eines Adressierungszustands, im Folgenden Power-Line-Adressierungszustand genannt, an alle Busknoten ((BK₁) bis [BKₙ]), wodurch diese einen Adressierungszustand für die Durchführung eines Autoadressierungsverfahrens mittels der Versorgungsspannungsleitung (V_{bat}) annehmen;
- Ggf. Signalisierung an zumindest einen Busknoten oder einen Teil, besser an alle der Busknoten ((BK₁) bis [BKₙ]) deren Busknotenadressen ungültig zu machen;
- Durchführen einer Intitialisierungssequenz, die folgende Schritte aufweist, für jeden Busknoten (BKⱼ) der n Busknoten ((BK₁), (BK₂), ..... [BKₙ₋₁], [BKₙ]), der noch keine gültige Busknotenadresse besitzt bis alle Busknoten der n Busknoten ((BK₁), (BK₂), ..... [BKₙ₋₁], [BKₙ]) über eine gültige Busknotenadresse verfügen:
- Signalisierung einer zu vergebenden Busadresse an alle Busknoten der n Busknoten ((BK₁), (BK₂), ..... [BKₙ₋₁], [BKₙ]) (Typischerweise erfolgt mit dieser Signalisierung auch der Befehl des Busmasters (ECU) an die Busknoten, den Adressierungszustand einzunehmen oder ggf. beizubehalten.);
- Durchführung der folgenden Schritte parallel für jeden Busknoten (BKⱼ) der Busknoten der n Busknoten ((BK₁), (BK₂), ..... [BKₙ₋₁], [BKₙ]), im Folgenden als betreffender Busknoten (BKⱼ) bezeichnet, der über keine gültige Busknotenadresse verfügt:
- Empfang des besagten Autoadressierungskommandos vom Busmaster (ECU) durch den betreffenden Busknoten (BKⱼ);
- Empfang der zu vergebenden Busadresse vom Busmaster (ECU) durch den betreffenden Busknoten (BKⱼ);
- Empfang eines Startsignals für die Vergabe der zu vergebenden Busadresse vom Busmaster (ECU) durch den betreffenden Busknoten (BKⱼ) und Start eines Zeitgebers zu einem Startzeitpunkt t₀=0s durch den betreffenden Busknoten (BKⱼ);
- Erfassen des Spannungsabfalls über den Messwiderstand (Rmⱼ) des betreffenden Busknotens (BKⱼ) als Basisspannungswert [Vₘ₀] mittels Messmitteln ([Rmⱼ], (D2), (D3));
- Zu einem vierten Zeitpunkt [t₄] nach dem Startzeitpunkt [t₀]: Einschalten der Adressierungsstromquelle (Iqⱼ) des betreffenden Busknotens (BKⱼ) und Ausregelung des Spannungsabfalls über dem Messwiderstand [Rmⱼ] des betreffenden Busknotens (BKⱼ) mit Hilfe der Adressierungsstromquelle (Iqⱼ) in Abhängigkeit von dem Spannungsabfall über dem Messwiderstand [Rmⱼ] mittels eines Regelsignals (rwⱼ), das durch Messmittel ((D2), (D3), [Rmⱼ]) und/oder Regelmittel (F) des Busknotens (BKⱼ) erzeugt wird, auf einen Gesamtzielspannungswert der einem Zielspannungswert als plus dem zuvor gemessenen Basisspannungswert [Vₘ₀] entspricht, wobei eine Erhöhung des Adressierungsstroms der Autoadressierungsstromquelle (Iqⱼ) des betreffenden Busknotens (BKⱼ) mit einer ersten Zeitkonstante [τ₁] erfolgt und wobei eine Erniedrigung des Adressierungsstroms der Autoadressierungsstromquelle (Iqⱼ) des betreffenden Busknotens (BKⱼ) mit einer zweiten Zeitkonstante [τ₂] erfolgt (Man beachte, dass hier noch keine Aussage über das wertemäßige Verhältnis der ersten Zeitkonstante [τ₁] im Vergleich zur zweiten Zeitkonstante [τ₂] erfolgt.);
- Zu einem fünften Zeitpunkt [t₅] nach dem Startzeitpunkt [t₀] und nach dem vierten Zeitpunkt [t₄]: Erfassen des Werts des Regelsignals (rwⱼ) oder eines daraus abgeleiteten Signals und Vergleich dieses Werts mit einem Schwellwert und
- Verwendung der zu vergebenden Busknotenadresse als gültige Busknotenadresse des Busknotens (BKⱼ), wenn der Betrag dieses Wertes über dem Schwellwert liegt und Ausschalten der Adressierungsstromquelle (Iqⱼ) spätestens beim Verlassen des Adressierungszustands durch den Busknoten (BKⱼ).

Es ist zweckmäßig, eine Überprüfung der erfolgreichen Adressvergabe durch den Bus-master (ECU) nach Vergabe einer Busknotenadresse an einen Busknoten (BKⱼ) durchzuführen. Ergibt diese einen Fehler, melden beispielsweise mehrere Busknoten eine Buskollision, so ist eine Löschung der Gültigkeit der letzten vergebenen Busknotenadresse sinnvoll, wodurch die betreffenden Busknoten (BKⱼ) sich wieder wie Busknoten (BKⱼ) ohne gültige Busknotenadresse verhalten. Nach der Vergabe aller Busknotenadressen an alle Busknoten ((BK₁) bis [BKₙ]), die eine Busknotenadresse erhalten sollten, sollte überprüft werden, ob alle Busknoten ((BK₁) bis [BKₙ]), die eine Busknotenadresse erhalten sollten, eine gültige Busknotenadresse erhalten haben. Haben alle Busknoten eine gültige Busknotenadresse erhalten, so signalisiert der Busmaster (ECU) bevorzugt an alle Busknoten ((BK₁) bis [BKₙ]), dass sie den Adressierungszustand verlassen sollen und einen anderen Zustand, bevorzugt den Normalzustand einnehmen sollen. Im Normalzustand schalten die Busknoten ((BK₁) bis [BKₙ]) ihre Adressierungsstromquellen ((Iq₁) bis [Iqₙ]) aus bzw. betreiben sie in der Funktion, die für diese Adressierungsstromquellen ((Iq₁) bis [Iqₙ]) in diesem Betriebszustand, hier dem Normalzustand, vorgesehen ist. Die Durchführung einer weiteren Initialisierungssequenz ist zweckmäßig, wenn nicht alle Busknoten ((BK₁) bis [BKₙ]), die eine Busknotenadresse erhalten sollten, eine gültige Busknotenadresse erhalten haben. Grundsätzlich ist es zweckmäßig, wenn die zweite Zeitkonstante [τ₂] um einen Faktor größer als 10 kleiner ist als die erste Zeitkonstante [τ₁] ist. Zumindest aber sollte die erste Zeitkonstante [τ₁] größer als die zweite Zeitkonstante [τ₂] sein. Es ist günstig, wenn die erste Zeitkonstante [τ₁] innerhalb des betreffenden Autoadressierungsbusknotens (BKⱼ) von dem mittels Messmitteln ([Rmⱼ], (D2), (D3)) erfassten Wert des Spannungsabfalls über den Messwiderstand [Rmⱼ] des betreffenden Autoadressierungsbusknotens (BKⱼ) abhängt und/oder die zweite Zeitkonstante [τ₂] innerhalb des betreffenden Autoadressierungsbusknotens (BKⱼ) von dem mittels Messmitteln ([Rmⱼ], (D2), (D3)) erfassten Wert des Spannungsabfalls über den Messwiderstand [Rmⱼ] des betreffenden Autoadressierungsbusknotens (BKⱼ) abhängt. Dies ermöglicht eine schnellere Regelung des Spannungsabfalls über den Messwiederstand [Rmⱼ] des betreffenden Busknotens (BKⱼ).

### Figur 17

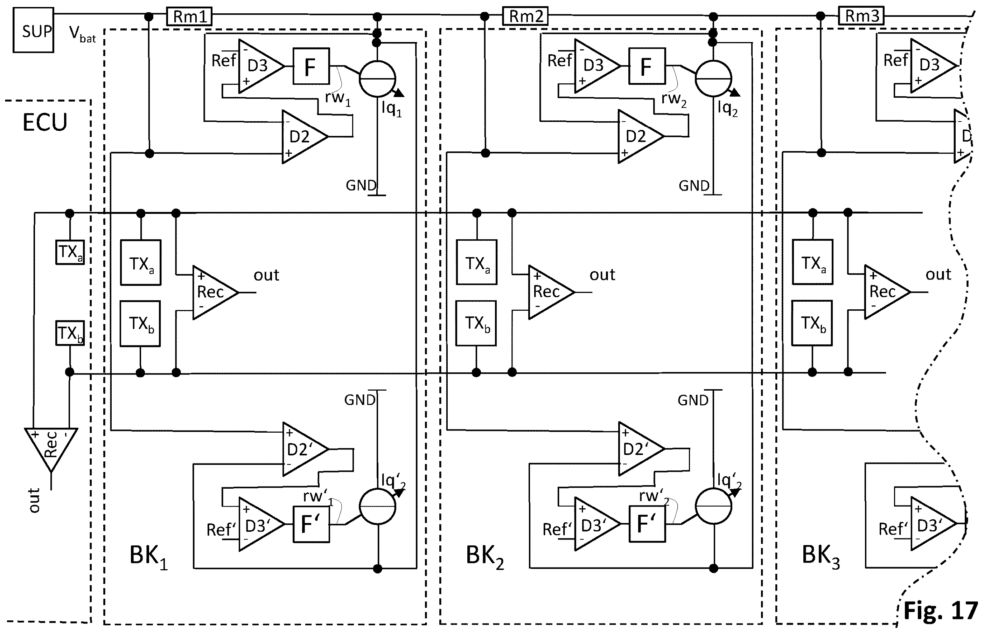

In der Figur 17 werden nun auch zweite Adressierungsstromquellen (Iqⱼ)der betreffenden Busknoten (BKⱼ) für die Autoadressierung über die Spannungsversorgungsleitung (V_{bat}) verwendet. Auch werden zweite Messmittel (D2', D3') zusätzlich zu den ersten Messmitteln ((Rm₁) bis [Rmₙ], (D2), (D3)) verwendet. Diese Redundanz kann für Prüf- und Überwachungszwecke genutzt werden, da jeder Autoadressierungsdurchlauf für beide Zweige zu einem gleichen Ergebnis führen sollte. Ist dies nicht der Fall, so wird die angebotene Busknotenadresse bevorzugt nicht übernommen, sondern beispielsweise eine speziell reservierte und vorbestimmte Fehleradresse angenommen. Spricht der Busmaster (ECU) diese Fehleradresse mittels seines Datenbusprotokolls an, so antwortet der Busknoten, an dem der Fehler auftrat, dem Busmaster (ECU), was er nicht sollte, wenn kein Fehler in dem Busknoten aufgetreten wäre. Die Prüfung kann konkret beispielsweise so aussehen, dass die Differenz zwischen dem Wert des ersten Regelsignals (rwⱼ) eines Busknotens (BKⱼ) und dem Wert des zweiten Regelsignals (rw'ⱼ) dieses Busknotens (BKⱼ) gebildet wird. Liegt der Betrag dieser Differenz oberhalb eines vorbestimmten Grenzwertes, so funktioniert zumindest eine der Schaltungen nicht korrekt. Dies kann somit erkannt werden und dazu genutzt werden, zu verhindern, dass die vom Busmaster (ECU) angebotene zu vergebende Busknotenadresse als gültige Busknotenadresse übernommen wird. Stattdessen wird dann die vorbestimmte Fehleradresse als gültige Busknotenadresse übernommen, was dann durch Ansprechen dieser Adresse durch den Busmaster (ECU) durch denselben überprüft werden kann.

### Gleichzeitige Verwendung verschiedener Autoadressierungsverfahren

### Figur 18

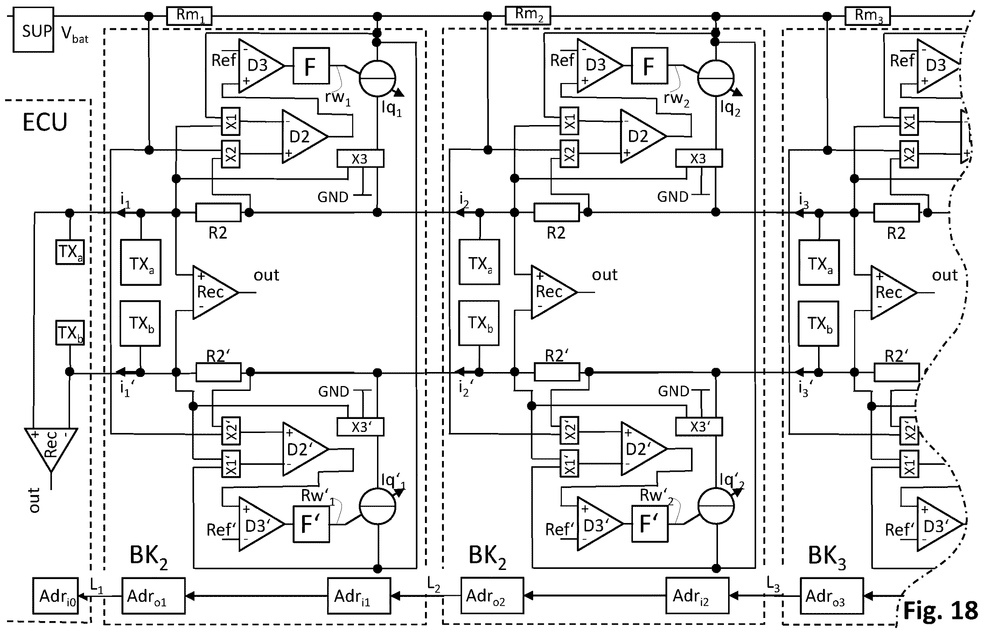

Es ist nun vorteilhaft verschiedene der hier beschriebenen Autoadressierungsverfahren nutzen zu können, da jedes Verfahren den Erfolg der richtigen Identifizierung durch Redundanz bestätigen kann. Außerdem kann bei der Verwendung von mehr als zwei Autoadressierungsverfahren eine Fail-Operational-Eigenschaft erreicht werden. D.h. in der Regel wird die Autoadressierung erfolgreich durchgeführt, aber ein Fehler wird erkannt, der dann signalisiert werden kann. Dies ist potenziell für sicherheitsrelevante Anwendungen von besonderer Wichtigkeit. Figur 18 zeigt eine solche vorgeschlagene Vorrichtung, die die Durchführung mehrerer Autoadressierungsverfahren zulässt und damit eine erhöhte Sicherheit aufweist. Die Figur 18 ist eine Kombination der Figuren 17, 13, 6 und 5. In den Busknoten ((BK₁) bis [BKₙ]) wird ein erster Multiplexer (X1) des jeweiligen Busknotens (BKⱼ) und ein zweiter Multiplexer (X2) dieses Busknotens (BKⱼ) genutzt um die Eingänge des zweiten Differenzverstärkers (D2) dieses Busknotens (BKⱼ) an den ersten Bus-Shunt-Widerstand (R2) dieses Busknotens (BKⱼ) oder an den Messwiderstand [Rmⱼ] dieses Busknotens (BKⱼ) zu schalten. In den Busknoten ((BK₁) bis [BKₙ]) wird darüber hinaus ein weiterer erster Multiplexer (X1') des jeweiligen Busknotens (BKⱼ) und ein weiterer zweiter Multiplexer (X2') dieses Busknotens (BKⱼ) genutzt, um die Eingänge des weiteren zweiten Differenzverstärkers (D2') dieses Busknotens (BKⱼ) an den zweiten Bus-Shunt-Widerstand (R2') dieses Busknotens (BKⱼ) oder an den Messwiderstand (Rmⱼ) dieses Busknotens (BKⱼ) zu schalten. Entsprechend dazu wird die erste Adressierungsstromquelle (Iqⱼ) dieses Busknotens (BKⱼ) entweder mit einem Bezugspotenzial (GND) oder mit dem ersten Eindrahtbus (DBₐ) durch einen dritten Demultiplexer (X3) dieses Busknotens (BKⱼ) verbunden. Dabei legt der dritte Demultiplexer (X3) dieses Busknotens (BKⱼ) auch fest, ob der erste Adressierungsstrom der ersten Adressierungsstromquelle (Iqⱼ) dieses Busknotens (BKⱼ) vor oder hinter dem ersten Bus-Shunt-Widerstand (R2) dieses Busknotens (BKⱼ) in den ersten Eindrahtbus (DBₐ) eingespeist wird. Analog dazu wird die zweite Adressierungsstromquelle (Iq'ⱼ) dieses Busknotens (BKⱼ) entweder mit einem Bezugspotenzial (GND) oder mit dem zweiten Eindrahtbus (DB_{b}) durch einen weiteren dritten Multiplexer (X3') dieses Busknotens (BKⱼ) verbunden. Dabei legt der weitere dritte Multiplexer (X3') dieses Busknotens (BKⱼ) auch fest, ob der zweite Adressierungsstrom der zweiten Adressierungsstromquelle (Iq'ⱼ) dieses Busknotens (BKⱼ) vor oder hinter dem zweiten Bus-Shunt-Widerstand (R2') dieses Busknotens (BKⱼ) in den zweiten Eindrahtbus (DB_{b}) eingespeist wird.

### Niederohmiger Normalbetrieb

### Figur 19

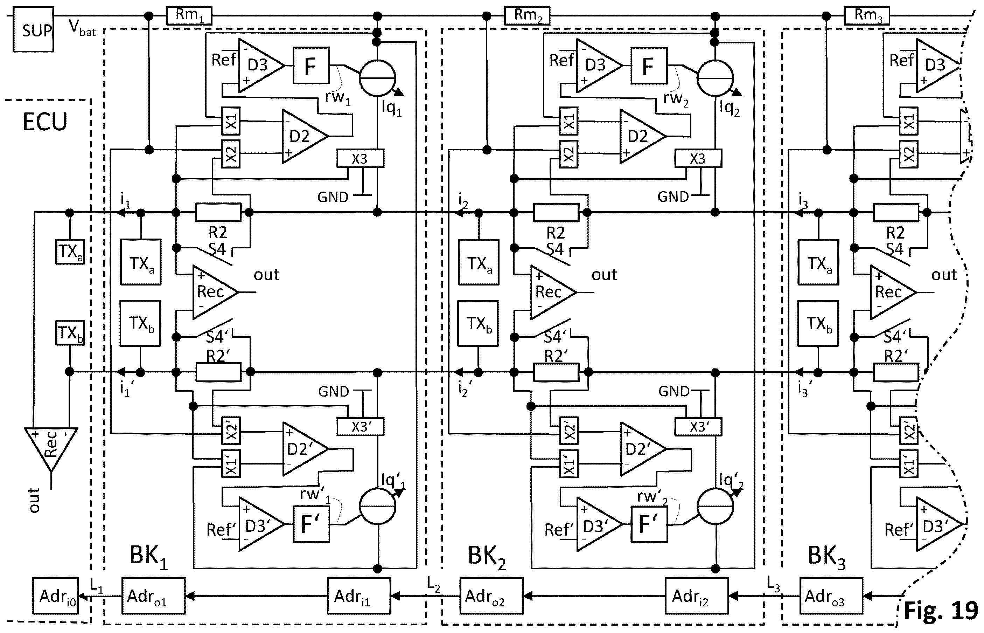

Es ist nun sinnvoll, wenn nur im Adressierungszustand der Busknoten ((BK₁) bis [BKₙ]) die Bus-Shunt-Widerstände (R2, R2') in dem ersten Eindrahtbus (DBₐ) und dem zweiten Eindrahtbus (DB_{b}) wirksam sind. Daher ist es sinnvoll, sobald der Adressierungszustand verlassen wird, bevorzugt in allen Busknoten ((BK₁) bis [BKₙ]) durch einen ersten Überbrückungsschalter (S4) in bevorzugt jedem Busknoten (BKⱼ) den ersten Bus-Shunt-Widerstand (R2) dieses Busknotens (BKⱼ) und durch einen zweiten Überbrückungsschalter (S4') in diesem Busknoten (BKⱼ) den zweiten Bus-Shunt-Widerstand (R2') dieses Busknotens (BKⱼ) kurzzuschließen. Dies ist in Figur 19 dargestellt.

Natürlich wäre dieses Vorgehen auch für den Messwiderstand [Rmⱼ] eines Busknotens (BKⱼ) denkbar. Die entsprechenden Schalter würden in der Regel aber zu viel Chip-Fläche beanspruchen. Außerdem reicht ja in der Regel bereits der Spannungsabfall über die normale Versorgungsspannungsleitung aus, sodass in diesen Fällen dann ja kein dedizierter Messwiderstand [Rmⱼ] in die Versorgungsspannungsleitung (V_{bat}) eingefügt wird, sondern ein Leitungsabschnitt der Versorgungsspannungsleitung (V_{bat}) als Messwiderstand [Rmⱼ] dieses Busknotens (BKⱼ) genutzt werden kann.

### Vertauschungserkennung

### Figur 20

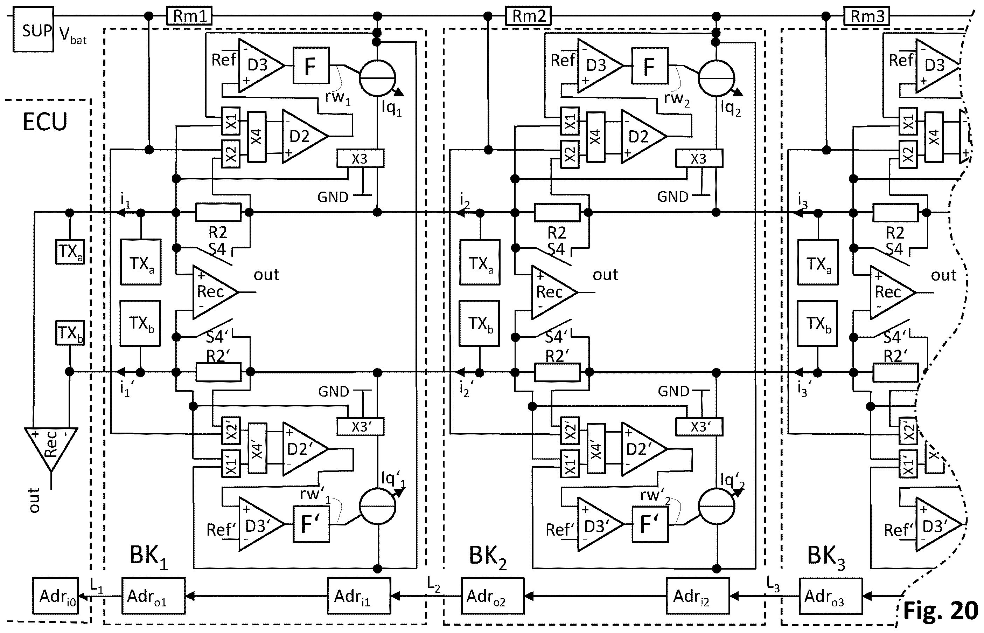

Figur 20 zeigt nun zusätzlich in den beispielhaften Busknoten ((BK₁) bis [BKₙ]) jeweils einen vierten Multiplexer (X4) je Busknoten (BKⱼ), mit dem eine Steuerung innerhalb dieses Busknotens (BKⱼ) die beiden Eingänge des zweiten Differenzverstärkers (D2) dieses Busknotens (BKⱼ) vertauschen kann. Des Weiteren zeigt die Figur 20 zusätzlich in den beispielhaften Busknoten ((BK₁) bis [BKₙ]) jeweils einen weiteren vierten Multiplexer (X4') je Busknoten (BKⱼ), mit dem die Steuerung innerhalb dieses Busknotens (BKⱼ) die beiden Eingänge des weiteren zweiten Differenzverstärkers (D2') dieses Busknotens (BKⱼ) vertauschen kann.

### Figur 21

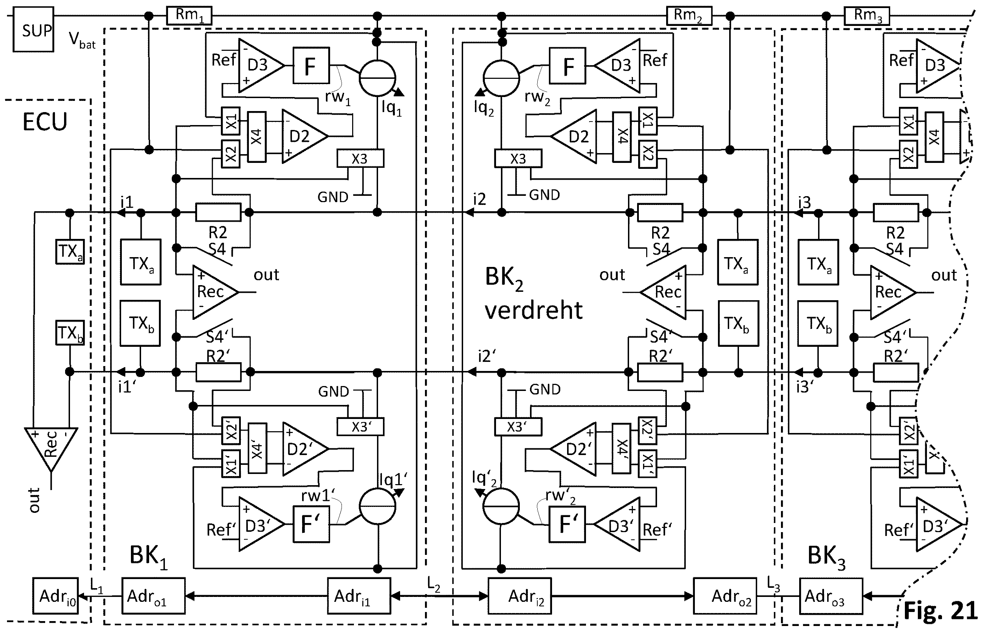

Dies kann an Figur 21 nun für den dort dargestellten Fehlerfall erklärt werden: Der zweite Busknoten (BK₂) ist vertauscht eingebaut. Dies kann nun sehr leicht durch die Steuerung des zweiten Busknotens (BK₂) in einem Selbsttest, der bevorzugt zu Beginn der Initialisierungsprozedur durchgeführt wird, festgestellt werden. Bevorzugt signalisiert beispielsweise der Busmaster (ECU) an die Busknoten ((BK₁) bis [BKₙ]), dass sie einen solchen Selbsttest durchführen sollen. Andere Startszenarien, z.B. in einer Einschaltphase sind denkbar. Beispielsweise kann der Busknoten (BKⱼ) mittels seiner Messmittel (R2, R2', D2, D2', D3, D3', Iqⱼ, Iq'ⱼ, X1, X1', X2, X2', X3, X3') feststellen, ob der erste Adressierungsstrom seiner ersten Adressierungsstromquelle (Iqⱼ) durch seinen ersten Bus-Shunt-Widerstand (R2) fließt, wenn er durch seinen ersten Bus-Shunt-Widerstand (R2) fließen soll, und ob der zweite Adressierungsstrom seiner zweiten Adressierungsstromquelle (Iq'ⱼ) durch seinen zweiten Bus-Shunt-Widerstand (R2') fließt, wenn er durch den zweiten Bus-Shunt-Widerstand (R2') fließen soll. Ist dies genau umgekehrt, so kann die Steuerung des Busknotens dies an Hand der entsprechenden Messergebnisse feststellen und mittels eines vierten Multiplexers (X4) dieses Busknotens (BKⱼ) und des dritten Multiplexers (X3) dieses Busknotens (BKⱼ) zum einen die Eingänge des zweiten Differenzverstärkers (D2) dieses Busknotens (BKⱼ) vertauschen und zum anderen den Einspeisepunkt für den ersten Adressierungsstrom der ersten Adressierungsstromquelle (Iqⱼ) dieses Busknotens (BKⱼ) auf die andere Seite des ersten Bus-Shunt-Widerstands (R2) dieses Busknotens (BKⱼ) legen. In diesem Fall kann die Steuerung des Busknotens mittels eines weiteren vierten Multiplexers (X4') dieses Busknotens (BKⱼ) und des weiteren dritten Multiplexers (X3') dieses Busknotens (BKⱼ) zum einen die Eingänge des weiteren zweiten Differenzverstärkers (D2') dieses Busknotens (BKⱼ) ebenfalls vertauschen und zum anderen den Einspeisepunkt für den zweiten Adressierungsstrom der zweiten Adressierungsstromquelle (Iq'ⱼ) dieses Busknotens (BKⱼ) auf die andere Seite des zweiten Bus-Shunt-Widerstands (R2') dieses Busknotens (BKⱼ) legen. Dann ist die Durchführung des Autoadressierungsverfahrens mit Hilfe der Bus-Shunt-Widerstände (R2, R2') wieder möglich. Auch möglich, aber hier zur besseren Übersicht nicht mehr eingezeichnet, ist ein Umlegen des Einspeisepunkts der ersten Adressierungsstromquelle (Iqⱼ) dieses Busknotens (BKⱼ) in die Versorgungsspannungsleitung (V_{bat}) auf die andere Seite des Messwiderstands (Rmⱼ) mittels eines nicht eingezeichneten fünften Multiplexers (X5). Dies ist aber nur sinnvoll, wenn die erste Adressierungsstromquelle (Iqⱼ) im Normalzustand keinen zu großen Strom liefern muss. Dies ist aber genau dann der Fall, wenn die erste Autoadressierungsstromquelle (Iqⱼ)im Normalzustand des Busknotens (BKⱼ) beispielsweise die Energiequelle von Leuchtmitteln (LEDⱼ) des Busknotens darstellt. In dem Fall wären die Transistoren des nicht gezeichneten fünften Multiplexers (X5) zu groß und damit zu teuer. Ebenso ist ein Umlegen des Einspeisepunkts der zweiten Adressierungsstromquelle (Iq'ⱼ) dieses Busknotens (BKⱼ) in die Versorgungsspannungsleitung (V_{bat}) auf die andere Seite des Messwiderstands (Rmⱼ) mittels eines nicht eingezeichneten weiteren fünften Multiplexers (X5') nicht mehr eingezeichnet. Hier gelten die gleichen Überlegungen.

Ebenso wurde nicht eingezeichnet, dass auch der Eingang des Adresseingangs (Adrᵢⱼ) des betreffenden Busknotens (BKⱼ) (hier beispielhaft der zweite Busknoten (BK₂)) mit dem Ausgang des Adressausgangs (Adrₒⱼ) des betreffenden Busknotens (BKⱼ) mittels zweier Multiplexer (X6, X7) vertauscht werden kann, wenn eine solche Vertauschung wie in Figur 21 durch die Steuerung des Busknotens (BKⱼ) z.B. auf die zuvor beschriebene Weise festgestellt wurde.

Dies sind beispielhafte Maßnahmen zur Kompensation einer Einfügung eines Busknotens mit Steckervertauschung.

Einzelne Ausgestaltungen der Erfindung weisen ein oder mehrere der Gruppen von Merkmalen der einzelnen Patentansprüche und/oder ein oder mehrere Merkmale aus einzelnen Merkmalsgruppen oder aus beliebigen Kombinationen einzelner Merkmalsgruppen der Patentansprüche auf.

Ferner können einzelne Ausgestaltungen der Erfindung ein oder mehrere der Gruppen von Merkmalen der nachfolgenden Auflistung und/oder ein oder mehrere Merkmale aus einzelnen Merkmalsgruppen oder aus beliebigen Kombinationen einzelner Merkmalsgruppen der nachfolgenden Auflistung aufweisen.
1. Vorrichtung zur Ansteuerung elektrischer und/oder elektronischer Busknoten, mit
   - einem seriellen, bidirektionalen, differentiellen Zweidraht-Kommunikationsbus (DB),
   - n Busknoten (BK₁ bis BKₙ) mit n als ganzer positiver Zahl größer 1,
   - einem Busmaster (ECU),
   - wobei der Zweidraht-Kommunikationsbus (DB) einen ersten Eindrahtbus (DBₐ) und einen zweiten Eindrahtbus (DB_{b}) aufweist,
   - wobei jeder der n Busknoten (BK₁ bis BKₙ) aufweist
      - eine differentielle, serielle Schnittstelle (IFⱼ),
      - einen Mikrocontroller (µCⱼ),
      - einen Taktgeber (CLKGⱼ),
      - eine Abtastvorrichtung (ATⱼ) und
      - eine Adresserkennungseinheit (ADRⱼ) sowie ein Busknotenadressregister (BKADRⱼ),
   - wobei mindestens einer der n Busknoten (BK₁ bis BKₙ) ein Leuchtmittel-Busknoten mit mindestens einem Leuchtmittel (LEDⱼ) und mindestens einer Energieversorgungsmittel (EVⱼ) ist,
   - wobei das mindestens eine Energieversorgungsmittel (EVⱼ) des mindestens einen Busknotens (BK₁ bis BKₙ) für die Energieversorgung des mindestens einen Leuchtmittels (LED) des mindestens einen Busknotens (BK₁ bis BKₙ) vorgesehen ist,
   - wobei sich der Zweidraht-Kommunikationsbus (DB) zumindest in einem ersten differenziellen logischen Zustand (z1) und in einem zweiten differenziellen logischen Zustand (z2) befinden kann,
   - wobei die serielle Schnittstelle (IFⱼ) des mindestens einen Leuchtmittel-Busknotens (BK₁ bis BKₙ) jeweils mit dem Zweidraht-Kommunikationsbus (DB) verbunden ist, um Daten über den Zweidraht-Kommunikationsbus (DB) zu senden und/oder über diesen zu empfangen,
   - wobei der Busmaster (ECU) von extern Steuerbefehle für die n Busknoten (BK₁ bis BKₙ) erhält,
   - wobei der Busmaster (ECU) diese Steuerbefehle in über den Zweidraht-Kommunikationsbus (DB) an die Busknoten (BK₁ bis BKₙ) zu versendende Bitströme umsetzt,
   - wobei der Busmaster (ECU) in Abhängigkeit von einem vom Busmaster (ECU) vorgesehenen Takt (CLK) die Bits der durch den Busmaster (ECU) zu versendenden Bitströme über den Zweidraht-Kommunikationsbus (DB) sendet,
   - wobei der Busmaster (ECU) von den n Busknoten (BK₁ bis BKₙ) erzeugte Bitströme über den Zweidraht-Kommunikationsbus (DB) empfängt,
   - wobei der Taktgeber (CLKGⱼ) eines jeden Busknotens (BK₁ bis BKₙ) ein Abtastsignal (CLKAⱼ) in dem jeweiligen Busknoten (BK₁ bis BKₙ) erzeugt,
   - wobei die Abtastvorrichtung (ATⱼ) eines jeden Busknotens (BK₁ bis BKₙ) in Abhängigkeit von dem Abtastsignal (CLKAⱼ) dieses Busknotens (BKⱼ) über den Zweidraht-Kommunikationsbus (DB) versendete Bitströme abtastet, um einen lokalen Bitstrom innerhalb dieses Busknotens (BKⱼ) zu gewinnen,
   - wobei der Busmaster (ECU) die zu versendenden Bitströme als Folgen von Bits in Bit-Strom-Paketen (BP) versendet,
   - wobei der Zweidraht-Kommunikationsbus (DB), wenn weder der Busmaster (ECU) noch einer der n Busknoten (BK₁ bis BKₙ) Daten über den Zweidraht-Kommunikationsbus (DB) übertragen, den ersten differentiellen logischen Zustand (z1) oder einen dritten differentiellen logischen Zustand (z3) annimmt und
   - wobei die Bit-Strom-Pakete (BP) eine zeitliche Abfolge von m Einzelbits des Bit-Strom-Pakets (BP) mit gleicher zeitlicher Länge t_{B} aufweisen, mit m als ganzer positiver Zahl, wobei die zeitliche Länge t_{B} um nicht mehr als einen Faktor von +/- (0,4/m)*t_{B} innerhalb eines Bit-Strom-Pakets (BP) variiert,
   - wobei zumindest ein Teil der von dem Busmaster (ECU) versendeten Bit-Strom-Pakete (BP) folgende Inhalte aufweist
      - ein Startsignal (START) in Form von i Bits mit i als ganzer positiver Zahl mit i-1≤m/3 der m bits des jeweiligen Bit-Strom-Paketes (BP) mit einem zweiten differentiellen logischen Zustand (z2) auf dem seriellen, bidirektionalen, differentiellen Zweidraht-Kommunikationsbus (DB),
      - eine Synchronisationsinformation (SYNC) aus k-Bits mit k als ganzer positiver Zahl,
         - zur Phasensynchronisation des Abtastsignals (CLKAⱼ) der Taktgeber (CLKGⱼ) der Busknoten (BKⱼ) auf die Phase des Takts (CLK) des Busmasters (ECU) oder
         - zur Phasensynchronisation des Abtastsignals (CLKAⱼ) der Taktgeber (CLKGⱼ) der Busknoten (BKⱼ) auf die Phase des Takts (CLK) des Busmasters (ECU) und zur Frequenzsynchronisation des Abtastsignals (CLKAⱼ) der Taktgeber (CLKGⱼ) der Busknoten (BKⱼ) auf die Frequenz des Takts (CLK) des Busmasters (ECU),
         - Dateninformationen (DATA) aus den restlichen Bits der m-i-k Bits der m Bits des jeweiligen Bit-Strom-Paketes (BP),
         - wobei die Dateninformationen (DATA) Adressinformationen (ADRD), Nutzinformationen (INFO) und Prüfinformationen (CHKD) umfassen,
         - wobei zumindest ein Teil der Nutzinformationen (INFO) Beleuchtungsinformationen (ILD) zur Steuerung der Energieversorgung der Leuchtmittel (LED;) des Busknotens (BKⱼ) durch das Energieversorgungsmittel (EVⱼ) des Busknotens (BKⱼ) in Abhängigkeit von diesen Beleuchtungsinformationen umfasst, wenn der logische Inhalt der Adressinformationen (ADRD) mit dem Inhalt des Busknotenadressregisters (BKADRⱼ) des Busknotens (BKⱼ) übereinstimmt,
      - wobei die Adresserkennungseinheiten (ADRⱼ) der Busknoten (BK₁ bis BKₙ) die Adressinformationen (ADRD) der Bit-Strom-Pakete (BP) auswerten und nur dann eine Verwendung der enthaltenen Nutzinformationen (INFO) zulassen, wenn der Inhalt der Adressinformationen (ADRD) mit dem Inhalt des Busknotenadressregisters (BKADRⱼ) des Busknotens (BKⱼ) übereinstimmt und
      - wobei zumindest ein solcher Busknoten (BKⱼ) Mittel aufweist, um ein Autoadressierungsverfahren durchzuführen, um das Busknotenadressregister (BAKDRⱼ) mit einer Busknotenadresse zu versehen, die mit der physikalischen Position dieses Busknotens (BKⱼ) der n Busknoten (BK₁ bis BKₙ) innerhalb des Zweidraht-Kommunikationsbusses (DB) übereinstimmt.
2. Busknoten für einen seriellen, bidirektionalen, differentiellen Zweidraht-Kommunikationsbus (DB), der einen ersten Eindrahtbus (DB₁) sowie einen zweiten Eindrahtbus (DB₂) und einen mit diesen verbundenen Busmaster (ECU) aufweist, mit
   - einem ersten Bus-Shunt-Widerstand (R2), der seriell mit dem ersten Eindrahtbus (DB₁) verschaltbar ist, und
   - einem zweiten Bus-Shunt-Widerstand (R2'), der seriell mit dem zweiten Eindrahtbus (DB₂) verschaltbar ist,
   - einer differentiellen ersten Gleichtaktadressierungsstromquelle (GLIqⱼ) zur Ermittlung der Busposition des Busknotens (BKⱼ) im Zweidraht-Kommunikationsbus (DB),
   - wobei die erste Gleichtaktadressierungsstromquelle (GLIqⱼ)
      - einen ersten Gleichtaktadressierungsstromanteil in den ersten Eindrahtbus (DBₐ) des Zweidraht-Kommunikationsbusses (DB) geregelt einspeisen kann, wobei der erste Gesamtstrom (iⱼ) durch den ersten Bus-Shunt-Widerstand (R2) des Busknotens (BKⱼ) auf einen vorgegebenen ersten Summenstromwert (I_{ref}) geregelt wird, und
      - einen zum ersten Gleichtaktadressierungsstromanteil betragsmäßig gleichen oder betragsmäßig verschiedenen zweiten Gleichtaktadressierungsstromanteil in den zweiten Eindrahtbus (DB_{b}) des Zweidraht-Kommunikationsbusses (DB) mit gleichem Vorzeichen wie demjenigen des ersten Gegentaktadressierungsstromanteils geregelt einspeisen kann, wobei der zweite Gesamtstrom (i'ⱼ) durch den zweiten Bus-Shunt-Widerstand (R2') des Busknotens (BKⱼ) auf den vorgegebenen ersten Summenstromwert (I_{ref}) geregelt wird,
   - wobei der erste Gleichtaktadressierungsstromanteil der Gleichtaktadressierungsstromquelle (GLIqⱼ) des Busknotens (BKⱼ) den ersten Bus-Shunt-Widerstand (R2) des Busknotens (BKⱼ) in Richtung auf den Busmaster (ECU) durchströmt und
   - wobei der zweite Gleichtaktadressierungsstromanteil der Gleichtaktadressierungsstromquelle (GLIqⱼ) des Busknotens (BKⱼ) den zweiten Bus-Shunt-Widerstand (R2') des Busknotens (BKⱼ) in Richtung auf den Busmaster (ECU) durchströmt.
3. Busknoten nach Punkt 2, dadurch gekennzeichnet, dass einer der beiden ersten und zweiten Gleichtaktadressierungsstromanteile null oder im Wesentlichen gleich null sein kann.
4. Busknoten (BKⱼ) für ein Datenbussystem mit einem seriellen, bidirektionalen, differentiellen Zweidraht-Kommunikationsbus (DB), der einen ersten Eindrahtbus (DB₁) und einen zweiten Eindrahtbus (DB₂) aufweist, einem Busmaster (ECU), einem ersten Bus-Shunt-Widerstand (R2), der in den ersten Eindrahtbus (DB₁) eingefügt ist, einem zweiten Bus-Shunt-Widerstand (R2'), der in den zweiten Eindrahtbus (DB₂) eingefügt ist, und einer Gegentaktadressierungsstromquelle (GGIqⱼ) zur Ermittlung der Busposition des Busknotens (BKⱼ) im Zweidraht-Kommunikationsbus (DB),
   - wobei die Gegentaktadressierungsstromquelle (GGIqⱼ)
      - einen ersten Gegentaktadressierungsstromanteil in den ersten Eindrahtbus (DBₐ) des Zweidraht-Kommunikationsbusses (DB) geregelt einspeisen kann, wobei der erste Gesamtstrom (iⱼ) durch den ersten Bus-Shunt-Widerstand (R2) des Busknotens (BKⱼ) auf einen vorgegebenen ersten Summenstromwert (I_{ref}) geregelt wird, und
      - eine zum ersten Gegentaktadressierungsstromanteil betragsmäßig gleichen zweiten Gegentaktadressierungsstromanteil in den zweiten Eindrahtbus (DB_{b}) des Zweidraht-Kommunikationsbusses (DB) geregelt mit gegenüber dem Vorzeichen des ersten Gegentaktadressierungsstromanteils umgekehrten Vorzeichen einspeisen kann, wobei der zweite Gesamtstrom (i'ⱼ) durch den zweiten Bus-Shunt-Widerstand (R2') des Busknotens (BKⱼ) auf den vorgegebenen ersten Summenstrom (I_{ref}) geregelt wird, und
      - wobei der erste Gegentaktadressierungsstromanteil der Gegentaktadressierungsstromquelle (GGIqⱼ) des Busknotens (BKⱼ) den ersten Bus-Shunt-Widerstand (R2) des Busknotens (BKⱼ) in Richtung auf den Busmaster (ECU) durchströmt und
   - wobei der zweite Gegentaktadressierungsstromanteil der Gegentaktadressierungsstromquelle (GGIqⱼ) des Busknotens (BKⱼ) den zweiten Bus-Shunt-Widerstand (R2') des Busknotens (BKⱼ) in Richtung auf den Busmaster (ECU) durchströmt.
5. Busknoten nach Punkt 4, dadurch gekennzeichnet, dass einer der beiden ersten und zweiten Gegentaktadressierungsstromanteile null oder im Wesentlichen gleich null sein kann.
6. Busknoten nach einem der Punkte 2 bis 5, gekennzeichnet durch
   - erste Mittel (R2, D2) zur Ermittlung des Stroms durch den ersten Bus-Shunt-Widerstand (R2) und/oder
   - zweite Mittel (R2', D2') zur Ermittlung des Stroms durch den zweiten Bus-Shunt-Widerstand (R2').
7. Busknoten nach einem der Punkte 2 bis 6, dadurch gekennzeichnet, dass
   - der ermittelte Strom durch den ersten Bus-Shunt-Widerstand (R2) für einen Selbsttest verwendbar ist und/oder
   - der ermittelte Strom durch den zweiten Bus-Shunt-Widerstand (R2') für einen Selbsttest verwendbar ist.
8. Busknoten nach einem der Punkte 2 bis 7, gekennzeichnet durch eine Detektionsvorrichtung (DET), die interne Signale (ds1, ds3) des Busknotens (BKⱼ) auf Plausibilität prüft.
9. Busknoten nach Punkt 8, dadurch gekennzeichnet, dass der Busknoten (BKⱼ) oder eine Teilvorrichtung (DET) des Busknotens (BKⱼ) Maßnahmen ergreift, wenn die Detektionsvorrichtung (DET) nicht plausible interne Signale des Busknotens (BKⱼ) feststellt.
10. Busknoten nach Punkt 2 oder nach Punkt 2 und einem der Punkte 3 oder 6 bis 9, sofern dieser auf Punkt 2 rückbezogen ist, dadurch gekennzeichnet, dass der Busknoten (BKⱼ) eine erste Teilvorrichtung (X3) und eine zweite Teilvorrichtung (X3') aufweist, mit denen der Einspeisepunkt des ersten Gleichtaktadressierungsstromanteils der Gleichtaktadressierungsstromquelle (GLIq;) in den ersten Eindrahtbus (DB₁) beidseitig des ersten Bus-Shunt-Widerstands (R2) umschaltbar ist und der Einspeisepunkt des zweiten Gleichtaktadressierungsstromanteils der Gleichtaktadressierungsstromquelle (GLIq;) in den zweiten Eindrahtbus (DB₂) beidseitig des zweiten Bus-Shunt-Widerstands (R2') umschaltbar ist.
11. Busknoten nach Punkt 4 oder nach Punkt 4 und einem der Punkte 5 bis 9, sofern dieser auf Punkt 4 rückbezogen ist, dadurch gekennzeichnet, dass der Busknoten (BKⱼ) eine erste Teilvorrichtung (X3) und eine zweite Teilvorrichtung (X3') aufweist, die die Einspeisepunkte der ersten Gegentaktadressierungsströme der Gegentaktadressierungsstromquelle (GLIqⱼ) ändern können.
12. Busknoten nach Punkt 2 oder nach Punkt 2 und einem der Punkte3 oder 6 bis 9, sofern dieser auf Punkt 2 rückbezogen ist, dadurch gekennzeichnet, dass die Gleichtaktadressierungsstromquelle (GLIq;) den Gleichtaktadressierungsstrom mit einer ersten Zeitkonstante (τ₁) erhöht und mit einer zweiten Zeitkonstante (τ₂) erniedrigt, die kleiner als die erste Zeitkonstante (τ₁).
13. Busknoten nach Punkt 4 oder nach Punkt 4 und einem der Punkte 5 bis 9, sofern dieser auf Punkt 4 rückbezogen ist, dadurch gekennzeichnet, dass die Gegentaktadressierungsstromquelle (GGIqⱼ) den Gegentaktadressierungsstrom mit einer ersten Zeitkonstante (τ₁) erhöht und mit einer zweiten Zeitkonstante (τ₂) erniedrigt, die kleiner als die erste Zeitkonstante (τ₁) ist.
14. Busknoten für einen seriellen, bidirektionalen, differentiellen Zweidraht-Kommunikationsbus (DB), der einen ersten Eindrahtbus (DB₁) sowie einen zweiten Eindrahtbus (DB₂) und einen mit diesen verbundenen Busmaster (ECU) aufweist, mit
   - einem ersten Bus-Shunt-Widerstand (R2), der seriell mit dem ersten Eindrahtbus (DB₁) verschaltbar ist, und
   - einem zweiten Bus-Shunt-Widerstand (R2'), der seriell mit dem zweiten Eindrahtbus (DB₂) verschaltbar ist,
   - einer ersten Adressierungsstromquelle (Iqⱼ) zur Ermittlung der Busposition des Busknotens (BKⱼ) in dem Zweidraht-Kommunikationsbus (DB), die einen ersten Adressierungsstrom in den ersten Eindrahtbus (DBₐ) des Zweidraht-Kommunikationsbusses (DB) geregelt einspeisen kann, wobei ein erster Gesamtstrom (iⱼ) durch den ersten Bus-Shunt-Widerstand (R2) auf einen vorgegebenen ersten Summenstromwert (I_{ref}) regelbar ist, und
   - wobei der erste Adressierungsstrom der ersten Adressierungsstromquelle (Iqⱼ) des Busknotens (BKⱼ) den ersten Bus-Shunt-Widerstand (R2) des Busknotens (BKⱼ) durchströmt.
15. Busknoten für einen seriellen, bidirektionalen, differentiellen Zweidraht-Kommunikationsbus (DB), der einen ersten Eindrahtbus (DB₁) sowie einen zweiten Eindrahtbus (DB₂) und einen mit diesen verbundenen Busmaster (ECU) aufweist, mit
   - einem ersten Bus-Shunt-Widerstand (R2), der seriell mit dem ersten Eindrahtbus (DB₁) verschaltbar ist, und
   - einem zweiten Bus-Shunt-Widerstand (R2'), der seriell mit dem zweiten Eindrahtbus (DB₂) verschaltbar ist,
   - einer ersten Adressierungsstromquelle (Iqⱼ) zur Ermittlung der Busposition des Busknotens (BKⱼ) im Zweidraht-Kommunikationsbus (DB), die einen ersten Adressierungsstrom in den ersten Eindrahtbus (DBₐ) des Zweidraht-Kommunikationsbusses (DB) geregelt einspeisen kann, wobei ein erster Gesamtstrom (iⱼ) durch den ersten Bus-Shunt-Widerstand (R2) des Busknotens (BKⱼ) auf einen vorgegebenen ersten Summenstromwert (I_{ref}) regelbar ist,
   - einer zweiten Adressierungsstromquelle (Iq'ⱼ) zur Ermittlung der Busposition des Busknotens (BKⱼ) im Zweidraht-Kommunikationsbus (DB), die einen zweiten Adressierungsstrom in den zweiten Eindrahtbus (DB_{b}) des Zweidraht-Kommunikationsbusses (DB) geregelt einspeisen kann, wobei ein zweiter Gesamtstrom (iⱼ) durch den zweiten Bus-Shunt-Widerstand (R2') des Busknotens (BKⱼ) auf einen vorgegebenen zweiten Summenstromwert (I'_{ref}) regelbar ist,
   - wobei der erste Adressierungsstrom der ersten Adressierungsstromquelle (Iqⱼ) des Busknotens (BKⱼ) den ersten Bus-Shunt-Widerstand (R2) des Busknotens (BKⱼ) durchströmt und
   - wobei der zweite Adressierungsstrom der zweiten Adressierungsstromquelle (Iq'ⱼ) des Busknotens (BKⱼ) den zweiten Bus-Shunt-Widerstand (R2') des Busknotens (BKⱼ) durchströmt.
16. Busknoten nach Punkt 14 oder 15, dadurch gekennzeichnet, dass
   - der Busknoten (BKⱼ) über erste Mittel (R2, D2) verfügt, um den Strom durch den ersten Bus-Shunt-Widerstand (R2) zu detektieren, und/oder
   - der Busknoten (BKⱼ) über zweite Mittel (R2', D2') verfügt, um den Strom durch den zweiten Bus-Shunt-Widerstand (R2') zu detektieren.
17. Busknoten nach Punkt 16, dadurch gekennzeichnet, dass
   - der detektierte Strom durch den ersten Bus-Shunt-Widerstand (R2) für einen Selbsttest verwendbar ist und/oder
   - der detektierte Strom durch den zweiten Bus-Shunt-Widerstand (R2') für einen Selbsttest verwendbar ist.
18. Busknoten nach Punkt 17, gekennzeichnet durch mindestens eine Detektionsvorrichtung (DET), die interne Signale (ds1, ds3) des Busknotens (BKⱼ) auf Plausibilität prüft.
19. Busknoten nach Punkt 18, dadurch gekennzeichnet, dass der Busknoten (BKⱼ) oder eine Teilvorrichtung (DET) des Busknotens (BKⱼ) Maßnahmen ergreift, wenn die Detektionsvorrichtung (DET) nicht plausible interne Signale innerhalb des Busknotens (BKⱼ) feststellt.
20. Busknoten nach einem oder mehreren der Punkte 14 bis 19, dadurch gekennzeichnet, dass
   - der Busknoten (BKⱼ) eine erste Teilvorrichtung (X3) aufweist, die den Einspeisepunkt des ersten Adressierungsstromes der ersten Adressierungsstromquelle (Iqⱼ) ändern kann und/oder
   - der Busknoten (BKⱼ) eine zweite Teilvorrichtung (X3') aufweist, die den Einspeisepunkt des zweiten Adressierungsstromes der zweiten Adressierungsstromquelle (Iq'ⱼ) ändern kann.
21. Busknoten nach einem oder mehreren der Punkte 14 bis 20, dadurch gekennzeichnet, dass
   - die erste Adressierungsstromquelle (Iqⱼ) eine erste Teiladressierungsstromquelle (Iqⱼ₁) und eine weitere erste Teiladressierungsstromquelle (Iqⱼ₂) aufweist,
   - die erste Teiladressierungsstromquelle (Iqⱼ₁) ihren Strom in einen mit dem ersten Anschluss des ersten Bus-Shunt-Widerstands (R2) verbundenen Knoten einspeist,
   - die weitere erste Teiladressierungsstromquelle (Iqⱼ₁) ihren Strom in einen mit dem zweiten Anschluss des ersten Bus-Shunt-Widerstands (R2) verbundenen Knoten einspeist und
   - die Ströme der beiden ersten Teiladressierungsstromquellen (Iqⱼ₁, Iqⱼ₂) den ersten Bus-Shunt-Widerstand (R2) durchströmen.
22. Busknoten nach einem oder mehreren der Punkte 14 bis 21, dadurch gekennzeichnet, dass
   - die zweite Adressierungsstromquelle (Iq'ⱼ) eine zweite Teiladressierungsstromquelle (Iq'ⱼ₁) und eine weitere zweite Teiladressierungsstromquelle (Iq'ⱼ₂) aufweist,
   - die zweite Teiladressierungsstromquelle (Iq'ⱼ₁) ihren Strom in einen mit dem ersten Anschluss des zweiten Bus-Shunt-Widerstands (R2') verbundenen Knoten einspeist,
   - die weitere zweite Teiladressierungsstromquelle (Iq'ⱼ₁) ihren Strom in einen mit dem zweiten Anschluss des zweiten Bus-Shunt-Widerstands (R2') verbundenen Knoten einspeist und
   - die Ströme der beiden zweiten Teiladressierungsstromquellen (Iq'ⱼ₁, Iq'ⱼ₂) den zweiten Bus-Shunt-Widerstand (R2') durchströmen.
23. Busknoten nach einem oder mehreren der Punkte 14 bis 22, dadurch gekennzeichnet, dass
   - die erste Adressierungsstromquelle (Iqⱼ) den ersten Adressierungsstrom mit einer ersten Zeitkonstante (τ₁) erhöht und mit einer zweiten Zeitkonstante (τ₂) erniedrigt, die kleiner als die erste Zeitkonstante (τ₁) ist und/oder
   - die zweite Adressierungsstromquelle (Iq'ⱼ) den zweiten Adressierungsstrom mit einer dritten Zeitkonstante (τ₃) erhöht und mit einer vierten Zeitkonstante (τ₄) erniedrigt, die kleiner als die dritte Zeitkonstante (τ₃) ist.
24. Vorrichtung zur Ansteuerung elektrischer und/oder elektronischer Busknoten, insbesondere innerhalb eines Kfz-Moduls z.B. einer Innenleuchte und/oder z.B. einer Außenleuchte, z.B. innerhalb eines Rücklichtmoduls eines Kfz, mit
   - einem seriellen, bidirektionalen, differentiellen Zweidraht-Kommunikationsbus (DB),
   - n Busknoten (BK₁ bis BKₙ), mit n als ganzer positiver Zahl größer 1,
   - einem Busmaster (ECU),
   - wobei der Zweidraht-Kommunikationsbus (DB) einen ersten Eindrahtbus (DBₐ) und einen zweiten Eindrahtbus (DB_{b}) aufweist,
   - wobei jeder der n Busknoten (BK₁ bis BKₙ) eine differentielle, serielle Schnittstelle (IF;), eine Adresserkennungseinheit (ADRⱼ) und ein Busknotenadressregister (BKADRⱼ) aufweist,
   - wobei sich der Zeidraht-Kommunikationsbus (DB) zumindest in einem ersten differentiellen logischen Zustand (z1) und in einem zweiten differentiellen logischen Zustand (z2) befinden kann,
   - wobei die serielle Schnittstelle (IFⱼ) jedes der n Busknoten (BK₁ bis BKₙ) jeweils mit dem Zweidraht-Kommunikationsbus (DB) verbunden ist, um Daten über den Zweidraht-Kommunikationsbus (DB) zu senden und/oder über diesen zu empfangen,
   - wobei der Busmaster (ECU) von ihm zu versendende Daten als Folgen von Bits in Bit-Strom-Paketen (BP) versendet,
   - wobei zumindest ein Teil der von dem Busmaster (ECU) versendeten Bit-Strom-Pakete (BP) Dateninformationen (DATA), die Adressinformationen (ADRD) und Nutzinformationen (INFO) umfassen, aufweist,
   - wobei die Adresserkennungseinheiten (ADR₁ bis ADRₙ) der Busknoten (BK₁ bis BKₙ) die Adressinformationen (ADRD) der Bit-Strom-Pakete (BP) auswerten und nur dann eine Verwendung der enthaltenen Nutzinformationen (INFO) durch den jeweiligen Busknoten (BKⱼ) der jeweiligen Adresserkennungseinheit (ADRⱼ) zulassen, wenn der Inhalt der Adressinformationen (ADRD) mit dem Inhalt des Busknotenadressregisters (BKADRⱼ) dieses Busknotens (BKⱼ) korrespondiert, d.h., dass entweder die Adressinformationen (ADRD) mit dem Inhalt des Busknotenadressregisters (BAKDRⱼ) übereinstimmt oder dass die Adressinformationen (ADRD) eine Gruppe von Adressen umfasst, von denen eine mit dem Inhalt des Busknotenadressregisters (BAKDRⱼ) übereinstimmt, und
   - wobei zumindest ein solcher Busknoten (BKⱼ) Mittel aufweist, um ein Autoadressierungsverfahren durchzuführen, um das Busknotenadressregister (BAKDRⱼ) mit einer Busknotenadresse zu versehen, die mit der physikalischen Position dieses Busknotens (BKⱼ) der n Busknoten (BK₁ bis BKₙ) innerhalb des seriellen, bidirektionalen, differentiellen Zweidraht-Kommunikationsbusses (DB) korrespondiert, d.h., dass entweder die Adressinformationen (ADRD) mit dem Inhalt des Busknotenadressregisters (BAKDRⱼ) übereinstimmt oder dass die Adressinformationen (ADRD) eine Gruppe von Adressen umfasst, von denen eine mit dem Inhalt des Busknotenadressregisters (BAKDRⱼ) übereinstimmt.
25. Vorrichtung nach Punkt 24, dadurch gekennzeichnet, dass der Busmaster (ECU) und/oder die Busknoten (BK₁ bis BKₙ) mit Mitteln ausgestattet sind, um aufgrund der Auswertung der Prüfinformationen (CHKD) auf einen nicht korrekt arbeitenden Taktgeber (CLKGⱼ) eines oder mehrerer Busknoten (BKⱼ) zu schließen.
26. Vorrichtung zur Ansteuerung elektrischer und/oder elektronischer Busknoten, insbesondere innerhalb eines Kfz-Moduls z.B. einer Innenleuchte und/oder z.B. einer Außenleuchte, z.B. innerhalb eines Rücklichtmoduls eines Kfz, mit
   - einem seriellen, bidirektionalen, differentiellen Zweidraht-Kommunikationsbus (DB),
   - n Busknoten (BK₁ bis BKₙ) mit n als ganzer positiver Zahl größer 1,
   - einem Busmaster (ECU),
   - wobei der Zweidraht-Kommunikationsbus (DB) einen ersten Eindrahtbus (DBₐ) und einen zweiten Eindrahtbus (DB_{b}) aufweist,
   - wobei jeder der n Busknoten (BK₁ bis BKₙ) aufweist
      - eine differentielle, serielle Schnittstelle (IFⱼ),
      - einen Mikrocontroller (µCⱼ),
      - einen Taktgeber (CLKGⱼ),
      - eine Abtastvorrichtung (ATⱼ) und
         - eine Adresserkennungseinheit (ADRⱼ) sowie ein Busknotenadressregister (BKADRⱼ),
   - wobei sich der Zweidraht-Kommunikationsbus (DB) zumindest in einem ersten differentiellen logischen Zustand (z1) und in einem zweiten differentiellen logischen Zustand (z2) befinden kann,
   - wobei die serielle Schnittstelle (IFⱼ) jedes der n Busknoten (BK₁ bis BKₙ) jeweils mit dem Zweidraht-Kommunikationsbus (DB) verbunden ist, um Daten über den Zweidraht-Kommunikationsbus (DB) zu senden und/oder von diesem zu empfangen,
   - wobei der Busmaster (ECU) von extern Steuerbefehle für n Busknoten (BK₁ bis BKₙ) erhält,
   - wobei der Busmaster (ECU) diese Steuerbefehle in über den Zweidraht-Kommunikationsbus (DB) an die Busknoten (BK₁ bis BKₙ) zu versendende Bitströme umsetzt,
   - wobei der Busmaster (ECU) in Abhängigkeit von einem von dem Busmaster (ECU) vorgegebenen Takt (CLK) die Bits der durch den Busmaster (ECU) zu versendenden Bitströme über den Zweidraht-Kommunikationsbus (DB) sendet,
   - wobei der Busmaster (ECU) von den Busknoten (BK₁ bis BKₙ) erzeugte Bitströme über den Zweidraht-Kommunikationsbus (DB) empfängt,
   - wobei der Taktgeber (CLKGⱼ) eines jeden Busknotens (BKⱼ) der n Busknoten (BK₁ bis BKₙ) ein Abtastsignal (CLKAⱼ) erzeugt,
   - wobei die Abtastvorrichtung (ATⱼ) eines jeden der n Busknoten (BK₁ bis BKₙ) in Abhängigkeit von dem Abtastsignal (CLKAⱼ) des Taktgebers (CLKGⱼ) des betreffenden Busknotens (BKⱼ) über den Zweidraht-Kommunikationsbus (DB) versendete Bitströme abtastet, um in dem betreffenden Busknoten (BKⱼ) einen lokalen Bitstrom zu erhalten,
   - wobei der Busmaster (ECU) die zu versendeten Bitströme als Folgen von Bits in Bit-Strom-Paketen (BP) versendet,
   - wobei zumindest ein Teil der von dem Busmaster (ECU) versendeten Bit-Strom-Pakete (BP) folgende Inhalte aufweist
      - eine Synchronisationsinformation (SYNC), die in k Bits einer Einfangsgruppe von i+k Bits abgelegt ist, zur Synchronisation des Abtastsignals (CLKAⱼ) der Taktgeber (CLKGⱼ) der Busknoten (BKⱼ) mit dem Takt (CLK) des Busmasters (ECU) und
      - Dateninformationen (DATA) in den restlichen m-i-k Bits der m Bits des jeweiligen Bit-Strom-Paketes (BP), wobei die Dateninformationen (DATA) Adressinformationen (ADRD) und Nutzinformationen (INFO) umfassen,
   - wobei die Adresserkennungseinheiten (ADR₁ bis ADRₙ) der Busknoten (BK₁ bis BKₙ) die Adressinformationen (ADRD) der Bit-Strom-Pakete (BP) auswerten und nur dann eine Verwendung der enthaltenen Nutzinformationen (INFO) durch den jeweiligen Busknoten (BKⱼ) zulassen, wenn der Inhalt der Adressinformationen (ADRD) mit dem Inhalt des Busknotenadressregisters (BKADRⱼ) des Busknotens (BKⱼ) korrespondiert, d.h., dass entweder die Adressinformationen (ADRD) mit dem Inhalt des Busknotenadressregisters (BAKDRⱼ) übereinstimmt oder dass die Adressinformationen (ADRD) eine Gruppe von Adressen umfasst, von denen eine mit dem Inhalt des Busknotenadressregisters (BAKDRⱼ) übereinstimmt, und
   - wobei zumindest ein solcher Busknoten (BKⱼ) Mittel aufweist, um ein Autoadressierungsverfahren durchzuführen, um das Busknotenadressregister (BAKDRⱼ) mit einer Busknotenadresse zu versehen, die mit der physikalischen Position dieses Busknotens (BKⱼ) innerhalb des Zweidraht-Kommunikationsbusses (DB) korrespondiert, d.h., dass entweder die Adressinformationen (ADRD) mit dem Inhalt des Busknotenadressregisters (BAKDRⱼ) übereinstimmt oder dass die Adressinformationen (ADRD) eine Gruppe von Adressen umfasst, von denen eine mit dem Inhalt des Busknotenadressregisters (BAK-DRⱼ) übereinstimmt.
27. Vorrichtung nach Punkt 26, dadurch gekennzeichnet, dass der Busmaster (ECU) und/oder die Busknoten (BK₁ bis BKₙ) mit Mitteln ausgestattet sind, um aufgrund der Auswertung der Prüfinformationen (CHKD) auf einen nicht korrekt arbeitenden Taktgeber (CLKGⱼ) eines oder mehrerer Busknoten (BKⱼ) zu schließen.
28. Busknoten zur Durchführung eines Verfahrens zur Vergabe von Busadressen an Busknoten eines seriellen, bidirektionalen, differentiellen Zweidraht-Kommunikationsbusses (DB), wobei das Verfahren zur Vergabe von Busadressen an Busknoten (BK₁, BK₂, BK₃, ...... BKₙ₋₁, BKₙ) des seriellen, bidirektionalen, differentiellen Zweidraht-Kommunikationsbusses (DB) mit Hilfe Bus-Shunt-Widerständen (R2, R2') in den einzelnen Busknoten (BK₁, BK₂, BK₃, ...... BKₙ₋₁, BKₙ) in einem Vergabezeitraum durchgeführt wird und wobei sich nach der Durchführung des Verfahrens zur Vergabe von Busadressen an die Busknoten (BK₁, BK₂, BK₃, ...... BKₙ₋₁, BKₙ) ein Betriebszeitraum anschließt, mit
   - einem ersten Bus-Shunt-Widerstand (R2) und einem zweiten Bus-Shunt-Widerstand (R2'),
   - einem ersten Bus-Shunt-Überbrückungsschalter (S4), der vor Vergabe einer Busadresse an den Busknoten im Vergabezeitraum geöffnet und nach Vergabe einer Busadresse an den Busknoten für den restlichen Vergabezeitraum sowie in dem Betriebszeitraum geschlossen ist, und
   - einem zweiten Bus-Shunt-Überbrückungsschalter (S4'), der vor Vergabe einer Busadresse an den Busknoten im Vergabezeitraum geöffnet und nach Vergabe einer Busadresse an den Busknoten für den restlichen Vergabezeitraum sowie in dem Betriebszeitraum geschlossen ist.
29. Busknoten für ein Verfahren zur Vergabe von Busknotenadressen an die Busknoten eines Datenbussystems, wobei das Datenbussystem versehen ist mit
   - mit einem seriellen, bidirektionalen, differentiellen Zweidraht-Kommunikationsbus (DB),
   - einem Busmaster (ECU) mit einem Adresseingang (Adrᵢ₀), und
   - n Busknoten (BK₁ bis BKₙ), mit n als ganzer positiver Zahl,
   - wobei der Busknoten (BKⱼ) über einen Datenleitungsabschnitt (DB₁ bis DBₙ) oder über den Zweidraht-Kommunikationsbus (DB) aus Datenleitungsabschnitten (DB₁ bis DBₙ) und weiteren Busknoten (BK₂ bis BKₙ) mit dem Busmaster (ECU) zur Datenübertragung verbindbar ist,
   - einer Zusatzleitung, die von einem Adresseingang (Adrᵢ₀) des Busmasters (ECU) des Datenbussystems ausgehend durch alle Busknoten (BK₁ bis BKₙ) des Datenbussystems durchschleifbar ist, wobei die Zusatzleitung durch die Busknoten (BK₁ bis BKₙ) in n Leitungsabschnitte (L₁ bis Lₙ) unterteilt ist,
   - wobei jeder der Busknoten (BKⱼ) einen zugehörigen Adresseingang (Adrᵢⱼ) und einen diesem Busknoten (BKⱼ) zugehörigen Adressausgang (Adrₒⱼ) aufweist,
   - wobei jeder der Busknoten (BKⱼ) mit Ausnahme des vom Busmaster (ECU) am weitesten entfernt an den Zweidraht-Kommunikationsbus (DB) angeschlossenen letzten Busknotens (BKₙ) dazu vorgesehen ist, mit seinem Adresseingang (Adrᵢⱼ) mit dem Adressausgang (Adrₒ₍ⱼ₊₁₎) eines nachfolgenden Busknotens (BKⱼ₊₁) durch einen dem nachfolgenden Busknoten (BKⱼ₊₁) zugeordneten Leitungsabschnitt (Lⱼ₊₁) verbunden zu werden,
   - wobei jeder der Busknoten (BKⱼ) mit Ausnahme des am nächsten zum Busmaster (ECU) an den Zweidraht-Kommunikationsbus (DB) angeschlossenen ersten Busknotens (BK₁) dazu vorgesehen ist, mit seinem Adressausgang (Adrₒⱼ) mit dem Adresseingang (Adrᵢ₍ⱼ₋₁₎) eines vorausgehenden Busknotens (BKⱼ₋₁) durch einen dem Busknoten (BKⱼ) zugeordneten Leitungsabschnitt (Lⱼ) verbunden zu werden,
   - wobei der erste Busknoten (BKⱼ) dazu vorgesehen ist, mit seinem Adressausgang (Adrₒⱼ) mit dem Adresseingang (Adrᵢ₀) des Busmasters (ECU) durch einen dem Busknoten (BKⱼ) zugeordneten Leitungsabschnitt (L₁) verbunden zu werden,
   - wobei die Busknotenadresse des Busknotens (BKⱼ) gültig oder nicht gültig sein kann,
   - wobei der Busknoten Mittel und Methoden vorsieht, seine Busknotenadresse zu setzen und seine Busknotenadresse gültig oder ungültig zu machen,
   - wobei der Busknoten (BKⱼ) einen Adressierungszustand und einen vom Adressierungszustand verschiedenen zweiten Betriebszustand einnehmen kann und wobei der Busknoten (BKⱼ) Mittel aufweist, um zwischen dem Adressierungszustand und dem zweiten Betriebszustand in Abhängigkeit von Befehlen des Busmasters (ECU) zu wechseln,
   - wobei der Busknoten (BKⱼ) Mittel aufweist, um dann, wenn er sich im Adressierungszustand befindet und wenn seine Busknotenadresse ungültig ist, den logischen Zustand am Adresseingang (Adrᵢ₍ⱼ₋₁₎) eines vorausgehenden Busknotens (BKⱼ₋₁) auf einen ersten logischen Wert durch Überschreiben zu setzen, oder um dann, wenn er sich im Adressierungszustand befindet und wenn seine Busknotenadresse ungültig ist, den logischen Zustand am Adresseingang (Adrᵢ₀) eines vorausgehenden Busknotens (BKⱼ) auf einen ersten logischen Wert durch Überschreiben zu setzen,
   - wobei der Busknoten (BKⱼ) Mittel aufweist, um im Adressierungszustand den logischen Zustand an seinem Adresseingang (Adrᵢⱼ) auf einen zweiten logischen Wert zu setzen, wenn dieser erste logische Wert nicht durch einen nachfolgenden Busknoten (BKⱼ₊₁) überschrieben wird, und
   - wobei der Busknoten Mittel aufweist, um eine durch den Busmaster (ECU) signalisierte Busknotenadresse als seine gültige zukünftige Busknotenadresse zu übernehmen, wenn seine Busknotenadresse ungültig ist und wenn er sich im Adressierungszustand befindet und wenn sein Adresseingang (Adrᵢⱼ) einen zweiten logischen Wert aufweist, und diese zukünftige Busknotenadresse in diesem Fall als gültig zu markieren.
30. Busknoten nach Punkt 29, dadurch gekennzeichnet, dass der Adresseingang (Adrᵢⱼ) des Busknotens (BKⱼ) in dem zweiten Betriebszustand als Eingang eines Interrupt-Signals eines nachfolgenden Busknotens (BKⱼ₋₁) verwendet werden kann.
31. Busknoten nach Punkt 29 oder 30, dadurch gekennzeichnet, dass der Adressausgang (Adrₒⱼ) des Busknotens (BKⱼ) in dem zweiten Betriebszustand als Ausgang eines Interrupt-Signals eines nachfolgenden Busknotens (BKⱼ₋₁) und/oder des Busknotens (BKⱼ) selbst verwendet werden kann.
32. Busknoten nach einem oder mehreren der Punkte 29 bis 31, dadurch gekennzeichnet, dass der Busknoten (BKⱼ) dazu geeignet ist, mit mehreren anderen Busknoten (BK₁ bis BKₙ) zumindest zweitweise mit der gleichen Datenleitung verbunden zu sein.
33. Verfahren zum Adressieren der Busknoten eines Datenbussystems mit einem seriellen, bidirektionalen, differentiellen Zweidraht-Kommunikationsbus (DB), der einen ersten Eindrahtbus (DBₐ) und einen zweiten Eindrahtbus (DB_{b}) aufweist, einem Busmaster (ECU), von dem Zweidraht-Kommunikationsbus (DB) ausgeht, und mit mehreren adressierbaren Busknoten (BK₁ bis BKₙ), die an den Zweidraht-Kommunikationsbus (DB) angeschlossen sind,
   - wobei jeder noch nicht adressierte Busknoten (BKⱼ) der Busknoten (BK₁ bis BKₙ) einen ersten Adressierstrom in den ersten Eindrahtbus (DBₐ) einspeist,
   - wobei jeder noch nicht adressierte Busknoten (BKⱼ) der Busknoten (BK₁ bis BKₙ) einen zweiten Adressierstrom in den zweiten Eindrahtbus (DB_{b}) einspeist,
   - wobei sämtliche Adressierungsströme in Richtung auf den Busmaster (ECU) fließen,
   - wobei jeder noch nicht adressierte Busknoten (BKⱼ) den durch den ersten Eindrahtbus (DBₐ) des Zweidraht-Kommunikationsbusses (DB) fließenden ersten Strom detektiert,
   - wobei jeder noch nicht adressierte Busknoten (BKⱼ) den durch den zweiten Eindrahtbus (DB_{b}) des Zweidraht-Kommunikationsbusses (DB) fließenden zweiten Strom detektiert,
   - wobei lediglich derjenige noch nicht adressierte Busknoten (BKⱼ), der keinen ersten Strom oder lediglich einen ersten Strom detektiert, welcher betragsmäßig kleiner als ein vorgebbarer erster Schwellwert ist, und der gleichzeitig keinen zweiten Strom oder lediglich einen zweiten Strom detektiert, der betragsmäßig kleiner als ein vorgebbarer weiterer erster Schwellwert ist, als ein noch nicht adressierter Busknoten identifiziert wird,
   - wobei dem so identifizierten Busknoten zwecks Adressierung eine Adresse als gültige Busknotenadresse zugeordnet wird und
   - wobei die zuvor genannten Schritte ohne den jeweils zuletzt adressierten Busknoten durchgeführt werden, bis sämtliche noch nicht adressierten Busknoten adressiert sind.
34. Verfahren nach Punkt 33, dadurch gekennzeichnet, dass der erste Schwellwert gleich dem weiteren ersten Schwellwert ist.
35. Verfahren nach Punkt 33 oder 34, dadurch gekennzeichnet, dass
   - an den Zweidraht-Kommunikationsbus (DB) neben den adressierten Busknoten mit gültiger oder vorläufiger Busknotenadresse auch mindestens ein noch nicht adressierter Busknoten ohne gültige oder vorläufige Busknotenadresse angeschlossen ist,
   - der noch nicht adressierte Busknoten in den ersten Eindrahtbus (DBₐ) einen ersten Ruhestrom und in den zweiten Eindrahtbus (DB_{b}) einen zweiten Ruhestrom einspeist,
   - jeder noch nicht adressierte Busknoten vor dem Einspeisen der Adressierungsströme den durch den ersten Eindrahtbus (DBₐ) fließenden ersten Ruhestrom und den durch den zweiten Eindrahtbus (DB_{b}) fließenden zweiten Ruhestrom detektiert,
   - lediglich die noch nicht adressierten Busknoten die ersten Adressierungsströme in den ersten Eindrahtbus (DBₐ) und die zweiten Adressierungsströme in den zweiten Eindrahtbus (DB_{b}) einspeisen,
   - lediglich derjenige noch nicht adressierte Busknoten, der bei Einspeisung der Adressierungsströme durch sämtliche noch nicht adressierten Busknoten gegenüber der vorherigen Stromdetektion keine Stromdifferenz des ersten oder zweiten Stromes oder lediglich eine Stromdifferenz des ersten oder zweiten Stromes detektiert, die kleiner als ein vorgebbarer zweiter Schwellwert ist, als ein noch nicht adressierter Busknoten identifiziert wird,
   - dem so identifizierten Busknoten zwecks Adressierung eine Adresse als gültige oder vorläufige Busknotenadresse zugeordnet wird und
   - die zuvor genannten Schritte ohne den jeweils zuletzt adressierten Busknoten durchgeführt werden, bis sämtliche noch nicht adressierten Busknoten adressiert sind.
36. Verfahren nach dem Punkt 35, dadurch gekennzeichnet, dass der zweite Schwellwert gleich dem ersten Schwellwert oder dem weiteren ersten Schwellwert ist.
37. Verfahren nach einem oder mehreren der Punkte 33 bis 36, dadurch gekennzeichnet, dass
   - jeder adressierbare Busknoten in den ersten Eindrahtbus (DBₐ) einen ersten Ruhestrom einspeist, der null sein kann,
   - jeder adressierbare Busknoten in den zweiten Eindrahtbus (DB_{b}) einen zweiten Ruhestrom einspeist, der null sein kann,
   - jeder noch nicht adressierte Busknoten einen ersten Ruhestrom in den ersten Eindrahtbus (DBₐ) und einen zweiten Ruhestrom in den zweiten Eindrahtbus (DB_{b}) einspeist,
   - jeder noch nicht adressierte Busknoten den durch den ersten Eindrahtbus (DBₐ) auf Grund der Ruhestromeinspeisung fließenden ersten Strom und den durch den zweiten Eindrahtbus (DB_{b}) auf Grund der Ruhestromeinspeisung fließenden zweiten Strom detektiert,
   - ermittelt wird, welcher der noch nicht adressierten Busknoten einen ersten Strom detektiert, der oberhalb eines vorgebbaren dritten Schwellwerts liegt,
   - ermittelt wird, welcher der noch nicht adressierten Busknoten einen zweiten Strom detektiert, der oberhalb eines vorgebbaren weiteren dritten Schwellwerts liegt,
   - lediglich diejenigen noch nicht adressierten Busknoten, die bei Einspeisung der Ruheströme einen ersten Strom detektieren, der kleiner als der dritte Schwellwert oder gleich dem dritten Schwellwert ist, erste Adressierungsströme in den ersten Eindrahtbus (DBₐ) einspeisen,
   - lediglich diejenigen noch nicht adressierten Busknoten, die bei Einspeisung der Ruheströme einen zweiten Strom detektieren, der kleiner als der weitere dritte Schwellwert oder gleich dem weiteren dritten Schwellwert ist, zweite Adressierungsströme in den zweiten Eindrahtbus (DB_{b}) einspeisen,
   - aus der Gruppe dieser Adressierungsströme einspeisenden, noch nicht adressierten Busknoten lediglich derjenige Busknoten, der keinen ersten Strom oder lediglich einen ersten Strom detektiert, welcher kleiner als ein vorgebbarer vierter Schwellwert ist, und der keinen zweiten Strom oder lediglich einen zweiten Strom detektiert, der kleiner als ein vorgebbarer weiterer vierter Schwellwert ist, als ein noch nicht adressierter Busknoten identifiziert wird,
   - dem so identifizierten Busknoten zwecks Adressierung eine Adresse als gültige oder vorläufige Busknotenadresse zugeordnet wird und
   - die zuvor genannten Schritte ohne den jeweils zuletzt adressierten Busknoten durchgeführt werden, bis sämtliche noch nicht adressierten Busknoten adressiert sind.
38. Verfahren nach Punkt 37, dadurch gekennzeichnet, dass der dritte und/oder vierte Schwellwert und/oder der weitere dritte und/oder weiterer vierte Schwellwert gleich dem ersten Schwellwert ist.
39. Verfahren nach einem oder mehreren der Punkte 33 bis 38, dadurch gekennzeichnet, dass
   - an den seriellen, bidirektionalen, differentiellen Zweidraht-Kommunikationsbus (DB) neben den adressierbaren Busknoten auch mindestens ein nicht adressierbarer Busknoten mit festgelegter Busadresse angeschlossen ist, der in den ersten Eindrahtbus (DBₐ) einen ersten Ruhestrom und in den zweiten Eindrahtbus (DB_{b}) einen zweiten Ruhestrom einspeist,
   - jeder noch nicht adressierte Busknoten der adressierbaren Busknoten vor dem Einspeisen des ersten Adressierungsstroms in den ersten Eindrahtbus (DBₐ) den in dem ersten Eindrahtbus (DBₐ) auf Grund der Ruhestromeinspeisung sämtlicher nicht adressierbarer Busknoten fließenden ersten Strom durch eine erste Stromdetektion ermittelt,
   - jeder noch nicht adressierte Busknoten der adressierbaren Busknoten vor dem Einspeisen des zweiten Adressierungsstroms in den zweiten Eindrahtbus (DB_{b}) den in dem zweiten Eindrahtbus (DB_{b}) auf Grund der Ruhestromeinspeisung sämtlicher nicht adressierbarer Busknoten fließenden zweiten Strom durch eine zweite Stromdetektion ermittelt,
   - anschließend jeder adressierbare Busknoten in den ersten Eindrahtbus (DBₐ) einen ersten Ruhestrom und in den zweiten Eindrahtbus (DB_{b}) einen zweiten Ruhestrom einspeist,
   - ermittelt wird, welcher der noch nicht adressierten Busknoten der adressierbaren Busknoten einen ersten Strom im ersten Eindrahtbus (DBₐ) detektiert, der oberhalb eines vorgebbaren fünften Schwellwerts liegt,
   - ermittelt wird, welcher der noch nicht adressierten Busknoten der adressierbaren Busknoten einen zweiten Strom im zweiten Eindrahtbus (DB_{b}) detektiert, der oberhalb eines vorgebbaren weiteren fünften Schwellwerts liegt,
   - lediglich diejenigen noch nicht adressierten Busknoten der adressierbaren Busknoten, die bei Einspeisung der ersten Ruheströme in den ersten Eindrahtbus (DBₐ) einen ersten Strom detektieren, der kleiner als der fünfte Schwellwert oder gleich dem fünften Schwellwert ist, erste Adressierungsströme in den ersten Eindrahtbus (DBₐ) einspeisen,
   - lediglich diejenigen noch nicht adressierten Busknoten der adressierbaren Busknoten, die bei Einspeisung der zweiten Ruheströme in den zweiten Eindrahtbus (DB_{b}) einen zweiten Strom detektieren, der kleiner als der weitere fünfte Schwellwert oder gleich dem weiteren fünften Schwellwert ist, zweite Adressierungsströme in den zweiten Eindrahtbus (DB_{b}) einspeisen,
   - aus der Gruppe dieser Adressierungsströme einspeisenden, noch nicht adressierten Busknoten der adressierbaren Busknoten lediglich derjenige Busknoten, der gegenüber der ersten Stromdetektion keine Stromdifferenz des ersten Stromes oder lediglich eine Stromdifferenz des ersten Stromes detektiert, die kleiner als ein vorgebbarer sechster Schwellwert ist, und der gegenüber der ersten Stromdetektion keine Stromdifferenz des zweiten Stromes oder lediglich eine Stromdifferenz des zweiten Stromes detektiert, die kleiner als ein vorgebbarer weiterer sechster Schwellwert ist, als ein noch nicht adressierter Busknoten identifiziert wird,
   - dem so identifizierten Busknoten zwecks Adressierung eine Adresse als gültige oder vorläufige Busknotenadresse zugeordnet wird und
   - die zuvor genannten Schritte ohne den jeweils zuletzt adressierten Busknoten durchgeführt werden, bis sämtliche noch nicht adressierten Busknoten adressiert sind.
40. Verfahren nach Punkt 39, dadurch gekennzeichnet, dass wobei der fünfte Schwellwert und/oder der sechste Schwellwert und/oder der weitere fünfte Schwellwert und/oder der weitere sechste Schwellwert gleich dem ersten Schwellwert ist.
41. Verfahren nach einem oder mehreren der Punkte 33 bis 40, dadurch gekennzeichnet, dass
   - die erste Stromdetektion in den Busknoten über den adressierbaren Busknoten zugeordnete erste Bus-Shunt-Widerstände (R2) des ersten Eindrahtbusses (DBₐ) erfolgt,
   - die zweite Stromdetektion in den Busknoten über den adressierbaren Busknoten zugeordnete zweite Bus-Shunt-Widerstände (R2') des zweiten Eindrahtbusses (DB_{b}) erfolgt,
   - die einem adressierbaren Busknoten zugeordneten ersten Bus-Shunt-Widerstände (R2) den dem jeweiligen adressierbaren Busknoten zugeordneten zweiten Bus-Shunt-Widerständen (R2') gleichen oder im Wesentlichen gleichen, insbesondere um weniger als 90% oder 80% oder 70% oder 60% oder 50% oder 40% oder 30% oder 20% oder 10% oder 5% voneinander abweichen,
   - sämtliche ersten Bus-Shunt-Widerstände (R2) im ersten Eindrahtbus (DBₐ) in Reihe geschaltet sind und
   - sämtliche zweiten Bus-Shunt-Widerstände (R2') im zweiten Eindrahtbus (DB_{b}) in Reihe geschaltet sind.
42. Verfahren nach einem oder mehreren der Punkte 33 bis 41, dadurch gekennzeichnet, dass die Stromdetektion auf Basis einer Spannungsdetektion erfolgt.
43. Verfahren nach einem oder mehreren der Punkte 33 bis 42, dadurch gekennzeichnet, dass die Zuordnung einer Adresse durch Übermittlung einer Adresse an den identifizierten Busknoten erfolgt, indem
   - sämtliche noch nicht adressierten Busknoten vor der Identifikation eines Busknotens jeweils die gleiche Adresse übermittelt wird und
   - lediglich der anschließend identifizierte Busknoten diese Adresse als seine gültige oder vorläufige Busknotenadresse annimmt.
44. Verfahren nach einem oder mehreren der Punkte 33 bis 43, dadurch gekennzeichnet, dass
   - die Zuordnung einer Adresse nach der ersten Identifizierung eines Busknotens erfolgt oder
   - eine Verifizierung der Busknotenadresse nach der Identifizierung eines Busknotens erfolgt.
45. Verfahren nach einem oder mehreren der Punkte 33 bis 44, dadurch gekennzeichnet, dass die Verifizierung der Identifikation eines Busknotens durch nochmaliges Identifizieren des Busknotens mit anderen ersten und/oder zweiten Adressierungsströmen und/oder mit lediglich dem ersten Adressierungsstrom oder mit lediglich dem zweiten Adressierungsstrom oder mit einem anderen ersten Adressierungsstrom oder einem anderen zweiten Adressierungsstrom und/oder durch Identifizieren des Busknotens mittels des anderen Eindrahtbusses und Vergleich dieser zweiten Identifikation mit der ersten Identifikation erfolgt.
46. Verfahren nach einem oder mehreren der Punkte 33 bis 45, dadurch gekennzeichnet, dass die Verifizierung der Identifikation eines Teilnehmers durch nochmaliges Identifizieren des Teilnehmers mittels eines anderen Autoadressierungsverfahrens und Vergleich dieser zweiten Identifikation mit der ersten Identifikation erfolgt.
47. Verfahren zum Adressieren der Busknoten eines Datenbussystems mit einem seriellen, bidirektionalen, differentiellen Zweidraht-Kommunikationsbus (DB), der einen ersten Eindrahtbus (DBₐ) und einen zweiten Eindrahtbus (DB_{b}) aufweist, mit einem Busmaster (ECU), von dem der Zweidraht-Kommunikationsbus (DB) ausgeht, und mit mehreren adressierbaren Busknoten (BK₁ bis BKₙ), die an dem seriellen, bidirektionalen, differentiellen Zweidraht-Kommunikationsbus (DB) angeschlossen sind, wobei bei dem Verfahren
   - jeder noch nicht adressierte Busknoten (BKⱼ) der Busknoten (BK₁ bis BKₙ) einen Adressierstrom in zumindest einen der Eindrahtbusse (DBₐ, DB_{b}), im Folgenden mit Adressierungs-Eindrahtbus bezeichnet, einspeist,
   - alle anderen noch nicht adressierten Busknoten ebenfalls in den Adressierungs-Eindrahtbus einen Adressierungsstrom einspeisen,
   - sämtliche Adressierungsströme durch den Zweidraht-Kommunikationsbus (DB) in Richtung auf den Busmaster (ECU) fließen,
   - jeder noch nicht adressierte Busknoten (BKⱼ) der adressierbaren Busknoten den durch den Adressierungs-Eindrahtbus fließenden Strom detektiert,
   - lediglich derjenige noch nicht adressierte Busknoten (BKⱼ) der adressierbaren Busknoten, der keinen Strom oder lediglich einen Strom detektiert, welcher betragsmäßig kleiner als ein vorgebbarer erster Schwellwert ist, als ein noch nicht adressierter Busknoten identifiziert wird,
   - dem so identifizierten Busknoten zwecks Adressierung eine Adresse als gültige oder vorläufige Busknotenadresse zugeordnet wird und
   - die zuvor genannten Schritte ohne den jeweils zuletzt adressierten Busknoten durchgeführt werden, bis sämtliche noch nicht adressierten Busknoten adressiert sind.
48. Verfahren nach Punkt 47, dadurch gekennzeichnet, dass
   - an den Zweidraht-Kommunikationsbus (DB) neben den adressierten Busknoten auch mindestens ein noch nicht adressierter Busknoten angeschlossen ist,
   - jeder noch nicht adressierte Busknoten in den Adressierungs-Eindrahtbus einen Ruhestrom einspeist,
   - jeder noch nicht adressierte Busknoten vor dem Einspeisen der Adressierungsströme den durch den Adressierungs-Eindrahtbus fließenden Ruhestrom detektiert,
   - lediglich jeder noch nicht adressierte Busknoten seinen Adressierungsstrom in den Adressierungs-Eindrahtbus einspeist,
   - lediglich derjenige noch nicht adressierte Busknoten der adressierbaren Busknoten, der bei Einspeisung der Adressierungsströme durch sämtliche noch nicht adressierten Busknoten gegenüber der vorherigen Stromdetektion keine Stromdifferenz oder lediglich eine Stromdifferenz detektiert, die betragsmäßig kleiner als ein vorgebbarer zweiter Schwellwert ist, als ein noch nicht adressierter Busknoten identifiziert wird,
   - dem so identifizierten Busknoten zwecks Adressierung eine Adresse als gültige oder vorläufige Busknotenadresse zugeordnet wird und
   - die zuvor genannten Schritte ohne den jeweils zuletzt adressierten Busknoten durchgeführt werden, bis sämtliche noch nicht adressierten Busknoten adressiert sind.
49. Verfahren nach Punkt 48, dadurch gekennzeichnet, dass der zweite Schwellwert gleich dem ersten Schwellwert ist.
50. Verfahren nach einem oder mehreren der Punkte 47 bis 49, dadurch gekennzeichnet, dass
   - jeder adressierbare Busknoten in den Adressierungs-Eindrahtbus einen Ruhestrom einspeist,
   - jeder noch nicht adressierte Busknoten den durch den Adressierungs-Eindrahtbus auf Grund der Ruhestromeinspeisung fließenden Strom detektiert,
   - ermittelt wird, welcher der noch nicht adressierten Busknoten einen Strom detektiert, der betragsmäßig oberhalb eines vorgebbaren dritten Schwellwerts liegt,
   - lediglich diejenigen noch nicht adressierten Busknoten, die bei Einspeisung der Ruheströme einen Strom detektieren, der betragsmäßig kleiner als der dritte Schwellwert oder gleich dem dritten Schwellwert ist, Adressierungsströme in den Adressierungs-Eindrahtbus einspeisen,
   - aus der Gruppe dieser Adressierungsströme einspeisenden, noch nicht adressierten Busknoten lediglich derjenige Busknoten, der keinen Strom oder lediglich einen Strom detektiert, der betragsmäßig kleiner als ein vorgebbarer vierter Schwellwert ist, als ein noch nicht adressierter Busknoten identifiziert wird,
   - dem so identifizierten Busknoten zwecks Adressierung eine Adresse als gültige oder vorläufige Busknotenadresse zugeordnet wird und
   - die zuvor genannten Schritte ohne den jeweils zuletzt adressierten Busknoten durchgeführt werden, bis sämtliche noch nicht adressierten Busknoten adressiert sind.
51. Verfahren nach Punkt 50, dadurch gekennzeichnet, dass der dritte und/oder vierte Schwellwert gleich dem ersten Schwellwert ist.
52. Verfahren nach einem oder mehreren der Punkte 47 bis 51, dadurch gekennzeichnet, dass
   - an den Zweidraht-Kommunikationsbus (DB) neben den adressierbaren Busknoten auch mindestens ein nicht adressierbarer Busknoten mit festgelegter Busknotenadresse angeschlossen ist, der in den Adressierungs-Eindrahtbus einen Ruhestrom einspeist,
   - jeder noch nicht adressierte Busknoten vor dem Einspeisen der Adressierungsströme den in dem Adressierungs-Eindrahtbus auf Grund der Ruhestromeinspeisung sämtlicher nicht adressierbarer Busknoten fließenden Strom durch eine erste Stromdetektion ermittelt,
   - anschließend jeder adressierbare Busknoten in den Adressierungs-Eindrahtbus einen Ruhestrom einspeist,
   - ermittelt wird, welcher der noch nicht adressierten Busknoten einen Strom detektiert, der oberhalb eines vorgebbaren fünften Schwellwerts liegt,
   - lediglich diejenigen noch nicht adressierten Busknoten, die bei Einspeisung der Ruheströme einen Strom detektieren, der betragsmäßig kleiner als der fünfte Schwellwert oder gleich dem fünften Schwellwert ist, Adressierungsströme in den Bus einspeisen,
   - aus der Gruppe dieser Adressierungsströme einspeisenden, noch nicht adressierten Busknoten lediglich derjenige Busknoten, der gegenüber der ersten Stromdetektion keine Stromdifferenz oder lediglich eine Stromdifferenz detektiert, die kleiner als ein vorgebbarer sechster Schwellwert ist, als ein noch nicht adressierter Busknoten identifiziert wird,
   - dem so identifizierten Busknoten zwecks Adressierung eine Adresse als gültige oder vorläufige Busknotenadresse zugeordnet wird und
   - wobei die zuvor genannten Schritte ohne den jeweils zuletzt adressierten Busknoten durchgeführt werden, bis sämtliche noch nicht adressierten Busknoten adressiert sind.
53. Verfahren nach Punkt 52, dadurch gekennzeichnet, dass der fünfte Schwellwert und/oder sechste Schwellwert gleich dem ersten Schwellwert ist.
54. Verfahren nach einem oder mehreren der Punkte 47 bis 53, dadurch gekennzeichnet, dass
   - die Stromdetektion in den Busknoten mittels den adressierbaren Busknoten zugeordneter Shunt-Widerstände (R2, R2') im Adressierungs-Eindrahtbus erfolgt,
   - in dem anderen Eindrahtbus, der nicht der Adressierungs-Eindrahtbus ist, den adressierbaren Busknoten zugeordnete weitere Shunt-Widerstände angeordnet sind, die jeweils den Shunt-Widerständen im Adressierungs-Eindrahtbus gleichen oder im Wesentlichen gleichen, insbesondere um weniger als 90% oder 80% oder 70% oder 60% oder 50% oder 40% oder 30% oder 20% oder 10% oder 5% voneinander abweichen,
   - sämtliche Shunt-Widerstände in dem Adressierungs-Eindrahtbus in Reihe geschaltet sind und
   - sämtliche Shunt-Widerstände in dem anderen Eindrahtbus in Reihe geschaltet sind.
55. Verfahren nach Punkt 54, dadurch gekennzeichnet, dass die Stromdetektion auf Basis einer Spannungsdetektion erfolgt.
56. Verfahren nach einem oder mehreren der Punkte 47 bis 55, dadurch gekennzeichnet, dass die Zuordnung einer Adresse durch Übermittlung einer Adresse an den identifizierten Busknoten oder dadurch erfolgt,
   - dass sämtlichen noch nicht adressierten Busknoten vor der Identifikation eines Busknotens jeweils die gleiche Adresse übermittelt wird und
   - dass lediglich der anschließend identifizierte Busknoten diese Adresse als seine Busknotenadresse annimmt.
57. Verfahren nach einem oder mehreren der Punkte 47 bis 55, dadurch gekennzeichnet, dass
   - die Zuordnung einer Adresse nach der ersten Identifizierung eines Busknotens erfolgt oder
   - eine Verifizierung der Busknotenadresse nach der Identifizierung eines Busknotens erfolgt.
58. Verfahren nach Punkt 57, dadurch gekennzeichnet, dass die Verifizierung der Identifikation eines Busknotens durch nochmaliges Identifizieren des Busknotens und/oder durch Identifizieren des Busknotens mittels des anderen Eindrahtbusses und Vergleich der zweiten Identifikation mit der ersten Identifikation erfolgt.
59. Verfahren nach Punkt 57 oder 58, dadurch gekennzeichnet, dass die Verifizierung der Identifikation eines Teilnehmers durch nochmaliges Identifizieren des Teilnehmers mittels eines anderen Autoadressierungsverfahrens und Vergleich der zweiten Identifikation mit der ersten Identifikation erfolgt.
60. Autoadressierungsverfahren zur Vergabe von Busknotenadressen innerhalb eines Datenbussystems, wobei das Datenbussystem versehen ist mit
   - einem seriellen, bidirektionalen, differentiellen Zweidraht-Kommunikationsbus (DB) als eine Kette von n Busknoten (BK₁, BK₂, BK₃, ..... BKₙ₋₁, BKₙ), mit n als ganzer positiver Zahl größer Null,
   - einem Busmaster (ECU), von dem Zweidraht-Kommunikationsbus (DB) ausgeht,
   - wobei mit Ausnahme des dem Busmaster (ECU) nächsten und damit ersten Busknoten jeder Busknoten (BK₂, BK₃, ..... BKₙ₋₁, BKₙ) einen in Richtung zum Busmaster (ECU) hin benachbarten und damit vorausgehenden Busknoten (BK₁, BK₂, BK₃, ..... BKₙ₋₁) aufweist,
   - wobei mit Ausnahme des ersten Busknotens jeder Busknoten (BK₂, BK₃, ..... BKₙ₋₁, BKₙ) mit seinem vorausgehenden Busknoten (BK₁, BK₂, BK₃, ..... BKₙ₋₁) durch einen Verbindungsabschnitt des Zweidraht-Kommunikationsbusses (DB) verbunden ist,
   - wobei der erste Busknoten (BK₁) mit dem Busmaster (ECU) durch einen Verbindungsabschnitt des Zweidraht-Kommunikationsbusses (DB) verbunden ist,
   - wobei mit Ausnahme des ersten Busknotens jeder Busknoten (BK₂, BK₃, ..... BKₙ₋₁, BKₙ) einen ersten Busknotenausgangsstrom (i₂, i₃,...i₍ₙ₋₁₎, iₙ) über den Abschnitt des ersten Eindrahtbusses, der Teil des Verbindungsabschnitts zwischen diesem Busknoten (BK₂, BK₃, ..... BKₙ₋₁, BKₙ) und seinem vorausgehenden Busknoten (BK₁, BK₃, ..... BKₙ₋₁, BKₙ₋₁) ist, an seinen vorausgehenden Busknoten (BK₁, BK₂, BK₃, ..... BKₙ₋₁) sendet,
   - wobei mit Ausnahme des ersten Busknotens jeder Busknoten (BK₂, BK₃, ..... BKₙ₋₁, BKₙ) einen zweiten Busknotenausgangsstrom (i'₂, i'₃,...i'₍ₙ₋₁₎, i'ₙ) über den Abschnitt des zweiten Eindrahtbusses, der Teil des Verbindungsabschnitts zwischen diesem Busknoten (BK₂, BK₃, ..... BKₙ₋₁, BKₙ) und seinem vorausgehenden Busknoten (BK₁, BK₃, ..... BKₙ₋₁, BKₙ₋₁) ist, an seinen vorausgehenden Busknoten (BK₁, BK₂, BK₃, ..... BKₙ₋₁) sendet,
   - wobei der erste Busknoten (BK₁) einen ersten Busknotenausgangsstrom (i₁) über den Abschnitt des ersten Eindrahtbusses, der Teil des Verbindungsabschnitts zwischen dem ersten Busknoten (BK₁) und dem Busmaster (ECU) ist, an den Busmaster (ECU) sendet,
   - wobei der erste Busknoten (BK₁) einen zweiten Busknotenausgangsstrom (i₂) über den Abschnitt des zweiten Eindrahtbusses (DB₂), der Teil des Verbindungsabschnitts zwischen dem ersten Busknoten (BK₁) und dem Busmaster (ECU) ist, an den Busmaster (ECU) sendet,
   - wobei der Busmaster (ECU) einen ersten Busknoteneingangsstrom (i₁) über den Abschnitt des ersten Eindrahtbusses (DB₁), der Teil des Verbindungsabschnitts zwischen dem ersten Busknoten (BK₁) und dem Busmaster (ECU) ist, von seinen nachfolgenden ersten Busknoten (BK₁) empfängt,
   - wobei der Busmaster (ECU) einen zweiten Busknoteneingangsstrom (i'₁) über den Abschnitt des zweiten Eindrahtbusses (DB₂), der Teil des Verbindungsabschnitts zwischen dem ersten Busknoten (BK₁) und dem Busmaster (ECU) ist, von seinen nachfolgenden ersten Busknoten (BK₁) empfängt,
   - wobei jeder Busknoten (BK₁, BK₂, ..... BKₙ₋₁) einen ersten Busknoteneingangsstrom (i₂, i₃,...i₍ₙ₋₁₎, iₙ) über den Abschnitt des ersten Eindrahtbusses (DB₁), der Teil des Verbindungsabschnitts zwischen diesem Busknoten (BK₂, BK₃, ..... BKₙ₋₁, BKₙ) und seinem vorausgehenden Busknoten (BK₁, BK₃, ..... BKₙ₋₁, BKₙ₋₁) ist, von seinen nachfolgenden Busknoten (BK₂, BK₃, ..... BKₙ₋₁, BKₙ) empfängt,
   - wobei jeder Busknoten (BK₁, BK₂, ..... BKₙ₋₁) einen zweiten Busknoteneingangsstrom (i₂, i₃,...i₍ₙ₋₁₎, iₙ) über den Abschnitt des zweiten Eindrahtbusses (DB₂), der Teil des Verbindungsabschnitts zwischen diesem Busknoten (BK₂, BK₃, ..... BKₙ₋₁, BKₙ) und seinem vorausgehenden Busknoten (BK₁, BK₃, ..... BKₙ₋₁, BKₙ₋₁) ist, von seinen nachfolgenden Busknoten (BK₂, BK₃, ..... BKₙ₋₁, BKₙ) empfängt,
      mit folgenden Schritten
   - Bestimmen eines maximalen Adressierungsstroms (Iₐₘₐₓ),
   - Durchführen einer Initialisierungssequenz, die folgende Schritte aufweist, und zwar für jeden adressierbaren Busknoten der n Busknoten (BK₁, BK₂, ..... BKₙ₋₁, BKₙ), der noch keine gültige oder vorläufige Busknotenadresse besitzt, und bis alle adressierbaren Busknoten der n Busknoten (BK₁, BK₂, ..... BKₙ₋₁, BKₙ) über eine gültige oder vorläufige Busknotenadresse verfügen,
      - Signalisieren einer zu vergebenden Busadresse an alle Autoadressierungsbusknoten der n Busknoten (BK₁, BK₂, ..... BKₙ₋₁, BKₙ),
      - Durchführen der folgenden Schritte für jeden Autoadressierungsbusknoten (BKⱼ) der Autoadressierungsbusknoten der n Busknoten (BK₁, BK₂, ..... BKₙ₋₁, BKₙ), im Folgenden als betreffender Autoadressierungsbusknoten (BKⱼ) bezeichnet:
      - Empfangen des besagten Autoadressierungskommandos vom Busmaster (ECU) durch den betreffenden Autoadressierungsbusknoten (BKⱼ),
      - Empfangen der zu vergebenden Busadresse vom Busmaster (ECU) durch den betreffenden Autoadressierungsbusknoten (BKⱼ),
      - Empfangen eines Startsignals für die Vergabe der zu vergebenden Busadresse vom Busmaster (ECU) durch den betreffenden Autoadressierungsbusknoten (BKⱼ) und Start eines Zeitgebers durch den betreffenden Autoadressierungsbusknoten (BKⱼ),
      - Einspeisen des von den nachfolgenden Busknoten (BKⱼ₊₁, BKⱼ₊₂ ... BKₙ₋₁, BKₙ) empfangenen ersten Buseingangsstroms (i₍₁₊₁₎) über den Abschnitt des ersten Eindrahtbusses (DB₁), der Teil des Verbindungsabschnitts des seriellen, bidirektionalen, differentiellen Zweidraht-Kommunikationsbusses (DB) zwischen dem betreffenden Autoadressierungsbusknotens (BKⱼ) und dem vorausgehenden (j-1)-ten Busknoten (BKⱼ₋₁) ist, als Teil des ersten Busausgangsstroms (iⱼ) des betreffenden Autoadressierungsbusknotens (BKⱼ),
      - Einspeisen des von den nachfolgenden Busknoten (BKⱼ₊₁, BKⱼ₊₂ ...) empfangenen zweiten Buseingangsstroms (i'₍ⱼ₊₁₎) über den Abschnitt des zweiten Eindrahtbusses (DB₂), der Teil des Verbindungsabschnitts des seriellen, bidirektionalen, differentiellen Zweidraht-Kommunikationsbusses (DB) zwischen dem betreffenden Autoadressierungsbusknotens (BKⱼ) und dem vorausgehenden (j-1)-ten Busknoten (BKⱼ₋₁) ist, als Teil des zweiten Busausgangsstroms (i'ⱼ) des betreffenden Autoadressierungsbusknotens (BKⱼ),
      - Erfassen des ersten Werts des ersten Busknotenausgangsstroms (iⱼ) des betreffenden Autoadressierungsbusknotens (BKⱼ) mittels erster Messmittel (R2, D2, D3);
      - Erfassen des zweiten Werts des zweiten Busknotenausgangsstroms (i'ⱼ) des betreffenden Autoadressierungsbusknotens (BKⱼ) mittels zweiter Messmittel (R2', D2', D3'),
      - Erzeugung eines ersten Regelsignals (rwⱼ) aus dem erfassten ersten Wert des ersten Busknotenausgangsstroms (iⱼ) des betreffenden Autoadressierungsbusknotens (BKⱼ) mittels ersten Mitteln zum Regeln (F),
      - Erzeugen eines zweiten Regelsignals (rw'ⱼ) aus dem erfassten zweiten Wert des zweiten Busknotenausgangsstroms (i'ⱼ) des betreffenden Autoadressierungsbusknotens (BKⱼ) mittels zweiten Mitteln zum Regeln (F'),
      - Ausregeln des ersten Busknotenausgangsstroms (iⱼ) durch den betreffenden Autoadressierungsbusknoten (BKⱼ), mittels einer ersten geregelten Autoadressierungsstromquelle (Iqⱼ), deren erster Adressierungsstrom einen Anteil des ersten Busausgangsstromes (iⱼ) darstellt, auf einen ersten vorgegebenen Summenstromwert (I_{ref}) in Abhängigkeit von dem erzeugten ersten Regelsignal (rwⱼ),
      - wobei eine Erhöhung des ersten Adressierungsstroms der ersten geregelten Autoadressierungsstromquelle (Iqⱼ) des betreffenden Autoadressierungsbusknotens (BKⱼ) mit einer ersten Zeitkonstante (τ₁) erfolgt,
      - wobei eine Erniedrigung des ersten Adressierungsstroms der ersten geregelten Autoadressierungsstromquelle (Iqⱼ) des betreffenden Autoadressierungsbusknotens (BKⱼ) mit einer zweiten Zeitkonstante (τ₂) erfolgt,
      - wobei die zweite Zeitkonstante (τ₂) kleiner ist als die erste Zeitkonstante (τ₁),
      - Ausregeln des zweiten Busknotenausgangsstroms (i'ⱼ) durch den betreffenden Autoadressierungsbusknoten (BKⱼ), mittels einer zweiten geregelten Autoadressierungsstromquelle (Iq'ⱼ), deren zweiter Adressierungsstrom einen Anteil des zweiten Busausgangsstromes (i'ⱼ) darstellt, auf einen zweiten vorgegebenen Summenstromwert (I'_{ref}) in Abhängigkeit von dem erzeugten zweiten Regelsignal (rw'ⱼ),
      - wobei eine Erhöhung des zweiten Adressierungsstroms der zweiten geregelten Autoadressierungsstromquelle (Iq'ⱼ) des betreffenden Autoadressierungsbusknotens (BKⱼ) mit einer dritten Zeitkonstante (τ₃) erfolgt,
      - wobei eine Erniedrigung des zweiten Adressierungsstroms der zweiten geregelten Autoadressierungsstromquelle (Iq'ⱼ) des betreffenden Autoadressierungsbusknotens (BKⱼ) mit einer vierten Zeitkonstante (τ₄) erfolgt,
      - wobei die vierte Zeitkonstante (τ₄) kleiner ist als die dritte Zeitkonstante (τ₃),
      - Vergleichen des ersten Regelwerts (rⱼ) des ersten Regelsignals (rwⱼ) des betreffenden Autoadressierungsbusknotens (BKⱼ) mit einem ersten Schwellwert (SWⱼ) des betreffenden Autoadressierungsbusknotens (BKⱼ),
      - Vergleichen des zweiten Regelwerts (r'ⱼ) des zweiten Regelsignals (rw'ⱼ) des betreffenden Autoadressierungsbusknotens (BKⱼ) mit einem zweiten Schwellwert (SW'ⱼ) des betreffenden Autoadressierungsbusknotens (BKⱼ),
      - Einfrieren der Regelung der ersten Adressierungsstromquelle (Iqⱼ) des betreffenden Autoadressierungsbusknotens (BKⱼ) zu einem ersten Zeitpunkt (t₁) nach dem Start des Zeitgebers,
      - Einfrieren der Regelung der zweiten Adressierungsstromquelle (Iq'ⱼ) des betreffenden Autoadressierungsbusknotens (BKⱼ) zu einem zweiten Zeitpunkt (t₂) nach dem Start des Zeitgebers,
      - Übernehmen der zu vergebenden Busknotenadresse vom Busmaster (ECU) als gültige oder vorläufige Busknotenadresse des betreffenden Autoadressierungsbusknotens (BKⱼ), wenn eine Mindestzeit seit dem Start des Zeitgebers vergangen ist und wenn der Vergleich des ersten Regelwerts (rⱼ) mit dem ersten Schwellwert (SWⱼ) ergibt, dass der erste Adressierungsstrom der ersten Adressierungsstromquelle (Iqⱼ) des betreffenden Autoadressierungsbusknotens (BKⱼ) betragsmäßig oberhalb eines Stromschwellwertes liegt und/oder wenn der Vergleich des zweiten Regelwerts (r'ⱼ) mit dem zweiten Schwellwert (SW'ⱼ) ergibt, dass der zweite Adressierungsstrom der zweiten Adressierungsstromquelle (Iqⱼ) des betreffenden Autoadressierungsbusknotens (BKⱼ) betragsmäßig oberhalb eines Stromschwellwertes liegt und Konfiguration des betreffenden Autoadressierungsbusknotens (BKⱼ) als Busknoten ohne Autoadressierungsfähigkeit mit der zu vergebenen Busknotenadresse als Busknotenadresse des betreffenden Autoadressierungsbusknotens (BKⱼ) zu einem dritten Zeitpunkt (t₃) nach dem ersten Zeitpunkt (t₁) und nach dem zweiten Zeitpunkt (t₂), wodurch dieser Autoadressierungsbusknoten (BKⱼ) bis auf Weiteres nicht mehr an folgenden Initialisierungssequenzen teilnimmt,
      - Überprüfen der erfolgreichen Adressvergabe durch den Busmaster (ECU),
      - gegebenenfalls Löschen der Gültigkeit der letzten vergebenen Busknotenadresse, wodurch die betreffenden Autoadressierungsbusknoten (BKⱼ) sich wieder wie Autoadressierungsbusknoten (BKⱼ) ohne gültige oder vorläufige Busknotenadresse verhalten,
      - Überprüfen, ob alle Autoadressierungsbusknoten eine gültige oder vorläufige Busknotenadresse erhalten haben, und
   - Durchführen einer weiteren Initialisierungssequenz, wenn nicht alle Autoadressierungsbusknoten eine gültige oder vorläufige Busknotenadresse erhalten haben.
61. Verfahren nach Punkt 60, gekennzeichnet durch den nach der oder zusammen mit der Übernahme der zu vergebenden Busknotenadresse erfolgenden Schritt des
   - Überbrückens des ersten Bus-Shunt-Widerstands (R2) mittels eines ersten Bus-Shunt-Überbrückungsschalters (S4) und/oder
   - Überbrückens des zweiten Bus-Shunt-Widerstands (R2') mittels eines zweiten Bus-Shunt-Überbrückungsschalters (S4').
62. Verfahren nach Punkt 61, gekennzeichnet durch den Schritt des
   - Öffnens des ersten Bus-Shunt-Überbrückungsschalters (S4), sofern die Busknotenadresse des betreffenden Autoadressierungsbusknoten (BKⱼ) nicht gültig oder nicht vorläufig ist und/oder
   - Öffnens des zweiten Bus-Shunt-Überbrückungsschalters (S4'), sofern die Busknotenadresse des betreffenden Autoadressierungsbusknoten (BKⱼ) nicht gültig oder nicht vorläufig ist.
63. Verfahren nach einem oder mehreren der Punkte 60 bis 62, dadurch gekennzeichnet, dass
   - die dritte Zeitkonstante (τ₃) kleiner ist als die erste Zeitkonstante (τ₁), nämlich um einen Faktor, der größer als 10,
   - die vierte Zeitkonstante (τ₄) kleiner ist als die zweite Zeitkonstante (τ₂), nämlich um einen Faktor, der größer als 10.
64. Verfahren nach einem oder mehreren der Punkte 60 bis 63, dadurch gekennzeichnet, dass
   - die dritte Zeitkonstante (τ₃) von dem durch erste Messmittel (R2, D2, D3) erfassten ersten Wert des ersten Busknotenausgangsstroms (iⱼ) des betreffenden Autoadressierungsbusknotens (BKⱼ) abhängt und/oder
   - die vierte Zeitkonstante (τ₄) von dem durch zweite Messmittel (R2', D2', D3') erfassten zweiten Wert des zweiten Busknotenausgangsstroms (i'ⱼ) des betreffenden Autoadressierungsbusknotens (BKⱼ) abhängt.
65. Verfahren nach einem oder mehreren der Punkte 60 bis 64, dadurch gekennzeichnet, dass
   - die erste Zeitkonstante (τ₁) von dem durch erste Messmittel (R2, D1, D3) erfassten ersten Wert des ersten Busknotenausgangsstroms (iⱼ) des betreffenden Autoadressierungsbusknotens (BKⱼ) abhängt und/oder
   - die zweite Zeitkonstante (τ₂) von dem durch zweite Messmittel (R2', D1', D3') erfassten zweiten Wert des zweiten Busknotenausgangsstroms (i'ⱼ) des betreffenden Autoadressierungsbusknotens (BKⱼ) abhängt.
66. Verfahren nach einem oder mehreren der Punkte 60 bis 65, dadurch gekennzeichnet, dass
   - die erste Zeitkonstante (τ₁) von dem durch erste Messmittel (R2, D2, D3) erfassten Wert des ersten Busknotenausgangsstroms (iⱼ) des betreffenden Autoadressierungsbusknotens (BKⱼ) in der Art abhängt, dass der Wert der ersten Zeitkonstante (τ₁) unterhalb eines Schwellwerts einen ersten Wert und oberhalb dieses Schwellwerts einen zweiten Wert annimmt, und/oder
   - die zweite Zeitkonstante (τ₂) von dem durch zweite Messmittel (R2', D2', D3') erfassten Wert des zweiten Busknotenausgangsstroms (i'ⱼ) des betreffenden Autoadressierungsbusknotens (BKⱼ) in der Art abhängt, dass der Wert der zweiten Zeitkonstante (τ₂) unterhalb eines Schwellwerts einen dritten Wert und oberhalb dieses Schwellwerts einen vierten Wert annimmt.
67. Verfahren nach einem oder mehreren der Punkte 60 bis 66, gekennzeichnet durch folgende zusätzliche Schritte
   - Überprüfen des erfassten ersten Werts des ersten Busknotenausgangsstroms (iⱼ) des betreffenden Autoadressierungsbusknotens (BKⱼ) auf Plausibilität und Einleitung von Maßnahmen, falls der erfasste erste Wert des ersten Busknotenausgangsstroms (iⱼ) des betreffenden Autoadressierungsbusknotens (BKⱼ) nicht plausibel ist, und/oder
   - Überprüfen des erfassten zweiten Werts des zweiten Busknotenausgangsstroms (i'ⱼ) des betreffenden Autoadressierungsbusknotens (BKⱼ) auf Plausibilität und Einleitung von Maßnahmen, falls der erfasste zweite Wert des zweiten Busknotenausgangsstroms (i'ⱼ) des betreffenden Autoadressierungsbusknotens (BKⱼ) nicht plausibel ist.
68. Verfahren nach Punkt 67, gekennzeichnet durch den zusätzlichen Schritt des Neubestimmens des Einspeisepunkts des ersten Adressierungsstroms (iⱼ), falls der erfasste erste Wert des ersten Busknotenausgangsstroms (iⱼ) des betreffenden Autoadressierungsbusknotens (BKⱼ) nicht plausibel ist.
69. Verfahren nach Punkt 67 oder 68, gekennzeichnet durch den zusätzlichen Schritt des Neubestimmens des Einspeisepunkts des ersten Adressierungsstroms (iⱼ) und des Einspeisepunkts des zweiten Adressierungsstroms (i'ⱼ), falls der erfasste erste Wert des ersten Busknotenausgangsstroms (iⱼ) und der erfasste zweite Wert des zweiten Busknotenausgangsstroms (i'ⱼ) des betreffenden Autoadressierungsbusknotens (BKⱼ) nicht plausibel sind.
70. Verfahren nach einem oder mehreren Punkte 67 bis 69, gekennzeichnet durch den zusätzlichen Schritt des Signalisierens eines Fehlers über den Zweidraht-Kommunikationsbus (DB) nach Aufforderung durch den Busmaster (ECU), falls der erfasste erste Wert des ersten Busknotenausgangsstroms (iⱼ) des betreffenden Autoadressierungsbusknotens (BKⱼ) und/oder der erfasste zweite Wert des zweiten Busknotenausgangsstroms (i'ⱼ) des betreffenden Autoadressierungsbusknotens (BKⱼ) nicht plausibel ist/sind.
71. Verfahren nach einem oder mehreren der Punkte 67 bis 70, gekennzeichnet durch den zusätzlichen Schritt des Durchführens des Schritts des Erfassens des ersten Werts des ersten Busknotenausgangsstroms (iⱼ) des betreffenden Autoadressierungsbusknotens (BKⱼ) durch erste Messmittel (R2, D1, D3) durch
   - Erfassen des ersten Werts des ersten Busknotenausgangsstroms (iⱼ) des betreffenden Autoadressierungsbusknotens (BKⱼ) durch erste Messmittel (R2, D1, D3) mit einem ersten Vorzeichen, falls der erfasste erste Wert des ersten Busknotenausgangsstroms (iⱼ) des betreffenden Autoadressierungsbusknotens (BKⱼ) plausibel ist, und
   - Erfassen des ersten Werts des ersten Busknotenausgangsstroms (iⱼ) des betreffenden Autoadressierungsbusknotens (BKⱼ) durch erste Messmittel (R2, D1, D3) mit einem zweiten Vorzeichen, das zum ersten Vorzeichen invertiert ist, falls der erfasste erste Wert des ersten Busknotenausgangsstroms (iⱼ) des betreffenden Autoadressierungsbusknotens (BKⱼ) nicht plausibel ist.
72. Verfahren nach einem oder mehreren der Punkte 67 bis 70, gekennzeichnet durch den zusätzlichen Schritt des Durchführens des Schritts des Erfassens des zweiten Werts des zweiten Busknotenausgangsstroms (i'ⱼ) des betreffenden Autoadressierungsbusknotens (BKⱼ) durch zweite Messmittel (R2', D1', D3') durch
   - Erfassen des zweiten Werts des zweiten Busknotenausgangsstroms (i'ⱼ) des betreffenden Autoadressierungsbusknotens (BKⱼ) durch zweite Messmittel (R2', D1', D3') mit einem ersten Vorzeichen, falls der erfasste zweite Wert des zweiten Busknotenausgangsstroms (i'ⱼ) des betreffenden Autoadressierungsbusknotens (BKⱼ) plausibel ist, und
   - Erfassen des zweiten Werts des zweiten Busknotenausgangsstroms (i'ⱼ) des betreffenden Autoadressierungsbusknotens (BKⱼ) durch zweite Messmittel (R2', D1', D3') mit einem zweiten Vorzeichen, das zum ersten Vorzeichen invertiert ist, falls der erfasste zweite Wert des zweiten Busknotenausgangsstroms (i'ⱼ) des betreffenden Autoadressierungsbusknotens (BKⱼ) nicht plausibel ist.
73. Verfahren nach einem oder mehreren der Punkte 67 bis 70, gekennzeichnet durch die zusätzlichen Schritte des
   - Durchführens des Schritts des Erfassens des zweiten Werts des zweiten Busknotenausgangsstroms (i'ⱼ) des betreffenden Autoadressierungsbusknotens (BKⱼ) durch zweite Messmittel (R2', D1', D3') durch
      - Erfassen des zweiten Werts des zweiten Busknotenausgangsstroms (i'ⱼ) des betreffenden Autoadressierungsbusknotens (BKⱼ) durch zweite Messmittel (R2', D1', D3') mit einem ersten Vorzeichen, falls sowohl der zuvor erfasste erste Wert des ersten Busknotenausgangsstroms (iⱼ) des betreffenden Autoadressierungsbusknotens (BKⱼ) plausibel ist als auch der zuvor erfasste zweite Wert des zweiten Busknotenausgangsstroms (i'ⱼ) des betreffenden Autoadressierungsbusknotens (BKⱼ) plausibel ist, und
      - Erfassen des zweiten Werts des zweiten Busknotenausgangsstroms (i'ⱼ) des betreffenden Autoadressierungsbusknotens (BKⱼ) durch zweite Messmittel (R2', D1', D3') mit einem zweiten Vorzeichen, das zum ersten Vorzeichen invertiert ist, falls sowohl der zuvor erfasste erste Wert des ersten Busknotenausgangsstroms (iⱼ) des betreffenden Autoadressierungsbusknotens (BKⱼ) als auch der zuvor erfasste zweite Wert des zweiten Busknotenausgangsstroms (i'ⱼ) des betreffenden Autoadressierungsbusknotens (BKⱼ) nicht plausibel ist, und
   - Durchführens des Schritts des Erfassens des ersten Werts des ersten Busknotenausgangsstroms (iⱼ) des betreffenden Autoadressierungsbusknotens (BKⱼ) durch erste Messmittel (R2, D1, D3) durch
      - Erfassen des ersten Werts des ersten Busknotenausgangsstroms (iⱼ) des betreffenden Autoadressierungsbusknotens (BKⱼ) durch erste Messmittel (R2, D1, D3) mit einem ersten Vorzeichen, falls sowohl der zuvor erfasste erste Wert des ersten Busknotenausgangsstroms (iⱼ) des betreffenden Autoadressierungsbusknotens (BKⱼ) plausibel ist als auch der zuvor erfasste zweite Wert des zweiten Busknotenausgangsstroms (i'ⱼ) des betreffenden Autoadressierungsbusknotens (BKⱼ) plausibel ist, und
      - Erfassen des ersten Werts des ersten Busknotenausgangsstroms (iⱼ) des betreffenden Autoadressierungsbusknotens (BKⱼ) durch erste Messmittel (R2, D1, D3) mit einem zweiten Vorzeichen, das zum ersten Vorzeichen invertiert ist, falls sowohl der zuvor erfasste erste Wert des ersten Busknotenausgangsstroms (iⱼ) des betreffenden Autoadressierungsbusknotens (BKⱼ) als auch der zuvor erfasste zweite Wert des zweiten Busknotenausgangsstroms (i'ⱼ) des betreffenden Autoadressierungsbusknotens (BKⱼ) nicht plausibel ist.
74. Verfahren nach einem oder mehreren der Punkte 67 bis 73, gekennzeichnet durch den zusätzlichen Schritt des Verwendens einer Fehleradresse als gültige oder vorläufige Busknotenadresse des betreffenden Autoadressierungsbusknotens (BKⱼ), falls sowohl der erfasste erste Wert des ersten Busknotenausgangsstroms (iⱼ) des betreffenden Autoadressierungsbusknotens (BKⱼ) als auch der erfasste zweite Wert des zweiten Busknotenausgangsstroms (i'ⱼ) des betreffenden Autoadressierungsbusknotens (BKⱼ) nicht plausibel ist.
75. Verfahren zur Vergabe von logischen Busknotenadressen an die Busknoten (BK₁ bis BKₙ) eines Datenbussystems, wobei das Datenbussystem versehen ist mit
   - einem seriellen, bidirektionalen, differentiellen Zweidraht-Kommunikationsbus (DB),
   - einem Busmaster (ECU) mit einem Adresseingang (Adrᵢ₀) und
   - n Busknoten (BK₁ bis BKₙ), mit n als ganzer positiver Zahl,
   - wobei der zum Busmaster (ECU) nächstgelegene Busknoten der erste Busknoten und der vom Busmaster (ECU) am weitesten entfernte Busknoten der letzte Busknoten ist und jeder der n Busknoten (BK₂ bis BKₙ) über einen Datenleitungsabschnitt (DB₁ bis DBₙ) des Zweidraht-Kommunikationsbusses (DB) mit dem Busmaster (ECU) zur Datenübertragung verbunden ist,
   - wobei eine Zusatzleitung von einem Adresseingang (Adrᵢ₀) des Busmasters (ECU) ausgehend durch alle Busknoten (BK₁ bis BKₙ) durchgeschleift ist, die somit durch die einzelnen Busknoten (BK₁ bis BKₙ) in n Leitungsabschnitte (L₁ bis Lₙ) unterteilt ist,
   - wobei jeder der Busknoten, im Folgenden zur besseren Klarheit jeweils als j-ter Busknoten (BKⱼ), mit 1≤j≤ n bezeichnet, einen dem j-ten Busknoten (BKⱼ) zugeordneten Adresseingang (Adrᵢⱼ) und einen dem j-ten Busknoten (BKⱼ) zugeordneten Adressausgang (Adrₒⱼ) aufweist,
   - wobei jeder der Busknoten (BKⱼ), mit Ausnahme des letzten Busknotens, an seinem Adresseingang (Adrᵢⱼ) mit dem Adressausgang (Adrₒ₍ⱼ₊₁₎) eines nachfolgenden Busknotens (BKⱼ₊₁) durch einen dem nachfolgenden Busknoten (BKⱼ₊₁) zugeordneten Leitungsabschnitt (Lⱼ₊₁) der Zusatzleitung verbunden ist,
   - wobei jeder der Busknoten (BKⱼ) an seinem Adressausgang (AOⱼ) mit dem Adresseingang (Adrᵢ₍ⱼ₋₁₎) eines vorausgehenden Busknotens (BK₁-₁) durch einen dem Busknoten (BKⱼ) zugeordneten Leitungsabschnitt (Lⱼ) verbunden ist,
   - wobei der erste Busknoten (BK₁) mit seinem Adressausgang (Adrₒ₁) mit dem Adresseingang (Adrᵢ₀) des Busmasters (ECU) durch einen dem Busknoten (BK₁) zugeordneten Leitungsabschnitt (L₁) verbunden ist und
   - wobei die jeweilige Busknotenadresse jedes Busknotens (BK₁ bis BKₙ) gültig oder vorläufig oder nicht gültig oder nicht vorläufig sein kann,
      mit den folgenden Schritten
   - Ungültigmachen sämtlicher oder zumindest eines Teils der jeweiligen Busknotenadressen der Busknoten (BK₁ bis BKₙ) und Versetzen zumindest dieses Teils der Busknoten (BK₁ bis BKₙ) in einen Adressierungszustand,
   - während der Dauer des Adressierungszustands erfolgendes Setzen des Pegels des Adresseingangs (Adrᵢ₀) des Busmasters (ECU) auf einen zweiten logischen Wert, wenn der Pegel dieses Adresseingangs (Adrᵢ₀) dieses Busmasters (ECU) nicht durch den Adressausgang (Adrₒ₁) des ersten Busknotens (BK₁) der Busknoten (BK₁ bis BKₙ) überschrieben wird,
   - während der Dauer des Adressierungszustands in jedem Busknoten (BK₂ bis BKₙ) mit Ausnahme des ersten Busknotens erfolgendes
      - Überschreiben des Pegels an dem Adresseingang (Adrᵢ₍ⱼ₋₁₎) des dem jeweiligen Busknoten (BKⱼ) vorausgehenden Busknotens (BKⱼ₋₁) durch diesen jeweiligen Busknoten (BKⱼ) mit einem ersten logischen Pegel, wenn die Busknotenadresse dieses jeweiligen Busknotens (BKⱼ) ungültig oder nicht vorläufig ist und der Pegel an dem Adresseingang (Adrᵢⱼ) dieses jeweiligen Busknotens (BKⱼ) einen ersten logischen Wert hat, und
      - Setzen des Pegels an diesem Adresseingang (Adrᵢⱼ) dieses Busknotens (BKⱼ) auf einen zweiten logischen Wert, wenn der Pegel dieses Adresseingangs (Adrᵢⱼ) dieses Busknotens (BKⱼ) nicht durch den Adressausgang (Adrₒ₍ⱼ₊₁₎) des dem jeweiligen Busknoten (BKⱼ) gegebenenfalls nachfolgenden Busknotens (BKⱼ₊₁) der Busknoten (BK₃ bis BKₙ) überschrieben wird,
   - während der Dauer des Adressierungszustands in dem ersten Busknoten (BK₁) erfolgendes
      - Überschreiben des Pegels an dem Adresseingang (Adrᵢ₀) des Busmasters (ECU) durch den ersten Busknoten (BK₁) mit einem ersten logischen Pegel, wenn die Busknotenadresse des ersten Busknotens (BK₁) ungültig oder nicht vorläufig ist und der Pegel an dem Adresseingang (Adrₒ₁) dieses ersten Busknotens (BK₁) einen ersten logischen Wert hat, und
      - Setzen des Pegels des Adresseingangs (Adrᵢ₁) dieses ersten Busknotens (BK₁) auf einen zweiten logischen Wert, wenn der Pegel an dem Adresseingang (Adrᵢ₁) dieses ersten Busknotens (BK₁) nicht durch den Adressausgang (Adrₒ₂) des dem ersten Busknoten (BK₁) nachfolgenden Busknotens (BK₂) der Busknoten (BK₂ bis BKₙ) überschrieben wird,
   - während der Dauer des Adressierungszustands erfolgendes
      - Signalisieren einer Busknotenadresse an alle Busknoten (BK₁ bis BKₙ) durch den Busmaster (ECU) und Übernahme der signalisierten Busknotenadresse als gültige oder vorläufige Busknotenadresse durch denjenigen Busknoten (BKⱼ) der Busknoten (BK₁ bis BKₙ), dessen Busknotenadresse ungültig oder nicht vorläufig ist und dessen Adresseingang (Adrᵢⱼ) einen zweiten logischen Wert aufweist, und
      - Wiederholen dieser Signalisierung durch den Busmaster (ECU), bis der Adresseingang (Adrᵢ₀) des Busmasters (ECU) einen zweiten logischen Wert aufweist, und
   - Versetzen der Busknoten (BK₁ bis BKₙ) in einen vom Adressierungszustand verschiedenen zweiten Betriebszustand, wenn der Adresseingang (Adrᵢ₀) des Busmasters (ECU) einen zweiten logischen Wert aufweist.
76. Verfahren nach Punkt 75, gekennzeichnet durch den Schritt des Verwendens der Leitung (L₁ bis Lₙ) im zweiten Betriebszustand als Interrupt-Leitung.

### Liste der Abkürzungen

- ADR₁: Adresserkennungseinheit des ersten Busknotens (BK₁);
- ADR₂: Adresserkennungseinheit des zweiten Busknotens (BK₂);
- ADR₃: Adresserkennungseinheit des dritten Busknotens (BK₃);
- ADR₄: Adresserkennungseinheit des vierten Busknotens (BK₄);
- ADR₅: Adresserkennungseinheit des fünften Busknotens (BK₅);
- ADR₆: Adresserkennungseinheit des sechsten Busknotens (BK₆);
- ADRⱼ: Adresserkennungseinheit des j-ten Busknotens [BKⱼ];
- ADRₙ: Adresserkennungseinheit des n-ten Busknotens [BKₙ];
- Adrᵢ₍ⱼ₋₁₎: Adresseingang des (j-1)-ten Busknotens [BK₍ⱼ₋₁₎];
- Adrᵢⱼ: Adresseingang des j-ten Busknotens (BKⱼ);
- Adrᵢ₍ⱼ₊₁₎: Adresseingang des (j+1)-ten Busknotens [BK₍ⱼ₊₁₎];
- Adrᵢₙ: Adresseingang des n-ten Busknotens [BKₙ];
- Adrₒ₍ⱼ₋₁₎: Adressausgang des (j-1)-ten Busknotens [BK₍ⱼ₋₁₎];
- Adrₒⱼ: Adressausgang des j-ten Busknotens (BKⱼ);
- Adrₒ₍ⱼ₊₁₎: Adressausgang des (j+1)-ten Busknotens [BK₍ⱼ₊₁₎];
- Adrₒₙ: Adressausgang des n-ten Busknotens [BKₙ];
- AT₁: Abtastvorrichtung des ersten Busknotens (BK₁);
- AT₂: Abtastvorrichtung des zweiten Busknotens (BK₂);
- AT₃: Abtastvorrichtung des dritten Busknotens (BK₃);
- AT₄: Abtastvorrichtung des vierten Busknotens (BK₄);
- AT₅: Abtastvorrichtung des fünften Busknotens (BK₅);
- AT₆: Abtastvorrichtung des sechsten Busknotens (BK₆);
- ATⱼ: Abtastvorrichtung des j-ten Busknotens [BKⱼ];
- ATₙ: Abtastvorrichtung des n-ten Busknotens [BKₙ];
- au: Englisch: "arbitrary units", relative Einheiten;
- BKADR₁: Busknotenadressregister des ersten Busknotens (BK₁);
- BKADR₂: Busknotenadressregister des zweiten Busknotens (BK₂);
- BKADR₃: Busknotenadressregister des zweiten Busknotens (BK₃);
- BKADR₄: Busknotenadressregister des zweiten Busknotens (BK₄);
- BKADR₅: Busknotenadressregister des zweiten Busknotens (BK₅);
- BKADR₆: Busknotenadressregister des zweiten Busknotens (BK₆);
- BKADRⱼ: Busknotenadressregister des j-ten Busknotens [BKⱼ];
- BKADRₙ: Busknotenadressregister des n-ten Busknotens [BKₙ];
- BKⱼ₋₂: (j-2)-ter Busknoten;
- BKⱼ₋₁: (j-1)-ter Busknoten;
- BKⱼ₊₁: (j+1)-ter Busknoten;
- BKⱼ₊₂: (j+2)-ter Busknoten;
- BKₙ₋₂: (n-2)-ter Busknoten;
- BKₙ₋₁: (n-1)-ter Busknoten;
- BKₙ: n-ter Busknoten;
- BLM: Rücklichtmodul;
- CLKA₁: Abtastsignal innerhalb des ersten Busknotens (BK₁);
- CLKA₂: Abtastsignal innerhalb des zweiten Busknotens (BK₂);
- CLKA₃: Abtastsignal innerhalb des dritten Busknotens (BK₃);
- CLKA₄: Abtastsignal innerhalb des vierten Busknotens (BK₄);
- CLKA₅: Abtastsignal innerhalb des fünften Busknotens (BK₅);
- CLKA₆: Abtastsignal innerhalb des sechsten Busknotens (BK₆);
- CLKAⱼ: Abtastsignal innerhalb des j-ten Busknotens [BKⱼ];
- CLKAₙ: Abtastsignal innerhalb des n-ten Busknotens [BKₙ];
- CLKG₁: Taktgeber des ersten Busknotens (BK₁);
- CLKG₂: Taktgeber des zweiten Busknotens (BK₂);
- CLKG₃: Taktgeber des dritten Busknotens (BK₃);
- CLKG₄: Taktgeber des vierten Busknotens (BK₄);
- CLKG₅: Taktgeber des fünften Busknotens (BK₅);
- CLKG₆: Taktgeber des sechsten Busknotens (BK₆);
- CLKG;: Taktgeber des j-ten Busknotens [BKⱼ];
- CLKGₙ: Taktgeber des n-ten Busknotens [BKₙ];
- DBⱼ: j-ter, bidirektionaler, differentieller Datenleitungsabschnitt des bidirektionalen differentiellen Zweidraht-Kommunikationsbusses zwischen dem j-ten Busknoten (BKⱼ) und dem (j-1)-ten Busknoten [BKⱼ₋₁]. Er umfasst je einen korrespondierenden Abschnitt des ersten Eindrahtbusses (DBₐ) und des zweiten Eindrahtbusses (DB_{b});
- DBₙ: n-ter, bidirektionaler, differentieller Datenleitungsabschnitt des bidirektionalen differentiellen Zweidraht-Kommunikationsbusses zwischen dem n-ten Busknoten [BKₙ] und dem (n-1)-ten Busknoten [BKₙ₋₁]. Er umfasst je einen korrespondierenden Abschnitt des ersten Eindrahtbusses (DBₐ) und des zweiten Eindrahtbusses (DB_{b});
- EV₁: Energieversorgungsmittel des ersten Busknotens (BK₁), das für die Energieversorgung des ersten Leuchtmittels (LED₁) des ersten Busknotens (BK₁) vorgesehen ist.
- EV₂: Energieversorgungsmittel des zweiten Busknotens (BK₂), das für die Energieversorgung des zweiten Leuchtmittels (LED₂) des zweiten Busknotens (BK₂) vorgesehen ist.
- EV₃: Energieversorgungsmittel des dritten Busknotens (BK₃), das für die Energieversorgung des dritten Leuchtmittels (LED₃) des dritten Busknotens (BK₃) vorgesehen ist.
- EV₄: Energieversorgungsmittel des vierten Busknotens (BK₄), das für die Energieversorgung des vierten Leuchtmittels [LED₄] des vierten Busknotens (BK₄) vorgesehen ist.
- EV₅: Energieversorgungsmittel des fünften Busknotens (BK₅), das für die Energieversorgung des fünften Leuchtmittels [LED₅] des fünften Busknotens (BK₅) vorgesehen ist.
- EV₆: Energieversorgungsmittel des sechsten Busknotens (BK₆), das für die Energieversorgung des sechsten Leuchtmittels [LED₆] des sechsten Busknotens (BK₆) vorgesehen ist.
- EVⱼ: Energieversorgungsmittel des j-ten Busknotens (BKⱼ), das für die Energieversorgung des j-ten Leuchtmittels [LEDⱼ] des j-ten Busknotens (BKⱼ) vorgesehen ist.
- EVₙ: Energieversorgungsmittel des n-ten Busknotens [BKₙ], das für die Energieversorgung des n-ten Leuchtmittels [LEDₙ] des n-ten Busknotens [BKₙ] vorgesehen ist.
- GGIq;: Gegentaktstromquelle;
- GLIqⱼ: Gleichtaktadressierungsstromquelle des Busknotens (BKⱼ);
- GND: zweite Versorgungsspannungsleitung (komplementär zu V_{bat}) auch als Bezugspotenzial bezeichnet;
- HS-CAN: Hochgeschwindigkeits CAN-Protokoll;
- Iₐₘₐₓ: maximaler Adressierungsstrom;
- Iqⱼ₁: erste Adressierungsstromquelle des j-ten Busknotens (BKⱼ) bei Aufteilung der ersten Adressierungsstromquelle [Iqⱼ₁] des j-ten Busknotens (BKⱼ) in eine erste Adressierungsstromquelle, die vor dem ersten Bus-Shunt-Widerstand (R2) einspeist und eine weitere erste Adressierungsstromquelle, die hinter dem ersten Bus-Shunt-Widerstand (R2) einspeist;
- Iqⱼ₂: weitere erste Adressierungsstromquelle des j-ten Busknotens (BKⱼ) bei Aufteilung der ersten Adressierungsstromquelle [Iqⱼ₁] des j-ten Busknotens (BKⱼ) in eine erste Adressierungsstromquelle, die vor dem ersten Bus-Shunt-Widerstand (R2) einspeist und eine erste Adressierungsstromquelle, die hinter dem ersten Bus-Shunt-Widerstand (R2) einspeist;
- Iq'ⱼ₁: zweite Adressierungsstromquelle des j-ten Busknotens (BKⱼ) bei Aufteilung der zweiten Adressierungsstromquelle [Iqⱼ₁] des j-ten Busknotens (BKⱼ) in eine zweite Adressierungsstromquelle, die vor dem zweiten Bus-Shunt-Widerstand (R2') einspeist und eine weitere zweite Adressierungsstromquelle, die hinter dem zweiten Bus-Shunt-Widerstand (R2') einspeist;
- Iq'ⱼ₂: weitere zweite Adressierungsstromquelle des j-ten Busknotens (BKⱼ) bei Aufteilung der zweiten Adressierungsstromquelle [Iqⱼ₁] des j-ten Busknotens (BKⱼ) in eine zweite Adressierungsstromquelle, die vor dem zweiten Bus-Shunt-Widerstand (R2') einspeist und eine weitere zweite Adressierungsstromquelle, die hinter dem zweiten Bus-Shunt-Widerstand (R2') einspeist;
- I_{ref}: erster vorgegebener Summenstromwert innerhalb eines Busknotens (BKⱼ) für den ersten Busknotenausgangsstrom (iⱼ). Der erste Summenstromwert sollte für alle Busknoten zwar bevorzugt gleich groß sein. Er kann aber auch von Busknoten zu Busknoten schwanken.
- I'_{ref}: zweiter vorgegebener Summenstromwert innerhalb eines Busknotens (BKⱼ) für den zweiten Busknotenausgangsstrom (i'ⱼ). Der zweite Summenstromwert sollte für alle Busknoten zwar bevorzugt gleich groß sein. Er kann aber auch von Busknoten zu Busknoten schwanken.
- L₁ bis Lₙ: Leitung aus den Leitungsabschnitten L₁ bis Lₙ;
- L₄: vierter Leitungsabschnitt vom vierten Busknoten [BK₄] zum dritten Busknoten (BK₃);
- Lⱼ₋₁: (j-1)-ter Leitungsabschnitt vom (j-1)-ten Busknoten [BKⱼ₋₁] zum (j-2)-ten Busknoten [BKⱼ₋₂];
- Lⱼ: j-ter Leitungsabschnitt vom j-ten Busknoten (BKⱼ) zum (j-1)-ten Busknoten [BKⱼ₋₁];
- Lⱼ₊₁: (j+1)-ter Leitungsabschnitt vom (j+1)-ten Busknoten [BKⱼ₊₁] zum j-ten Busknoten (BKⱼ);
- Lₙ₋₁: (n-1)-ter Leitungsabschnitt vom (n-1)-ten Busknoten [BKₙ₋₁] zum (n-2)-ten Busknoten [BKₙ₋₂];
- Lₙ: n-ter Leitungsabschnitt vom n-ten Busknoten [BKₙ] zum (n-1)-ten Busknoten [BKₙ₋₁];
- LED;: Leuchtmittel des j-ten Busknotens (BKⱼ). Leuchtmittelgruppen und Verschaltungen sind hier mitumfasst. (Dies können beispielsweise Serien- und Parallelschaltungen mehrerer Leuchtdioden sein.)
- LEDₙ: Leuchtmittel des n-ten Busknotens [BKₙ]. Leuchtmittelgruppen und Verschaltungen sind hier mitumfasst. (Dies können beispielsweise Serien- und Parallelschaltungen mehrerer Leuchtdioden sein.)
- µC₁: Mikrocontroller des ersten Busknotens (BK₁);
- µC₂: Mikrocontroller des zweiten Busknotens (BK₂);
- µC₃: Mikrocontroller des dritten Busknotens (BK₃);
- µC₄: Mikrocontroller des vierten Busknotens (BK₄);
- µC₅: Mikrocontroller des fünften Busknotens (BK₅);
- µC₆: Mikrocontroller des sechsten Busknotens (BK₆);
- µCⱼ: Mikrocontroller des j-ten Busknotens (BKⱼ);
- µCₙ: Mikrocontroller des n-ten Busknotens [BKₙ];
- rwₙ: erstes Regelsignal des n-ten Busknotens [BKₙ]. Das erste Regelsignal des n-ten Busknotens [BKₙ] wird mit Mitteln, bevorzugt einem ersten Filter (F) des n-ten Busknotens [BKₙ], der mit dem dritten Komparator (D3) des n-ten Busknotens [BKₙ] auch eine Einheit bilden kann, aus dem Ausgangssignal des dritten Komparators (D3) des n-ten Busknotens [BKₙ] gebildet und dient zur Steuerung der ersten Autoadressierungsstromquelle [Iqₙ] des n-ten Busknotens [BKₙ];
- rw'ₙ: zweites Regelsignal des n-ten Busknotens [BKₙ]. Das zweite Regelsignal des n-ten Busknotens [BKₙ] wird mit Mitteln, bevorzugt einem zweiten Filter (F) des n-ten Busknotens [BKₙ], der mit dem entsprechenden dritten Komparator (D3') des n-ten Busknotens [BKₙ] auch eine Einheit bilden kann, aus dem Ausgangssignal des entsprechenden dritten Komparators (D3') des n-ten Busknotens [BKₙ] gebildet und dient zur Steuerung der zweiten Autoadressierungsstromquelle [Iq'ₙ] des n-ten Busknotens [BKₙ];
- SUP: Spannungsversorgung;
- SW₁: erster Schwellwert zum Vergleich mit dem ersten Regelwert (r₁) des ersten Busknotens (BK₁) für die Entscheidung, ob die Adressdaten als gültige Busknotenadresse übernommen werden sollen;
- SW'₁: zweiter Schwellwert zum Vergleich mit dem zweiten Regelwert (r'₁) des ersten Busknotens (BK₁) für die Entscheidung, ob die Adressdaten als gültige Busknotenadresse übernommen werden sollen;
- SW₂: erster Schwellwert zum Vergleich mit dem ersten Regelwert (r₂) des zweiten Busknotens (BK₂) für die Entscheidung, ob die Adressdaten als gültige Busknotenadresse übernommen werden sollen;
- SW'₂: zweiter Schwellwert zum Vergleich mit dem zweiten Regelwert (r'₂) des zweiten Busknotens (BK₂) für die Entscheidung, ob die Adressdaten als gültige Busknotenadresse übernommen werden sollen;
- SW₃: erster Schwellwert zum Vergleich mit dem ersten Regelwert (r₃) des dritten Busknotens (BK₃) für die Entscheidung, ob die Adressdaten als gültige Busknotenadresse übernommen werden sollen;
- SW'₃: zweiter Schwellwert zum Vergleich mit dem zweiten Regelwert (r'₃) des dritten Busknotens (BK₃) für die Entscheidung, ob die Adressdaten als gültige Busknotenadresse übernommen werden sollen;
- SWⱼ: erster Schwellwert zum Vergleich mit dem ersten Regelwert (rⱼ) des j-ten Busknotens (BKⱼ) für die Entscheidung, ob die Adressdaten als gültige Busknotenadresse übernommen werden sollen;
- SW'ⱼ: zweiter Schwellwert zum Vergleich mit dem zweiten Regelwert (r'ⱼ) des j-ten Busknotens (BKⱼ) für die Entscheidung, ob die Adressdaten als gültige Busknotenadresse übernommen werden sollen;
- SWₙ: erster Schwellwert zum Vergleich mit dem ersten Regelwert [rₙ] des n-ten Busknotens [BKₙ] für die Entscheidung, ob die Adressdaten als gültige Busknotenadresse übernommen werden sollen;
- SW'ₙ: zweiter Schwellwert zum Vergleich mit dem zweiten Regelwert [r'ₙ] des n-ten Busknotens [BKₙ] für die Entscheidung, ob die Adressdaten als gültige Busknotenadresse übernommen werden sollen;
- τ₁: erste Zeitkonstante, mit der die Erhöhung des ersten Adressierungsstroms der ersten geregelten Autoadressierungsstromquelle (Iqⱼ) des betreffenden Busknotens (BKⱼ) erfolgt;
- τ₂: zweite Zeitkonstante, mit der die Erniedrigung des ersten Adressierungsstroms der ersten geregelten Autoadressierungsstromquelle (Iqⱼ) des betreffenden Autoadressierungsbusknotens (BKⱼ) erfolgt
- τ₃: dritte Zeitkonstante, mit der die Erhöhung des zweiten Adressierungsstroms der zweiten geregelten Autoadressierungsstromquelle (Iq'ⱼ) des betreffenden Busknotens (BKⱼ) erfolgt;
- τ₄: vierte Zeitkonstante, mit der die Erniedrigung des zweiten Adressierungsstroms der zweiten geregelten Autoadressierungsstromquelle (Iq'ⱼ) des betreffenden Autoadressierungsbusknotens (BKⱼ) erfolgt;
- τ_{ref}: vorrichtungsspezifische, nicht weiter definierte zeitliche Referenzgröße;
- t: Zeit
- t₁: erster Zeitpunkt nach dem Start des Zeitgebers, zu dem ein Einfrieren der Regelung der ersten Adressierungsstromquelle (Iqⱼ) des betreffenden Autoadressierungsbusknotens (BKⱼ) erfolgt;
- t₂: zweiter Zeitpunkt nach dem Start des Zeitgebers, zu dem ein Einfrieren der Regelung der zweiten Adressierungsstromquelle (Iq'ⱼ) des betreffenden Autoadressierungsbusknotens (BKⱼ) erfolgt;
- t₃: dritter Zeitpunkt, zu dem unter bestimmten Bedingungen die Übernahme der zu vergebenden Busknotenadresse vom Busmaster (ECU) als gültige Busknotenadresse des betreffenden Autoadressierungsbusknotens (BKⱼ) erfolgt;
- TR: Treiber;
- TRₐ: erster Treiber im Busmaster (ECU) oder in einem Busknoten ((BK₁) bis [BKₙ]). Bevorzugt wird der Treiber als CAN-Treiber oder RS485-Treiber realisiert. Ein erster Treiber kann als CAN-Treiber bevorzugt zwei von drei erlaubten Zuständen einnehmen: In einem ersten Zustand legt er einen ersten logischen Pegel (Z1) auf den ersten Eindrahtbus (DBₐ). In einem zweiten Zustand legt er einen dritten logischen Pegel (Z3) auf den ersten Eindrahtbus (DBₐ). Der erste Treiber des Busmasters (ECU) arbeitet außerdem im Adressierungszustand des Datenbussystems und der Busknoten ((BK₁) bis [BKₙ]) als erste Stromsenke für die ersten Adressierungsströme der ersten Adressierungsstromquellen ((Iq₁), (Iq₂) bis [Iqₙ]) der Busknoten ((BK₁) bis [BKₙ]) und deren erste Ruheströme. Bevorzugt nimmt der erste Treiber eines Busknotens ((BK₁) bis [BKₙ]) bzw. des Busmasters (ECU) den ersten Zustand (Z1) an, wenn der zweite Treiber [TR_{b}] des betreffenden Busknotens ((BK₁) bis [BKₙ]) den zweiten Zustand (Z2) annimmt. Hierdurch wird das Signal mit einem ersten differentiellen Pegel (z1) differentiell eingeprägt. Bevorzugt nimmt der erste Treiber eines Busknotens ((BK₁) bis [BKₙ]) bzw. des Busmasters (ECU) den dritten Zustand (Z3) an, wenn der zweite Treiber [TR_{b}] des betreffenden Busknotens ((BK₁) bis [BKₙ]) den dritten Zustand (Z3) annimmt. Hierdurch wird das Signal mit einem dritten differentiellen Pegel (z3) differentiell eingeprägt. Der erste Treiber kann auch als RS485-Treiber bevorzugt zwei von zwei erlaubten Zuständen einnehmen: In einem ersten Zustand legt er einen ersten logischen Pegel (Z1) auf den ersten Eindrahtbus (DBₐ). In einem zweiten Zustand legt er einen zweiten logischen Pegel (Z2) auf den ersten Eindrahtbus (DBₐ). Der erste Treiber des Busmasters (ECU) arbeitet außerdem im Adressierungszustand des Datenbussystems und der Busknoten ((BK₁) bis [BKₙ]) als erste Stromsenke für die ersten Adressierungsströme der ersten Adressierungsstromquellen ((Iq₁), (Iq₂) bis [Iqₙ]) der Busknoten ((BK₁) bis [BKₙ]) und deren erste Ruheströme. Bevorzugt nimmt der erste Treiber eines Busknotens ((BK₁) bis [BKₙ]) bzw. des Busmasters (ECU) den ersten Zustand (Z1) an, wenn der zweite Treiber [TR_{b}] des betreffenden Busknotens ((BK₁) bis [BKₙ]) den zweiten Zustand (Z2) annimmt. Hierdurch wird das Signal mit einem ersten differentiellen Pegel (z1) differentiell eingeprägt. Bevorzugt nimmt der erste Treiber eines Busknotens ((BK₁) bis [BKₙ]) bzw. des Busmasters (ECU) den zweiten Zustand (Z2) an, wenn der zweite Treiber [TR_{b}] des betreffenden Busknotens ((BK₁) bis [BKₙ]) den ersten Zustand (Z1) annimmt. Hierdurch wird das Signal mit einem zweiten differentiellen Pegel (z2) differentiell eingeprägt. Außerdem verfügt der erste Treiber typischerweise über eine Teilvorrichtung zur Detektion und Vermeidung einer Buskollision im Falle eines gleichzeitigen Zugriffs auf den ersten Eindrahtbus (DBₐ) durch einen ersten Treiber eines anderen Busknotens ((BK₁) bis [BKₙ]) bzw. des Busmasters (ECU).
- TR₅: zweiter Treiber im Busmaster (ECU) oder in einem Busknoten ((BK₁) bis [BKₙ]). Bevorzugt wird der zweite Treiber als CAN-Treiber oder RS485-Treiber realisiert. Ein zweiter Treiber kann als CAN-Treiber bevorzugt zwei von drei erlaubten Zuständen einnehmen: In einem ersten Zustand legt er einen zweiten logischen Pegel (Z2) auf den zweiten Eindrahtbus (DB_{b}). In einem zweiten Zustand legt er einen dritten logischen Pegel (Z3) auf den zweiten Eindrahtbus (DB_{b}). Der zweite Treiber des Busmasters (ECU) arbeitet außerdem im Adressierungszustand des Datenbussystems und der Busknoten ((BK₁) bis [BKₙ]) als zweite Stromsenke für die zweiten Adressierungsströme der zweiten Adressierungsstromquellen ((Iq'₁) bis [Iq'ₙ]) der Busknoten ((BK₁) bis [BKₙ]) und deren zweite Ruheströme. Bevorzugt nimmt der zweite Treiber eines Busknotens ((BK₁) bis [BKₙ]) bzw. des Busmasters (ECU) den zweiten Zustand (Z2) an, wenn der erste Treiber [TRₐ] des betreffenden Busknotens ((BK₁) bis [BKₙ]) den ersten Zustand (Z1) annimmt. Hierdurch wird das Signal mit einem ersten differentiellen Pegel (z1) differentiell eingeprägt. Bevorzugt nimmt der zweite Treiber eines Busknotens ((BK₁) bis [BKₙ]) bzw. des Busmasters (ECU) den dritten Zustand (Z3) an, wenn der erste Treiber [TRₐ] des betreffenden Busknotens ((BK₁) bis [BKₙ]) den dritten Zustand (Z3) annimmt. Hierdurch wird das Signal mit einem dritten differentiellen Pegel (z3) differentiell eingeprägt. Der zweite Treiber kann auch als RS485-Treiber bevorzugt zwei von zwei erlaubten Zuständen einnehmen: In einem ersten Zustand legt er einen zweiten logischen Pegel (Z2) auf den ersten Eindrahtbus (DBₐ). In einem zweiten Zustand legt er einen ersten logischen Pegel (Z1) auf den zweiten Eindrahtbus (DB_{b}). Der zweite Treiber des Busmasters (ECU) arbeitet außerdem im Adressierungszustand des Datenbussystems und der Busknoten ((BK₁) bis [BKₙ]) als zweite Stromsenke für die zweiten Adressierungsströme der zweiten Adressierungsstromquellen ((Iq'₁) bis [Iq'ₙ]) der Busknoten ((BK₁) bis [BKₙ]) und deren zweite Ruheströme. Bevorzugt nimmt der zweite Treiber eines Busknotens ((BK₁) bis [BKₙ]) bzw. des Busmasters (ECU) den zweiten Zustand (Z2) an, wenn der erste Treiber [TRₐ] des betreffenden Busknotens ((BK₁) bis [BKₙ]) den ersten Zustand (Z1) annimmt. Hierdurch wird das Signal mit einem ersten differentiellen Pegel (z1) differentiell eingeprägt. Bevorzugt nimmt der zweite Treiber eines Busknotens ((BK₁) bis [BKₙ]) bzw. des Busmasters (ECU) den ersten Zustand (Z1) an, wenn der erste Treiber [TRₐ] des betreffenden Busknotens ((BK₁) bis [BKₙ]) den zweiten Zustand (Z2) annimmt. Hierdurch wird das Signal mit einem zweiten differentiellen Pegel (z2) differentiell eingeprägt. Außerdem verfügt der erste Treiber typischerweise über eine Teilvorrichtung zur Detektion und Vermeidung einer Buskollision im Falle eines gleichzeitigen Zugriffs auf den ersten Eindrahtbus (DBₐ) durch einen ersten Treiber eines anderen Busknotens ((BK₁) bis [BKₙ]) bzw. des Busmasters (ECU).
- UART: Universal Asynchronous Receiver Transmitter;
- Vₘ₀: Basisspannungswert;
- X5: Multiplexer zur Vertauschung der Anschlüsse des Messwiderstands [Rmⱼ] eines Busknotens (BKⱼ);
- X6: erster Multiplexer zur Vertauschung der Anschlüsse des Adresseingangs [Adrᵢⱼ] und des Adressausgangs [Adrₒⱼ] eines Busknotens (BKⱼ);
- X7: zweiter Multiplexer zur Vertauschung der Anschlüsse des Adresseingangs [Adrᵢⱼ] und des Adressausgangs [Adrₒⱼ] eines Busknotens (BKⱼ);

### BEZUGSZEICHENLISTE

- ADRD: Adressinformationen innerhalb der Dateninformationen (DATA) eines Bit-Strom-Pakets (BP);
- Adrᵢₒ: Adresseingang des Busmasters (ECU);
- Adrᵢ₁: Adresseingang des ersten Busknotens (BK₁);
- Adrᵢ₂: Adresseingang des zweiten Busknotens (BK₂);
- Adrᵢ₃: Adresseingang des dritten Busknotens (BK₃);
- Adrₒ₁: Adressausgang des ersten Busknotens (BK₁);
- Adrₒ₂: Adressausgang des zweiten Busknotens (BK₂);
- Adrₒ₃: Adressausgang des dritten Busknotens (BK₃);
- BK₁: erster Busknoten;
- BK₂: zweiter Busknoten;
- BK₃: dritter Busknoten;
- BK₄: vierter Busknoten;
- BK₅: fünfter Busknoten;
- BK₆: sechster Busknoten;
- BKⱼ: j-ter Busknoten, in dieser Offenlegung auch als betreffender Busknoten benannt, wenn Aussagen über einen einzelenen Busknoten der Busknoten (BK₁, BK₂, .....BKₙ₋₁, BKₙ) getätigt werden;
- BP: Bit-Strom-Paket (englisch Frame), auch mit Datenpaket bezeichnet;
- CHKD: Prüfinformationen innerhalb der Dateninformationen (DATA) eines Bit-Strom-Pakets (BP). Bevorzugt handelt es sich um eine CRC-Checksumme und/oder Parity-Bits etc.;
- CLK: Takt innerhalb des Busmasters (ECU);
- CLKAⱼ: Abtastsignal innerhalb des j-ten Busknotens (BKⱼ);
- D2: zweiter Differenzverstärker zur Messung des ersten Stromes durch den ersten Eindrahtbus (DBₐ) mittels des ersten Shunt-Widerstands (R2) oder zur Messung des Stromes durch die Versorgungsspannungsleitung (V_{bat}) mittels des Messwiderstands [Rmⱼ] innerhalb des betreffenden Busknotens (BKⱼ).
Die zweiten Differenzverstärker sind zur besseren Übersicht nicht mit Indizes für die jeweiligen Busknoten versehen.
- D2': zweiter Differenzverstärker zur Messung des zweiten Stromes durch den zweiten Eindrahtbus (DB_{b}) mittels des zweiten Shunt-Widerstands (R2') oder zur Messung des Stromes durch die Versorgungsspannungsleitung (V_{bat}) mittels des Messwiderstands [Rmⱼ] innerhalb des betreffenden Busknotens (BKⱼ). Die zweiten Differenzverstärker sind zur besseren Übersicht nicht mit Indizes für die jeweiligen Busknoten versehen.
- D3: dritter Komparator bzw. dritter Differenzverstärker zum Vergleich des Ausgangs des zweiten Differenzverstärkers (D2), der zur Messung des Stromes durch den erste Eindrahtbus (DBₐ) mittels des ersten Shunt-Widerstands (R2) oder durch die Versorgungsspannungsleitung mittels des Messwiderstands [Rmⱼ] dient, mit einem Schwellwert (Ref) innerhalb des betreffenden Busknotens (BKⱼ). Die dritten Komparatoren und Differenzverstärker sind zur besseren Übersicht nicht mit Indizes für die jeweiligen Busknoten (BKⱼ) versehen.
- D3': dritter Komparator bzw. dritter Differenzverstärker zum Vergleich des Ausgangs des zweiten Differenzverstärkers (D2'), der zur Messung des Stromes durch den zweiten Eindrahtbus (DB_{b}) mittels des zweiten Shunt-Widerstands (R2') oder durch die Versorgungsspannungsleitung mittels des Messwiderstands [Rmⱼ] dient, mit einem weiteren Schwellwert (Ref) innerhalb des betreffenden Busknotens (BKⱼ). Die dritten Komparatoren und Differenzverstärker sind zur besseren Übersicht nicht mit Indizes für die jeweiligen Busknoten (BKⱼ) versehen.
- DATA: Dateninformationen innerhalb eines Bit-Strom-Paketes;
- DB: serieller, bidirektionaler, differentieller Zweidraht-Kommunikationsbus;
- DBₐ: erster Eindrahtbus des seriellen, bidirektionalen, differentiellen Zweidraht-Kommunikationsbusses (DB);
- DB_{b}: zweiter Eindrahtbus des seriellen, bidirektionalen, differentiellen Zweidraht-Kommunikationsbusses (DB);
- DB₁: erster, bidirektionaler, differentieller Datenleitungsabschnitt des bidirektionalen differentiellen Zweidraht-Kommunikationsbusses zwischen dem ersten Busknoten (BK₁) und dem Busmaster (ECU). Er umfasst je einen korrespondierenden Abschnitt des ersten Eindrahtbusses (DBₐ) und des zweiten Eindrahtbusses (DB_{b});
- DB₂: zweiter, bidirektionaler, differentieller Datenleitungsabschnitt des bidirektionalen differentiellen Zweidraht-Kommunikationsbusses zwischen dem zweiten Busknoten (BK₂) und dem ersten Busknoten (BK₁). Er umfasst je einen korrespondierenden Abschnitt des ersten Eindrahtbusses (DBₐ) und des zweiten Eindrahtbusses (DB_{b});
- DB₃: dritter, bidirektionaler, differentieller Datenleitungsabschnitt des bidirektionalen differentiellen Zweidraht-Kommunikationsbusses zwischen dem dritten Busknoten (BK₃) und dem zweiten Busknoten (BK₂). Er umfasst je einen korrespondierenden Abschnitt des ersten Eindrahtbusses (DBₐ) und des zweiten Eindrahtbusses (DB_{b});
- DET: erste Detektionsvorrichtung innerhalb eines Busknotens (BKⱼ);
- DET': zweite Detektionsvorrichtung innerhalb eines Busknotens (BKⱼ);
- ds2: Ausgang des zweiten Differenzverstärkers (D2). Es handelt sich um ein internes Signal innerhalb eines Busknotens (BKⱼ);
- ds2': Ausgang des weiteren zweiten Differenzverstärkers (D2'). Es handelt sich um ein internes Signal innerhalb eines Busknotens (BKⱼ);
- ds3: internes Signal innerhalb eines Busknotens (BKⱼ);
- ds3': weiteres internes Signal innerhalb eines Busknotens (BKⱼ);
- ECU: Busmaster, hier auch als Ansteuereinheit bezeichnet;
- er: erstes Fehlersignal der ersten Detektionsvorrichtung (DET);
- er': zweites Fehlersignal der zweiten Detektionsvorrichtung (DET');
- F: erstes Filter;
- F': zweites Filter;
- i₁: ersten Busknotenausgangsstrom, den der erste Busknoten (BK₁) über den Abschnitt des ersten Eindrahtbusses (DB₁), der Teil des Verbindungsabschnitts des seriellen, bidirektionalen, differentiellen Zweidraht-Kommunikationsbusses (DB) zwischen dem ersten Busknoten (BK₁) und dem Busmaster (ECU) ist, an den Busmaster (ECU) sendet und den der Busmaster als ersten Busmastereingangsstrom empfängt;
- i'₁: zweiter Busknotenausgangsstrom, den der erste Busknoten (BK₁) über den Abschnitt des zweiten Eindrahtbusses (DB₂), der Teil des Verbindungsabschnitts des seriellen, bidirektionalen, differentiellen Zweidraht-Kommunikationsbusses (DB) zwischen dem ersten Busknoten (BK₁) und dem Busmaster (ECU) ist, an den Busmaster (ECU) sendet und den der Busmaster als zweiten Busmastereingangsstrom empfängt;
- i₂: erster Busknotenausgangsstrom, den der zweite Busknoten (BK₂) über den Abschnitt des ersten Eindrahtbusses (DB₁), der Teil des Verbindungsabschnitts des seriellen, bidirektionalen, differentiellen Zweidraht-Kommunikationsbusses (DB) zwischen dem zweiten Busknoten (BK₂) und dem ersten Busknoten (BK₁) ist, an den ersten Busknoten (BK₁) sendet und den der ersten Busknoten (BK₁) als ersten Busknoteneingangsstrom empfängt;
- i'₂: zweiter Busknotenausgangsstrom, den der zweite Busknoten (BK₂) über den Abschnitt des zweiten Eindrahtbusses (DB₂), der Teil des Verbindungsabschnitts des seriellen, bidirektionalen, differentiellen Zweidraht-Kommunikationsbusses (DB) zwischen dem zweiten Busknoten (BK₂) und dem ersten Busknoten (BK₁) ist, an den ersten Busknoten (BK₁) sendet und den der ersten Busknoten (BK₁) als zweiten Busknoteneingangsstrom empfängt;
- i₃: erster Busknotenausgangsstrom, den der dritte Busknoten (BK₃) über den Abschnitt des ersten Eindrahtbusses (DB₁), der Teil des Verbindungsabschnitts des seriellen, bidirektionalen, differentiellen Zweidraht-Kommunikationsbusses (DB) zwischen dem dritten Busknoten (BK₃) und dem zweiten Busknoten (BK₂) ist, an den zweiten Busknoten (BK₂) sendet und den der zweite Busknoten (BK₂) als ersten Busknoteneingangsstrom empfängt;
- i'₃: zweiter Busknotenausgangsstrom, den der dritte Busknoten (BK₃) über den Abschnitt des zweiten Eindrahtbusses (DB₂), der Teil des Verbindungsabschnitts des seriellen, bidirektionalen, differentiellen Zweidraht-Kommunikationsbusses (DB) zwischen dem dritten Busknoten (BK₃) und dem zweiten Busknoten (BK₂) ist, an den zweiten Busknoten (BK₂) sendet und den der zweite Busknoten (BK₂) als zweiten Busknoteneingangsstrom empfängt;
- iⱼ: erster Busknotenausgangsstrom, den der j-te Busknoten (BKⱼ) über den Abschnitt des ersten Eindrahtbusses (DB₁), der Teil des Verbindungsabschnitts des seriellen, bidirektionalen, differentiellen Zweidraht-Kommunikationsbusses (DB) zwischen dem j-ten Busknoten (BKⱼ) und dem (j-1)-ten Busknoten [BKⱼ₋₁] ist, an den (j-1)-ten Busknoten [BKⱼ₋₁] sendet und den der (j-1)-te Busknoten [BK₍ⱼ₋₁₎] als ersten Busknoteneingangsstrom empfängt;
- i'ⱼ: zweiter Busknotenausgangsstrom, den der j-te Busknoten (BKⱼ) über den Abschnitt des zweiten Eindrahtbusses (DB₂), der Teil des Verbindungsabschnitts des seriellen, bidirektionalen, differentiellen Zweidraht-Kommunikationsbusses (DB) zwischen dem j-ten Busknoten (BKⱼ) und dem (j-1)-ten Busknoten [BKⱼ₋₁] ist, an den (j-1)-ten Busknoten [BKⱼ₋₁] sendet und den der (j-1)-te Busknoten [BK₍ⱼ₋₁₎] als zweiten Busknoteneingangsstrom empfängt;
- iⱼ₊₁: erster Busknotenausgangsstrom, den der (j+1)-te Busknoten [BKⱼ₊₁] über den Abschnitt des ersten Eindrahtbusses (DB₁), der Teil des Verbindungsabschnitts des seriellen, bidirektionalen, differentiellen Zweidraht-Kommunikationsbusses (DB) zwischen dem (j+1)-ten Busknoten [BKⱼ₊₁] und dem j-ten Busknoten (BKⱼ) ist, an den j-ten Busknoten (BKⱼ) sendet und den der j-te Busknoten (BKⱼ) als ersten Busknoteneingangsstrom empfängt;
- i'ⱼ₊₁: zweiter Busknotenausgangsstrom, den der (j+1)-te Busknoten [BKⱼ₊₁] über den Abschnitt des zweiten Eindrahtbusses (DB₂), der Teil des Verbindungsabschnitts des seriellen, bidirektionalen, differentiellen Zweidraht-Kommunikationsbusses (DB) wischen dem (j+1)-ten Busknoten [BKⱼ₊₁] und dem j-ten Busknoten (BKⱼ) ist, an den j-ten Busknoten (BKⱼ) sendet und den der j-te Busknoten (BKⱼ) als zweiten Busknoteneingangsstrom empfängt;
- iₙ₋₁: erster Busknotenausgangsstrom, den der (n-1)-te Busknoten [BKₙ₋₁] über den Abschnitt des ersten Eindrahtbusses (DB₁), der Teil des Verbindungsabschnitts des seriellen, bidirektionalen, differentiellen Zweidraht-Kommunikationsbusses (DB) zwischen dem (n-1)-ten Busknoten [BKₙ₋₁] und dem (n-2)-ten Busknoten [BKₙ₋₂] ist, an den (n-2)-ten Busknoten [BKₙ₋₂] sendet und den der (n-2)-te Busknoten [BKₙ₋₂] als ersten Busknoteneingangsstrom empfängt;
- i'ₙ₋₁: zweiter Busknotenausgangsstrom, den der (n-1)-te Busknoten [BKₙ₋₁] über den Abschnitt des zweiten Eindrahtbusses (DB₂), der Teil des Verbindungsabschnitts des seriellen, bidirektionalen, differentiellen Zweidraht-Kommunikationsbusses (DB) zwischen dem (n-1)-ten Busknoten [BKₙ₋₁] und dem (n-2)-ten Busknoten [BKₙ₋₂] ist, an den (n-2)-ten Busknoten [BKₙ₋₂] sendet und den der (n-2)-te Busknoten [BKₙ₋₂] als zweiten Busknoteneingangsstrom empfängt;
- iₙ: erster Busknotenausgangsstrom, den der n-te Busknoten [BKₙ] über den Abschnitt des ersten Eindrahtbusses (DB₁), der Teil des Verbindungsabschnitts des seriellen, bidirektionalen, differentiellen Zweidraht-Kommunikationsbusses (DB) zwischen dem n-ten Busknoten [BKₙ] und dem (n-1)-ten Busknoten [BKₙ₋₁] ist, an den (n-1)-ten Busknoten [BKₙ₋₁] sendet und den der (n-1)-te Busknoten [BKₙ₋₁] als ersten Busknoteneingangsstrom empfängt;
- i'ₙ: zweiter Busknotenausgangsstrom, den der n-te Busknoten [BKₙ] über den Abschnitt des zweiten Eindrahtbusses (DB₂), der Teil des Verbindungsabschnitts des seriellen, bidirektionalen, differentiellen Zweidraht-Kommunikationsbusses (DB) zwischen dem n-ten Busknoten [BKₙ] und dem (n-1)-ten Busknoten [BKₙ₋₁] ist, an den (n-1)-ten Busknoten [BKₙ₋₁] sendet und den der (n-1)-te Busknoten [BKₙ₋₁] als zweiten Busknoteneingangsstrom empfängt;
- IF₁: differentielle serielle Schnittstelle des ersten Busknotens (BK₁);
- IF₂: differentielle serielle Schnittstelle des zweiten Busknotens (BK₂);
- IF₃: differentielle serielle Schnittstelle des dritten Busknotens (BK₃);
- IF₄: differentielle serielle Schnittstelle des vierten Busknotens (BK₄);
- IF₅: differentielle serielle Schnittstelle des fünften Busknotens (BK₅);
- IF₆: differentielle serielle Schnittstelle des sechsten Busknotens (BK₆);
- IF₍ⱼ₋₁₎: differentielle serielle Schnittstelle des (j-1)-ten Busknotens [BKⱼ₋₁];
- IFⱼ: differentielle serielle Schnittstelle des j-ten Busknotens (BKⱼ);
- IF(ⱼ₊₁): differentielle serielle Schnittstelle des (j+1)-ten Busknotens [BKⱼ₊₁];
- IF₍ₙ₋₁₎: differentielle serielle Schnittstelle des (n-1)-ten Busknotens [BKₙ₋₁];
- IFₙ: differentielle serielle Schnittstelle des n-ten Busknotens [BKₙ];
- ILD: Beleuchtungsinformationen zur Steuerung der Energieversorgung der Leuchtmittel (LED;) des Busknotens (BKⱼ) durch das Energieversorgungsmittel (EVⱼ) des Busknotens (BKⱼ) in Abhängigkeit von diesen Beleuchtungsinformationen;
- INFO: Nutzinformationen innerhalb der Dateninformationen (DATA) eines Bit-Strom-Pakets (BP). Bevorzugt handelt es sich um Beleuchtungsdaten für den jeweiligen Busknoten (BKⱼ);
- Iq₁: erste Adressierungsstromquelle des ersten Busknotens (BK₁);
- Iq₁': zweite Adressierungsstromquelle des ersten Busknotens (BK₁);
- Iq₂: erste Adressierungsstromquelle des zweiten Busknotens (BK₂);
- Iq₂': zweite Adressierungsstromquelle des zweiten Busknotens (BK₂);
- Iq₃: erste Adressierungsstromquelle des dritten Busknotens (BK₃);
- Iq₃': zweite Adressierungsstromquelle des dritten Busknotens (BK₃);
- Iqⱼ: erste Adressierungsstromquelle des j-ten Busknotens (BKⱼ);
- Iqⱼ': zweite Adressierungsstromquelle des j-ten Busknotens (BKⱼ);
- Iqₙ: erste Adressierungsstromquelle des n-ten Busknotens [BKₙ];
- Iqₙ': zweite Adressierungsstromquelle des n-ten Busknotens [BKₙ];
- L₁: erster Leitungsabschnitt vom ersten Busknoten (BK₁) zum Busmaster (ECU);
- L₂: zweiter Leitungsabschnitt vom zweiten Busknoten (BK₂) zum ersten Busknoten (BK₁);
- L₃: dritter Leitungsabschnitt vom dritten Busknoten (BK₃) zum zweiten Busknoten (BK₂);
- µC: Mikrocontroller;
- LED₁: Leuchtmittel des ersten Busknotens (BK₁). Leuchtmittelgruppen und Verschaltungen sind hier mitumfasst. (Dies können beispielsweise Serien- und Parallelschaltungen mehrerer Leuchtdioden sein.)
- LED₂: Leuchtmittel des zweiten Busknotens (BK₂). Leuchtmittelgruppen und Verschaltungen sind hier mitumfasst. (Dies können beispielsweise Serien- und Parallelschaltungen mehrerer Leuchtdioden sein.)
- LED₃: Leuchtmittel des dritten Busknotens (BK₃). Leuchtmittelgruppen und Verschaltungen sind hier mitumfasst. (Dies können beispielsweise Serien- und Parallelschaltungen mehrerer Leuchtdioden sein.)
- LED₄: Leuchtmittel des vierten Busknotens (BK₄). Leuchtmittelgruppen und Verschaltungen sind hier mitumfasst. (Dies können beispielsweise Seren- und Parallelschaltungen mehrerer Leuchtdioden sein.)
- LED₅: Leuchtmittel des fünften Busknotens (BK₅). Leuchtmittelgruppen und Verschaltungen sind hier mitumfasst. (Dies können beispielsweise Serien- und Parallelschaltungen mehrerer Leuchtdioden sein.)
- LED₆: Leuchtmittel des sechsten Busknotens (BK₆). Leuchtmittelgruppen und Verschaltungen sind hier mitumfasst. (Dies können beispielsweise Serien- und Parallelschaltungen mehrerer Leuchtdioden sein.);
- pol: erstes Polaritätssignal, das bevorzugt den Multiplexer (X4) steuert;
- pol': zweites Polaritätssignal, das bevorzugt den weiteren Multiplexer (X4') steuert;
- R2: erster Shunt-Widerstand zur Messung des Stromes durch den ersten Eindrahtbus (DBₐ) innerhalb des betreffenden Busknotens (BKⱼ). Der erste Shunt-Widerstand wird hier als Teil des Busknotens (BKⱼ) betrachtet. Er ist in jedem der autoadressierungsfähigen Busknoten ((BK₁) bis [BKₙ]) bevorzugt jeweils vorhanden. Die ersten Shunt-Widerstände wurden zur besseren Übersicht nicht mit Indizes für die jeweiligen Busknoten versehen.
- R2': zweiter Shunt-Widerstand zur Messung des Stromes durch den zweiten Eindrahtbus (DB_{b}) innerhalb des betreffenden Busknotens (BKⱼ). Der zweite Shunt-Widerstand wird hier als Teil des Busknotens (BKⱼ) betrachtet. Er ist in jedem der autoadressierungsfähigen Busknoten ((BK₁) bis [BKₙ]) bevorzugt jeweils vorhanden. Die zweiten Shunt-Widerstände wurden zur besseren Übersicht nicht mit Indizes für die jeweiligen Busknoten versehen.
- Rec: Empfänger. Jeder Busknoten ((BK₁) bis [BKₙ]) und der Busmaster (ECU) weisen bevorzugt einen Empfänger auf. Ein Empfänger extrahiert die in den Bit-Strom-Paketen (BP) enthaltenen Daten (DATA) und gibt diese bevorzugt zusammen mit Fehlerinformationen über einen Ausgang (out) aus. Der Empfänger überprüft typischerweise, ob die Prüfinformationen (CHKD) innerhalb der Dateninformationen (DATA) eines Bit-Strom-Pakets (BP) auf einen fehlerfreien Empfang schließen lassen. Wurde ein Bit-Strom-Paket (BP) nicht fehlerfrei empfangen, so signalisiert der Empfänger dieses.
- Ref10: zehnter Schwellwert;
- Ref10': weiterer zehnter Schwellwert;
- Ref11: elfter Schwellwert;
- Ref11': weiterer elfter Schwellwert;
- Rm₁: Messwiderstand in der Versorgungsspannungsleitung für den ersten Busknoten (BK₁);
- Rm₂: Messwiderstand in der Versorgungsspannungsleitung für den zweiten Busknoten (BK₂);
- Rm₃: Messwiderstand in der Versorgungsspannungsleitung für den dritten Busknoten (BK₃);
- Rmⱼ: Messwiderstand in der Versorgungsspannungsleitung für den j-ten Busknoten (BKⱼ);
- Rmₙ: Messwiderstand in der Versorgungsspannungsleitung für den n-ten Busknoten [BKₙ];
- rw₁: erstes Regelsignal des ersten Busknotens (BK₁). Das erste Regelsignal des ersten Busknotens (BK₁) wird mit Mitteln, bevorzugt einem ersten Filter (F) des ersten Busknotens (BK₁), der mit dem dritten Komparator (D3) des ersten Busknotens (BK₁) auch eine Einheit bilden kann, aus dem Ausgangssignal des dritten Komparators (D3) des ersten Busknotens (BK₁) gebildet und dient zur Steuerung der ersten Autoadressierungsstromquelle (Iq₁) des ersten Busknotens (BK₁);
- rw'₁: zweites Regelsignal des ersten Busknotens (BK₁). Das zweite Regelsignal des ersten Busknotens (BK₁) wird mit Mitteln, bevorzugt einem zweiten Filter (F) des ersten Busknotens (BK₁), der mit dem entsprechenden dritten Komparator (D3') des ersten Busknotens (BK₁) auch eine Einheit bilden kann, aus dem Ausgangssignal des entsprechenden dritten Komparators (D3') des ersten Busknotens (BK₁) gebildet und dient zur Steuerung der zweiten Autoadressierungsstromquelle (Iq'₁) des ersten Busknotens (BK₁);
- rw₂: erstes Regelsignal des zweiten Busknotens (BK₂). Das erste Regelsignal des zweiten Busknotens (BK₂) wird mit Mitteln, bevorzugt einem ersten Filter (F) des zweiten Busknotens (BK₂), der mit dem dritten Komparator (D3) des zweiten Busknotens (BK₂) auch eine Einheit bilden kann, aus dem Ausgangssignal des zweiten Komparators (D3) des zweiten Busknotens (BK₂) gebildet und dient zur Steuerung der ersten Autoadressierungsstromquelle (Iq₂) des zweiten Busknotens (BK₂);
- rw'₂: zweites Regelsignal des zweiten Busknotens (BK₂). Das zweite Regelsignal des zweiten Busknotens (BK₂) wird mit Mitteln, bevorzugt einem zweiten Filter (F) des zweiten Busknotens (BK₂), der mit dem entsprechenden dritten Komparator (D3') des zweiten Busknotens (BK₂) auch eine Einheit bilden kann, aus dem Ausgangssignal des entsprechenden dritten Komparators (D3') des zweiten Busknotens (BK₂) gebildet und dient zur Steuerung der zweiten Autoadressierungsstromquelle (Iq'₂) des zweiten Busknotens (BK₂);
- rw₃: erstes Regelsignal des dritten Busknotens (BK₃). Das erste Regelsignal des dritten Busknotens (BK₃) wird mit Mitteln, bevorzugt einem ersten Filter (F) des dritten Busknotens (BK₃), der mit dem dritten Komparator (D3) des dritten Busknotens (BK₃) auch eine Einheit bilden kann, aus dem Ausgangssignal des dritten Komparators (D3) des dritten Busknotens (BK₃) gebildet und dient zur Steuerung der ersten Autoadressierungsstromquelle (Iq₃) des dritten Busknotens (BK₃);
- rw'₃: zweites Regelsignal des dritten Busknotens (BK₃). Das zweite Regelsignal des dritten Busknotens (BK₃) wird mit Mitteln, bevorzugt einem zweiten Filter (F) des dritten Busknotens (BK₃), der mit dem entsprechenden dritten Komparator (D3') des dritten Busknotens (BK₃) auch eine Einheit bilden kann, aus dem Ausgangssignal des entsprechenden dritten Komparators (D3') des dritten Busknotens (BK₃) gebildet und dient zur Steuerung der zweiten Autoadressierungsstromquelle (Iq'₃) des dritten Busknotens (BK₃);
- rwⱼ: erstes Regelsignal des j-ten Busknotens (BKⱼ). Das erste Regelsignal des j-ten Busknotens (BKⱼ) wird mit Mitteln, bevorzugt einem ersten Filter (F) des j-ten Busknotens (BKⱼ), der mit dem dritten Komparator (D3) des j-ten Busknotens (BKⱼ)auch eine Einheit bilden kann, aus dem Ausgangssignal des dritten Komparators (D3) des j-ten Busknotens (BKⱼ)gebildet und dient zur Steuerung der ersten Autoadressierungsstromquelle (Iqⱼ) des j-ten Busknotens (BKⱼ);
- rw'ⱼ: zweites Regelsignal des j-ten Busknotens (BKⱼ). Das zweite Regelsignal des j-ten Busknotens (BKⱼ) wird mit Mitteln, bevorzugt einem zweiten Filter (F) des j-ten Busknotens (BKⱼ), der mit dem entsprechenden dritten Komparator (D3') des j-ten Busknotens (BKⱼ) auch eine Einheit bilden kann, aus dem Ausgangssignal des entsprechenden dritten Komparators (D3') des j-ten Busknotens (BKⱼ) gebildet und dient zur Steuerung der zweiten Autoadressierungsstromquelle (Iq'ⱼ) des j-ten Busknotens (BKⱼ);
- S4: erster Überbrückungsschalter - auch erster Bus-Shunt-Überbrückungsschalter genannt - zur Überbrückung des ersten Shunt-Widerstands (R2) innerhalb eines Busknotens (BKⱼ). Der erste Überbrückungsschalter kann auch als Transistor und/oder als komplexere Schaltung verschiedener elektronischer und sonstiger Bauelemente ausgeführt werden, wenn sich im Arbeitsbereich die Funktionalität eines Schalters ergibt;
- S4': zweiter Überbrückungsschalter - auch zweiter Bus-Shunt-Überbrückungsschalter genannt -zur Überbrückung des zweiten Shunt-Widerstands (R2') innerhalb eines Busknotens (BKⱼ). Der zweite Überbrückungsschalter kann auch als Transistor und/oder als komplexere Schaltung verschiedener elektronischer und sonstiger Bauelemente ausgeführt werden, wenn sich im Arbeitsbereich die Funktionalität eines Schalters ergibt;
- START: Startsignal;
- SYNC: Synchronisationsinformation;
- t_{B}: Länge eines Einzelbits innerhalb eines Bit-Strom-Pakets (BP);
- TXₐ: Transmitter, der den ersten Treiber [TRₐ] umfasst;
- TX_{b}: Transmitter, der den zweiten Treiber [TR_{b}] umfasst;
- V_{bat}: Versorgungsspannungsleitung;
- X1: erster Multiplexer zur Verbindung eines ersten Eingangs des zweiten Differenzverstärkers (D2) zur Messung des Stromes durch den ersten Eindrahtbus (DBₐ) mit einem ersten Anschluss des ersten Shunt-Widerstands (R2) auf der Seite des Busmasters (ECU) oder wahlweise mit einem zweiten Anschluss des Messwiderstands [Rmⱼ] in der Versorgungsspannungsleitung innerhalb des betreffenden Busknotens (BKⱼ);
- X1': zweiter Multiplexer zur Verbindung eines ersten Eingangs des zweiten Komparators (D2') zur Messung des Stromes durch den zweiten Eindrahtbus (DB_{b}) mit einem ersten Anschluss des zweiten Shunt-Widerstands (R2') auf der Seite des Busmasters (ECU) oder wahlweise mit einem zweiten Anschluss des Messwiderstands [Rmⱼ] in der Versorgungsspannungsleitung innerhalb des betreffenden Busknotens (BKⱼ);
- X2: erster Multiplexer zur Verbindung eines zweiten Eingangs des zweiten Differenzverstärkers (D2) zur Messung des Stromes durch den ersten Eindrahtbus (DBₐ) mit einem zweiten Anschluss des ersten Shunt-Widerstands (R2) auf der abgewandten Seite des Busmasters (ECU) oder mit einem ersten Anschluss des Messwiderstands [Rmⱼ] in der Versorgungsspannungsleitung innerhalb des betreffenden Busknotens (BKⱼ);
- X2': zweiter Multiplexer zur Verbindung eines zweiten Eingangs des zweiten Komparators (D2') zur Messung des Stromes durch den zweiten Eindrahtbus (DB_{b}) mit einem zweiten Anschluss des zweiten Shunt-Widerstands (R2') auf der abgewandten Seite des Busmasters (ECU) oder mit einem ersten Anschluss des Messwiderstands [Rmⱼ] in der Versorgungsspannungsleitung innerhalb des betreffenden Busknotens (BKⱼ);
- X3: erster Demultiplexer zur Verbindung eines Anschlusses der ersten Adressierungsstromquelle (Iqⱼ) des Busknotens (BKⱼ) mit einem ersten Anschluss des ersten Shunt-Widerstands (R2) oder mit einem zweiten Anschluss des ersten Shunt-Widerstands (R2) oder mit einem Bezugspotenzial innerhalb des betreffenden Busknotens (BKⱼ);
- X3': zweiter Demultiplexer zur Verbindung eines Anschlusses der zweiten Adressierungsstromquelle (Iq';) des Busknotens (BKⱼ) mit einem ersten Anschluss des zweiten Shunt-Widerstands (R2') oder mit einem zweiten Anschluss des zweiten Shunt-Widerstands (R2') oder mit einem Bezugspotenzial innerhalb des betreffenden Busknotens (BKⱼ);
- X4: erster Multiplexer zur Vertauschung der Eingänge des zweiten Differenzverstärkers (D2) des Busknotens (BKⱼ);
- X4': zweiter Multiplexer zur Vertauschung der Eingänge des weiteren zweiten Differenzverstärkers (D2') des Busknotens (BKⱼ);
- Z1: erster logischer Zustand, in dem sich der erste Eindrahtbus (DBₐ) oder der zweite Eindrahtbus (DB_{b}) befinden kann. Dieser wird in dieser Offenlegung auch mit High bezeichnet.
- z1: erster differentieller Zustand in dem sich der serielle, bidirektionale, differentielle Zweidraht-Kommunikationsbus (DB) befinden kann. Dieser wird in dieser Offenlegung auch mit High bezeichnet.
- Z2: zweiter logischer Zustand, in dem sich der erste Eindrahtbus (DBₐ) oder der zweite Eindrahtbus (DB_{b}) befinden kann. Dieser wird in dieser Offenlegung auch mit Low bezeichnet.
- z2: zweiter differentieller Zustand in dem sich der serielle, bidirektionale, differentielle Zweidraht-Kommunikationsbus (DB) befinden kann. Dieser wird in dieser Offenlegung auch mit Low bezeichnet.
- Z3: dritter logischer Zustand, in dem sich der erste Eindrahtbus (DBₐ) oder der zweite Eindrahtbus (DB_{b}) befinden kann. Dieser wird in dieser Offenlegung auch mit Idle bezeichnet. Bevorzugt aber nicht notwendigerweise hat der entsprechende physikalische Pegel des ersten Eindrahtbusses (DBₐ) oder des zweiten Eindrahtbusses (DB_{b}) einen Wert um einen gemeinsamen Mittelwert.
- z3: dritter differentieller Zustand in dem sich der serielle, bidirektionale, differentielle Zweidraht-Kommunikationsbus (DB) befinden kann. Dieser wird in dieser Offenlegung auch mit Idle bezeichnet. Bevorzugt aber nicht notwendigerweise hat der entsprechende differentielle physikalische Pegel einen Wert um Null.

## Patentansprüche

1. Busknoten für einen seriellen, bidirektionalen, differentiellen Zweidraht-Kommunikationsbus (DB), der einen ersten Eindrahtbus (DB₁) sowie einen zweiten Eindrahtbus (DB₂) und einen mit diesen verbundenen Busmaster (ECU) aufweist, mit
- einem ersten Bus-Shunt-Widerstand (R2), der seriell mit dem ersten Eindrahtbus (DB₁) verschaltbar ist, und
- einem zweiten Bus-Shunt-Widerstand (R2'), der seriell mit dem zweiten Eindrahtbus (DB₂) verschaltbar ist,
- einer ersten Adressierungsstromquelle (Iqⱼ) zur Ermittlung der Busposition des Busknotens (BKⱼ) im Zweidraht-Kommunikationsbus (DB), die einen ersten Adressierungsstrom in den ersten Eindrahtbus (DBₐ) des Zweidraht-Kommunikationsbusses (DB) geregelt einspeisen kann, wobei ein erster Gesamtstrom (iⱼ) durch den ersten Bus-Shunt-Widerstand (R2) des Busknotens (BKⱼ) auf einen vorgegebenen ersten Summenstromwert (I_{ref}) regelbar ist,
- einer zweiten Adressierungsstromquelle (Iq'ⱼ) zur Ermittlung der Busposition des Busknotens (BKⱼ) im Zweidraht-Kommunikationsbus (DB), die einen zweiten Adressierungsstrom in den zweiten Eindrahtbus (DB_{b}) des Zweidraht-Kommunikationsbusses (DB) geregelt einspeisen kann, wobei ein zweiter Gesamtstrom (iⱼ) durch den zweiten Bus-Shunt-Widerstand (R2') des Busknotens (BKⱼ) auf einen vorgegebenen zweiten Summenstromwert (I'_{ref}) regelbar ist,
- wobei der erste Adressierungsstrom der ersten Adressierungsstromquelle (Iqⱼ) des Busknotens (BKⱼ) den ersten Bus-Shunt-Widerstand (R2) des Busknotens (BKⱼ) durchströmt und
- wobei der zweite Adressierungsstrom der zweiten Adressierungsstromquelle (Iq'ⱼ) des Busknotens (BKⱼ) den zweiten Bus-Shunt-Widerstand (R2') des Busknotens (BKⱼ) durchströmt.

2. Busknoten nach Anspruch 1, **dadurch gekennzeichnet, dass**
- der Busknoten (BKⱼ) über erste Mittel (R2, D2) verfügt, um den Strom durch den ersten Bus-Shunt-Widerstand (R2) zu detektieren, und/oder
- der Busknoten (BKⱼ) über zweite Mittel (R2', D2') verfügt, um den Strom durch den zweiten Bus-Shunt-Widerstand (R2') zu detektieren.

3. Busknoten nach Anspruch 2, **dadurch gekennzeichnet, dass**
- der detektierte Strom durch den ersten Bus-Shunt-Widerstand (R2) für einen Selbsttest verwendbar ist und/oder
- der detektierte Strom durch den zweiten Bus-Shunt-Widerstand (R2') für einen Selbsttest verwendbar ist.

4. Busknoten nach Anspruch 3, **gekennzeichnet durch** mindestens eine Detektionsvorrichtung (DET), die interne Signale (ds1, ds3) des Busknotens (BKⱼ) auf Plausibilität prüft.

5. Busknoten nach Anspruch 4, **dadurch gekennzeichnet, dass** der Busknoten (BKⱼ) oder eine Teilvorrichtung (DET) des Busknotens (BKⱼ) Maßnahmen ergreift, wenn die Detektionsvorrichtung (DET) nicht plausible interne Signale innerhalb des Busknotens (BKⱼ) feststellt.

6. Busknoten nach einem oder mehreren der Ansprüche 1 bis 5, **dadurch gekennzeichnet, dass**
- der Busknoten (BKⱼ) eine erste Teilvorrichtung (X3) aufweist, die den Einspeisepunkt des ersten Adressierungsstromes der ersten Adressierungsstromquelle (Iqⱼ) ändern kann und/oder
- der Busknoten (BKⱼ) eine zweite Teilvorrichtung (X3') aufweist, die den Einspeisepunkt des zweiten Adressierungsstromes der zweiten Adressierungsstromquelle (Iq'ⱼ) ändern kann.

7. Busknoten nach einem oder mehreren der Ansprüche 1 bis 6, **dadurch gekennzeichnet, dass**
- die erste Adressierungsstromquelle (Iqⱼ) eine erste Teiladressierungsstromquelle (Iqⱼ₁) und eine weitere erste Teiladressierungsstromquelle (Iqⱼ₂) aufweist,
- die erste Teiladressierungsstromquelle (Iqⱼ₁) ihren Strom in einen mit dem ersten Anschluss des ersten Bus-Shunt-Widerstands (R2) verbundenen Knoten einspeist,
- die weitere erste Teiladressierungsstromquelle (Iqⱼ₁) ihren Strom in einen mit dem zweiten Anschluss des ersten Bus-Shunt-Widerstands (R2) verbundenen Knoten einspeist und
- die Ströme der beiden ersten Teiladressierungsstromquellen (Iqⱼ₁, Iqⱼ₂) den ersten Bus-Shunt-Widerstand (R2) durchströmen.

8. Busknoten nach einem oder mehreren der Ansprüche 1 bis 7, **dadurch gekennzeichnet, dass**
- die zweite Adressierungsstromquelle (Iq'ⱼ) eine zweite Teiladressierungsstromquelle (Iq'ⱼ₁) und eine weitere zweite Teiladressierungsstromquelle (Iq'ⱼ₂) aufweist,
- die zweite Teiladressierungsstromquelle (Iq'ⱼ₁) ihren Strom in einen mit dem ersten Anschluss des zweiten Bus-Shunt-Widerstands (R2') verbundenen Knoten einspeist,
- die weitere zweite Teiladressierungsstromquelle (Iq'ⱼ₁) ihren Strom in einen mit dem zweiten Anschluss des zweiten Bus-Shunt-Widerstands (R2') verbundenen Knoten einspeist und
- die Ströme der beiden zweiten Teiladressierungsstromquellen (Iq'ⱼ₁, Iq'ⱼ₂) den zweiten Bus-Shunt-Widerstand (R2') durchströmen.

9. Busknoten nach einem oder mehreren der Ansprüche 1 bis 8, **dadurch gekennzeichnet, dass**
- die erste Adressierungsstromquelle (Iqⱼ) den ersten Adressierungsstrom mit einer ersten Zeitkonstante (τ₁) erhöht und mit einer zweiten Zeitkonstante (τ₂) erniedrigt, die kleiner als die erste Zeitkonstante (τ₁) ist und/oder
- die zweite Adressierungsstromquelle (Iq'ⱼ) den zweiten Adressierungsstrom mit einer dritten Zeitkonstante (τ₃) erhöht und mit einer vierten Zeitkonstante (τ₄) erniedrigt, die kleiner als die dritte Zeitkonstante (τ₃) ist.
